# EUROPEAN PATENT APPLICATION

(11) **EP 4 710 766 A1**
(43) Date of publication of application: **18.03.2026**
(21) Application number: 24199713.9
(22) Date of filing: 11.09.2024
(51) Int. Cl.: A01N 43/16, A01P 3/00, A01N 43/653, A01N 43/40, A01N 43/36, A01N 43/56, A01N 43/42, A01N 43/713, A01N 47/24, A01N 43/54

(54) **MIXTURES OF AMBRUTICIN WITH AT LEAST ONE FURTHER PESTICIDE**

(71) Applicant: BASF SE, 67056 Ludwigshafen am Rhein (DE)
(72) Inventor: MENTZEL, Tobias, 67117 Limbugerhof (DE); LUDWIG, Lydia, 67117 Limbugerhof (DE); BRAHM, Lutz, 67117 Limbugerhof (DE); WINTER, Christian, 67056 Ludwigshafen am Rhein (DE); KOCH, Andreas, 67117 Limbugerhof (DE)
(74) Representative: BASF IP Association

(57) **Abstract**

The present invention relates to mixtures of ambruticin type compounds of formula Ia, Ib or Ic as defined herein with at least one further pesticide and their use for combating phytopathogenic fungi, and to methods for combating such fungi. The invention also relates to compositions comprising such mixtures and their use as fungicide.

## Description

The present invention relates to mixtures of ambruticin type compounds of formula I with certain pesticides and their use for combating phytopathogenic fungi, and to methods for combating fungi using such mixtures.

Ambruticins are unusual antifungal polyketide metabolites produced by strains of *Sorangium* cellulosum. Ambruticin S (also referred to as Acid S, W 7783, or, sometimes, simply as ambruticin) is an antifungal compound isolated from *Sorangium cellulosum* (US 3,804,948; J. Antibiot. (Tokyo) 30, 371-375):

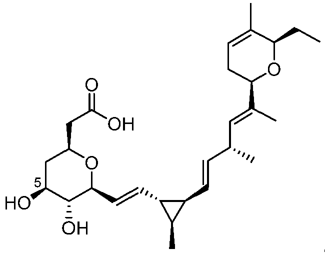

Further closely related compounds have been isolated from *S*. *cellulosum* (WO 91/00860; Liebigs Ann. Chem. 1991, 941-945), named ambruticin VS1, VS2, VS3 and so on, all having at C5 position an optionally methylated amino group instead of a hydroxyl group.

Hereinafter all ambruticin-type compounds are collectively referred to as "ambruticins", those with a nitrogen at position C5 have a "VS" designation, whereas those having an oxygen at position C5 have an "S" designation (WO 06/066147). Ambruticins, their isolation, preparation and their use against phytopathogenic fungi is known inter alia from WO 91/00860; WO 06/066147; Liebigs Ann. Chem. 1991, 941-945; Chemistry & Biology 13, 1277-1286. They inhibit fungal growth by interfering with osmoregulation, presumably via the high-osmolarity glycerol (HOG) protein kinase signaling pathway, as shown for the phenylpyrrole fungicides.

Practical agricultural experience has shown that the repeated and exclusive application of an individual active compound in the control of harmful fungi leads in many cases to a rapid selection of those fungus strains which have developed natural or adapted resistance against the active compound in question. Effective control of these fungi with the active compound in question is then no longer possible.

To reduce the risk of the selection of resistant fungal strains, mixtures of different active compounds are nowadays conventionally employed for controlling harmful fungi. By combining active compounds having different mechanisms of action, it is possible to ensure successful control over a relatively long period of time.

It is an object of the present invention to provide, with a view to effective resistance management and effective control of phytopathogenic harmful fungi, at application rates which are as low as possible, compositions which, at a reduced total amount of active compounds applied, have improved activity against the harmful fungi (synergistic mixtures) and a broadened activity spectrum, in particular when used in crops as defined herein.

We have accordingly found that this object is achieved by the mixtures and compositions, defined herein, comprising at least one compound I and at least one pesticide II, and optionally a pesticide III.

Accordingly, the present invention relates to mixtures comprising as components,
1) at least one compound of formula la, Ib or Ic 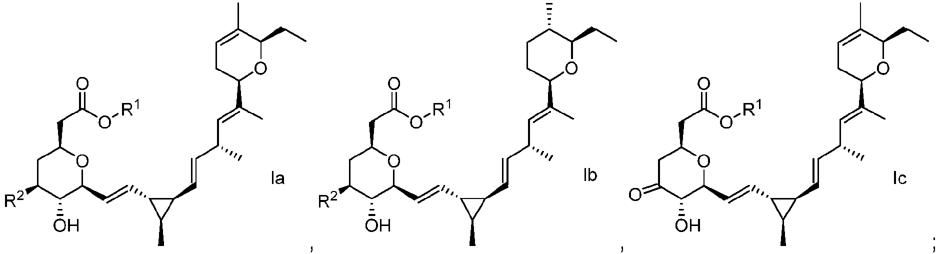 wherein
   - R¹: is selected from H or CH₃; and
   - R²: is selected from OH, NH₂, NHCH₃, N(CH₃)₂, N(CH₃)₃⁺;
   and agriculturally acceptable salts and N-oxides thereof;
   and
2) at least one pesticide II selected from the groups A) to O):
   A) Respiration (C)
      - complex III at Qₒ site (Qol, C3): azoxystrobin (A.1.1), bifemetstrobin (A. 1.24), bifujunzhi (A. 1.37), coumethoxy-strobin (A.1.2), coumoxystrobin (A.1.3), dimoxystrobin (A.1.4), enestroburin (A.1.5), famoxadone (A. 1.21), fenamidone (A. 1.23), fenaminstrobin (A.1.6), flufenoxystrobin (A.1.7), fluoxastrobin (A.1.8), kresoxim-methyl (A.1.9), mandestrobin (A.1.10), metominostrobin (A.1.11), metyltetraprole (A. 1.25; member of MoA subgroup A), orysastrobin (A. 1.12), picoxystrobin (A.1.13), pyraclostrobin (A. 1.14), pyrametostrobin (A. 1.15), pyraoxystrobin (A. 1.16), pyribencarb (A. 1.19), pyriminostrobin (A. 1.36), triclopyricarb (A. 1.20), trifloxystrobin (A. 1.17), 2-(2-(3-(2,6-dichlorophenyl)-1-methyl-allylideneaminooxymethyl)-phenyl)-2-methoxyimino-*N*-methyl-acetamide (A. 1.18), methyl-*N*-[2-[(1,4-dimethyl-5-phenyl-pyrazol-3-yl)oxylmethyl]phenyl]-*N*-methoxy-carbamate (A. 1.22), (Z,2*E*)-5-[1-(2,4-dichlorophenyl)pyrazol-3-yl]-oxy-2-methoxyi mino-*N*,3-dimethyl-pent-3-enamide (A.1.34), (Z,2*E*)-5-[1-(4-chlorophenyl)pyrazol-3-yl]oxy-2-methoxyimino-*N*,3-dimethyl-pent-3-enamide (A.1.35), 2-(ortho-((2,5-dimethylphenyl-oxymethylen)phenyl)-3-methoxy-acrylic acid methylester (A.1.38), methyl (*Z*)-3-methoxy-2-[2-methyl-5-(3-propylpyrazol-1-yl)phenoxy]prop-2-enoate, methyl (*Z*)-2-[5-(3-isopropylpyrazol-1-yl)-2-methyl-phenoxy]-3-methoxy-prop-2-enoate, methyl (*Z*)-3-methoxy-2-[2-methyl-5-[3-(trifluoromethyl)pyrazol-1-yl]phen-oxy]prop-2-enoate, methyl (*Z*)-3-methoxy-2-[2-methyl-5-(4-propyltriazol-2-yl)phenoxy]prop-2-enoate, methyl (*Z*)-3-methoxy-2-[2-methyl-5-[4-(trifluoromethyl)triazol-2-yl]phenoxy]prop-2-enoate, methyl (*Z*)-2-[5-(4-isopropyl-triazol-2-yl)-2-methyl-phenoxy]-3-methoxy-prop-2-enoate, methyl (*Z*)-2-(5-cyclobutyl-2-methyl-phenoxy)-3-methoxy-prop-2-enoate, methyl (*Z*)-2-(5-cyclopentyl-2-methyl-phenoxy)-3-methoxy-prop-2-enoate, methyl (*Z*)-2-(5-cyclopropyl-2-methyl-phenoxy)-3-methoxy-prop-2-enoate, methyl (*Z*)-2-(5-cyclohexyl-2-methyl-phenoxy)-3-methoxy-prop-2-enoate, methyl (*E*)-3-methoxy-2-[(2-methyl-5-phenyl-phenyl)methyl]prop-2-enoate, methyl (*E*)-3-methoxy-2-[[5-[(*E*)-*N*-methoxy-*C*-methyl-carbonimidoyl]-2,4-dimethyl-phenyl]methyl]prop-2-enoate; methyl (*E*)-2-[[5-(2-cyclopropylethynyl)-2,4-dimethyl-phenyl]methyl]-3-methoxy-prop-2-enoate; methyl (*E*)-3-methoxy-2-(2-phenyl-1,3-benzoxazol-4-yl)prop-2-enoate; methyl (*E*)-3-methoxy-2-(2-phenyl-1,3-benzothiazol-4-yl)prop-2-enoate; methyl (*E*)-3-methoxy-2-(2-phenyl-1,3-benzoxazol-7-yl)prop-2-enoate; methyl (*Z*)-2-[6-(2-cyclopropyl-ethynyl)benzimidazol-1-yl]-3-methoxy-prop-2-enoate; methyl (*Z*)-3-methoxy-2-(6-phenylbenzimidazol-1-yl)prop-2-enoate; methyl (*Z*)-2-(3-chloro-6-phenyl-indol-1-yl)-3-methoxy-prop-2-enoate; methyl (*Z*)-2-(2,3-dichloro-6-phenyl-indol-1-yl)-3-methoxy-prop-2-enoate; methyl (*Z*)-3-methoxy-2-[6-[(*E*)-methoxyiminomethyl]indol-1-yl]prop-2-enoate; methyl (*Z*)-3-methoxy-2-[6-[(E)-N-methoxy-C-methyl-carbonimidoyl]indol-1-yl]prop-2-enoate, methyl *N*-[[5-[1-(2,6-difluoro-4-isopropyl-phenyl)pyrazol-3-yl]-2-methyl-phenyl]methyl]carbamate, methyl *N*-[[5-[1-(4-cyclopropyl-2,6-difluoro-phenyl)pyrazol-3-yl]-2-methyl-phenyl]methyl]carbamate, methyl *N*-[[5-[1-(4-chloro-2,6-difluoro-phenyl)pyrazol-3-yl]-2-methyl-phenyl]methyl]carbamate, methyl *N*-[[5-[1-[2,6-difluoro-4-(trifluoromethyl)phenyl]pyrazol-3-yl]-2-methyl-phenyl]methyl]carbamate;
      - complex III at Qᵢ site (Qil, C4): cyazofamid (A.2.1), amisulbrom (A.2.2), [(6*S*,7*R*,8*R*)-8-benzyl-3-[(3-hydroxy-4-methoxy-pyridine-2-carbonyl)amino]-6-methyl-4,9-dioxo-1,5-dioxonan-7-yl]-2-methylpropanoate (A.2.3), fenpicoxamid (A.2.4), florylpicoxamid (A.2.5), metarylpicoxamid (A.2.6);
      - complex II (SDHI, C2): benodanil (A.3.1), benzovindiflupyr (A.3.2), bixafen (A.3.3), boscalid (A.3.4), carboxin (A.3.5), cyclobutrifluram (A.3.24), fenfuram (A.3.6), fluopyram (A.3.7), flutolanil (A.3.8), fluxapyroxad (A.3.9), furametpyr (A.3.10), inpyrfluxam (A.3.22), isofetamid (A.3.11), isoflucypram (A.3.31), isopyrazam (A.3.12), mepronil (A.3.13), oxycarboxin (A.3.14), penflufen (A.3.15), penthiopyrad (A.3.16), pydiflumetofen (A.3.17), pyrapropoyne (A.3.23), pyraziflumid (A.3.18), sedaxane (A.3.19), tecloftalam (A.3.20), thifluzamide (A.3.21), fluindapyr (A.3.28), *N*-[2-[2-chloro-4-(trifluoromethyl)phenoxy]phenyl]-3-(difluoromethyl)-5-fluoro-1-methylpyrazole-4-carboxamide (A.3.29), methyl (*E*)-2-[2-[(5-cyano-2-methyl-phenoxy)methyl]phenyl]-3-methoxy-prop-2-enoate (A.3.30), 2-(difluoromethyl)-*N*-(1,1,3-trimethyl-indan-4-yl)pyridine-3-carboxamide (A.3.32), 2-(difluoromethyl)-*N*-[(3*R*)-1,1,3-trimethylindan-4-yl]pyridine-3-carboxamide (A.3.33), 2-(difluoromethyl)-*N*-(3-ethyl-1,1-dimethyl-indan-4-yl)pyridine-3-carboxamide (A.3.34), 2-(difluoromethyl)-*N*-[(3*R*)-3-ethyl-1,1-dimethyl-indan-4-yl]pyridine-3-carboxamide (A.3.35), 2-(difluoromethyl)-*N*-(1,1-dimethyl-3-propyl-indan-4-yl)-pyridine-3-carboxamide (A.3.36), 2-(difluoromethyl)-*N*-[(3*R*)-1,1-dimethyl-3-propyl-indan-4-yl]pyridine-3-carboxamide (A.3.37), 2-(difluoromethyl)-*N*-(3-isobutyl-1,1-dimethyl-indan-4-yl)pyridine-3-carboxamide (A.3.38), 2-(difluoromethyl)-*N*-[(3*R*)-3-isobutyl-1,1-dimethyl-indan-4-yl]pyridine-3-carboxamide (A.3.39);
      - complex I NADH oxido-reductase (C1): diflumetorim (A.4.1);
      - uncouplers (C5): binapacryl (A.4.2), dinobuton (A.4.3), dinocap (A.4.4), fluazinam (A.4.5), meptyldinocap (A.4.6), ferimzone (A.4.7);
      - inhibitors of ox. phosphorylation (C6): fentin salts, e.g. fentin-acetate (A.4.8), fentin chloride (A.4.9) or fentin hydroxide (A.4.10);
      - ATP transport: silthiofam (A.4.11);
      - quinone inside and outside inhibitor stigmatellin binding type (QioSi; C8): ametoctradin (A.5.1);
   B) Sterol biosynthesis (G)
      - C14 demethylase (DMI, G1): triazoles: azaconazole (B.1.1), bitertanol (B.1.2), bromuconazole (B.1.3), cyproconazole (B.1.4), difenoconazole (B.1.5), diniconazole (B.1.6), diniconazole-M (B.1.7), epoxiconazole (B.1.8), fenbuconazole (B.1.9), fluoxytioconazole (B.1.33), fluquinconazole (B.1.10), flusilazole (B.1.11), flutriafol (B.1.12), hexaconazole (B.1.13), imibenconazole (B.1.14), ipconazole (B.1.15), ipfentrifluconazole (B.1.37), mefentrifluconazole (B.1.38), metconazole (B.1.17), myclobutanil (B.1.18), oxpoconazole (B.1.19), paclobutra-zole (B.1.20), penconazole (B.1.21), propiconazole (B.1.22), prothioconazole (B.1.23), simeconazole (B.1.24), tebuconazole (B.1.25), tetraconazole (B.1.26), triadimefon (B.1.27), triadimenol (B.1.28), triticonazole (B.1.29), uniconazole (B.1.30), 2-(2,4-difluorophenyl)-1,1-difluoro-3-(tetrazol-1-yl)-1-[5-[4-(2,2,2-trifluoroethoxy)phenyl]-2-pyridyl]propan-2-ol (B.1.31), 2-(2,4-difluorophenyl)-1,1-difluoro-3-(tetrazol-1-yl)-1-[5-[4-(trifluoromethoxy)-phenyl]-2-pyridyl]propan-2-ol (B.1.32), 2-(chloromethyl)-2-methyl-5-(*p*-tolylmethyl)-1-(1,2,4-triazol-1-ylmethyl)-cyclopentanol (B.1.43), 4-[[6-[2-(2,4-difluorophenyl)-1,1-difluoro-2-hydroxy-3-(1,2,4-triazol-1-yl)propyl]-3-pyridyl]oxy]benzonitrile (B.1.53), 2-[6-(4-bromophenoxy)-2-(trifluoromethyl)-3-pyridyl]-1-(1,2,4-triazol-1-yl)-propan-2-ol (B.1.54), 2-[6-(4-chlorophenoxy)-2-(trifluoromethyl)-3-pyridyl]-1-(1,2,4-triazol-1-yl)propan-2-ol (B.1.55), (2*R*)-2-[4-(4-chlorophenoxy)-2-(trifluoromethyl)phenyl]-1-(1,2,4-triazol-1-yl)propan-2-ol, (2*S*)-2-[4-(4-chlorophenoxy)-2-(trifluoromethyl)phenyl]-1-(1,2,4-triazol-1-yl)propan-2-ol, methyl 2-[2-chloro-4-(4-chlorophenoxy)phenyl]-2-hydroxy-3-(1,2,4-triazol-1-yl)propanoate (B.1.56), 2-[2-chloro-4-(4-chlorophenoxy)-phenyl]-2-hydroxy-3-(1,2,4-triazol-1-yl)propanoic acid (B.1.57); imidazoles: imazalil (B.1.44), pefurazoate (B.1.45), prochloraz (B.1.46), triflumizole (B. 1.47); pyrimidines, pyridines, piperazines: fenarimol (B.1.49), pyrifenox (B.1.50), triforine (B.1.51), [3-(4-chloro-2-fluoro-phenyl)-5-(2,4-difluorophenyl)isoxazol-4-yl]-(3-pyridyl)methanol (B.1.52);
      - delta14-reductase (G2): aldimorph (B.2.1), dodemorph (B.2.2), dodemorph-acetate (B.2.3), fenpropidin (B.2.6), fenpropimorph (B.2.4), piperalin (B.2.7), spiroxamine (B.2.8), tridemorph (B.2.5);
      - 3-keto reductase (G3): fenhexamid (B.3.1), fenpyrazamine (B.3.2);
      - other: chlorphenomizole (B.4.1);
   C) Nucleic acids metabolism (A)
      - RNA polymerase I (A1): benalaxyl (C.1.1), benalaxyl-M (C.1.2), kiralaxyl (C.1.3), metalaxyl (C.1.4), metalaxyl-M (C.1.5), ofurace (C.1.6), oxadixyl (C.1.7);
      - adenosine deaminase (A2): bupirimate (C.2.4), 5-fluoro-2-(*p*-tolylmethoxy)pyrimidin-4-amine (C.2.6), 5-fluoro-2-(4-fluorophenylmethoxy)pyrimidin-4-amine (C.2.7), 5-fluoro-2-(4-chlorophenylmethoxy)pyrimidin-4-amine (C.2.8);
      - DNA/RNA synthesis (A3): 5-fluorocytosine (C.2.5), hymexazole (C.2.1), octhilinone (C.2.2),
      - gyrase (A4): oxolinic acid (C.2.3);
      - dihydroorotate dehydrogenase (DHODH; A5): ipflufenoquin (C.5.1), quinofumelin (C.5.2), feneptamidoquin (C.5.3);
   D) Cytoskeleton and motor protein (B)
      - tubulin polymerization (MBC; B1): benomyl (D.1.1), carbendazim (D.1.2), fuberidazole (D.1.3), pyridachlometyl (D.1.6), thiabendazole (D.1.4), thiophanate-methyl (D.1.5), N-ethyl-2-[(3-ethynyl-8-methyl-6-quinolyl)oxy]butanamide (D.1.8), *N*-ethyl-2-[(3-ethynyl-8-methyl-6-quinolyl)oxy]-2-methylsulfanyl-acetamide (D.1.9), 2-[(3-ethynyl-8-methyl-6-quinolyl)oxy]-*N*-(2-fluoroethyl)butanamide (D.1.10), 2-[(3-ethynyl-8-methyl-6-quinolyl)oxy]-*N*-(2-fluoroethyl)-2-methoxy-acetamide (D. 1.11), 2-[(3-ethynyl-8-methyl-6-quinolyl)oxy]-*N*-propyl-butanamide (D. 1.12), 2-[(3-ethynyl-8-methyl-6-quinolyl)oxy]-2-methoxy-*N*-propyl-acetamide (D.1.13), 2-[(3-ethynyl-8-methyl-6-quinolyl)-oxy]-2-methylsulfanyl-*N*-propyl-acetamide (D.1.14), 2-[(3-ethynyl-8-methyl-6-quinolyl)oxy]-*N*-(2-fluoroethyl)-2-methylsulfanyl-acetamide (D.1.15), 4-(2-bromo-4-fluoro-phenyl)-*N*-(2-chloro-6-fluoro-phenyl)-2,5-dimethylpyrazol-3-amine (D.1.16), 4-(2-bromo-4-fluorophenyl)-*N*-(2-fluoro-6-nitrophenyl)-1,3-dimethyl-1H-pyrazol-5-amine, 4-(2-chloro-4,6-difluorophenyl)-*N*-(2-fluoro-6-nitrophenyl)-1,3-dimethyl-1*H*-pyrazol-5-amine, 4-(2-chloro-4-fluorophenyl)-*N*-(2-fluoro-6-nitrophenyl)-3-ethyl-1-methyl-1H-pyrazol-5-amine, 4-(2-chloro-4-fluorophenyl)-*N*-(2-fluoro-4-methyl-6-nitrophenyl)-1,3-dimethyl-1H-pyrazol-5-amine, 4-(2-chloro-4-fluorophenyl)-*N*-(2-fluoro-6-nitrophenyl)-1,3-dimethyl-1*H*-pyrazol-5-amine, 4-(2,4-difluorophenyl)-*N*-(2-fluoro-6-nitrophenyl)-1,3-dimethyl-1*H*-pyrazol-5-amine;
      - tubulin polymerization (B2): diethofencarb (D.2.1),
      - tubulin polymersation (B3): ethaboxam (D.2.2), zoxamide (D.2.5);
      - cell division (B4): pencycuron (D.2.3);
      - spectrin-like proteins (B5): fluopicolide (D.2.4), fluopimomide (D.2.9);
      - actin/myosin/fimbrin function (B6): metrafenone (D.2.6), phenamacril (D.2.8), pyriofenone (D.2.7);
   E) Amino acids and protein synthesis (D)
      - methionine synthesis (D1): cyprodinil (E.1.1), mepanipyrim (E.1.2), pyrimethanil (E.1.3);
      - ribosome, termination step (D2): blasticidin-S (E.2.1);
      - ribosome initiation step (D3): kasugamycin (E.2.2), kasugamycin hydrochloride-hydrate (E.2.3);
      - ribosome initiation step (D4): streptomycin (E.2.5);
      - ribosome elongation step (D5): mildiomycin (E.2.4), oxytetracyclin (E.2.6);
   F) Signal transduction
      - mechanism unknown (E1): proquinazid (F.2.2), quinoxyfen (F.2.1);
      - MAP/histidine kinase os-2 (E2): fludioxonil (F.1.5);
      - MAP/histidine kinase os-1 (E3): iprodione (F.1.2), procymidone (F.1.3), vinclozolin (F.1.4);
   G) Lipid synthesis or transport / membrane (F)
      - methyl transferase (F2): edifenphos (G.1.1), iprobenfos (G.1.2), isoprothiolane (G.1.4); pyrazophos (G.1.3);
      - cell peroxidation (F3): biphenyl (G.2.5), chloroneb (G.2.6), dicloran (G.2.1), etridiazole (G.2.7), quintozene (G.2.2), tecnazene (G.2.3), tolclofos-methyl (G.2.4);
      - cell membrane permeability (F4): propamocarb (G.4.1);
      - ergosterol binding (F8): natamycin;
      - oxysterol binding protein (F9): fluoxapiprolin (G.5.3), oxathiapiprolin (G.5.1), 4-[1-[2-[3-(difluoromethyl)-5-methyl-pyrazol-1-yl]acetyl]-4-piperidyl]-N-tetralin-1-yl-pyridine-2-carboxamide (G.5.4), 4-[1-[2-[3,5-bis(difluoromethyl)-pyrazol-1-yl]acetyl]-4-piperidyl]-N-tetralin-1-yl-pyridine-2-carboxamide (G.5.5), 4-[1-[2-[3-(difluoromethyl)-5-(trifluoromethyl)pyrazol-1-yl]acetyl]-4-piperidyl]-N-tetralin-1-yl-pyridine-2-carboxamide (G.5.6), 4-[1-[2-[5-cyclopropyl-3-(difluoromethyl)pyrazol-1-yl]acetyl]-4-piperidyl]-N-tetralin-1-yl-pyridine-2-carboxamide (G.5.7), 4-[1-[2-[5-methyl-3-(trifluoromethyl)pyrazol-1-yl]acetyl]-4-piperidyl]-*N*-tetralin-1-yl-pyridine-2-carboxamide (G.5.8), 4-[1-[2-[5-(difluoromethyl)-3-(trifluoromethyl)pyrazol-1-yl]acetyl]-4-piperidyl]-*N*-tetralin-1-yl-pyridine-2-carboxamide (G.5.9), 4-[1-[2-[3,5-bis(trifluoromethyl)pyrazol-1-yl]acetyl]-4-piperidyl]-*N*-tetralin-1-yl-pyridine-2-carboxamide (G.5.10), (4-[1-[2-[5-cyclopropyl-3-(trifluoromethyl)pyrazol-1-yl]acetyl]-4-piperidyl]-*N*-tetralin-1-yl-pyridine-2-carboxamide (G.5.11), (1-(4-(4-(5-(2,6-dichlorophenyl)-4,5-dihydroisoxazol-3-yl)thiazol-2-yl)piperidin-1-yl)-2-((3-trifluoromethyl)pyrazin-2-yl)oxy)ethan-1-one, 1-(4-(4-(5-(2-chloro-6-fluorophenyl)-4,5-dihydroisoxazol-3-yl)thiazol-2-yl)piperidin-1-yl)-2-((3-trifluoromethyl)pyridin-2-yl)oxy)ethan-1-one, *tert*-butyl 4-(4-(5-(2-bromo-6-fluorophenyl)-4,5-dihydroisoxazol-3-yl)thiazol-2-yl)piperidin-1-carboxylate, ((2-(3-(2-(1-(2-(3,5-bis(trifluoromethyl)-1*H*-pyrazol-1-yl)acetyl)piperidin-4-yl)thiazol-4-yl)-4,5-dihydroisoxazo-5-yl)-3-fluorophenyl)imino)dimethyl-λ^{β}-sulfanone, ((2-(3-(2-(1-(2-(3,5-bis(difiuoromethyi)-1*H*-pyrazoi-1-yi)acetyi)piperidin-4-yi)thiazoi-4-yi)-4,5-di-hydroisoxazo-5-yl)-3-fluorophenyl)imino)dimethyl-λ⁶-sulfanone, ((2-(3-(2-(1-(2-(3,5-bis(difluoromethyl)-1*H*-pyrazol-1-yl)acetyl)piperidin-4-yl)thiazol-4-yl)-4,5-dihydroisoxazo-5-yl)-3-chorophenyl)imino)(isopropyl)(methyl)-λ⁶-sulfanone, ((2-(3-(2-(1-(2-(3,5-bis(trifluoromethyl)-1*H*-pyrazol-1-yl)acetyl)piperidin-4-yl)thiazol-4-yl)-4,5-di-hydroisoxazo-5-yl)-3-fluorophenyl)imino)(isopropyl)(methyl)-λ⁶-sulfanone, ((2-(3-(2-(1-(2-(3,5-bis(difluoromethyl)-1*H*-pyrazol-1-yl)acetyl)piperidin-4-yl)thiazol-4-yl)-4,5-dihydroisoxazo-5-yl)-3-(trifluoromethyl)phenyl)imino)dimethyl-λ⁶-sulfanone, ((3-fluoro-2-(3-(2-(1-(2-(5-methyl-3-(trifluoromethyl)-1*H*-pyrazol-1-yl)acetyl)piperidin-4-yl)thi-azol-4-yl)-4,5-dihydroisoxazo-5-yl)-phenyl)imino)dimethyl-λ⁶-sulfanone;
   H) Multi Site Activity (M)
      - inorganics (M01): Bordeaux mixture (H.1.1), copper (H.1.2), copper acetate (H.1.3), copper hydroxide (H.1.4), copper oxychloride (H.1.5), basic copper sulfate (H.1.6), sulfur (H.1.7);
      - dithiocarbamates and relatives: ferbam (H.2.1), mancozeb (H.2.2), maneb (H.2.3), metam (H.2.4), metiram (H.2.5), propineb (H.2.6), thiram (H.2.7), zineb (H.2.8), ziram (H.2.9), zinc thiazole (H.2.10);
      - organochlorine compounds (M04, M05, M06, M08): anilazine (H.3.1), captafol (H.3.3), captan (H.3.4), chlorothalonil (H.3.2), dichlofluanid (H.3.6), dichlorophen (H.3.7), folpet (H.3.5), hexachlorobenzene (H.3.8), pentachlorphenole (H.3.9) and its salts, phthalide (H.3.10), tolylfluanid (H.3.11);
      - guanidines, quinones, quinoxalines, maleimides, thiocarbamates (M07, M09, M10, M11, M12): chinomethionat (H.4.13), dithianon (H.4.9), fluoroimide (H.4.11), guanidine (H.4.1), guazatine (H.4.4), guazatine-acetate (H.4.5), iminoctadine (H.4.6), iminoctadine-triacetate (H.4.7), iminoctadine-tris(albesilate) (H.4.8), methasulfocarb (H.4.12), 2,6-dimethyl-1*H*,5*H*-[1,4]dithiino[2,3-c:5,6-c']dipyrrole-1,3,5,7(2*H*,6*H*)-tetraone (H.4.10),
   I) Cell wall biosynthesis (H) and melanin synthesis in cell wall (I)
      - chitin synthase (H4): polyoxin B (I.1.2);
      - cellulose synthase (H5): benthiavalicarb (I.3.5), dimethomorph (I.3.1), flumorph (I.3.2), iprovalicarb (I.3.6), mandipropamid (i.3.3), pyrimorph (I.3.4), valifenalate (i.3.7);
      - reductase in melanin synthesis (MBI-R; I1) pyroquilon (I.2.1), tricyclazole (i.2.2);
      - dehydratase in melanin synthesis (MBI-D, I2); carpropamid (I.2.3), dicyclomet (I.2.4), fenoxanil (I.2.5);
      - polyketide synthase in melanin synthesis (MBI-P, I3): tolprocarb (i.2.6);
   J) Plant defence induction (P1 to P8)
      - salicylate-related (P01-P03, P08): acibenzolar-S-methyl (J.1.1), probenazole (J.1.2), isotianil (J.1.3), tiadinil (J.1.4), dichlobentiazox (J.1.13); phosphonates (P07): fosetyl (J.1.6), fosetyl-aluminum (J.1.7), phosphorous acid and its salts (J.1.8), calcium phosphonate (J.1.11), potassium phosphonate (J.1.12); others: potassium or sodium bicarbonate (J.1.9), 4-cyclopropyl-*N*-(2,4-di'methoxy'phenyl)thiadiazole-5-carboxamide (J.1.10);
   K) Unknown mode of action (U)
      - aminopyrifen (K.1.54), benziothiazolinone (K.1.48), bromothalonil (K.1.49), bronopol (K.1.1), cyflufenamid (K.1.3), cymoxanil (K.1.4), dazomet (K.1.5), debacarb (K.1.6), diclomezine (K.1.8), difenzoquat (K.1.9), difenzoquat-methylsulfate (K.1.10), diphenylamin (K.1.11), dodine, dodine free base (K.1.18), fenitropan (K.1.12), flufenoxadiazam (K.1.58) [MoA proposed: class II histone deacetylase inhibitor], flumetover (K.1.14), flumetylsulforim (K.1.60), flusulfamide (K.1.15), flutianil (K.1.16), harpin (K.1.17), nitrapyrin (K.1.19), nitrothal-isopropyl (K. 1.20), oxine-copper (K. 1.22), picarbutrazox (K. 1.41), pyrisoxazole (K. 1.37), seboctylamine (K.1.61), tebufloquin (K.1.24), tecloftalam (K. 1.25), triazoxide (K.1.26), validamycin (K.1.2); *N*'-(4-(4-chloro-3-trifluoromethyl-phenoxy)-2,5-dimethyl-phenyl)-*N*-ethyl-N-methyl formamidine (K.1.27), *N*'-(4-(4-fluoro-3-trifluoromethyl-phenoxy)-2,5-dimethyl-phenyl)-*N*-ethyl-*N*-methyl formamidine (K. 1.28), *N*'-[4-[[3-[(4-chlorophenyl)methyl]-1,2,4-thiadiazol-5-yl]oxy]-2,5-dimethyl-phenyl]-*N*-ethyl-*N*-methyl-formamidine (K. 1.29), *N*'-(5-bromo-6-indan-2-yloxy-2-methyl-3-pyridyl)-*N*-ethyl-N-methyl-formamidine (K.1.30), *N*'-[5-bromo-6-[1-(3,5-difluorophenyl)ethoxy]-2-methyl-3-pyridyl]-*N*-ethyl-N-methyl-formamidine (K.1.31), *N*'-[5-bromo-6-(4-isopropylcyclohexoxy)-2-methyl-3-pyridyl]-*N*-ethyl-*N*-methyl-formamidine (K.1.32), N'-[5-bromo-2-methyl-6-(1-phenylethoxy)-3-pyridyl]-*N*-ethyl-*N*-methyl-formamidine (K.1.33), N'-(2-methyl-5-trifluoromethyl-4-(3-trimethylsilanyl-propoxy)-phenyl)-*N*-ethyl-N-methyl formamidine (K. 1.34), N'-(5-difluoromethyl-2-methyl-4-(3-trimethylsilanyl-propoxy)-phenyl)-*N*-ethyl-N-methyl formamidine (K.1.35), 2-(4-chloro-phenyl)-*N*-[4-(3,4-dimethoxy-phenyl)-isoxazol-5-yl]-2-prop-2-ynyloxy-acetamide (K.1.36), 3-[5-(4-methylphenyl)-2,3-dimethyl-isoxazolidin-3-yl]-pyridine (K.1.38), 5-chloro-1-(4,6-dimethoxy-pyrimidin-2-yl)-2-methyl-1*H*-benzoimidazole (K.1.39), ethyl (*Z*)-3-amino-2-cyano-3-phenyl-prop-2-enoate (K.1.40), pentyl *N*-[6-[[(*Z*)-[(1-methyltetrazol-5-yl)-phenyl-methylene]amino]oxymethyl]-2-pyridyl]carbamate (K.1.42), but-3-ynyl *N*-[6-[[(*Z*)-[(1-methyltetrazol-5-yl)-phenyl-methylene]amino]oxymethyl]-2-pyridyl]carbamate (K. 1.43), 2-(6-benzyl-2-pyridyl)quinazoline (K. 1.50), 2-[6-(3-fluoro-4-methoxy-phenyl)-5-methyl-2-pyridyl]-quinazoline (K.1.51), *N*'-(2,5-dimethyl-4-phenoxy-phenyl)-N-ethyl-N-methyl-formamidine (K.1.53), *N*'-[5-bromo-2-methyl-6-(1-methyl-2-propoxy-ethoxy)-3-pyridyl]-*N*-ethyl-*N*-methyl-formamidine (K.1.56), N'-[4-(4,5-dichlorothi-azol-2-yl)oxy-2,5-dimethyl-phenyl]-*N*-ethyl-*N*-methyl-formamidine (K.1.57), *N*-methyl-4-[5-(trifluoromethyl)-1,2,4-oxadiazol-3-yl]benzenecarbothioamide (K.1.59), *N*-methoxy-N-[[4-[5-(trifluoromethyl)-1,2,4-oxadiazol-3-yl]phenyl]methyl]cyclopropanecarboxamide (K.1.61), *N*-((4-[5-(trifluoromethyl)-1,2,4-oxadiazol-3-yl]phenyl)-methyl)propanamide (K. 1.62), 3,3,3-trifluoro-*N*-[[3-fluoro-4-[5-(trifluoromethyl)-1,2,4-oxadiazol-3-yl]phenyl]methyl]propanamide (K. 1.63), 3,3,3-trifluoro*-*N-[[2-fluoro-4-[5-(trifluoromethyl)-1,2,4-oxadiazol-3-yl]phenyl]methyl]-propanamide (K.1.64), *N*-[2,3-difluoro-4-[5-(trifluoromethyl)-1,2,4-oxadiazol-3-yl]benzyl]butanamide (K.1.65), *N*-[[2,3-difluoro-4-[5-(trifluoromethyl)-1,2,4-oxadiazol-3-yl]phenyl]methyl]-3,3,3-trifluoro-propanamide (K.1.66), 1-methoxy-1-methyl-3-[[4-[5-(trifluoromethyl)-1,2,4-oxadiazol-3-yl]phenyl]methyl]urea (K.1.67), 1,1-diethyl-3-[[4-[5-[trifluoromethyl]-1,2,4-oxadiazol-3-yl]phenyl]methyl]urea (K.1.68), *N*,2-dimethoxy-*N*-[[4-[5-(trifluoromethyl)-1,2,4-oxadiazol-3-yl]phenyl]methyl]propanamide (K.1.69), *N*-ethyl-2-methyl-*N*-[[4-[5-(trifluoromethyl)-1,2,4-oxadiazol-3-yl]phenyl]methyl]propanamide (K.1.70), 1-methoxy-3-methyl-1-[[4-[5-(trifluoromethyl)-1,2,4-oxadiazol-3-yl]phenyl]methyl]urea (K.1.71), 1-[[4-[5-(trifluoromethyl)-1,2,4-oxadiazol-3-yl]phenyl]methyl]pyr-rolidin-2-one (K.1.72), 1-[[4-[5-(trifluoromethyl)-1,2,4-oxadiazol-3-yl]phenyl]methyl]piperidin-2-one (K.1.73), 4-[[4-[5-(trifluoromethyl)-1,2,4-oxadiazol-3-yl]phenyl]methyl]morpholin-3-one (K.1.74), 4,4-dimethyl-2-[[4-[5-(trifluoromethyl)-1,2,4-oxadiazol-3-yl]phenyl]methyl]isoxazolidin-3-one (K. 1.75), 2-[[4-[5-(trifluoromethyl)-1,2,4-oxadiazol-3-yl]phenyl]methyl]isoxazolidin-3-one (K. 1.76), 5,5-dimethyl-2-[[4-[5-(trifluoromethyl)-1,2,4-oxa-diazol-3-yl]phenyl]methyl]isoxazolidin-3-one (K.1.77), 3,3-dimethyl-1-[[4-[5-(trifluoromethyl)-1,2,4-oxadiazol-3-yl]phenyl]methyl]piperidin-2-one (K.1.78), 2-[[4-[5-(trifluoromethyl)-1,2,4-oxadiazol-3-yl]phenyl]methyl]oxazinan-3-one (K.1.79), 1-[[3-fluoro-4-[5-(trifluoromethyl)-1,2,4-oxadiazol-3-yl]phenyl]methyl]azepan-2-one (K.1.80), 4,4-dimethyl-1-[[4-[5-(trifluoromethyl)-1,2,4-oxadiazol-3-yl]phenyl]methyl]pyrrolidin-2-one (K.1.81), 5-methyl-1-[[4-[5-(trifluoromethyl)-1,2,4-oxadiazol-3-yl]phenyl]methyl]pyrrolidin-2-one (K.1.82), ethyl 1-[[4-[5-(trifluoromethyl)-1,2,4-oxadiazol-3-yl]phenyl]methyl]pyrazole-4-carboxylate (K.1.83), *N*-methyl-1-[[4-[5-(trifluoromethyl)-1,2,4-oxadiazol-3-yl]phenyl]methyl]pyrazole-4-carboxamide (K.1.84), *N*,*N*-dimethyl-1-[4-[5-(trifluoromethyl)-1,2,4-oxadiazol-3-yl]benzyl]-1*H*-1,2,4-triazol-3-amine (K.1.85), *N*-methoxy-N-methyl-1-[[4-[5-(trifluoromethyl)-1,2,4-oxadiazol-3-yl]phenyl]methyl]pyrazole-4-carboxamide (K.1.86), propyl-1-[[4-[5-(trifluoromethyl)-1,2,4-oxa-diazol-3-yl]phenyl]methyl]pyrazole-4-carboxamide (K.1.87), *N*-methoxy-1-[[4-[5-(trifluoromethyl)-1,2,4-oxadiazol-3-yl]phenyl]methyl]pyrazole-4-carboxamide (K. 1.88), N-allyl-*N*-[[4-[5-(trifluoromethyl)-1,2,4-oxadiazol-3-yl]phenyl]methyl]propanamide (K.1.89), 3-ethyl-1-methoxy-1-[[4-[5-(trifluoromethyl)-1,2,4-oxadiazol-3-yl]phenyl]methyl]-urea (K.1.90), 1,3-dimethoxy-1-[[4-[5-(trifluoromethyl)-1,2,4-oxadiazol-3-yl]phenyl]methyl]urea (K.1.91), *N*-allyl-*N*-[[4-[5-(trifluoromethyl)-1,2,4-oxadiazol-3-yl]phenyl]methyl]acetamide (K. 1.92), *N*-[4-[5-(trifluoromethyl)-1,2,4-oxadiazol-3-yl]benzyl]cyclopropanecarboxamide (K.1.93), 1-methyl-3-[[4-[5-(trifluoromethyl)-1,2,4-oxadi-azol-3-yl]phenyl]methyl]urea (K.1.94), *N*'-[2-chloro-4-(2-fluorophenoxy)-5-methyl-phenyl]-N-ethyl-N-methyl-formamidine (K. 1.95). *N*'-[2-chloro-4-[(4-methoxy-phenyl)methyl]-5-methyl-phenyl]-*N*-ethyl-*N*-methyl-formamidine (K.1.96), *N*'-[2-chloro-4-[(4-cyano-phenyl)methyl]-5-methyl-phenyl]-N-ethyl-N-methyl-formamidine (K.1.97), N'-[2,5-dimethyl-4-(*o*-tolylmethyl)phenyl]-N-ethyl-N-methyl-formamidine (K. 1.98), 6-chloro-3-(3-cyclopropyl-2-fluoro-phenoxy)-*N*-[2-(2,4-dimethylphenyl)-2,2-difluoro-ethyl]-5-methyl-pyridazine-4-carboxamide (K.1.99), 3-(3-bromo-2-fluoro-phenoxy)-6-chloro-*N*-[2-(2-chloro-4-methyl-phenyl)-2,2-difluoro-ethyl]-5-methyl-pyridazine-4-carboxamide (K. 1.100), 6-chloro*-*N-[2-(2-chloro-4-methyl-phenyl)-2,2-difluoro-ethyl]-3-(3-cyclopropyl-2-fluoro-phenoxy)-5-methyl-pyridazine-4-carboxamide (K.1.101), 6-chloro-3-(3-cyclopropyl-2-fluoro-phenoxy)-*N*-[2-(3,4-dimethylphenyl)-2,2-difluoro-ethyl]-5-methyl-pyridazine-4-carboxamide (K. 1.102), 6-chloro-3-(3-chloro-2-fluoro-phenoxy)-*N*-[2-(2,4-dimethylphenyl)-2,2-difluoro-ethyl]-5-methyl-pyridazine-4-carboxamide (K.1.103), *N*-[2-(2-bromo-4-methyl-phenyl)-2,2-difluoro-ethyl]-6-chloro-3-(3-cyclopropyl-2-fluoro-phenoxy)-5-methylpyridazine-4-carboxamide (K.1.104), 2-[cyano-(2,6-difluoro-4-pyridyl)amino]-5-methyl-*N*-spiro[3.4]octan-3-yl-thiazole-4-carboxamide, 2-[acetyl-(2,6-difluoro-4-pyridyl)amino]-*N*-(2,2-dimethylcyclobutyl)-5-methyl-thiazole-4-carboxamide, 2-[(2,6-difluoro-4-pyridyl)-(2-methoxyacetyl)amino]-*N*-(2,2-dimethylcyclobutyl)-5-methyl-thiazole-4-carboxamide, 2-[cyano-(2,6-difluoro-4-pyridyl)amino]-*N*-(2,2-dimethylcyclobutyl)-5-methyl-thiazole-4-carboxamide, *N*-[1-[[3-[2-(5-fluoro-2-methoxy-phenyl)-2-hydroxy-ethyl]-5-[(*Z*)-*N*-isopropoxy-C-methyl-carbon-imidoyl]-2,6-dioxo-pyrimidin-1-yl]methyl]-2-methyl-propyl]-2-methyl-propanamide, *N*-[1-[[3-[2-(5-fluoro-2-methoxyphenyl)-2-hydroxy-ethyl]-5-[(*Z*)-N-isopropoxy-C-methyl-carbonimidoyl]-2,6-dioxo-pyrimidin-1-yl]methyl]-2-methylpropyl]-2,2-dimethyl-propanamide, *N*-[2-[3-[2-(5-fluoro-2-methoxy-phenyl)-2-hydroxy-ethyl]-5-[(*Z*)-*N*-isopropoxy-*C*-methyl-carbonimidoyl]-2,6-dioxo-pyrimidin-1-yl]-1-methyl-ethyl]-2-methyl-propanamide, *N*-[2-[3-[2-hydroxy-2-(2-methoxyphenyl)ethyl]-5-[(*Z*)-*N*-isopropoxy-*C*-methyl-carbonimidoyl]-2,6-dioxo-pyrimidin-1-yl]-1-methyl-ethyl]-2-methyl-propanamide, *N*-[2-[3-[2-(2-cyanoethoxy)-2-(5-fluoro-2-methoxy-phenyl)ethyl]-5-[(Z)-N-isopropoxy-*C*-methyl-carbonimidoyl]-2,6-dioxo-pyrimidin-1-yl]-1-methyl-ethyl]-2-methyl-propanamide, *rac*-3-[3-(3-chloro-2-fluoro-phenoxy)-6-methyl-pyridazin-4-yl]-5-[(2-chloro-4-methyl-phenyl)methyl]-5,6-dihydro-4*H*-1,2,4-oxadiazine, (5*S*)-3-[3-(3-chloro-2-fluoro-phenoxy)-6-methyl-pyridazin-4-yl]-5-[(2-chloro-4-methyl-phenyl)methyl]-5,6-dihydro-4H-1,2,4-oxadiazine, (5*R*)-3-[3-(3-chloro-2-fluoro-phenoxy)-6-methyl-pyridazin-4-yl]-5-[(2-chloro-4-methylphenyl)methyl]-5,6-dihydro-4*H*-1,2,4-oxadiazine, 2-(4-fluorophenoxy)-1-[4-[5-(trifluoromethyl)-1,2,4-oxadiazol-3-yl]phenyl]ethanone, 2-[(6-fluoro-3-pyridyl)oxy]-1-[4-[5-(trifluoromethyl)-1,2,4-oxadiazol-3-yl]phenyl]ethanone, 2-(4-fluoroanilino)-1-[4-[5-(trifluoromethyl)-1,2,4-oxadiazol-3-yl]phenyl]ethenone, ethyl 1-[[4-[[2-(trifluoromethyl)-1,3-dioxolan-2-yl]methoxy]phenyl]methyl]-1*H*-pyrazole-4-carboxylate, ethyl 1-[[4-[[(1Z)-2-ethoxy-3,3,3-trifluoro-1-propen-1-yl]oxy]phenyl]methyl]-1*H*-pyrazole-4-carboxylate;
   L) Biopesticides
      L1) Microbial pesticides with fungicidal, bactericidal, viricidal and/or plant defense activator activity: *Ampelomyces quisqualis, Aspergillus flavus, Aureobasidium pullulans, Bacillus altitudinis, B. amyloliquefaciens, B. amyloliquefaciens* ssp. *plantarum* (also referred to as B. *velezensis), B. megaterium, B. moja-vensis, B. mycoides, B. pumilus, B. simplex,* B. *solisalsi, B*. *subtilis, B*. *subtilis* var. *amyloliquefaciens, B. velezensis, Candida oleophila, C*. *saitoana, Clavibacter michiganensis* (bacteriophages), *Coniothyrium minitans, Cryphonectria parasitica, Cryptococcus albidus, Dilophosphora alopecuri, Fusarium oxysporum, Clonostachys rosea* f. *catenulate* (also named *Gliocladium catenulatum), Gliocladium roseum, Lysobacter antibioticus, L. enzymogenes, Metschnikowia fructicola, Microdochium dimerum, Microsphaeropsis ochra-*cea, *Muscodor albus, Paenibacillus alvei, Paenibacillus epiphyticus, P. polymyxa, Pantoea vagans, Penicillium bilaiae, Phlebiopsis gigantea, Pseudomonas* sp., *Pseudomonas chloraphis, Pseudozyma floccu-losa, Pichia anomala, Pythium oligandrum, Sphaerodes mycoparasitica, Streptomyces griseoviridis,* S. *lydicus,* S. *violaceusniger, Talaromyces flavus, Trichoderma asperelloides, T. asperellum, T. atroviride, T. fertile, T. gamsii, T. harmatum, T. harzianum, T. polysporum, T. stromatícum, T. virens, T. viride, Typhula phacorrhiza, Ulocladium oudemansii, Verticillium dahliae,* zucchini yellow mosaic virus (avirulent strain);
      L2) Biochemical pesticides with fungicidal, bactericidal, viricidal and/or plant defense activator activity: harpin protein, plant oils (BM3): tea tree oil, orange oil (L.2.1), eugenol, limonene (L.2.2), geraniol (L.2.3), thymol (L.2.4); Reynoutria sachalinensis extract, aureobasidin (in particular aureobasidin A (L.2.5)), bafilomycin (L.2.7) (in particular bafilomycin A1, B1 and C1), chlorflavonin (L.2.8), cinnamaldehyde (L.2.9), natamycin (L.2.10; F8);
      L3) Microbial pesticides with insecticidal, acaricidal, molluscidal and/or nematicidal activity: *Agrobacterium radiobacter, Bacillus cereus, B. firmus, B. thuringiensis, B. thuringiensis* ssp. *aizawai, B.* t. ssp. *israelensis, B*. *t.* ssp. *galleriae, B. t*. ssp. *kurstaki, B*. *t*. ssp. *tenebrionis, Beauveria bassiana, B. brongniartii, Burkholderia* spp., *Chromobacterium subtsugae, Cydia pomonella* granulovirus (CpGV), *Cryptophlebia leucotreta* granulovirus (CrleGV), *Flavobacterium* spp., *Helicoverpa armigera* nucleopolyhedrovirus (HearNPV), *Helicoverpa* zea nucleopolyhedrovirus (HzNPV), *Helicoverpa* zea single capsid nucleopolyhedrovirus (HzSNPV), *Heterorhabditis bacteriophora, Isaria fumosorosea, Lecanicillium longisporum, L. muscarium, Metarhizium anisopliae, M. anisopliae* var. *anisopliae, M. anisopliae* var. *acridum, Nomuraea rileyi, Paecilomyces fumosoroseus, P. lilacinus, Paenibacillus popilliae, Pasteuria* spp., *P. nishizawae, P. penetrans, P. ramosa, P. thomea, P. usgae, Pseudomonas fluorescens, Spodoptera littoralis* nucleopolyhedrovirus (SpliNPV), *Steinemema carpocapsae, S*. *feltiae, S*. *kraussei, Streptomyces galbus, S*. *microflavus;*
      L4) Biochemical pesticides with insecticidal, acaricidal, molluscidal, pheromone and/or nematicidal activity: L-carvone, citral, (*E*,*Z*)-7,9-dodecadien-1-yl acetate, ethyl formate, (*E*,*Z*)-2,4-ethyl decadienoate (pear ester), (*Z*,*Z*,*E*)-7, 11*,* 13-hexadecatrienal, heptyl butyrate, isopropyl myristate, lavanulyl senecioate, cis-jasmone, 2-methyl-1-butanol, methyl eugenol, methyl jasmonate, (*E*,*Z*)-2,13-octadecadien-1-ol (*E*,*Z*)-2,13-octadecadien-1-ol acetate, (*E*,*Z*)-3,13-octadecadien-1-ol, (*R*)-1-octen-3-ol, pentatermanone, (*E*,*Z*,*Z*)-3,8,11-tetradecatrienyl acetate, (*Z*,*E*)-9,12-tetradecadien-1-yl acetate, (*Z*)-7-tetradecen-2-one, (*Z*)-9-tetradecen-1-yl acetate, (*Z*)-11-tetradecenal, (*Z*)-11-tetradecen-1-ol, extract of *Chenopodium ambrosiodes,* Neem oil, Quillay extract;
      L5) Microbial pesticides with plant stress reducing, plant growth regulator, plant growth promoting and/or yield enhancing activity: *Azospirillum amazonense, A*. *brasilense, A*. *lipoferum,* A*. irakense, A*. *halopraeferens, Bradyrhizobium* spp., B. *elkanii, B. japonicum, B. liaoningense, B. lupini, Delftia acidovorans, Glomus infraradices, Mesorhizobium* spp., *Rhizobium leguminosarum* bv. *phaseoli, R. I*. bv. *trifolii, R. I*. bv. *viciae, R. tropici, Sinorhizobium meliloti;*
   O) Insecticides from classes O.1 to 0.29 (IRAC classes 1 to 29):
      O.1 Acetylcholine esterase (AChE) inhibitors: carbamates (1A): aldicarb, alanycarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, triazamate, trimethacarb, XMC, xylylcarb; organophosphates (1B): acephate, azamethiphos, azinphos-ethyl, azinphosmethyl, cadusafos, chlorethoxyfos, chlorfenvinphos, chlormephos, chlorpyrifos, chlorpyrifos-methyl, coumaphos, cyanophos, demeton-S-methyl, diazinon, dichlorvos, dicrotophos, dimethoate, dimethylvinphos, disulfoton, EPN, ethion, ethoprophos, famphur, fenamiphos, fenitrothion, fenthion, fosthiazate, heptenophos, imicyafos, isofenphos, isopropyl O-(methoxyaminothio-phosphoryl) salicylate, isoxathion, malathion, mecarbam, methamidophos, methidathion, mevinphos, monocrotophos, naled, omethoate, oxydemeton-methyl, parathion, parathion-methyl, phenthoate, phorate, phosalone, phosmet, phosphamidon, phoxim, pirimiphos- methyl, profenofos, propetamphos, prothiofos, pyraclofos, pyridaphenthion, quinalphos, sulfotep, tebupirimfos, temephos, terbufos, tetrachlorvinphos, thiometon, triazophos, trichlorfon, vamidothion;
      0.2 GABA-gated chloride channel blockers: (2A): chlordane, endosulfan; (2B): ethiprole, fipronil, flufiprole, nicofluprole, pyrafluprole, pyriprole;
      0.3 Sodium channel modulators: pyrethroids (3A): acrinathrin, allethrin, d-*cis*-trans allethrin, d-trans allethrin, bifenthrin, *kappa*-bifenthrin, bioallethrin, bioallethrin *S*-cylclopentenyl, bioresmethrin, cycloprothrin, cyfluthrin, *beta*-cyfluthrin, cyhalothrin, *lambda*-cyhalothrin, *gamma*-cyhalothrin, cypermethrin, *alpha*-cypermethrin, *beta*-cypermethrin, *theta*-cypermethrin, zeta-cypermethrin, cyphenothrin, deltamethrin, empenthrin, esfenvalerate, etofenprox, fenpropathrin, fenvalerate, flucythrinate, flumethrin, *tau*-fluvalinate, halfenprox, heptafluthrin, imiprothrin, meperfluthrin, metofluthrin, momfluorothrin, *epsilon*-momfluorothrin, permethrin, phenothrin, prallethrin, profluthrin, pyrethrins (pyrethrum), resmethrin, silafluofen, tefluthrin, kappa-tefluthrin, tetramethylfluthrin, tetramethrin, tralomethrin, transfluthrin; (3B): DDT, methoxychlor;
      0.4 Nicotinic acetylcholine receptor (nAChR) competitive modulators: neonicotinoids (4A): acetamiprid, clothianidin, cycloxaprid, dinotefuran, imidacloprid, nitenpyram, thiacloprid, thiamethoxam; 4,5-dihydro-*N*-nitro-1-(2-oxiranyl-methyl)-1*H*-imidazol-2-amine, (2*E*)-1-[(6-chloropyridin-3-yl)methyl]-*N*'-nitro-2-pentylidenehydrazinecarboximid-amide; 1-[(6-chloropyridin-3-yl)methyl]-7-methyl-8-nitro-5-propoxy-1,2,3,5,6,7-hexahydroimidazo[1,2-a]pyridine; (4B) nicotine; sufoximines (4C): sulfoxaflor; butenolindes (4D): flupyradifurone; mesionics (4E): dicloromezotiaz, fenmezoditiaz, triflumezopyrim, pyridylidenes (4F): flupyrimin, 1-[(2-chlorothiazol-5-yl)methyl]-3-(3,5-dimethyl-isoxazol-4-yl)pyrido[1,2-a]pyrimidine-2,4-dione;
      0.5 nAChR allosteric modulators: spinetoram, spinosad;
      0.6 Glutamate gated chloride channel allosteric modulators: abamectin, emamectin benzoate, ivermectin, lepimectin, milbemectin;
      0.7 Juvenile hormone receptor modulators: hormone analogs (7A): hydroprene, kinoprene, methoprene; fenoxycarb (7B), pyriproxyfen (7C);
      0.8 miscellaneous non-specific (multi-site) inhibitors: methyl bromide and other alkyl halides; chloropicrin, cryolite, sulfuryl fluoride, borax, tartar emetic;
      0.9 Chordotonal organ TRPV channel modulators: afidopyropen, pymetrozine, pyrifluquinazon;
      O.10 Mite growth inhibitors: clofentezine, diflovidazin, hexythiazox; etoxazole;
      O.11 Microbial disruptors of midgut membranes: *Bacillus thuringiensis* subsp. *israelensis, B*. *t*. subsp. *aizawai, B. t.* subsp. *kurstaki, B*. *t*. subsp. *fenebrionis*, B. *sphaericus; B.t.* crop proteins: Cry1Ab, Cry1Ac*,* Cry1Fa, Cry2Ab, mCry3A, Cry3Ab, Cry3Bb, Cry34/35Ab1;
      0.12 Inhibitors of mitochondrial ATP synthase: diafenthiuron; azocyclotin, cyhexatin, fenbutatin oxide, propargite, tetradifon;
      0.13 Uncouplers of oxidative phosphorylation via disruption of the proton gradient: chlorfenapyr, DNOC, sulfluramid;
      0.14 nAChR channel blockers: bensultap, cartap hydrochloride, thiocyclam, thiosultap-sodium;
      0.15 Inhibitors of the chitin biosynthesis CHS1: bistrifluron, chlorfluazuron, diflubenzuron, flucycloxuron, flufen-oxuron, hexaflumuron, lufenuron, novaluron, noviflumuron, teflubenzuron, triflumuron;
      0.16 Inhibitors of the chitin biosynthesis type 1: buprofezin;
      0.17 Moulting disruptors: cyromazine;
      0.18 Ecdyson receptor agonists: methoxyfenozide, tebufenozide, halofenozide, fufenozide, chromafenozide;
      0.19 Octopamin receptor agonists: amitraz;
      0.20 Mitochondrial complex III electron transport inhibitors - Qo site: hydramethylnon, acequinocyl, fluacrypyrim, flupyroxystrobin, bifenazate;
      0.21 Mitochondrial complex I electron transport inhibitors: fenazaquin, fenpyroximate, pyrimidifen, pyridaben, tebufenpyrad, tolfenpyrad; rotenone;
      0.22 Voltage-dependent sodium channel blockers: indoxacarb, metaflumizone, oxazosulfyl, 2-[2-(4-cyanophenyl)-1-[3-(trifluoromethyl)phenyl]ethylidene]-N-[4-(difluoromethoxy)phenyl]-hydrazinecarboxamide, N-(3-chloro-2-methylphenyl)-2-[(4-chlorophenyl)-[4-[methyl(methylsulfonyl)amino]phenyl]methylene]-hydrazinecarboxamide, *N*-[4-chloro-2-[[(1,1-dimethylethyl)amino]carbonyl]-6-methylphenyl]-1-(3-chloro-2-pyridinyl)-3-(fluoromethoxy)-1H-pyrazole-5-carboxamide, 2-[2-(4-cyanophenyl)-1-[3-(trifluoromethyl)phenyl]ethylidene]-N-[4-(difluorometh-oxy)phenyl]-hydrazinecarboxamide;
      0.23 Inhibitors of the of acetyl CoA carboxylase: spidoxamat, spirodiclofen, spiromesifen, spirotetramat, spiropidion, spirobudifen, 11-(4-chloro-2,6-dimethylphenyl)-12-hydroxy-1,4-dioxa-9-azadispiro[4.2.4.2]tetradec-11-en-10-one;
      0.24 Mitochondrial complex IV electron transport inhibitors: aluminium phosphide, calcium phosphide, phosphine, zinc phosphide, cyanide;
      0.25 Mitochondrial complex II electron transport inhibitors: cyclobutrifluram, cyenopyrafen, cyflumetofen, cyetpyrafen, pyflubumide;
      0.28 Ryanodine receptor-modulators: chlorantraniliprole, cyantraniliprole, cyclaniliprole, cyhalodiamide, flubendiamide, pixoaniliprole, fluchlodiniliprole, tetrachlorantraniliprole, tetraniliprole, tiorantraniliprole, (*R*)-3-chloro-*N*¹-{2-methyl-4-[1,2,2,2 -tetrafluoro-1-(trifluoromethyl)ethyl]phenyl}-*N*²-(1-methyl-2-methylsulfonylethyl)phthalamide, (*S*)-3-chloro-*N*¹-{2-methyl-4-[1,2,2,2-tetrafluoro-1-(trifluoromethyl)ethyl]phenyl}-*N*²-(1-methyl-2-methylsulfonylethyl)phthalamide, methyl-2-[3,5-dibromo-2-({[3-bromo-1-(3-chloropyridin-2-yl)-1*H*-pyrazol-5-yl]-carbonyl}amino)benzoyl]-1,2-dimethylhydrazinecarboxylate; N-[4,6-dichloro-2-[(diethyl-*lambda*-4-sulfanylidene)-carbamoyl]-phenyl]-2-(3-chloro-2-pyridyl)-5-(trifluoromethyl)pyrazole-3-carboxamide; *N*-[4-chloro-2-[(diethyl-*lambda*-4-sulfanylidene)carbamoyl]-6-methyl-phenyl]-2-(3-chloro-2-pyridyl)-5-(trifluoromethyl)pyrazole-3-carboxamide; *N*-[2-(5-amino-1,3,4-thiadiazol-2-yl)-4-chloro-6-methylphenyl]-3-bromo-1-(3-chloro-2-pyridinyl)-1*H*-pyr-azole-5-carboxamide; 3-chloro-1-(3-chloro-2-pyridinyl)-*N*-[2,4-dichloro-6-[[(1-cyano-1-methylethyl)amino]-carbonyl]phenyl]-1*H*-pyrazole-5-carboxamide; *N*-[4-chloro-2-[[(1,1-dimethylethyl)amino]carbonyl]-6-methylphenyl]-1-(3-chloro-2-pyridinyl)-3-(fluoromethoxy)-1*H*-pyrazole-5-carboxamide; *N*-[2-(5-amino-1,3,4-thiadiazol-2-yl)-4-chloro-6-methylphenyl]-3-bromo-1-(3-chloro-2-pyridinyl)-1 *H*-pyrazole-5-carboxamide;
      0.29 Chordotonal organ modulators: flonicamid;
      0.30 GABA-gated chloride channel allosteric modulators: broflanilide, cyproflanilide, fluralaner, fluxametamide, isocycloseram, lotilaner, piperflanilide, sarolaner, tigolaner, umifoxolaner;
      0.33 Calcium-activated potassium channel modulators: acynonapyr;
      0.34 Mitochondrial complex III electron transport inhibitors - Qi site: flometoquin;
      0.35 RNA interference mediated target suppressors: ledprona;
      0.36: Chordotonal organ modulators: dimpropyridaz;
      O.UN Unknown or uncertain mode of action: afoxolaner, azadirachtin, amidoflumet, benzoximate, benzpyrimoxan, bromopropylate, bisulfufen, chinomethionat, dicofol, fluazaindolizine, flufenerim, fluensulfone, fluhexafon, flupentiofenox, indazapyroxamet, isoflualanam, metaldehyde, metoxadiazone, piperonyl butoxide, pyridalyl, sulfiflumin, tioxazafen, trifluenfuronate, tyclopyrazoflor; 11-(4-chloro-2,6-dimethylphenyl)-12-hydroxy-1,4-dioxa-9-azadispiro[4.2.4.2]-tetradec-11-en-10-one, 3-(4'-fluoro-2,4-dimethylbiphenyl-3-yl)-4-hydroxy-8-oxa-1-aza-spiro[4.5]dec-3-en-2-one, 4-cyano-*N*-[2-cyano-5-[[[2,6-dibromo-4-[1,2,2,3,3,3-hexafluoro-1-(trifluoromethyl)propyl]phenyl]amino]carbonyl]phenyl]-2-methyl-benzamide, 4-cyano-3-[(4-cyano-2-methyl-benzoyl)amino]-*N*-[2,6-dichloro-4-[1,2,2,3,3,3-hexafluoro-1-(trifluoromethyl)propyl]phenyl]-2-fluoro-benzamide, *N*-[5-[[[2-chloro-6-cyano-4-[1,2,2,3,3,3-hexafluoro-1-(trifluoromethyl)propyl]phenyl]amino]carbonyl]-2-cyano-phenyl]-4-cyano-2-methyl-benzamide, *N*-[5-[[[2-bromo-6-chloro-4-[2,2,2-trifluoro-1-hydroxy-1-(trifluoromethyl)ethyl]phenyl]-amino]carbonyl]-2-cyano-phenyl]-4-cyano-2-methyl-benzamide, *N*-[5-[[[2-bromo-6-chloro-4-[1,2,2,3,3,3-hexa-fluoro-1-(trifluoromethyl)propyl]phenyl]amino]carbonyl]-2-cyano-phenyl]-4-cyano-2-methyl-benzamide, 4-cyano-*N*-[2-cyano-5-[[[2,6-dichloro-4-[1,2,2,3,3,3-hexafluoro-1-(trifluoromethyl)propyl]phenyl]amino]carbonyl]phenyl]-2-methyl-benzamide, 1-[2-fluoro-4-methyl-5-[(2,2,2-trifluoroethyl)sulfinyl]phenyl]-3-(trifluoromethyl)-1*H*-1,2,4-triazole-5-amine, *N*-[5-[[[2-bromo-6-chloro-4-[1,2,2,2-tetrafluoro-1-(trifluoromethyl)ethyl]phenyl]amino]-carbonyl]-2-cyano-phenyl]-4-cyano-2-methyl-benzamide, 4-cyano-*N*-[2-cyano-5-[[[2,6-dichloro-4-[1,2,2,2-tetra-fluoro-1-(trifluoromethyl)ethyl]phenyl]amino]carbonyl]phenyl]-2-methyl-benzamide, 5-[3-[2,6-dichloro-4-(3,3-di-chloroallyloxy)phenoxy]propoxy]-1*H*-pyrazole; *N*-[5-[[2-bromo-6-chloro-4-[1,2,2,3,3,3-hexafluoro-1-(trifluoromethyl)-propyl]phenyl]carbamoyl]-2-cyano-phenyl]-4-cyano-2-methyl-benzamide; 4-cyano-*N*-[2-cyano-5-[[2,6-di-chloro-4-[1,2,2,3,3,3-hexafluoro-1-(trifluoromethyl)-propyl]phenyl]carbamoyl]phenyl]-2-methyl-benzamide; 4- cyano-*N*-[2-cyano-5-[[2,6-dichloro-4-[1,2,2,2-tetrafluoro-1-(trifluoromethyl)ethyl]phenyl]carbamoyl]¬phenyl]-2-methyl-benzamide; *N*-[5-[[2-bromo-6-chloro-4-[1,2,2,2-tetrafluoro-1-(trifluoromethyl)ethyl]phenyl]carba¬moyl]-2-cyano-phenyl]-4-cyano-2-methyl-benzamide; 2-(1,3-dioxan-2-yl)-6-[2-(3-pyridinyl)-5-thiazolyl]-pyridine; 2-[6-[2-(5-fluoro-3-pyridinyl)-5-thiazo¬yl]-2-pyridinyl]-pyrimidine; 2-[6-[2-(3-pyridinyl)-5-thiazolyl]-2-pyridinyl]-pyrimidine; *N*-methylsul¬fonyl-6-[2-(3-pyridyl)thiazol-5-yl]pyridine-2-carboxamide; *N*-methylsulfonyl-6-[2-(3-pyridyl)thiazol-5-yl]pyridine-2-carboxamide; 1-[(6-chloro-3-pyridinyl)methyl]-1,2,3,5,6,7-hexahydro-5-methoxy-7-methyl-8-nitro-imidazo[1,2-a]pyridine; 1-[(6-chloropyridin-3-yl)methyl]-7-methyl-8-nitro-1,2,3,5,6,7-hexahydroimidazo[1,2-a]pyridin-5-ol; *N*-(3-chloro-2-methylphenyl)-2-[(4-chlorophenyl)-[4-[methyl-(methylsulfonyl)amino]phenyl]methylene]-hydrazinecarboxamide; 1-[(6-chloro-3-pyridinyl)methyl]-1,2,3,5,6,7-hexahydro-5-methoxy-7-methyl-8-nitro-imidazo[1,2-a]pyridine; 2-(3-pyridinyl)-*N*-(2-pyrimidinylmethyl)-2*H*-indazole-5-carboxamide; *N*-[4-chloro-3-[[(phenylmethyl)amino]carbonyl]phenyl]-1-methyl-3-(1,1,2,2,2-pentafluoroethyl)-4-(trifluoromethyl)-1*H*-pyrazole-5-carboxamide; *N*-[4-chloro-3-[[(phenylmethyl)amino]carbonyl]-phenyl]-1-methyl-3-(1,1,2,2,2-pentafluoroethyl)-4-(trifluoromethyl)-1H*-*pyrazole-5-carboxamide; 2-(3-ethylsulfonyl-2-pyridyl)-3-methyl-6-(trifluoromethyl)imidazo[4,5-b]pyridine, 2-[3-ethylsulfonyl-5-(trifluoromethyl)-2-pyridyl]-3-methyl-6-(trifluoromethyl)imidazo[4,5-b]pyridine; *N*-[4-chloro-3-(cyclopropylcarbamoyl)phenyl]-2-methyl-5-(1,1,2,2,2-pentafluoroethyl)-4-(trifluoromethyl)pyrazole-3-carboxamide, *N*-[4-chloro-3-[(1-cyanocyclopropyl)-carbamoyl]phenyl]-2-methyl-5-(1,1,2,2,2-pentafluoroethyl)-4-(trifluoromethyl)pyrazole-3-carboxamide; [(2S,3R,4R,5S,6S)-3,5-dimethoxy-6-methyl-4-propoxy-tetrahydropyran-2-yl*]*-N-[4-[1-[4-(trifluoromethoxy)phenyl]-1,2,4-triazol-3-yl]phenyl]carbamate; [(2*S*,3*R*,4*R*,5*S*, 6*S*)-3,4,5-trimethoxy-6-methyl-tetrahydropyran-2-yl]-*N*-[4-[1-[4-(trifluoromethoxy)phenyl]-1,2,4-triazol-3-yl]phenyl]carbamate; [(2*S*,3*R*,4*R*,5*S*,6*S*)-3,5-dimethoxy-6-methyl-4-propoxy-tetrahydropyran-2-yl]-*N*-[4-[1-[4-(1,1,2,2,2-pentafluoroethoxy)phenyl]-1,2,4-triazol-3-yl]phenyl]carbamate; [(2*S*,3*R*,4*R*,5*S*,6*S*)-3,4,5-trimethoxy-6-methyl-tetrahydropyran-2-yl]-*N*-[4-[1-[4-(1,1,2,2,2-pentafluoroethoxy)phenyl]-1,2,4-triazol-3-yl]phenyl]carbamate; (2*Z*)-3-(2-isopropylphenyl)-2-[(*E*)-[4-[1-[4-(trifluoromethoxy)phenyl]-1,2,4-triazol-3-yl]phenyl]methylenehydrazono]thiazolidin-4-one, (2Z)-3-(2-isopropylphenyl)-2-[(*E*)-[4-[1-[4-(1,1,2,2,2-pentafluoroethoxy)phenyl]-1,2,4-triazol-3-yl]phenyl]methylenehydrazono]thiazolidin-4-one, (2*Z*)-3-(2-isopro¬pyl¬phenyl)-2-[(*E*)-[4-[1-[4-(1,1,2,2,2-pentaflu-oroethoxy)phenyl]-1,2,4-triazol-3-yl]phenyl]methylenehydrazono]thiazolidin-4-one; 2-(6-chloro-3-ethylsulfonyl-imidazo[1,2-a]pyridin-2-yl)-3-methyl-6-(trifluoromethyl)imidazo[4,5-b]pyridine, 2-(6-bromo-3-ethylsulfonyl-imidazo[1,2-a]pyridin-2-yl)-3-methyl-6-(trifluoromethyl)imidazo[4,5-b]pyridine, 2-(3-ethylsulfonyl-6-iodo-imidazo[1,2-a]pyridin-2-yl)-3-methyl-6-(trifluoromethyl)imidazo[4,5-b]pyridine, 2-(7-chloro-3-ethylsulfonyl-imidazo[1,2-a]pyridin-2-yl)-3-methyl-6-(trifluoromethyl)imidazo[4,5-b]pyridine, 2-(7-chloro-3-ethylsulfonyl-imidazo[1,2-a]pyridin-2-yl)-3-methyl-6-(trifluoromethyl)imidazo[4,5-b]pyridine, 2-(3-ethylsulfonyl-7-iodo-imidazo-[1,2-a]pyridin-2-yl)-3-methyl-6-(trifluoromethyl)imidazo[4,5-b]pyridine, 3-ethylsulfonyl-6-iodo-2-[3-methyl-6-(trifluoromethyl)imidazo[4,5-b]pyridin-2-yl]imidazo[1,2-a]pyridine-8-carbonitrile, 2-[3-ethylsulfonyl-8-fluoro-6-(trifluoromethyl)imidazo[1,2-a]pyridin-2-yl]-3-methyl-6-(trifluoromethyl)imidazo[4,5-b]pyridine, 2-[3-ethylsulfonyl-7-(trifluoromethyl)imidazo[1,2-a]pyridin-2-yl]-3-methyl-6-(trifluoromethylsulfinyl)imidazo[4,5-b]pyridine, 2-[3-ethylsulfonyl-7-(trifluoromethyl)imidazo[1,2-a]pyridin-2-yl]-3-methyl-6-(trifluoromethyl)imidazo[4,5-c]pyridine, 2-(6-bromo-3-ethylsulfonyl-imidazo[1,2-a]pyridin-2-yl)-6-(trifluoromethyl)pyrazolo[4,3-c]pyridine; N-[[2-fluoro-4-[(2S,3S)-2-hydroxy-3-(3,4,5-trichlorophenyl)-3-(trifluoromethyl)pyrrolidin-1-yl]phenyl]methyl]cyclopropanecarboxamide, *N*-[3-chloro-1-(3-pyridyl)pyrazol-4-yl]-2-methylsulfonyl-propanamide, *N*-[4-chloro-3-[(1-cyano-cyclopropyl)carbamoyl]phenyl]-2-methyl-4-methylsulfonyl-5-(1,1,2,2,2-pentafluoroethyl)pyrazole-3-carboxamide, 1,4-dimethyl-2-[2-(pyridin-3-yl)-2*H*-indazol-5-yl]-1,2,4-triazolidine-3,5-dione, N-[4-chloro-2-(3-pyridyl)thiazol-5-yl]-*N*-ethyl-3-methylsulfonyl-propanamide, *N*-cyclopropyl-5-[(5S)-5-(3,5-dichloro-4-fluoro-phenyl)-5-(trifluoromethyl)-4*H*-isoxazol-3-yl]isoquinoline-8-carboxamide, 5-[(5*S*)-5-(3,5-dichloro-4-fluoro-phenyl)-5-(trifluoromethyl)-4*H*-isoxazol-3-yl]-N-(pyrimidin-2-ylmethyl)isoquinoline-8-carboxamide, *N*-[1-(2,6-difluorophenyl)pyrazol-3-yl]-2-(trifluoromethyl)benzamide, 5-((1*R*,3*R*)-3-(3,5-bis(trifluoromethyl)phenyl)-2,2-dichlorocyclopropane-1-carboxamido)-2-chloro-*N*-(3-(2,2-difluoroacetamido)-2,4-difluorophenyl)benzamide, 1-[6-(2,2-difluoro-7-methyl-[1,3]dioxolo[4,5-f]benzimidazol-6-yl)-5-ethylsulfonyl-3-pyridyl]cyclopropanecarbonitrile, 6-(5-cyclopropyl-3-ethylsulfonyl-2-pyridyl)-2,2-difluoro-7-methyl-[1,3]dioxolo[4,5-f]benzimidazole, 3,5-bis(trifluoromethyl)-*N*-[(1*S*)-1-[1-[6-(trifluoromethyl)-4-pyrimidinyl]-1*H*-1,2,4-triazol-5-yl]ethyl]-benzamide,2-(3-ethylsulfonyl-2-pyridyl)-5-(2,2,3,3,3-pentafluoropropoxy)pyrazine, 2-[3-ethylsulfonyl-6-(trifluoromethyl)pyrazolo[1,5-a]pyridin-2-yl]-3-methyl-6-(trifluoromethyl)imidazo[4,5-b]pyridine, 9-(methoxymethyl)-5-(3-pyridyl)-2-oxa-5,6,9,14-tetrazatricy-clo[8.4.0.0^{3,7}]tetradeca-1(10),3,6,11,13-pentaen-8-one, 2-[5-[(*E*)-2-chloro-3,3,3-trifluoro-prop-1-enyl]-1-methyl-imidazol-2-yl]-5-cyclopropyl-3-ethylsulfonyl-pyridine, 2-(5-cyclopropyl-3-ethylsulfonyl-2-pyridyl)-5-(trifluoromethylsulfinyl)-1,3-benzoxazole.

The invention also relates to a method for controlling phytopathogenic harmful fungi using mixtures of a compound I and a pesticide II, optionally at least one pesticide III, and to compositions and seed comprising these mixtures.

Moreover, we have found that simultaneous, that is joint or separate, application of a compound I and a pesticide II or successive application of a compound I and of pesticide II allows better control of harmful fungi than is possible with the individual compounds alone (synergistic mixtures). Compounds I and/or the pesticides II can be present in different crystal modifications, which may differ in biological activity.

The mixtures according to the invention show an improved activity and/or a broader activity spectrum against phytopathogenic fungi, and/or are less toxic to mammals, and/or less toxic to non-target organisms such as birds, aquatic vertebrates and invertebrates, pollinators, arthropods; and/or show a synergistic activity against certain phytopathogenic fungi.

A pesticide (e.g. pesticides II or pesticides III as defined herein) is generally a chemical or biological agent (such as pesticidal active ingredient, compound, composition, virus, bacterium, antimicrobial, or disinfectant) that through its effect deters, incapacitates, kills or otherwise discourages pests. Target pests can include insects, plant pathogens, weeds, mollusks, birds, mammals, fish, nematodes (roundworms), and microbes that destroy property, cause nuisance, spread disease or are vectors for disease. The term "pesticide" includes also plant growth regulators that alter the expected growth, flowering, or reproduction rate of plants; defoliants that cause leaves or other foliage to drop from a plant, usually to facilitate harvest; desiccants that promote drying of living tissues, such as unwanted plant tops; plant activators that activate plant physiology for defense of against certain pests; safeners that reduce unwanted herbicidal action of pesticides on crop plants; and plant growth promoters that affect plant physiology e.g. to increase plant growth, biomass, yield or any other quality parameter of the harvestable goods of a crop plant.

Biopesticides have been defined as a form of pesticides based on microorganisms (bacteria, fungi, viruses, nematodes, etc.) or natural products (compounds, such as metabolites, proteins, or extracts from biological or other natural sources) (U.S. Environmental Protection Agency: http://www.epa.gov/pesticides/biopesticides/). Biopesticides fall into two major classes, microbial and biochemical pesticides:
(1) Microbial pesticides consist of bacteria, or viruses (and often include the metabolites that bacteria and fungi produce). Entomopathogenic nematodes are also classified as microbial pesticides, even though they are multi-cellular.
(2) Biochemical pesticides are naturally occurring substances that control pests or provide other crop protection uses as defined below but are relatively non-toxic to mammals.

Although the present invention will be described with respect to particular embodiments, this description is not to be construed in a limiting sense.

Before describing in detail exemplary embodiments of the present invention, definitions important for understanding the present invention are given. As used in this specification and in the appended claims, the singular forms of "a" and "an" also include the respective plurals unless the context clearly dictates otherwise. In the context of the present invention, the terms "about" and "approximately" denote an interval of accuracy that a person skilled in the art will understand to still ensure the technical effect of the feature in question. The term typically indicates a deviation from the indicated numerical value of ±20 %, preferably ±15 %, more preferably ±10 %, and even more preferably ±5 %. It is to be understood that the term "comprising" is not limiting. For the purposes of the present invention the term "consisting of" is considered to be a preferred embodiment of the term "comprising of".

Unless otherwise indicated, the following definitions are set forth to illustrate and define the meaning and scope of the various terms used to describe the invention herein and the appended claims. These definitions should not be interpreted in the literal sense as they are not intended to be general definitions and are relevant only for this application.

The term "compounds I" refers collectively to compounds of formulae la, Ib, and Ic as defined herein. Likewise, the term "compounds la" refers compounds of formula la.

The term "independently" when used in the context of selection of substituents for a variable, it means that where more than one substituent is selected from a number of possible substituents, those substituents may be the same or different.
The organic moieties or groups mentioned in the above definitions of the variables are collective terms for individual listings of the individual group members. The term "Cᵥ-C_{w}" indicates the number of carbon atom possible in each case.

As used herein, the "compounds I" or "compounds of formula I" include all the stereoisomeric and tautomeric forms and mixtures thereof in all ratios, prodrugs, isotopic forms, their agriculturally acceptable salts, N-oxides thereof.

The term "stereoisomer" is a general term used for all isomers of individual compounds that differ only in the orientation of their atoms in space. The term stereoisomer includes mirror image isomers (enantiomers), mixtures of mirror image isomers (racemates, racemic mixtures), geometric (cis/trans or E/Z) isomers, and isomers of compounds with more than one chiral center that are not mirror images of one another (diastereoisomers). The term "tautomer" refers to the coexistence of two (or more) compounds that differ from each other only in the position of one (or more) mobile atoms and in electron distribution, for example, keto-enol tautomers. The term "agriculturally acceptable salts" as used herein, includes salts of the active compounds which are prepared with acids or bases, depending on the particular substituents found on the compounds described herein; in cases R¹ is H and is an amine, compounds of formulae IA, Ib and Ic may be present as inner salts or zwitter ions. "N-oxide" refers to the oxide of the nitrogen atom of a nitrogen-containing heteroaryl or heterocycle, or to an amine oxide, also known as amine-N-oxide, and is a chemical compound that contains N→O bond. N-oxide can be formed in the presence of an oxidizing agent for example peroxide such as m-chloro-perbenzoic acid or hydrogen peroxide.

Preference is given to mixture of those compounds I, wherein the substituents and variables (such as R¹, R²) have independently of each other or more preferably in combination (any possible combination of 2 or more substituents as defined herein) the following meanings:
Preference is also given to the uses, methods, mixtures and compositions, wherein the definitions (such as phytopathogenic fungi, treatments, crops, pesticides II, pesticides III, solvents, solid carriers, other auxiliaries) have independently of each other or more preferably in combination the following meanings and even more preferably in combination (any possible combination of 2 or more definitions as provided herein) with the preferred meanings of compounds I herein:
One embodiment of the invention relates to mixtures comprising as component 1) at least one compound of formula la. According to a further embodiment, component 1) is at least one compound of formula lb. According to a further embodiment, component 1) is at least one compound of formula Ic.

According to a further embodiment, R¹ is H. According to a further embodiment, R¹ is CH₃.

According to a further embodiment, is OH. According to a further embodiment, is NH₂. According to a further embodiment, is N(CH₃)₂.

According to a further embodiment, component 1) is at least one compound of formula la, wherein R¹ is H. According to a further embodiment, component 1) is at least one compound of formula la, wherein R¹ is CH₃.

According to a further embodiment, component 1) is at least one compound of formula la, wherein is OH.

According to a further embodiment, component 1) is at least one compound of formula la, wherein is NH₂.

According to a further embodiment, component 1) is at least one compound of formula la, wherein is N(CH₃)₂.

According to a further preferred embodiment, the present invention relates to mixtures comprising as component 1) at least one compound of formula la or of formula lb, wherein:
- R¹: is selected from H and CH₃; and
- R²: is selected from OH, NH₂ and N(CH₃)₂;
and agriculturally acceptable sats and N-oxides thereof; and as component 2) at least one pesticide II as defined herein.

In 13 independent embodiments, mixtures according to the invention comprise as component 1) a compound I, wherein the formula (la, Ib, or Ic), R¹, and are defined as per any row of Table I below, which compounds are named I.1 to I.13:

**Table I:**

| **No.** | **formula** | **R¹** | **R²** |
|---|---|---|---|
| I.1 | Ia | H | OH |
| I.2 | Ia | CH₃ | OH |
| I.3 | Ia | H | N(CH₃)₂ |
| I.4 | Ia | CH₃ | N(CH₃)₂ |
| I.5 | Ia | H | NH₂ |
| I.6 | Ia | CH₃ | NH₂ |
| I.7 | Ib | H | OH |
| I.8 | Ib | CH₃ | OH |
| I.9 | Ib | H | N(CH₃)₂ |
| I.10 | Ib | CH₃ | N(CH₃)₂ |
| I.11 | Ib | H | NH₂ |
| I.12 | Ib | CH₃ | NH₂ |
| I.13 | Ic | H | n.a. |

Compounds of formula la, Ib and Ic can be obtained according to known procedures e.g. as described in WO 91/00860; WO 06/066147; Liebigs Ann. Chem. 1991, 941-945; Chemistry & Biology 13, 1277-1286; Hoefle et al. Antibiotics from Gliding Bacteria. P. 44. Ambruticins VS: New Members of the Antifungal Ambruticin Family from Sorangium cellulosum. Chemlnform 22 (1991).

The pesticides II (likewise the pesticides III), their preparation and their activity e.g. against fungi is known (www.bcpcpesticidecompendium.bcpc.org/); many of them are commercially available. Compounds defined by IUPAC nomenclature, their preparation and pesticidal activity are also known (e.g. Can. J. Plant Sci. 48(6), 587-94, 1968; EP-141 317; EP-152 031; EP-226 917; EP-243 970; EP-256 503; EP-428 941; EP-532 022; EP-1 028 125; EP-1 035 122; EP-1 201 648; EP-1 122 244, JP2002316902; DE19650197; DE10021412; DE102005009458; US 3,296,272; US 3,325,503; WO 98/46608; WO 99/14187; WO 99/24413; WO 99/27783; WO 00/29404; WO 00/46148; WO 00/65913; WO 01/54501; WO 01/56358; WO 02/22583; WO 02/40431; WO 03/10149; WO 03/11853; WO 03/14103; WO 03/16286; WO 03/53145; WO 03/61388; WO 03/66609; WO 03/74491; WO 04/49804; WO 04/83193; WO 05/120234; WO 05/123689; WO 05/123690; WO 05/63721; WO 05/87772; WO 05/87773; WO 06/15866; WO 06/87325; WO 06/87343; WO 07/82098; WO 07/90624, WO 10/139271, WO 11/028657, WO 12/168188, WO 07/006670, WO 11/77514; WO 13/047749, WO 10/069882, WO 13/047441, WO 03/16303, WO 09/90181, WO 13/007767, WO 13/010862, WO 13/127704, WO 13/024009, WO 13/24010, WO 13/047441, WO 13/162072, WO 13/092224, WO 11/135833, CN 1907024, CN 1456054, CN 103387541, CN 1309897, WO 12/84812, CN 1907024, WO 09094442, WO 14/60177, WO 13/116251, WO 08/013622, WO 15/65922, WO 94/01546, EP 2865265, WO 07/129454, WO 12/165511, WO 11/081174, WO 13/47441, WO 16/156241, WO 16/162265, WO 23/99460, WO 21/244950, WO 21/244951, WO 22/130188, WO 22/243810, WO 21/255070, WO 21/176057, WO 21/153754, JP2023064110, JP2022153603, JP2022046550, JP2022031355, WO 22/249074, WO 23/046861, WO 18/177894, WO 20/212513, WO 20/097012, US 2023/0069915.

One embodiment of the invention relates to mixtures comprising as component 2) at least one is a pesticide II selected from:
A) Respiration inhibitors
   - inhibitors of complex III at Qₒ site: azoxystrobin, dimoxystrobin, kresoxim-methyl, metominostrobin, picoxystrobin, pyraclostrobin, trifloxystrobin, metyltetraprole;
   - inhibitors of complex III at Qᵢ site: cyazofamid, fenpicoxamid, florylpicoxamid, metarylpicoxamid;
   - inhibitors of complex II: benzovindiflupyr, bixafen, boscalid, fluindapyr, fluopyram, fluxapyroxad, inpyrfluxam, isofetamid, isoflucypram, pydiflumetofen;
   - other respiration inhibitors: fluazinam;
   - quinone outside inhibitor stigmatellin binding type: ametoctradin;
B) Sterol biosynthesis inhibitors
   - C14 demethylase inhibitors: cyproconazole, difenoconazole, epoxiconazole, hexaconazole, metconazole, propiconazole, prothioconazole, tebuconazole, tetraconazole, triadimenol, mefentrifluconazole, methyl 2-[2-chloro-4-(4-chlorophenoxy)phenyl]-2-hydroxy-3-(1,2,4-triazol-1-yl)propanoate, 2-[2-chloro-4-(4-chlorophenoxy)phenyl]-2-hydroxy-3-(1,2,4-triazol-1-yl)propanoic acid;
   - delta14-reductase inhibitors: fenpropimorph, fenpropidin, spiroxamine;
   - inhibitors of 3-keto reductase: fenhexamid;
C) Nucleic acid synthesis inhibitors
   - DHODH inhibitors: ipflufenoquin, quinofumelin, feneptamidoquin;
D) Inhibitors of cell division and cytoskeleton
   - other cell division inhibitors: fluopicolide, zoxamide, metrafenone, pyriofenone, fluopimomide;
E) Inhibitors of amino acid and protein synthesis
   - methionine synthesis inhibitors: cyprodinil, pyrimethanil;
F) Signal transduction inhibitors
   - MAP / histidine kinase inhibitors: iprodione, fludioxonil;
G) Lipid and membrane synthesis inhibitors
   - Phospholipid biosynthesis inhibitors: isoprothiolane;
   - compounds affecting cell membrane permeability and fatty acides: propamocarb;
   - inhibitors of oxysterol binding protein: oxathiapiprolin, fluoxapiprolin;
H) Inhibitors with Multi Site Action
   - inorganic active substances: Bordeaux mixture, copper, copper acetate, copper hydroxide, copper oxychloride, basic copper sulfate, sulfur;
   - thio- and dithiocarbamates: mancozeb, metiram;
   - organochlorine compounds: chlorothalonil, folpet;
   - guanidines and others: dithianon;
I) Cell wall synthesis inhibitors
   - melanin synthesis inhibitors: tricyclazole; polyketide synthase inhibitors: tolprocarb;
   - cellulose synthase inhibitors: dimethomorph, mandipropamid;
J) Plant defence inducers
   - probenazole, isotianil, phosphonates: fosetyl, fosetyl-aluminum, phosphorous acid and its salts, potassium or sodium bicarbonate, calcium phosphonate, potassium phosphonate, dichlobentiazox;
K) Unknown mode of action
   - cymoxanil, flumetylsulforim, tebufloquin, flufenoxadiazam, rac-3-[3-(3-chloro-2-fluoro-phenoxy)-6-methyl-pyridazin-4-yl]-5-[(2-chloro-4-methyl-phenyl)methyl]-5,6-dihydro-4H-1,2,4-oxadiazine, (5S)-3-[3-(3-chloro-2-fluoro-phenoxy)-6-methyl-pyridazin-4-yl]-5-[(2-chloro-4-methyl-phenyl)methyl]-5,6-dihydro-4H-1,2,4-oxadiazine, (5*R*)-3-[3-(3-chloro-2-fluoro-phenoxy)-6-methyl-pyridazin-4-yl]-5-[(2-chloro-4-methylphenyl)methyl]-5,6-dihydro-4H-1,2,4-oxadiazine;
L2) Biochemical pesticides with fungicidal, bactericidal, viricidal and/or plant defense activator activity:
   orange oil, limonene, geraniol, thymol, aureobasidin, bafilomycin, natamycin, chlorflavonin,
   cinnamaldehyde.

A further embodiment relates to mixtures comprising as component 2) a pesticide II selected from azoxystrobin, pyraclostrobin, metyltetraprole, fenpicoxamid, florylpicoxamid, metarylpicoxamid, benzovindiflupyr, boscalid, fluindapyr, fluxapyroxad, inpyrfluxam, isofetamid, isoflucypram, pydiflumetofen, fluazinam, difenoconazole, mefentrifluconazole, prothioconazole, tebuconazole, methyl 2-[2-chloro-4-(4-chlorophenoxy)phenyl]-2-hydroxy-3-(1,2,4 tri-azol-1-yl)propanoate, 2-[2-chloro-4-(4-chlorophenoxy)phenyl]-2-hydroxy-3-(1,2,4-triazol-1-yl)propanoic acid, fenpropimorph, fenpropidin, ipflufenoquin, quinofumelin, feneptamidoquin, pyrimethanil, fludioxonil, copper oxychloride, sulfur, mancozeb, metiram, chlorothalonil, folpet, flumetylsulforim, and flufenoxadiazam. A further embodiment relates to mixtures comprising as component 2) a pesticide II selected from azoxystrobin, pyraclostrobin, metyltetraprole, boscalid, fluxapyroxad, inpyrfluxam, isoflucypram, pydiflumetofen, fluazinam, difenoconazole, mefentrifluconazole, prothioconazole, ipflufenoquin, pyrimethanil, and fludioxonil.

According to the invention, the solid material (dry matter) of the biopesticides (with the exception of oils such as Neem oil) are considered as active components (e.g. to be obtained after drying or evaporation of the extraction or suspension medium in case of liquid formulations of the microbial pesticides). The weight ratios and percentages used for a biological extract such as Quillay extract are based on the total weight of the dry content (solid material) of the respective extract(s).

The total weight ratios of compositions comprising at least one microbial pesticide in the form of viable microbial cells including dormant forms, can be determined using the amount of CFU of the respective microorganism to calculate the total weight of the respective active component with the following equation that 1 × 10¹⁰ CFU equals one gram of total weight of the respective active component. Colony forming unit is measure of viable microbial cells. In addition, CFU may also be understood as the number of (juvenile) individual nematodes in case of nematode biopesticides, such as *Steinemema feltiae.*

In the binary mixtures the weight ratio (w:w) of the component 1) and the component 2) generally depends from the properties of the components used, usually it is in the range of 1:10,000 to 10,000:1, often 1:100 to 100:1, regularly 1:50 to 50:1, preferably 1:16 to 16:1, more preferably 1:10 to 10: 1, even more preferably 1:4 to 4:1 and in particular 1:2 to 2:1. According to further embodiments, the weight ratio of the component 1) and the component 2) usually is in the range of 1000: 1 to 1:1, often 100: 1 to 1:1, regularly 50:1 to 1:1, preferably 20:1 to 1:1, more preferably 10:1 to 1:1, even more preferably 4:1 to 1:1 and in particular 2:1 to 1:1. According to further embodiments, the weight ratio of the component 1) and the component 2) usually is in the range of 20,000:1 to 1:10, often 10,000:1 to 1:1, regularly 5,000:1 to 5:1, preferably from 5,000:1 to 10:1, more preferably 2,000:1 to 30:1, even more preferably 2,000:1 to 100:1 and in particular 1,000:1 to 100:1. According to further embodiments, the weight ratio of the component 1) and the component 2) usually is in the range of 1:1 to 1:1000, often 1:1 to 1:100, regularly 1:1 to 1:50, preferably 1:1 to 1:20, more preferably 1:1 to 1:10, even more preferably 1:1 to 1:4 and in particular 1:1 to 1:2. According to further embodiments, the weight ratio of the component 1) and the component 2) usually is in the range of 10:1 to 1:20,000, often 1:1 to 1:10,000, regularly 1:5 to 1:5,000, preferably 1:10 to 1:5,000, more preferably 1:30 to 1:2,000, even more preferably 1:100 to 1:2,000 to and in particular 1:100 to 1:1,000.

Moreover, the invention relates to binary mixtures comprising as active components one compound I and one pesticide II as defined herein, more preferably in a synergistically effective amount. The binary mixtures comprise as active components, one compound I and one pesticide II in a weight ratio (I:II; w:w) of 100:1 to 1:100, preferably in a weight ratio of 10:1 to 1:10, even more preferably 4:1 to 1:4; even more preferably 2:1 to 1:2; particularly preferred 1.5:1 to 1:1.5; in particular 1.1:1 to 1:1.1.

Moreover, the invention relates to ternary mixtures comprising as active components one compound I and one pesticide II and one pesticide III as defined herein, more preferably in a synergistically effective amount. The ternary mixtures comprise as active components, one compound I and one pesticide II and one pesticide III in a weight ratio (I:II:III; w:w:w) of 100:1:0.01 to 0.01:1:1:100, preferably in a weight ratio of 10:1:0.1 to 0.1:1:10, even more preferably 3:1:0.3 to 0.3:1:3; particularly preferred 1.5:1:0.7 to 0.7:1:1.5; in particular 1.1:1:0.9 to 0.9:1:1.1. According to a further embodiment, the ternary mixtures comprise as active components, one compound I and one pesticide II and one pesticide III in a weight ratio (I:II:III; w:w:w) of 1:100:0.01 to 1:0.01:100:, preferably in a weight ratio of 1:10:0.1 to 1:0.1:10, even more preferably 1:3:0.3 to 1:0.3:3; particularly preferred 1:1.5:0.7 to 1:0.7:1.5; in particular 1:1.1:0.9 to 1:0.9:1.1.

In the ternary mixtures, i.e. compositions comprising the component 1) and component 2) and a pesticide III (component 3), the weight ratios depends from the properties of the components used used: the weight ratio of component 1) to component 2) is usually in the range of 1:100 to 100:1, regularly 1:50 to 50:1, preferably 1:20 to 20:1, more preferably 1:10 to 10:1 and in particular 1:4 to 4:1; and the weight ratio of component 1) and component 3) usually is in the range of 1:100 to 100:1, regularly 1:50 to 50:1, preferably 1:20 to 20:1, more preferably 1:10 to 10:1 and in particular 1:4 to 4:1; and the weight ratio of component 2) to component 3) usually is in the range of 1:100 to 100:1, regularly 1:50 to 50:1, preferably 1:20 to 20:1, more preferably 1:10 to 10:1 and in particular 1:4 to 4:1. Any further active components are, if desired, added in a ratio of 20:1 to 1:20 in relation to the component 1). These ratios are also suitable for mixtures applied by seed treatment.

When mixtures comprising microbial pesticides are employed in crop protection, the application rates range from 1 × 10⁶ to 5 × 10¹⁶ (or more) CFU/ha, preferably from 1 × 10⁸ to 1 × 10¹³ CFU/ha, and even more preferably from 1 × 10⁹ to 5 × 10¹⁵ CFU/ha and in particular from 1 × 10¹² to 5 × 10¹⁴ CFU/ha. In the case of nematodes as microbial pesticides (e.g. *Steinemema feltiae),* the application rates regularly range from 1 × 10⁵ to 1 × 10¹² (or more), preferably from 1 × 10⁸ to 1 × 10¹¹, more preferably from 5 × 10⁸ to 1 × 10¹⁰ individuals (e.g. in the form of eggs, juvenile or any other live stages, preferably in an infective juvenile stage) per ha.

When mixtures comprising microbial pesticides are employed in seed treatment, the application rates generally range from 1 × 10⁶ to 1 × 10¹² (or more) CFU/seed, preferably from 1 × 10⁶ to 1 × 10⁹ CFU/seed. Furthermore, the application rates for seed treatment generally range from 1 × 10⁷ to 1 × 10¹⁴ (or more) CFU per 100 kg of seed, preferably from 1 × 10⁹ to 1 × 10¹² CFU per 100 kg of seed.

Preference is given to mixtures comprising as component 2) at least one pesticide II selected from inhibitors of complex III at Qₒ site in group A), more preferably selected from compounds (A.1.1), (A.1.4), (A.1.8), (A.1.9), (A. 1.10), (A. 1.12), (A.1.13), (A.1.14), (A.1.17), (A. 1.21), (A. 1.22), (A. 1.24), (A. 1.25), (A.1.34) and (A. 1.35); particularly selected from (A.1.1), (A.1.4), (A.1.8), (A.1.9), (A.1.13), (A. 1.14), (A.1.17), (A. 1.24), (A. 1.25), (A.1.34) and (A. 1.35).

Preference is also given to mixtures comprising as component 2) at least one pesticide II selected from inhibitors of complex III at Qᵢ site in group A), more preferably selected from compounds (A.2.1), (A.2.3), (A.2.4) and (A.2.6); particularly selected from (A.2.3), (A.2.4) and (A.2.6).

Preference is also given to mixtures comprising as component 2) at least one pesticide II selected from inhibitors of complex II in group A), more preferably selected from compounds (A.3.2), (A.3.3), (A.3.4), (A.3.7), (A.3.9), (A.3.11), (A.3.12), (A.3.15), (A.3.16), (A.3.17), (A.3.18), (A.3.19), (A.3.20), (A.3.21), (A.3.22), (A.3.23), (A.3.24), (A.3.28), (A.3.31), (A.3.32), (A.3.33), (A.3.34), (A.3.35), (A.3.36), (A.3.37), (A.3.38) and (A.3.39); particularly selected from (A.3.2), (A.3.3), (A.3.4), (A.3.7), (A.3.9), (A.3.12), (A.3.15), (A.3.17), (A.3.19), (A.3.22), (A.3.23), (A.3.24), (A.3.31), (A.3.32), (A.3.33), (A.3.34), (A.3.35), (A.3.36), (A.3.37), (A.3.38) and (A.3.39).

Preference is also given to mixtures comprising as component 2) at least one pesticide II selected from other respiration inhibitors in group A), more preferably selected from compounds (A.4.5) and (A.4.11); in particular (A.4.11).

Preference is also given to mixtures comprising as component 2) at least one pesticide II selected from C14 demethylase inhibitors in group B), more preferably selected from compounds (B.1.4), (B.1.5), (B.1.8), (B.1.10), (B.1.11), (B.1.12), (B.1.13), (B.1.17), (B.1.18), (B.1.21), (B.1.22), (B.1.23), (B.1.25), (B.1.26), (B.1.29), (B.1.33), (B.1.34), (B.1.37), (B.1.38), (B.1.43), (B.1.46), (B.1.53), (B.1.54) and (B.1.55); particularly selected from (B.1.5), (B.1.8), (B.1.10), (B.1.17), (B.1.22), (B.1.23), (B.1.25), (B.1.33), (B.1.34), (B.1.37), (B.1.38), (B.1.43) and (B.1.46).

Preference is also given to mixtures comprising as component 2) at least one pesticide II selected from Delta14-reductase inhibitors in group B), more preferably selected from compounds (B.2.4), (B.2.5), (B.2.6) and (B.2.8); in particular (B.2.4).

Preference is also given to mixtures comprising as component 2) at least one pesticide II selected from phenylamides and acyl amino acid fungicides in group C), more preferably selected from compounds (C.1.1), (C.1.2), (C.1.4) and (C.1.5); particularly selected from (C.1.1) and (C.1.4).

Preference is also given to mixtures comprising as component 2) at least one pesticide II selected from other nucleic acid synthesis inhibitors in group C), more preferably selected from compounds (C.2.6), (C.2.7) and (C.2.8).

Preference is also given to mixtures comprising as component 2) at least one pesticide II selected from group D), more preferably selected from compounds (D.1.1), (D.1.2), (D.1.5), (D.2.4) and (D.2.6); particularly selected from (D.1.2), (D.1.5) and (D.2.6).

Preference is also given to mixtures comprising as component 2) at least one pesticide II selected from group E), more preferably selected from compounds (E.1.1), (E.1.3), (E.2.2) and (E.2.3); in particular (E.1.3).

Preference is also given to mixtures comprising as component 2) at least one pesticide II selected from group F), more preferably selected from compounds (F.1.2), (F.1.4) and (F.1.5).

Preference is also given to mixtures comprising as component 2) at least one pesticide II selected from group G), more preferably selected from compounds (G.3.1), (G.3.3), (G.3.6), (G.5.1), (G.5.3), (G.5.4), (G.5.5), G.5.6), G.5.7), (G.5.8), (G.5.9), (G.5.10) and (G.5.11); particularly selected from (G.3.1), (G.5.1) and (G.5.3).

Preference is also given to mixtures comprising as component 2) at least one pesticide II selected from group H), more preferably selected from compounds (H.2.2), (H.2.3), (H.2.5), (H.2.7), (H.2.8), (H.3.2), (H.3.4), (H.3.5), (H.4.9) and (H.4.10); particularly selected from (H.2.2), (H.2.5), (H.3.2), (H.4.9) and (H.4.10).

Preference is also given to mixtures comprising as component 2) at least one pesticide II selected from group I), more preferably selected from compounds (I.2.2) and (I.2.5).

Preference is also given to mixtures comprising as component 2) at least one pesticide II selected from group J), more preferably selected from compounds (J.1.2), (J.1.5), (J.1.8), (J.1.11) and (J.1.12); in particular (J.1.5).

Preference is also given to mixtures comprising as component 2) at least one pesticide II selected from group K), more preferably selected from compounds (K.1.41), (K.1.42), (K.1.44), (K.1.47), (K.1.57), (K.1.58) and (K.1.59); particularly selected from (K.1.41), (K.1.44), (K.1.47), (K.1.57), (K.1.58) and (K.1.59).

Preference is also given to mixtures comprising as component 2) at least one pesticide II selected from group M), more preferably selected from compounds (M.1.1), (M.1.2) and (M.1.3).

Any of the abovementioned mixtures comprises as component 1) preferably a compound I which is explicitly disclosed herein e.g. in the Table I, even more preferably selected from the list of compounds I.1, I.2, I.3, I.4, I.5, I.6, I.7, I.8, I.9, I.10, I.11, I.12., and I.13.

The biopesticides from group L1) and/or L2) may also have insecticidal, acaricidal, molluscicidal, pheromone, nematicidal, plant stress reducing, plant growth regulator, plant growth promoting and/or yield enhancing activity. The biopesticides from group L3) and/or L4) may also have fungicidal, bactericidal, viricidal, plant defense activator, plant stress reducing, plant growth regulator, plant growth promoting and/or yield enhancing activity. The biopesticides from group L5) may also have fungicidal, bactericidal, viricidal, plant defense activator, insecticidal, acaricidal, molluscicidal, pheromone and/or nematicidal activity.

The microbial pesticides, in particular those from groups L1), L3) and L5), embrace not only the isolated, pure cultures of the respective microorganism as defined herein, but also its cell-free extract, its suspension in a whole broth culture and a metabolite-containing culture medium or a purified metabolite obtained from a whole broth culture of the microorganism.

Many of these biopesticides have been deposited under deposition numbers mentioned herein (the prefixes such as ATCC or DSM refer to the acronym of the respective culture collection, for details see e.g. here: http://www. wfcc.info/ccinfo/collection/by acronvm/), are referred to in literature, registered and/or are commercially available: mixtures of *Aureobasidium pullulans* DSM 14940 and DSM 14941 isolated in 1989 in Konstanz, Germany (e.g. blastospores in BlossomProtect^{®} from bio-ferm GmbH, Austria), *Azospirillum brasilense* Sp245 originally isolated in wheat reagion of South Brazil (Passo Fundo) at least prior to 1980 (BR 11005; e.g. GELFIX^{®} Gramineas from BASF Agricultural Specialties Ltd., Brazil), A. *brasilense* strains Ab-V5 and Ab-V6 (e.g. in AzoMax from Novozymes BioAg Produtos papra Agricultura Ltda., Quattro Barras, Brazil or Simbiose-Maíz^{®} from Simbiose-Agro, Brazil; Plant Soil 331, 413-425, 2010), *Bacillus amyloliquefaciens* strain AP-188 (NRRL B-50615 and B-50331; US 8,445,255); B. *amyloliquefaciens* ssp. *plantarum* strains formerly also sometimes referred to as B. *subtilis,* recently together with B. *methylotrophicus,* and B. *velezensis* classified as *B*. *velezensis* (Int. J. Syst. Evol. Microbiol. 66, 1212-1217, 2016): *B*. *a*. ssp. *plantarum* or B. *velezensis* D747 isolated from air in Kikugawa-shi, Japan (US 20130236522 A1; FERM BP-8234; e.g. Double Nickel^{™} 55 WDG from Certis LLC, USA), B. a. ssp. *plantarum* or *B*. *velezensis* FZB24 isolated from soil in Brandenburg, Germany (also called SB3615; DSM 96-2; J. Plant Dis. Prot. 105, 181-197, 1998; e.g. Taegro^{®} from Novozyme Biologicals, Inc., USA), B. a. ssp. *plantarum* or B. *velezensis* FZB42 isolated from soil in Brandenburg, Germany (DSM 23117; J. Plant Dis. Prot. 105, 181-197, 1998; e.g. RhizoVital^{®} 42 from AbiTEP GmbH, Germany), *B*. a. ssp. *plantarum* or B. *velezensis* MBI600 isolated from faba bean in Sutton Bonington, Nottinghamshire, U.K. at least before 1988 (also called 1430; NRRL B-50595; US 2012/0149571 A1; e.g. Integral^{®} from BASF Corp., USA), *B*. a. ssp. *plantarum* or B. *velezensis* QST-713 isolated from peach orchard in 1995 in California, U.S.A. (NRRL B-21661; e.g. Serenade^{®} MAX from Bayer Crop Science LP, USA), B. a. ssp. *plantarum* or *B*. *velezensis* TJ1000 isolated in 1992 in South Dakoda, U.S.A. (also called 1 BE; ATCC BAA-390; CA 2471555 A1; e.g. QuickRoots^{™} from TJ Technologies, Watertown, SD, USA); *B*. *firmus* CNCM I-1582, a variant of parental strain EIP-N1 (CNCM i-1556) isolated from soil of central plain area of Israel (WO 2009/126473, US 6,406,690; e.g. Votivo^{®} from Bayer CropScience LP, USA), *B. pumilus* GHA 180 isolated from apple tree rhizosphere in Mexico (IDAC 260707-01; e.g. PRO-MIX@ BXfrom Premier Horticulture, Quebec, Canada), *B. pumilus* INR-7 otherwise referred to as BU-F22 and BU-F33 isolated at least before 1993 from cucumber infested by *Erwinia tracheiphila* (NRRL B-50185, NRRL B-50153; US 8,445,255), *B. pumilus* KFP9F isolated from the rhizosphere of grasses in South Africa at least before 2008 (NRRL B-50754; WO 2014/029697; e.g. BAC-UP or FUSION-P from BASF Agricultural Specialities (Pty) Ltd., South Africa), *B. pumilus* QST 2808 was isolated from soil collected in Pohnpei, Federated States of Micronesia, in 1998 (NRRL B-30087; e.g. Sonata@ or Ballad@ Plus from Bayer Crop Science LP, USA), *B*. *simplex ABU* 288 (NRRL B-50304; US 8,445,255), B. *subtilis* FB17 also called UD 1022 or UD10-22 isolated from red beet roots in North America (ATCC PTA-11857; System. Appl. Microbiol. 27, 372-379, 2004; US 2010/0260735; WO 2011/109395); *B*. *thuringiensis* ssp. *aizawai* ABTS-1857 isolated from soil taken from a lawn in Ephraim, Wisconsin, U.S.A., in 1987 (also called ABG-6346; ATCC SD-1372; e.g. XenTari^{®} from BioFa AG, Münsingen, Germany), *B*. *t.* ssp. *kurstaki* ABTS-351 identical to HD-1 isolated in 1967 from diseased Pink Bollworm black larvae in Brownsville, Texas, U.S.A. (ATCC SD-1275; e.g. Dipel^{®} DF from Valent BioSciences, IL, USA), B. *t.* ssp. *kurstaki* SB4 isolated from *E. saccharina* larval cadavers (NRRL B-50753; e.g. Beta Pro@ from BASF Agricultural Specialities (Pty) Ltd., South Africa), *B*. *t.* ssp. *tenebrionis* NB-176-1, a mutant of strain NB-125, a wild type strain isolated in 1982 from a dead pupa of the beetle Tenebrio molitor (DSM 5480; EP 585 215 B1; e.g. Novodor^{®} from Valent BioSciences, Switzerland), *Beauveria bassiana* GHA (ATCC 74250; e.g. BotaniGard^{®} 22WGP from Laverlam Int. Corp., USA), B. *bassiana* JW-1 (ATCC 74040; e.g. Naturalis^{®} from CBC (Europe) S.r.l., Italy), B. *bassiana* PPRI 5339 isolated from the larva of the tortoise beetle *Conchyloctenía punctata* (NRRL 50757; e.g. BroadBand^{®} from BASF Agricultural Specialities (Pty) Ltd., South Africa), *Bradyrhizobium elkanii* strains SEMIA 5019 (also called 29W) isolated in Rio de Janeiro, Brazil and SEMIA 587 isolated in 1967 in the State of Rio Grande do Sul, from an area previously inoculated with a North American isolate, and used in commercial inoculants since 1968 (Appl. Environ. Microbiol. 73(8), 2635, 2007; e.g. GELFIX 5 from BASF Agricultural Specialties Ltd., Brazil), B. *japonicum* 532c isolated from Wisconsin field in U.S.A. (Nitragin 61A152; Can. J. Plant. Sci. 70, 661-666, 1990; e.g. in Rhizoflo^{®}, Histick^{®}, Hicoat^{®} Super from BASF Agricultural Specialties Ltd., Canada), *B. japonicum* E-109 variant of strain USDA 138 (INTA E109, SEMIA 5085; Eur. J. Soil Biol. 45, 28-35, 2009; Biol. Fertil. Soils 47, 81-89, 2011); *B. japonicum* strains deposited at SEMIA known from Appl. Environ. Microbiol. 73(8), 2635, 2007: SEMIA 5079 isolated from soil in Cerrados region, Brazil by Embrapa-Cerrados used in commercial inoculants since 1992 (CPAC 15; e.g. GELFIX 5 or ADHERE 60 from BASF Agricultural Specialties Ltd., Brazil), *B. japonicum* SEMIA 5080 obtained under lab condtions by Embrapa-Cerrados in Brazil and used in commercial inoculants since 1992, being a natural variant of SEMIA 586 (CB1809) originally isolated in U.S.A. (CPAC 7; e.g. GELFIX 5 or ADHERE 60 from BASF Agricultural Specialties Ltd., Brazil); *Burkholderia sp.* A396 isolated from soil in Nikko, Japan, in 2008 (NRRL B-50319; WO 2013/032693; Marrone Bio Innovations, Inc., USA), *Coniofhyrium minitans* CON/M/91-08 isolated from oilseed rape (WO 1996/021358; DSM 9660; e.g. Contans^{®} WG, Intercept^{®} WG from Bayer CropScience AG, Germany), harpin (alpha-beta) protein (Science 257, 85-88, 1992; e.g. Messenger^{™} or HARP-N-Tek from Plant Health Care plc, U.K.), *Helicoverpa armigera* nucleopolyhedrovirus (HearNPV) (J. Invertebrate Pathol. 107, 112-126, 2011; e.g. Helicovex^{®} from Adermatt Biocontrol, Switzerland; Diplomata^{®} from Koppert, Brazil; Vivus^{®} Max from AgBiTech Pty Ltd., Queensland, Australia), *Helicoverpa* zea single capsid nucleopolyhedrovirus (HzSNPV) (e.g. Gemstar^{®} from Certis LLC, USA), *Helicoverpa* zea nucleopolyhedrovirus ABA-NPV-U (e.g. Heligen^{®} from AgBiTech Pty Ltd., Queensland, Australia), *Heterorhabditis bacteriophora* (e.g. Nemasys^{®} G from BASF Agricultural Specialities Limited, UK), *Isaria fumosorosea* Apopka-97 isolated from mealy bug on gynura in Apopka, Florida, U.S.A. (ATCC 20874; Biocontrol Science Technol. 22(7), 747-761, 2012; e.g. PFR-97^{™} or PreFeRal^{®} from Certis LLC, USA), *Metarhizium anisopliae* var. *anisopliae* F52 also called 275 or V275 isolated from codling moth in Austria (DSM 3884, ATCC 90448; e.g. Met52^{®} Novozymes Biologicals BioAg Group, Canada), *Metschnikowia fructicola* 277 isolated from grapes in the central part of Israel (US 6,994,849; NRRL Y-30752; e.g. formerly Shemer^{®} from Agrogreen, Israel), *Paecilomyces ilacinus* 251 isolated from infected nematode eggs in the Philippines (AGAL 89/030550; WO1991/02051; Crop Protection 27, 352-361, 2008; e.g. BioAct^{®}from Bayer CropScience AG, Germany and MeloCon^{®} from Certis, USA), *Paenibacillus alvei* NAS6G6 isolated from the rhizosphere of grasses in South Africa at least before 2008 (WO 2014/029697; NRRL B-50755; e.g. BAC-UP from BASF Agricultural Specialities (Pty) Ltd., South Africa), *Paenibacillus* strains isolated from soil samples from a variety of European locations including Germany: *P. epiphyticus* Lu17015 (WO 2016/020371; DSM 26971), *P. polymyxa* ssp. *plantarum* Lu16774 (WO 2016/020371; DSM 26969), *P. p.* ssp. *plantarum* strain Lu17007 (WO 2016/020371; DSM 26970); *Pasteuria nishizawae* Pn1 isolated from a soybean field in the mid-2000s in Illinois, U.S.A. (ATCC SD-5833; Federal Register 76(22), 5808, February 2, 2011; e.g. Clariva^{™} PN from Syngenta Crop Protection, LLC, USA), *Penicillium bilaiae* (also called *P. bilaii)* strains ATCC 18309 (= ATCC 74319), ATCC 20851 and/or ATCC 22348 (= ATCC 74318) originally isolated from soil in Alberta, Canada (Fertilizer Res. 39, 97-103, 1994; Can. J. Plant Sci. 78(1), 91-102, 1998; US 5,026,417, WO 1995/017806; e.g. Jump Start^{®}, Provide@ from Novozymes Biologicals BioAg Group, Canada), *Reynoutria sachalinensis* extract (EP 0307510 B1; e.g. Regalia@ SC from Marrone Biolnnovations, Davis, CA, USA or Milsana^{®} from BioFa AG, Germany), *Steinemema carpocapsae* (e.g. Millenium^{®} from BASF Agricultural Specialities Limited, UK), *S*. *feltiae* (e.g. Nemashield^{®} from BioWorks, Inc., USA; Nemasys^{®} from BASF Agricultural Specialities Limited, UK), *Streptomyces microflavus* NRRL B-50550 (WO 2014/124369; Bayer CropScience, Germany), *Trichoderma asperelloides* JM41 R isolated in South Africa (NRRL 50759; also referred to as *T. fertile;* e.g. Trichoplus^{®} from BASF Agricultural Specialities (Pty) Ltd., South Africa), *T. harzianum* T-22 also called KRL-AG2 (ATCC 20847; BioControl 57, 687-696, 2012; e.g. Plantshield^{®} from BioWorks Inc., USA or SabrEx^{™} from Advanced Biological Marketing Inc., Van Wert, OH, USA).

According to another embodiment of the mixtures, the at least one pesticide II is selected from the groups L1) to L5):
L1) Microbial pesticides with fungicidal, bactericidal, viricidal and/or plant defense activator activity: *Aureobasidium pullulans* DSM 14940 and DSM 14941 (L1.1), *Bacillus amyloliquefaciens* AP-188 (L.1.2), *B. amyloliquefaciens* ssp. *plantarum* D747 (L.1.3), B. *amyloliquefaciens* ssp. *plantarum* FZB24 (L.1.4), B. *amyloliquefaciens* ssp. *plantarum* FZB42 (L.1.5), *B. amyloliquefaciens* ssp. *plantarum* MBI600 (L.1.6), *B. amyloliquefaciens* ssp. *plantarum* QST-713 (L.1.7), *B. amyloliquefaciens* ssp. *plantarum* TJ1000 (L.1.8), *B. pumilus* GB34 (L.1.9), B. *pumilus* GHA 180 (L.1.10), *B. pumilus* INR-7 (L.1.11), *B. pumilus* KFP9F (L.1.12), *B. pumilus* QST 2808 (L.1.13), *B. simplex* ABU 288 (L.1.14), B. *subfilis* FB17 (L.1.15), *Coniothyrium minitans* CON/M/91-08 (L.1.16), *Metschnikowia fructicola* NRRL Y-30752 (L.1.17), *Paenibacillus alvei* NAS6G6 (L.1.18), *P. epiphyticus* Lu17015 (L.1.25), *P. polymyxa* ssp. *plantarum* Lu16774 (L.1.26), *P. p.* ssp. *plantarum* strain Lu17007 (L.1.27), *Penicillium bilaiae* ATCC 22348 (L.1.19), *P. bilaiae* ATCC 20851 (L.1.20), *Penicillium bilaiae* ATCC 18309 (L.1.21), *Streptomyces microflavus* NRRL B-50550 (L.1.22), *Trichoderma asperelloides* JM41R (L.1.23), *T. harzianum* T-22 (L.1.24);
L2) Biochemical pesticides with fungicidal, bactericidal, viricidal and/or plant defense activator activity: harpin protein (L.2.1), *Reynoutria sachalinensis* extract (L.2.2);
L3) Microbial pesticides with insecticidal, acaricidal, molluscidal and/or nematicidal activity: *Bacillus firmus* I-1582 (L.3.1); B. *thuringiensis* ssp. *aizawai* ABTS-1857 (L.3.2), B. t. ssp. *kurstakí* ABTS-351 (L.3.3), B. t. ssp. *kurstaki* SB4 (L.3.4), B. t. ssp. *tenebrionis* NB-176-1 (L.3.5), *Beauveria bassiana* GHA (L.3.6), B. *bassiana* JW-1 (L.3.7), B. *bassiana* PPRI 5339 (L.3.8), *Burkholderia* sp. A396 (L.3.9), *Helicoverpa armigera* nucleopolyhedrovirus (HearNPV) (L.3.10), *Helicoverpa* zea nucleopolyhedrovirus (HzNPV) ABA-NPV-U (L.3.11), *Helicoverpa* zea single capsid nucleopolyhedrovirus (HzSNPV) (L.3.12), *Heterohabditis bacteriophora* (L.3.13), *Isaria fumosorosea* Apopka-97 (L.3.14), *Metarhizium anisopliae* var. *anisopliae* F52 (L.3.15), *Paecilomyces lilacinus* 251 (L.3.16), *Pasteuria nishizawae* Pn1 (L.3.17), *Steinemema carpocapsae* (L.3.18), S. *feltíae* (L.3.19);
L4) Biochemical pesticides with insecticidal, acaricidal, molluscidal, pheromone and/or nematicidal activity: cis-jasmone (L.4.1), methyl jasmonate (L.4.2), Quillay extract (L.4.3);
L5) Microbial pesticides with plant stress reducing, plant growth regulator, plant growth promoting and/or yield enhancing activity: *Azospirillum brasilense* Ab-V5 and Ab-V6 (L.5.1), A. *brasilense* Sp245 (L.5.2), *Bradyrhizobium elkanii* SEMIA 587 (L.5.3), B. *elkanii* SEMIA 5019 (L.5.4), *B. japonicum* 532c (L.5.5), B. *japonicum* E-109 (L.5.6), *B. japonicum* SEMIA 5079 (L.5.7), *B. japonicum* SEMIA 5080 (L.5.8).

The present invention furthermore relates to agrochemical compositions comprising a mixture of at least one compound I (component 1) and at least one biopesticide selected from the group L) (component 2), in particular at least one biopesticide selected from the groups L1) and L2), as described above, and if desired at least one suitable auxiliary.

The present invention furthermore relates to agrochemical compositions comprising a mixture of of at least one compound I (component 1) and at least one biopesticide selected from the group L) (component 2), in particular at least one biopesticide selected from the groups L3) and L4), as described above, and if desired at least one suitable auxiliary.

Preference is also given to mixtures comprising as pesticide II (component 2) a biopesticide selected from the groups L1), L3) and L5), preferably selected from strains denoted above as (L.1.2), (L.1.3), (L.1.4), (L.1.5), (L.1.6), (L.1.7), (L.1.8), (L.1.10), (L.1.11), (L.1.12), (L.1.13), (L.1.14), (L.1.15), (L.1.17), (L.1.18), (L.1.19), (L.1.20), (L.1.21), (L.1.25), (L.1.26), (L.1.27), (L.3.1); (L.2.1), (L.2.2), (L.2.3), (L.2.4), (L.2.5), (L.2.6), (L.2.7), L.2.8), (L.2.9), (L.2.10), (L.3.1); (L.3.9), (L.3.16), (L.3.17), (L.5.1), (L.5.2), (L.5.3), (L.5.4), (L.5.5), (L.5.6), (L.5.7), (L.5.8); (L.4.2), and (L.4.1); even more preferably selected from (L.1.2), (L.1.6), (L.1.7), (L.1.8), (L.1.11), (L.1.12), (L.1.13), (L.1.14), (L.1.15), (L.1.18), (L.1.19), (L.1.20), (L.1.21), (L.3.1); (L.2.5), (L.2.6), (L.2.7), L.2.8), (L.2.9), (L.2.10), (L.3.9), (L.3.16), (L.3.17), (L.5.1), (L.5.2), (L.5.5), (L.5.6); (L.4.2), and (L.4.1). These mixtures are particularly suitable for treatment of propagation materials, i. e. seed treatment purposes and likewise for soil treatment. These seed treatment mixtures are particularly suitable for crops such as cereals, corn and leguminous plants such as soybean.

Preference is also given to mixtures comprising as pesticide II (component 2) a biopesticide selected from the groups L1), L3) and L5), preferably selected from strains denoted above as (L1.1), (L.1.2), (L.1.3), (L.1.6), (L.1.7), (L.1.9), (L.1.11), (L.1.12), (L.1.13), (L.1.14), (L.1.15), (L.1.17), (L.1.18), (L.1.22), (L.1.23), (L.1.24), (L.1.25), (L.1.26), (L.1.27), (L.2.2); (L.3.2), (L.3.3), (L.3.4), (L.3.5), (L.3.6), (L.3.7), (L.3.8), (L.3.10), (L.3.11), (L.3.12), (L.3.13), (L.3.14), (L.3.15), (L.3.18), (L.3.19); (L.4.2), even more preferably selected from (L.1.2), (L.1.7), (L.1.11), (L.1.13), (L.1.14), (L.1.15), (L.1.18), (L.1.23), (L.3.3), (L.3.4), (L.3.6), (L.3.7), (L.3.8), (L.3.10), (L.3.11), (L.3.12), (L.3.15), and (L.4.2). These mixtures are particularly suitable for foliar treatment of cultivated plants, preferably of vegetables, fruits, vines, cereals, corn, and leguminous crops such as soybeans.

The compositions comprising mixtures of active ingredients can be prepared by usual means, e.g. by the means given for the compositions of compounds I.

When living microorganisms, such as pesticides II from groups L1), L3) and L5), form part of the compositions, such compositions can be prepared by usual means (e.g. H.D. Burges: Formulation of Microbial Biopesticides, Springer, 1998; WO 2008/002371, US 6,955,912, US 5,422,107).

Particularly preferred are the following binary mixtures A-1 to A-308 listed in Table A1, wherein component 1) is selected from compounds I.1, I.2, I.3, I.4, I.5, I.6, I.7, I.8, I.9, I.10, I.11, I.12, and I.13 as defined herein (represented by the expression "(I)" which shall mean a compound selected from compounds I.1, I.2, I.3, I.4, I.5, I.6, I.7, I.8, I.9, I.10, I.11, I.12, and 1.13) and one pesticide II selected from the fungicidal groups A) to K) as defined herein (component 2), for example, (A.1.1) or azoxystrobin, in mixture A-1).

**Table A1:**

| |
|---|
| A-1: (I)+(A.1.1), A-2: (I)+(A.1.2), A-3: (I)+(A.1.3), A-4: (I)+(A.1.4), A-5: (I)+(A.1.5), A-6: (I)+(A.1.6), A-7: (I)+(A.1.7), A-8: (I)+(A.1.8), A-9: (I)+(A.1.9), A-10: (I)+(A.1.10), A-11: (I)+(A.1.11), A-12: (I)+(A.1.12), A-13: (I)+(A.1.13), A-14: (I)+(A.1.14), A-15: (I)+(A.1.15), A-16: (I)+(A.1.16), A-17: (1)+(A.1.17), A-18: (I)+(A.1.18), A-19: (I)+(A.1.19), A-20: (I)+(A.1.20), A-21: (I)+(A.1.21), A-22: (I)+(A.1.22), A-23: (I)+(A.1.23), A-24: (I)+(A.1.24), A-25: (I)+(A.1.25), A-26: (I)+(A.1.26), A-27: (I)+(A.1.27), A-28: (I)+(A.1.30), A-29: (I)+(A.1.31), A-30: (I)+(A.1.32), A-31: (I)+(A.2.1), A-32: (I)+(A.2.2), A-33: (I)+(A.2.3), A-34: (I)+(A.2.4), A-35: (I)+(A.2.6), A-36: (I)+(A.2.7), A-37: (I)+(A.2.8), A-38: (I)+(A.3.1), A-39: (I)+(A.3.2), A-40: (I)+(A.3.3), A-41: (I)+(A.3.4), A-42: (I)+(A.3.5), A-43: (I)+(A.3.6), A-44: (I)+(A.3.7), A-45: (I)+(A.3.8), A-46: (I)+(A.3.9), A-47: (I)+(A.3.10), A-48: (I)+(A.3.11), A-49: (I)+(A.3.12), A-50: (I)+(A.3.13), A-51: (I)+(A.3.14), A-52: (I)+(A.3.15), A-53: (I)+(A.3.16), A-54: (I)+(A.3.17), A-55: (I)+(A.3.18), A-56: (I)+(A.3.19), A-57: (I)+(A.3.20), A-58: (I)+(A.3.21), A-59: (I)+(A.3.22), A-60: (I)+(A.3.23), A-61: (I)+(A.3.24), A-62: (I)+(A.3.25), A-63: (I)+(A.3.26), A-64: (I)+(A.3.27), A-65: (I)+(A.3.28), A-66: (I)+(A.3.29), A-67: (I)+(A.3.30), A-68: (I)+(A.3.31), A-69: (I)+(A.3.32), A-70: (I)+(A.3.33), A-71: (I)+(A.3.34), A-72: (I)+(A.3.35), A-73: (I)+(A.3.36), A-74: (I)+(A.3.37), A-75: (I)+(A.3.38), A-76: (I)+(A.3.39), A-77: (I)+(A.4.1), A-78: (I)+(A.4.2), A-79: (I)+(A.4.3), A-80: (I)+(A.4.4), A-81: (I)+(A.4.5), A-82: (I)+(A.4.6), A-83: (I)+(A.4.7), A-84: (I)+(A.4.8), A-85: (I)+(A.4.9), A-86: (I)+(A.4.10), A-87: (I)+(A.4.11), A-88: (I)+(A.4.12), A-89: (I)+(B.1.1), A-90: (I)+(B.1.2), A-91: (I)+(B.1.3), A-92: (I)+(B.1.4), A-93: (I)+(B.1.5), A-94: (I)+(B.1.6), A-95: (I)+(B.1.7), A-96: (I)+(B.1.8), A-97: (I)+(B.1.9), A-98: (I)+(B.1.10), A-99: (I)+(B.1.11), A-100: (I)+(B.1.12), A-101: (I)+(B.1.13), A-102: (I)+(B.1.14), A-103: (I)+(B.1.15), A-104: (1)+(B.1.16), A-105: (I)+(B.1.17), A-106: (I)+(B.1.18), A-107: (I)+(B.1.19), A-108: (I)+(B.1.20), A-109: (I)+(B.1.21), A-110: (I)+(B.1.22), A-111: (I)+(B.1.23), A-112: (I)+(B.1.24), A-113: (I)+(B.1.25), A-114: (I)+(B.1.26), A-115: (I)+(B.1.27), A-116: (I)+(B.1.28), A-117: (I)+(B.1.29), A-118: (I)+(B.1.30), A-119: (I)+(B.1.34), A-120: (I)+(B.1.37), A-121: (I)+(B.1.38), A-122: (I)+(B.1.43), A-123: (I)+(B.1.44), A-124: (I)+(B.1.45), A-125: (I)+(B.1.46), A-126: (I)+(B.1.47), A-127: (I)+(B.1.48), A-128: (I)+(B.1.49), A-129: (I)+(B.1.50), A-130: (I)+(B.1.51), A-131: (I)+(B.2.1), A-132: (I)+(B.2.2), A-133: (I)+(B.2.3), A-141: (I)+(B.2.4), A-135: (I)+(B.2.5), A-136: (I)+(B.2.6), A-137: (I)+(B.2.7), A-138: (I)+(B.2.8), A-139: (I)+(B.3.1), A-140: (I)+(C.1.1), A-141: (I)+(C.1.2), A-142: (I)+(C.1.3), A-143: (I)+(C.1.4), A-144: (I)+(C.1.5), A-145: (I)+(C.1.6), A-146: (I)+(C.1.7), A-147: (I)+(C.2.1), A-148: (I)+(C.2.2), A-149: (I)+(C.2.3), A-150: (I)+(C.2.4), A-151: (I)+(C.2.5), A-152: (I)+(C.2.6), A-153: (I)+(C.2.7), A-154: (I)+(D.1.1), A-155: (I)+(D.1.2), A-156: (I)+(D.1.3), A-157: (I)+(D.1.4), A-158: (I)+(D.1.5), A-159: (I)+(D.1.6), A-160: (I)+(D.2.1), A-161: (I)+(D.2.2), A-162: (I)+(D.2.3), A-163: (I)+(D.2.4), A-164: (I)+(D.2.5), A-165: (I)+(D.2.6), A-166: (I)+(D.2.7), A-167: (I)+(E.1.1), A-168: (I)+(E.1.2), A-169: (I)+(E.1.3), A-170: (I)+(E.2.1), A-171: (I)+(E.2.2), A-172: (I)+(E.2.3), A-173: (I)+(E.2.4), A-174: (I)+(E.2.5), A-175: (I)+(E.2.6), A-176: (I)+(E.2.7), A-177: (I)+(E.2.8), A-178: (I)+(F.1.1), A-179: (I)+(F.1.2), A-180: (I)+(F.1.3), A-181: (I)+(F.1.4), A-182: (I)+(F.1.5), A-183: (I)+(F.1.6), A-184: (I)+(F.2.1), A-185: (I)+(G.1.1), A-186: (I)+(G.1.2), A-187: (I)+(G.1.3), A-188: (I)+(G.1.4), A-189: (I)+(G.2.1), A-190: (I)+(G.2.2), A-191: (I)+(G.2.3), A-192: (I)+(G.2.4), A-193: (I)+(G.2.5), A-194: (I)+(G.2.6), A-195: (I)+(G.2.7), A-196: (I)+(G.3.1), A-197: (I)+(G.3.2), A-198: (I)+(G.3.3), A-199: (I)+(G.3.4), A-200: (I)+(G.3.5), A-201: (I)+(G.3.6), A-202: (I)+(G.3.7), A-203: (I)+(G.3.8), A-204: |
| (I)+(G.4.1), A-205: (I)+(G.5.1), A-206: (1)+(G.5.2), A-207: (I)+(G.5.3), A-208: (I)+(H.1.1), A-209: (I)+(H.1.2), A-210: (I)+(H.1.3), A-211: (I)+(H.1.4), A-212: (I)+(H.1.5), A-213: (I)+(H.1.6), A-214: (I)+(H.2.1), A-215: (I)+(H.2.2), A-216: (I)+(H.2.3), A-217: (I)+(H.2.4), A-218: (I)+(H.2.5), A-219: (I)+(H.2.6), A-220: (I)+(H.2.7), A-221: (I)+(H.2.8), A-222: (I)+(H.2.9), A-223: (I)+(H.3.1), A-224: (I)+(H.3.2), A-225: (I)+(H.3.3), A-226: (I)+(H.3.4), A-227: (I)+(H.3.5), A-228: (I)+(H.3.6), A-229: (I)+(H.3.7), A-230: (I)+(H.3.8), A-231: (I)+(H.3.9), A-232: (I)+(H.3.10), A-233: (I)+(H.3.11), A-234: (I)+(H.4.1), A-235: (I)+(H.4.2), A-236: (I)+(H.4.3), A-237: (I)+(H.4.4), A-238: (I)+(H.4.5), A-239: (I)+(H.4.6), A-240: (I)+(H.4.7), A-241: (I)+(H.4.8), A-242: (I)+(H.4.9), A-243: (I)+(H.4.10), A-244: (I)+(!.1.1), A-245: (I)+(1.1.2), A-246: (I)+(1.2.1), A-247: (I)+(1.2.2), A-248: (I)+(1.2.3), A-249: (I)+(!.2.4), A-250: (I)+(1.2.5), A-251: (I)+(J.1.1), A-252: (I)+(J.1.2), A-253: (I)+(J.1.3), A-254: (I)+(J.1.4), A-255: (I)+(J.1.5), A-256: (I)+(J.1.6), A-257: (I)+(J.1.7), A-258: (I)+(J.1.8), A-259: (I)+(J.1.9), A-260: (I)+(J.1.10), A-261: (I)+(J.1.11), A-262: (I)+(J.1.12), A-263: (I)+(K.1.1), A-264: (I)+(K.1.2), A-265: (I)+(K.1.3), A-266: (I)+(K.1.4), A-267: (I)+(K.1.5), A-268: (I)+(K.1.6), A-269: (I)+(K.1.7), A-270: (I)+(K.1.8), A-271: (I)+(K.1.9), A-272: (I)+(K.1.10), A-273: (I)+(K.1.11), A-274: (I)+(K.1.12), A-275: (I)+(K.1.13), A-276: (I)+(K.1.14), A-277: (I)+(K.1.15), A-278: (I)+(K.1.16), A-279: (I)+(K.1.17), A-280: (I)+(K.1.18), A-281: (I)+(K.1.19), A-282: (I)+(K.1.20), A-283: (I)+(K.1.21), A-284: (I)+(K.1.22), A-285: (I)+(K.1.23), A-286: (I)+(K.1.24), A-287: (I)+(K.1.25), A-288: (I)+(K.1.26), A-289: (I)+(K.1.27), A-290: (I)+(K.1.28), A-291: (I)+(K.1.29), A-292: (I)+(K.1.30), A-293: (I)+(K.1.31), A-294: (I)+(K.1.32), A-295: (I)+(K.1.33), A-296: (I)+(K.1.34), A-297: (I)+(K.1.35), A-298: (I)+(K.1.36), A-299: (I)+(K.1.37), A-300: (I)+(K.1.38), A-301: (I)+(K.1.39), A-302: (I)+(K.1.40), A-303: (I)+(K.1.41), A-304: (I)+(K.1.42), A-305: (I)+(K.1.43), A-306: (I)+(K.1.44), A-307: (I)+(K.1.45), A-308: (I)+(K.1.47), A-309: (I)+(M.1.1), A-310: (I)+(M.1.2), A-311: (I)+(M.1.3). |

Likewise preferred are the following binary mixtures A-420 to A-739 listed in Table A2, wherein component 1) is selected from compounds I.1, I.2, I.3, I.4, I.5, I.6, I.7, I.8, I.9, I.10, I.11, I.12, and I.13 as defined herein (represented by the expression "(I)" which shall mean a compound selected from compounds I.1, I.2, I.3, I.4, I.5, I.6, I.7, I.8, I.9, I.10, I.11, I.12, and 1.13) and one pesticide II selected from the insecticidal group O) as defined herein (component 2).

**Table A2:**

| |
|---|
| A-420: (I)+(O.1.1), A-421: (I)+(O.1.2), A-422: (I)+(O.1.3), A-423: (I)+(O.1.4), A-424: (I)+(O.1.5), A-425: (I)+(O.1.6), A-426: (I)+(O.1.7), A-427: (I)+(O.1.8), A-428: (I)+(O.1.9), A-429: (I)+(O.1.10), A-430: (I)+(O.1.11), A-431: (I)+(O.1.12), A-432: (I)+(O.1.13), A-433: (I)+(O.1.14), A-434: (I)+(O.1.15), A-435: (I)+(O.1.16), A-436: (I)+(O.1.17), A-437: (I)+(O.1.18), A-438: (I)+(O.1.19), A-439: (I)+(O.1.20), A-440: (I)+(O.1.21), A-441: (I)+(O.1.22), A-442: (I)+(O.1.23), A-443: (I)+(O.1.24), A-444: (I)+(O.1.25), A-445: (I)+(O.1.26), A-446: (I)+(O.1.27), A-447: (I)+(O.1.28), A-448: (I)+(O.1.29), A-449: (I)+(O.1.30), A-450: (I)+(O.1.31), A-451: (I)+(O.1.32), A-452: (I)+(O.1.33), A-453: (I)+(O.1.34), A-454: (I)+(O.1.35), A-455: (I)+(O.1.36), A-456: (I)+(O.1.37), A-457: (I)+(O.1.38), A-458: (I)+(O.2.1), A-459: (I)+(O.2.2), A-460: (I)+(O.2.3), A-461: (I)+(O.2.4), A-462: (I)+(O.2.5), A-463: (I)+(O.2.6), A-464: (I)+(O.2.7), A-465: (I)+(O.2.8), A-466: (I)+(O.2.9), A-467: (I)+(O.2.10), A-468: (I)+(O.2.11), A-469: (I)+(O.2.12), A-470: (I)+(O.2.13), A-471: (I)+(O.2.14), A-472: (I)+(O.2.15), A-473: (I)+(O.2.16), A-474: (I)+(O.3.1), A-475: (I)+(O.3.2), A-476: (I)+(O.3.3), A-477: (I)+(O.3.4), A-478: (I)+(O.3.5), A-479: (I)+(O.3.6), A-480: (I)+(O.3.7), A-481: (I)+(O.3.8), A-482: (I)+(O.3.9), A-483: (I)+(O.3.10), A-484: (I)+(O.3.11), A-485: (I)+(O.3.12), A-486: (I)+(O.3.13), A-487: (I)+(O.3.14), A-488: (I)+(O.3.15), A-489: (I)+(O.3.16), A-490: (I)+(O.3.17), A-491: (I)+(O.3.18), A-492: (I)+(O.3.19), A-493: (I)+(O.3.20), A-494: (I)+(O.3.21), A-495: (I)+(O.3.22), A-496: (I)+(O.3.23), A-497: (I)+(O.3.24), A-498: (I)+(O.3.25), A-499: (I)+(O.3.26), A-500: (I)+(O.3.27), A-501: (I)+(0.4.1), A-502: (I)+(O.4.2), A-503: (I)+(O.4.3), A-504: (I)+(O.4.4), A-505: (I)+(O.4.5), A-506: (I)+(O.4.6), A-507: (I)+(O.4.7), A-508: (I)+(O.4.8), A-509: (I)+(O.4.9), A-510: (I)+(O.4.10), A-511: (I)+(O.4.11), A-512: (I)+(O.4.12), A-513: (I)+(O.4.13), A-514: (I)+(O.4.14), A-515: (I)+(O.4.15), A-516: (I)+(O.4.16), A-517: (I)+(O.4.17), A-518: (I)+(O.4.18), A-519: (I)+(O.4.19), A-520: (I)+(O.4.20), A-521: (I)+(O.4.21), A-522: (I)+(O.4.22), A-523: (I)+(O.4.23), A-524: (I)+(O.4.24), A-525: (I)+(O.5.1), A-526: (I)+(O.5.2), A-527: (I)+(O.5.3), A-528: (I)+(O.5.4), A-529: (I)+(O.5.5), A-530: (I)+(O.5.6), A-531: (I)+(O.5.7), A-532: (I)+(O.5.8), A-533: (I)+(O.5.9), A-534: (I)+(O.6.1), A-535: (I)+(O.6.2), A-536: (I)+(O.6.3), A-537: (I)+(O.6.4), A-538: (I)+(O.6.5), A-539: (I)+(O.6.6), A- |
| 540: (I)+(O.6.7), A-541: (I)+(O.7.1), A-542: (I)+(O.7.2), A-543: (I)+(O.7.3), A-544: (I)+(O.7.4), A-545: (I)+(O.7.5), A-546: (I)+(O.7.6), A-547: (I)+(O.8.1), A-548: (I)+(O.8.2), A-549: (I)+(O.8.3), A-550: (I)+(O.8.4), A-551: (I)+(O.8.5), A-552: (I)+(O.9.1), A-553: (I)+(O.9.2), A-554: (I)+(O.9.3), A-555: (I)+(O.10.1), A-556: (I)+(O.11.1), A-557: (I)+(O.11.2), A-558: (I)+(O.11.3), A-559: (I)+(O.11.4), A-560: (I)+(O.12.1), A-561: (I)+(O.13.1), A-562: (I)+(O.14.1), A-563: (I)+(O.14.2), A-564: (I)+(O.15.1), A-565: (I)+(O.15.2), A-566: (I)+(O.15.3), A-567: (I)+(O.15.4), A-568: (I)+(O.15.5), A-569: (I)+(O.15.6), A-570: (I)+(O.15.7), A-571: (I)+(O.15.8), A-572: (I)+(O.15.9), A-573: (I)+(O.15.10), A-574: (I)+(O.15.11), A-575: (I)+(O.16.1), A-576: (I)+(O.16.2), A-577: (I)+(O.16.3), A-578: (I)+(O.16.4), A-579: (I)+(O.16.5), A-580: (I)+(O.16.6), A-581: (I)+(O.17.1), A-582: (I)+(O.18.1), A-583: (I)+(O.18.2), A-584: (I)+(O.18.3), A-585: (I)+(O.18.4), A-586: (I)+(O.18.5), A-587: (I)+(O.19.1), A-588: (I)+(O.20.1), A-589: (I)+(O.20.2), A-590: (I)+(O.20.3), A-591: (I)+(O.21.1), A-592: (I)+(O.21.2), A-593: (I)+(O.21.3), A-594: (I)+(O.21.4), A-595: (I)+(O.21.5), A-596: (I)+(O.21.6), A-597: (I)+(O.21.7), A-598: (I)+(O.22.1), A-599: (I)+(O.22.2), A-600: (I)+(O.22.3), A-601: (I)+(O.22.4), A-602: (I)+(O.23.1), A-603: (I)+(O.23.2), A-604: (I)+(O.23.3), A-605: (I)+(O.24.1), A-606: (I)+(O.24.2), A-607: (I)+(O.24.3), A-608: (I)+(O.24.4), A-609: (I)+(O.24.5), A-610: (I)+(O.25.1), A-611: (I)+(O.25.2), A-612: (I)+(O.26.1), A-613: (I)+(O.26.2), A-614: (I)+(O.26.3), A-615: (I)+(O.26.4), A-616: (I)+(O.26.5), A-617: (I)+(O.26.6), A-618: (I)+(O.26.7), A-619: (I)+(O.26.8), A-620: (I)+(O.26.9), A-621: (I)+(O.26.10), A-622: (I)+(O.26.11), A-623: (I)+(O.26.12), A-624: (I)+(O.26.13), A-625: (I)+(O.26.14), A-626: (I)+(O.26.15), A-627: (I)+(O.26.16), A-628: (I)+(O.26.17), A-629: (I)+(O.26.18), A-630: (I)+(O.27.1), A-631: (I)+(O.27.2), A-632: (I)+(O.27.3), A-633: (I)+(O.27.4), A-634: (I)+(O.27.5), A-635: (I)+(O.27.6), A-636: (I)+(O.27.7), A-637: (I)+(O.27.8), A-638: (I)+(O.27.9), A-639: (I)+(O.27.10), A-640: (I)+(O.27.11), A-641: (I)+(O.27.12), A-642: (I)+(O.27.13), A-643: (I)+(O.27.14), A-644: (I)+(O.27.15), A-645: (I)+(O.27.16), A-646: (I)+(O.27.17), A-647: (I)+(O.27.18), A-648: (I)+(O.27.19), A-649: (I)+(O.27.20), A-650: (I)+(O.27.21), A-651: (I)+(O.27.22), A-652: (I)+(O.27.23), A-653: (I)+(O.27.24), A-654: (I)+(O.27.25), A-655: (I)+(O.27.26), A-656: (I)+(O.27.27), A-657: (I)+(O.27.28), A-658: (I)+(O.27.29), A-659: (I)+(O.27.30), A-660: (I)+(O.27.31), A-661: (I)+(O.27.32), A-662: (I)+(O.27.33), A-663: (I)+(O.27.34), A-664: (I)+(O.27.35), A-665: (I)+(O.27.36), A-666: (I)+(O.27.37), A-667: (I)+(O.27.38), A-668: (I)+(O.27.39), A-669: (I)+(O.27.40), A-670: (I)+(O.27.41), A-671: (I)+(O.27.42), A-672: (I)+(O.27.43), A-673: (I)+(O.27.44), A-674: (I)+(O.27.45), A-675: (I)+(O.27.46), A-676: (I)+(O.27.47), A-677: (I)+(O.27.48), A-678: (I)+(O.27.49), A-679: (I)+(O.27.50), A-680: (I)+(O.27.51), A-681: (I)+(O.27.52), A-682: (I)+(O.27.53), A-683: (I)+(O.27.54), A-684: (I)+(O.27.55), A-685: (I)+(O.27.56), A-686: (I)+(O.27.57), A-687: (I)+(O.27.58), A-688: (I)+(O.27.59), A-689: (I)+(O.27.60), A-690: (I)+(O.27.61), A-691: (I)+(O.27.62), A-692: (I)+(O.27.63), A-693: (I)+(O.27.64), A-694: (I)+(O.27.65), A-695: (I)+(O.27.66), A-696: (I)+(O.27.67), A-697: (I)+(O.27.68), A-698: (I)+(O.27.69), A-699: (I)+(O.27.70), A-700: (I)+(O.27.71), A-701: (I)+(O.27.72), A-702: (I)+(O.27.73), A-703: (I)+(O.27.74), A-704: (I)+(O.27.75), A-705: (I)+(O.27.76), A-706: (I)+(O.27.77), A-707: (I)+(O.27.78), A-708: (I)+(O.27.79), A-709: (I)+(O.27.80), A-710: (I)+(O.27.81), A-711: (I)+(O.27.82), A-712: (I)+(O.27.83), A-713: (I)+(O.27.84), A-714: (I)+(O.27.85), A-715: (I)+(O.27.86), A-716: (I)+(O.27.87), A-717: (I)+(O.27.88), A-718: (I)+(O.27.89), A-719: (I)+(O.27.90), A-720: (I)+(O.27.91), A-721: (I)+(O.27.92), A-722: (I)+(O.27.93), A-723: (I)+(O.27.94), A-724: (I)+(O.27.95), A-725: (I)+(O.27.96), A-726: (I)+(O.27.97), A-727: (I)+(O.27.98), A-728: (I)+(O.27.99), A-729: (I)+(O.27.100), A-730: (I)+(A.1.21a), A-731: (I)+(K.1.46), A-732: (I)+(K.1.48), A-733: (I)+(K.1.49), A-734: (I)+(K.1.50), A-735: (I)+(K.1.51), A-736: (I)+(K.1.52), A-737: (I)+(K.1.53), A-738: (I)+(K.1.54), A-739: (I)+(A.2.6). |

According to another embodiment, the component 2) of the mixtures is a pesticide II selected from the groups A) to K) and L2). Preferably, the pesticide II is selected from:
A) Respiration inhibitors
   - inhibitors of complex III at Qₒ site (Qol, C3): azoxystrobin (A.1.1), dimoxystrobin (A.1.4), kresoxim-methyl (A.1.9), metominostrobin (A.1.11), picoxystrobin (A.1.13), pyraclostrobin (A.1.14), trifloxystrobin (A.1.17), metyltetraprole (A.1.25; member of MoA subgroup A);
   - inhibitors of complex III at Qᵢ site (Qil, C4): cyazofamid (A.2.1), fenpicoxamid (A.2.4), florylpicoxamid (A.2.5), metarylpicoxamid (A.2.6);
   - inhibitors of complex II (SDHI, C2): benzovindiflupyr (A.3.2), bixafen (A.3.3), boscalid (A.3.4), fluopyram (A.3.7), fluxapyroxad (A.3.9), isofetamid (A.3.11), pydiflumetofen (A.3.17), inpyrfluxam (A.3.22), fluindapyr (A.3.28), isoflucypram (A.3.31);
   - other respiration inhibitors: fluazinam (A.4.5);
   - quinone outside inhibitor stigmatellin binding type (QoSI; C8): ametoctradin (A.5.1);
B) Sterol biosynthesis inhibitors (SBI fungicides)
   - C14 demethylase inhibitors (DMI, G1): triazoles: cyproconazole (B.1.4), difenoconazole (B.1.5), epoxiconazole (B.1.8), hexaconazole (B.1.13), metconazole (B.1.17), propiconazole (B.1.22), prothioconazole (B.1.23), tebuconazole (B.1.25), tetraconazole (B.1.26), triadimenol (B.1.28), mefentrifluconazole (B.1.38), methyl 2-[2-chloro-4-(4-chlorophenoxy)phenyl]-2-hydroxy-3-(1,2,4-triazol-1-yl)propanoate (B.1.56), 2-[2-chloro-4-(4-chlorophenoxy)phenyl]-2-hydroxy-3-(1,2,4-triazol-1-yl)propanoic acid (B. 1.57);
   - delta14-reductase inhibitors (G2): fenpropimorph (B.2.4), fenpropidin (B.2.6), spiroxamine (B.2.8);
   - inhibitors of 3-keto reductase: fenhexamid (B.3.1);
C) Nucleic acid synthesis inhibitors
   - DHODH inhibitors (A5): ipflufenoquin (C.5.1), quinofumelin (C.5.2), feneptamidoquin (C.5.3);
D) Inhibitors of cell division and cytoskeleton
   - other cell division inhibitors (B2 to B7): fluopicolide (D.2.4), zoxamide (D.2.5), metrafenone (D.2.6), pyriofenone (D.2.7), fluopimomide (D.2.9);
E) Inhibitors of amino acid and protein synthesis
   - methionine synthesis inhibitors (D1): cyprodinil (E.1.1), pyrimethanil (E.1.3);
F) Signal transduction inhibitors
   - MAP / histidine kinase inhibitors (E2 and E3): iprodione (F.1.2), fludioxonil (F.1.5);
G) Lipid and membrane synthesis inhibitors
   - Phospholipid biosynthesis inhibitors (F2): isoprothiolane (G.1.4);
   - compounds affecting cell membrane permeability and fatty acides (F4): propamocarb (G.4.1);
   - inhibitors of oxysterol binding protein (OSBPI, F9): oxathiapiprolin (G.5.1), fluoxapiprolin (G.5.3);
H) Inhibitors with Multi Site Action
   - inorganic active substances (M01, M02): Bordeaux mixture (H.1.1), copper (H.1.2), copper acetate (H.1.3), copper hydroxide (H.1.4), copper oxychloride (H.1.5), basic copper sulfate (H.1.6), sulfur (H.1.7);
   - thio- and dithiocarbamates (M03): mancozeb (H.2.2), metiram (H.2.5);
   - organochlorine compounds (M04, M05, M06, M08): chlorothalonil (H.3.2), folpet (H.3.5);
   - guanidines and others (M07, M09, M10;M11, M12): dithianon (H.4.9);
I) Cell wall synthesis inhibitors
   - melanin synthesis inhibitors (I1 to I3): trihydroxynaphthalene reductase inhibitors (MBI-R; I1) tricyclazole (I.2.2); polyketide synthase inhibitors (MBI-P, I3): tolprocarb (i.2.6);
   - cellulose synthase inhibitors (H5): dimethomorph (I.3.1), mandipropamid (i.3.3);
J) Plant defence inducers (P1 to P8)
   - probenazole (J.1.2), isotianil (J.1.3), phosphonates: fosetyl (J.1.6), fosetyl-aluminum (J.1.7), phosphorous acid and its salts (J.1.8), potassium or sodium bicarbonate (J. 1.9), calcium phosphonate (J.1.11), potassium phosphonate (J.1.12), dichlobentiazox (J.1.13);
K) Unknown mode of action (U, Unknown)
   - cymoxanil (K.1.4), flumetylsulforim (K. 1.60), tebufloquin (K.1.24), flufenoxadiazam (K.1.58) [MoA proposed: class II histone deacetylase inhibitor], rac-3-[3-(3-chloro-2-fluoro-phenoxy)-6-methyl-pyridazin-4-yl]-5-[(2-chloro-4-methyl-phenyl)methyl]-5,6-dihydro-4H-1,2,4-oxadiazine (K.1.105), (5S)-3-[3-(3-chloro-2-fluoro-phenoxy)-6-methyl-pyridazin-4-yl]-5-[(2-chloro-4-methyl-phenyl)methyl]-5,6-dihydro-4H-1,2,4-oxadiazine (K. 1.106), (5R)-3-[3-(3-chloro-2-fluoro-phenoxy)-6-methyl-pyridazin-4-yl]-5-[(2-chloro-4-methylphenyl)methyl]-5,6-dihydro-4H-1,2,4-oxadiazine (K.1.107);
L2) Biochemical pesticides with fungicidal, bactericidal, viricidal and/or plant defense activator activity: harpin protein, plant oils (BM3): orange oil (L.2.1), limonene (L.2.2), geraniol (L.2.3), thymol (L.2.4); aureobasidin (in particular aureobasidin A (L.2.5)), bafilomycin (L.2.7) (in particular bafilomycin A1, B1 and C1), chlorflavonin (L.2.8), cinnamaldehyde (L.2.9), natamycin (L.2.10; F8).

More preferably, the component 2) of the mixtures is a pesticide II selected from the from: azoxystrobin (A.1.1), kresoxim-methyl (A.1.9), picoxystrobin (A.1.13), pyraclostrobin (A.1.14), trifloxystrobin (A.1.17), metyltetraprole (A.1.25); fenpicoxamid (A.2.4), florylpicoxamid (A.2.5), metarylpicoxamid (A.2.6); benzovindiflupyr (A.3.2), bixafen (A.3.3), boscalid (A.3.4), fluopyram (A.3.7), fluxapyroxad (A.3.9), isofetamid (A.3.11), pydiflumetofen (A.3.17), inpyrfluxam (A.3.22), fluindapyr (A.3.28), isoflucypram (A.3.31); fluazinam (A.4.5); difenoconazole (B.1.5), epoxiconazole (B.1.8), metconazole (B.1.17), propiconazole (B.1.22), prothioconazole (B.1.23), tebuconazole (B.1.25), tetraconazole (B.1.26), triadimenol (B.1.28), mefentrifluconazole (B.1.38), methyl 2-[2-chloro-4-(4-chlorophenoxy)-phenyl]-2-hydroxy-3-(1,2,4-triazol-1-yl)propanoate (B.1.56), 2-[2-chloro-4-(4-chlorophenoxy)phenyl]-2-hydroxy-3-(1,2,4-triazol-1-yl)propanoic acid (B.1.57); fenpropimorph (B.2.4), fenpropidin (B.2.6), spiroxamine (B.2.8); fenhexamid (B.3.1); ipflufenoquin (C.5.1), quinofumelin (C.5.2), feneptamidoquin (C.5.3); metrafenone (D.2.6), pyriofenone (D.2.7); cyprodinil (E.1.1), pyrimethanil (E.1.3); fludioxonil (F.1.5); copper oxychloride (H.1.5), sulfur (H.1.7); mancozeb (H.2.2), metiram (H.2.5); chlorothalonil (H.3.2), folpet (H.3.5); potassium or sodium bicarbonate (J.1.9); flumetylsulforim (K.1.60), tebufloquin (K.1.24), flufenoxadiazam (K.1.58), rac-3-[3-(3-chloro-2-fluoro-phenoxy)-6-methyl-pyridazin-4-yl]-5-[(2-chloro-4-methyl-phenyl)methyl]-5,6-dihydro-4H-1,2,4-oxadiazine (K. 1.105), (5*S*)-3-[3-(3-chloro-2-fluoro-phenoxy)-6-methyl-pyridazin-4-yl]-5-[(2-chloro-4-methyl-phenyl)methyl]-5,6-dihydro-4H-1,2,4-oxadiazine (K.1.106), (5R)-3-[3-(3-chloro-2-fluoro-phenoxy)-6-methyl-pyridazin-4-yl]-5-[(2-chloro-4-methylphenyl)methyl]-5,6-dihydro-4H-1,2,4-oxadiazine (K. 1.107); orange oil (L.2.1), limonene (L.2.2), geraniol (L.2.3), thymol (L.2.4), aureobasidin (in particular aureobasidin A (L.2.5)), ambruticin (L.2.6), bafilomycin ((L.2.7) bafilomycin A1, B1 and C1), natamycin (L.2.8), chlorflavonin (L.2.9), and cinnamaldehyde (L.2.10).

Even more preferably, the component 2) of the mixtures is a pesticide II selected from the from pyraclostrobin (A.1.14), metyltetraprole (A.1.25); fenpicoxamid (A.2.4), florylpicoxamid (A.2.5), metarylpicoxamid (A.2.6); benzovindiflupyr (A.3.2), boscalid (A.3.4), fluxapyroxad (A.3.9), isofetamid (A.3.11), pydiflumetofen (A.3.17), inpyrfluxam (A.3.22), fluindapyr (A.3.28), isoflucypram (A.3.31); fluazinam (A.4.5); difenoconazole (B.1.5), prothioconazole (B.1.23), tebuconazole (B.1.25), mefentrifluconazole (B.1.38), methyl 2-[2-chloro-4-(4-chlorophenoxy)-phenyl]-2-hydroxy-3-(1,2,4-triazol-1-yl)propanoate (B.1.56), 2-[2-chloro-4-(4-chlorophenoxy)phenyl]-2-hydroxy-3-(1,2,4-triazol-1-yl)propanoic acid (B.1.57); fenpropimorph (B.2.4), fenpropidin (B.2.6); ipflufenoquin (C.5.1), quinofumelin (C.5.2), feneptamidoquin (C.5.3); pyrimethanil (E.1.3); fludioxonil (F.1.5); copper oxychloride (H.1.5), sulfur (H.1.7); mancozeb (H.2.2), metiram (H.2.5); chlorothalonil (H.3.2), folpet (H.3.5); flumetylsulforim (K.1.60), flufenoxadiazam (K.1.58), aureobasidin (in particular aureobasidin A (L.2.5)), and ambruticin (L.2.6).

Utmost preferably, the component 2) of the mixtures is a pesticide II selected from the from pyraclostrobin (A.1.14), metyltetraprole (A.1.25); fenpicoxamid (A.2.4), florylpicoxamid (A.2.5), metarylpicoxamid (A.2.6); boscalid (A.3.4), fluxapyroxad (A.3.9), pydiflumetofen (A.3.17), inpyrfluxam (A.3.22); fluazinam (A.4.5); prothioconazole (B.1.23), mefentrifluconazole (B.1.38); fenpropimorph (B.2.4); ipflufenoquin (C.5.1), feneptamidoquin (C.5.3); fludioxonil (F.1.5); copper oxychloride (H.1.5), sulfur (H.1.7); mancozeb (H.2.2), metiram (H.2.5); chlorothalonil (H.3.2), and flufenoxadiazam (K.1.58).

Particularly preferred binary mixtures (comprising a compound I as defined above as component 1) in third column "C1)" and a pesticide II as component 2)) in second column "C2)" are the binary mixtures B-1 to B-819 of Table B, where each row represents one aspect of the mixtures according to the invention.

**Table B:**

| **Mixture** | **C2)** | **C1)** |
|---|---|---|
| B-1 | (A.1.1) | I.1 |
| B-2 | (A.1.9) | I.1 |
| B-3 | (A.1.13) | I.1 |
| B-4 | (A.1.14) | I.1 |
| B-5 | (A.1.17) | I.1 |
| B-6 | (A.1.25) | I.1 |
| B-7 | (A.2.1) | I.1 |
| B-8 | (A.2.4) | I.1 |
| B-9 | (A.2.5) | I.1 |
| B-10 | (A.2.6) | I.1 |
| B-11 | (A.3.2) | I.1 |
| B-12 | (A.3.4) | I.1 |
| B-13 | (A.3.7) | I.1 |
| B-14 | (A.3.9) | I.1 |
| B-15 | (A.3.11) | I.1 |
| B-16 | (A.3.17) | I.1 |
| B-17 | (A.3.22) | I.1 |
| B-18 | (A.3.28) | I.1 |
| B-19 | (A.3.31) | I.1 |
| B-20 | (A.4.5) | I.1 |
| B-21 | (A.5.1) | I.1 |
| B-22 | (B.1.5) | I.1 |
| B-23 | (B.1.8) | I.1 |
| B-24 | (B.1.17) | I.1 |
| B-25 | (B.1.22) | I.1 |
| B-26 | (B.1.23) | I.1 |
| B-27 | (B.1.25) | I.1 |
| B-28 | (B.1.26) | I.1 |
| B-29 | (B.1.28) | I.1 |
| B-30 | (B.1.38) | I.1 |
| B-31 | (B.1.56) | I.1 |
| B-32 | (B.1.57) | I.1 |
| B-33 | (B.2.4) | I.1 |
| B-34 | (B.2.6) | I.1 |
| B-35 | (B.2.8) | I.1 |
| B-36 | (B.3.1) | I.1 |
| B-37 | (C.5.1) | I.1 |
| B-38 | (C.5.2) | I.1 |
| B-39 | (C.5.3) | I.1 |
| B-40 | (D.2.4) | I.1 |
| B-41 | (D.2.5) | I.1 |
| B-42 | (D.2.6) | I.1 |
| B-43 | (D.2.7) | I.1 |
| B-44 | (D.2.9) | I.1 |
| B-45 | (E.1.1) | I.1 |
| B-46 | (E.1.3) | I.1 |
| B-47 | (F.1.5) | I.1 |
| B-48 | (G.4.1) | I.1 |
| B-49 | (G.5.1) | I.1 |
| B-50 | (G.5.3) | I.1 |
| B-51 | (H.1.2) | I.1 |
| B-52 | (H.1.4) | I.1 |
| B-53 | (H.1.5) | I.1 |
| B-54 | (H.1.7) | I.1 |
| B-55 | (H.2.2) | I.1 |
| B-56 | (H.2.5) | I.1 |
| B-57 | (H.3.2) | I.1 |
| B-58 | (H.3.5) | I.1 |
| B-59 | (H.4.9) | I.1 |
| B-60 | (I.3.1) | I.1 |
| B-61 | (I.3.3) | I.1 |
| B-62 | (J.1.9) | I.1 |
| B-63 | (J.1.12) | I.1 |
| B-64 | (K.1.4) | I.1 |
| B-65 | (K.1.24) | I.1 |
| B-66 | (K.1.58) | I.1 |
| B-67 | (K.1.60) | I.1 |
| B-68 | (K.1.105) | I.1 |
| B-69 | (K.1.106) | I.1 |
| B-70 | (K.1.107) | I.1 |
| B-71 | L.2.1) | I.1 |
| B-72 | L.2.2) | I.1 |
| B-73 | (L.2.3) | I.1 |
| B-74 | (L.2.4) | I.1 |
| B-75 | (L.2.5) | I.1 |
| B-76 | (L.2.6) | I.1 |
| B-77 | (L.2.7) | I.1 |
| B-78 | (L.2.8) | I.1 |
| B-79 | (L.2.9) | I.1 |
| B-80 | (L.2.10) | I.1 |
| B-81 | (A.1.1) | I.2 |
| B-82 | (A.1.9) | I.2 |
| B-83 | (A.1.13) | I.2 |
| B-84 | (A.1.14) | I.2 |
| B-85 | (A.1.17) | I.2 |
| B-86 | (A.1.25) | I.2 |
| B-87 | (A.2.1) | I.2 |
| B-88 | (A.2.4) | I.2 |
| B-89 | (A.2.5) | I.2 |
| B-90 | (A.2.6) | I.2 |
| B-91 | (A.3.2) | I.2 |
| B-92 | (A.3.4) | I.2 |
| B-93 | (A.3.7) | I.2 |
| B-94 | (A.3.9) | I.2 |
| B-95 | (A.3.11) | I.2 |
| B-96 | (A.3.17) | I.2 |
| B-97 | (A.3.22) | I.2 |
| B-98 | (A.3.28) | I.2 |
| B-99 | (A.3.31) | I.2 |
| B-100 | (A.4.5) | I.2 |
| B-101 | (A.5.1) | I.2 |
| B-102 | (B.1.5) | I.2 |
| B-103 | (B.1.8) | I.2 |
| B-104 | (B.1.17) | I.2 |
| B-105 | (B.1.22) | I.2 |
| B-106 | (B.1.23) | I.2 |
| B-107 | (B.1.25) | I.2 |
| B-108 | (B.1.26) | I.2 |
| B-109 | (B.1.28) | I.2 |
| B-110 | (B.1.38) | I.2 |
| B-111 | (B.1.56) | I.2 |
| B-112 | (B.1.57) | I.2 |
| B-113 | (B.2.4) | I.2 |
| B-114 | (B.2.6) | I.2 |
| B-115 | (B.2.8) | I.2 |
| B-116 | (B.3.1) | I.2 |
| B-117 | (C.5.1) | I.2 |
| B-118 | (C.5.2) | I.2 |
| B-119 | (C.5.3) | I.2 |
| B-120 | (D.2.4) | I.2 |
| B-121 | (D.2.5) | I.2 |
| B-122 | (D.2.6) | I.2 |
| B-123 | (D.2.7) | I.2 |
| B-124 | (D.2.9) | I.2 |
| B-125 | (E.1.1) | I.2 |
| B-126 | (E.1.3) | I.2 |
| B-127 | (F.1.5) | I.2 |
| B-128 | (G.4.1) | I.2 |
| B-129 | (G.5.1) | I.2 |
| B-130 | (G.5.3) | I.2 |
| B-131 | (H.1.2) | I.2 |
| B-132 | (H.1.4) | I.2 |
| B-133 | (H.1.5) | I.2 |
| B-134 | (H.1.7) | I.2 |
| B-135 | (H.2.2) | I.2 |
| B-136 | (H.2.5) | I.2 |
| B-137 | (H.3.2) | I.2 |
| B-138 | (H.3.5) | I.2 |
| B-139 | (H.4.9) | I.2 |
| B-140 | (I.3.1) | I.2 |
| B-141 | (I.3.3) | I.2 |
| B-142 | (J.1.9) | I.2 |
| B-143 | (J.1.12) | I.2 |
| B-144 | (K.1.4) | I.2 |
| B-145 | (K.1.24) | I.2 |
| B-146 | (K.1.58) | I.2 |
| B-147 | (K.1.60) | I.2 |
| B-148 | (K.1.105) | I.2 |
| B-149 | (K.1.106) | I.2 |
| B-150 | (K.1.107) | I.2 |
| B-151 | L.2.1) | I.2 |
| B-152 | L.2.2) | I.2 |
| B-153 | (L.2.3) | I.2 |
| B-154 | (L.2.4) | I.2 |
| B-155 | (L.2.5) | I.2 |
| B-156 | (L.2.6) | I.2 |
| B-157 | (L.2.7) | I.2 |
| B-158 | (L.2.8) | I.2 |
| B-159 | (L.2.9) | I.2 |
| B-160 | (L.2.10) | I.2 |
| B-161 | (A.1.1) | I.3 |
| B-162 | (A.1.9) | I.3 |
| B-163 | (A.1.13) | I.3 |
| B-164 | (A.1.14) | I.3 |
| B-165 | (A.1.17) | I.3 |
| B-166 | (A.1.25) | I.3 |
| B-167 | (A.2.1) | I.3 |
| B-168 | (A.2.4) | I.3 |
| B-169 | (A.2.5) | I.3 |
| B-170 | (A.2.6) | I.3 |
| B-171 | (A.3.2) | I.3 |
| B-172 | (A.3.4) | I.3 |
| B-173 | (A.3.7) | I.3 |
| B-174 | (A.3.9) | I.3 |
| B-175 | (A.3.11) | I.3 |
| B-176 | (A.3.17) | I.3 |
| B-177 | (A.3.22) | I.3 |
| B-178 | (A.3.28) | I.3 |
| B-179 | (A.3.31) | I.3 |
| B-180 | (A.4.5) | I.3 |
| B-181 | (A.5.1) | I.3 |
| B-182 | (B.1.5) | I.3 |
| B-183 | (B.1.8) | I.3 |
| B-184 | (B.1.17) | I.3 |
| B-185 | (B.1.22) | I.3 |
| B-186 | (B.1.23) | I.3 |
| B-187 | (B.1.25) | I.3 |
| B-188 | (B.1.26) | I.3 |
| B-189 | (B.1.28) | I.3 |
| B-190 | (B.1.38) | I.3 |
| B-191 | (B.1.56) | I.3 |
| B-192 | (B.1.57) | I.3 |
| B-193 | (B.2.4) | I.3 |
| B-194 | (B.2.6) | I.3 |
| B-195 | (B.2.8) | I.3 |
| B-196 | (B.3.1) | I.3 |
| B-197 | (C.5.1) | I.3 |
| B-198 | (C.5.2) | I.3 |
| B-199 | (C.5.3) | I.3 |
| B-200 | (D.2.4) | I.3 |
| B-201 | (D.2.5) | I.3 |
| B-202 | (D.2.6) | I.3 |
| B-203 | (D.2.7) | I.3 |
| B-204 | (D.2.9) | I.3 |
| B-205 | (E.1.1) | I.3 |
| B-206 | (E.1.3) | I.3 |
| B-207 | (F.1.5) | I.3 |
| B-208 | (G.4.1) | I.3 |
| B-209 | (G.5.1) | I.3 |
| B-210 | (G.5.3) | I.3 |
| B-211 | (H.1.2) | I.3 |
| B-212 | (H.1.4) | I.3 |
| B-213 | (H.1.5) | I.3 |
| B-214 | (H.1.7) | I.3 |
| B-215 | (H.2.2) | I.3 |
| B-216 | (H.2.5) | I.3 |
| B-217 | (H.3.2) | I.3 |
| B-218 | (H.3.5) | I.3 |
| B-219 | (H.4.9) | I.3 |
| B-220 | (I.3.1) | I.3 |
| B-221 | (I.3.3) | I.3 |
| B-222 | (J.1.9) | I.3 |
| B-223 | (J.1.12) | I.3 |
| B-224 | (K.1.4) | I.3 |
| B-225 | (K.1.24) | I.3 |
| B-226 | (K.1.58) | I.3 |
| B-227 | (K.1.60) | I.3 |
| B-228 | (K.1.105) | I.3 |
| B-229 | (K.1.106) | I.3 |
| B-230 | (K.1.107) | I.3 |
| B-231 | L.2.1) | I.3 |
| B-232 | L.2.2) | I.3 |
| B-233 | (L.2.3) | I.3 |
| B-234 | (L.2.4) | I.3 |
| B-235 | (L.2.5) | I.3 |
| B-236 | (L.2.6) | I.3 |
| B-237 | (L.2.7) | I.3 |
| B-238 | (L.2.8) | I.3 |
| B-239 | (L.2.9) | I.3 |
| B-240 | (L.2.10) | I.3 |
| B-241 | (A.1.1) | I.4 |
| B-242 | (A.1.9) | I.4 |
| B-243 | (A.1.13) | I.4 |
| B-244 | (A.1.14) | I.4 |
| B-245 | (A.1.17) | I.4 |
| B-246 | (A.1.25) | I.4 |
| B-247 | (A.2.1) | I.4 |
| B-248 | (A.2.4) | I.4 |
| B-249 | (A.2.5) | I.4 |
| B-250 | (A.2.6) | I.4 |
| B-251 | (A.3.2) | I.4 |
| B-252 | (A.3.4) | I.4 |
| B-253 | (A.3.7) | I.4 |
| B-254 | (A.3.9) | I.4 |
| B-255 | (A.3.11) | I.4 |
| B-256 | (A.3.17) | I.4 |
| B-257 | (A.3.22) | I.4 |
| B-258 | (A.3.28) | I.4 |
| B-259 | (A.3.31) | I.4 |
| B-260 | (A.4.5) | I.4 |
| B-261 | (A.5.1) | I.4 |
| B-262 | (B.1.5) | I.4 |
| B-263 | (B.1.8) | I.4 |
| B-264 | (B.1.17) | I.4 |
| B-265 | (B.1.22) | I.4 |
| B-266 | (B.1.23) | I.4 |
| B-267 | (B.1.25) | I.4 |
| B-268 | (B.1.26) | I.4 |
| B-269 | (B.1.28) | I.4 |
| B-270 | (B.1.38) | I.4 |
| B-271 | (B.1.56) | I.4 |
| B-272 | (B.1.57) | I.4 |
| B-273 | (B.2.4) | I.4 |
| B-274 | (B.2.6) | I.4 |
| B-275 | (B.2.8) | I.4 |
| B-276 | (B.3.1) | I.4 |
| B-277 | (C.5.1) | I.4 |
| B-278 | (C.5.2) | I.4 |
| B-279 | (C.5.3) | I.4 |
| B-280 | (D.2.4) | I.4 |
| B-281 | (D.2.5) | I.4 |
| B-282 | (D.2.6) | I.4 |
| B-283 | (D.2.7) | I.4 |
| B-284 | (D.2.9) | I.4 |
| B-285 | (E.1.1) | I.4 |
| B-286 | (E.1.3) | I.4 |
| B-287 | (F.1.5) | I.4 |
| B-288 | (G.4.1) | I.4 |
| B-289 | (G.5.1) | I.4 |
| B-290 | (G.5.3) | I.4 |
| B-291 | (H.1.2) | I.4 |
| B-292 | (H.1.4) | I.4 |
| B-293 | (H.1.5) | I.4 |
| B-294 | (H.1.7) | I.4 |
| B-295 | (H.2.2) | I.4 |
| B-296 | (H.2.5) | I.4 |
| B-297 | (H.3.2) | I.4 |
| B-298 | (H.3.5) | I.4 |
| B-299 | (H.4.9) | I.4 |
| B-300 | (I.3.1) | I.4 |
| B-301 | (I.3.3) | I.4 |
| B-302 | (J.1.9) | I.4 |
| B-303 | (J.1.12) | I.4 |
| B-304 | (K.1.4) | I.4 |
| B-305 | (K.1.24) | I.4 |
| B-306 | (K.1.58) | I.4 |
| B-307 | (K.1.60) | I.4 |
| B-308 | (K.1.105) | I.4 |
| B-309 | (K.1.106) | I.4 |
| B-310 | (K.1.107) | I.4 |
| B-311 | L.2.1) | I.4 |
| B-312 | L.2.2) | I.4 |
| B-313 | (L.2.3) | I.4 |
| B-314 | (L.2.4) | I.4 |
| B-315 | (L.2.5) | I.4 |
| B-316 | (L.2.6) | I.4 |
| B-317 | (L.2.7) | I.4 |
| B-318 | (L.2.8) | I.4 |
| B-319 | (L.2.9) | I.4 |
| B-320 | (L.2.10) | I.4 |
| B-321 | (A.1.1) | I.5 |
| B-322 | (A.1.9) | I.5 |
| B-323 | (A.1.13) | I.5 |
| B-324 | (A.1.14) | I.5 |
| B-325 | (A.1.17) | I.5 |
| B-326 | (A.1.25) | I.5 |
| B-327 | (A.2.1) | I.5 |
| B-328 | (A.2.4) | I.5 |
| B-329 | (A.2.5) | I.5 |
| B-330 | (A.2.6) | I.5 |
| B-331 | (A.3.2) | I.5 |
| B-332 | (A.3.4) | I.5 |
| B-333 | (A.3.7) | I.5 |
| B-334 | (A.3.9) | I.5 |
| B-335 | (A.3.11) | I.5 |
| B-336 | (A.3.17) | I.5 |
| B-337 | (A.3.22) | I.5 |
| B-338 | (A.3.28) | I.5 |
| B-339 | (A.3.31) | I.5 |
| B-340 | (A.4.5) | I.5 |
| B-341 | (A.5.1) | I.5 |
| B-342 | (B.1.5) | I.5 |
| B-343 | (B.1.8) | I.5 |
| B-344 | (B.1.17) | I.5 |
| B-345 | (B.1.22) | I.5 |
| B-346 | (B.1.23) | I.5 |
| B-347 | (B.1.25) | I.5 |
| B-348 | (B.1.26) | I.5 |
| B-349 | (B.1.28) | I.5 |
| B-350 | (B.1.38) | I.5 |
| B-351 | (B.1.56) | I.5 |
| B-352 | (B.1.57) | I.5 |
| B-353 | (B.2.4) | I.5 |
| B-354 | (B.2.6) | I.5 |
| B-355 | (B.2.8) | I.5 |
| B-356 | (B.3.1) | I.5 |
| B-357 | (C.5.1) | I.5 |
| B-358 | (C.5.2) | I.5 |
| B-359 | (C.5.3) | I.5 |
| B-360 | (D.2.4) | I.5 |
| B-361 | (D.2.5) | I.5 |
| B-362 | (D.2.6) | I.5 |
| B-363 | (D.2.7) | I.5 |
| B-364 | (D.2.9) | I.5 |
| B-365 | (E.1.1) | I.5 |
| B-366 | (E.1.3) | I.5 |
| B-367 | (F.1.5) | I.5 |
| B-368 | (G.4.1) | I.5 |
| B-369 | (G.5.1) | I.5 |
| B-370 | (G.5.3) | I.5 |
| B-371 | (H.1.2) | I.5 |
| B-372 | (H.1.4) | I.5 |
| B-373 | (H.1.5) | I.5 |
| B-374 | (H.1.7) | I.5 |
| B-375 | (H.2.2) | I.5 |
| B-376 | (H.2.5) | I.5 |
| B-377 | (H.3.2) | I.5 |
| B-378 | (H.3.5) | I.5 |
| B-379 | (H.4.9) | I.5 |
| B-380 | (I.3.1) | I.5 |
| B-381 | (I.3.3) | I.5 |
| B-382 | (J.1.9) | I.5 |
| B-383 | (J.1.12) | I.5 |
| B-384 | (K.1.4) | I.5 |
| B-385 | (K.1.24) | I.5 |
| B-386 | (K.1.58) | I.5 |
| B-387 | (K.1.60) | I.5 |
| B-388 | (K.1.105) | I.5 |
| B-389 | (K.1.106) | I.5 |
| B-390 | (K.1.107) | I.5 |
| B-391 | L.2.1) | I.5 |
| B-392 | L.2.2) | I.5 |
| B-393 | (L.2.3) | I.5 |
| B-394 | (L.2.4) | I.5 |
| B-395 | (L.2.5) | I.5 |
| B-396 | (L.2.6) | I.5 |
| B-397 | (L.2.7) | I.5 |
| B-398 | (L.2.8) | I.5 |
| B-399 | (L.2.9) | I.5 |
| B-400 | (L.2.10) | I.5 |
| B-401 | (A.1.1) | I.6 |
| B-402 | (A.1.9) | I.6 |
| B-403 | (A.1.13) | I.6 |
| B-404 | (A.1.14) | I.6 |
| B-405 | (A.1.17) | I.6 |
| B-406 | (A.1.25) | I.6 |
| B-407 | (A.2.1) | I.6 |
| B-408 | (A.2.4) | I.6 |
| B-409 | (A.2.5) | I.6 |
| B-410 | (A.2.6) | I.6 |
| B-411 | (A.3.2) | I.6 |
| B-412 | (A.3.4) | I.6 |
| B-413 | (A.3.7) | I.6 |
| B-414 | (A.3.9) | I.6 |
| B-415 | (A.3.11) | I.6 |
| B-416 | (A.3.17) | I.6 |
| B-417 | (A.3.22) | I.6 |
| B-418 | (A.3.28) | I.6 |
| B-419 | (A.3.31) | I.6 |
| B-420 | (A.4.5) | I.6 |
| B-421 | (A.5.1) | I.6 |
| B-422 | (B.1.5) | I.6 |
| B-423 | (B.1.8) | I.6 |
| B-424 | (B.1.17) | I.6 |
| B-425 | (B.1.22) | I.6 |
| B-426 | (B.1.23) | I.6 |
| B-427 | (B.1.25) | I.6 |
| B-428 | (B.1.26) | I.6 |
| B-429 | (B.1.28) | I.6 |
| B-430 | (B.1.38) | I.6 |
| B-431 | (B.1.56) | I.6 |
| B-432 | (B.1.57) | I.6 |
| B-433 | (B.2.4) | I.6 |
| B-434 | (B.2.6) | I.6 |
| B-435 | (B.2.8) | I.6 |
| B-436 | (B.3.1) | I.6 |
| B-437 | (C.5.1) | I.6 |
| B-438 | (C.5.2) | I.6 |
| B-439 | (C.5.3) | I.6 |
| B-440 | (D.2.4) | I.6 |
| B-441 | (D.2.5) | I.6 |
| B-442 | (D.2.6) | I.6 |
| B-443 | (D.2.7) | I.6 |
| B-444 | (D.2.9) | I.6 |
| B-445 | (E.1.1) | I.6 |
| B-446 | (E.1.3) | I.6 |
| B-447 | (F.1.5) | I.6 |
| B-448 | (G.4.1) | I.6 |
| B-449 | (G.5.1) | I.6 |
| B-450 | (G.5.3) | I.6 |
| B-451 | (H.1.2) | I.6 |
| B-452 | (H.1.4) | I.6 |
| B-453 | (H.1.5) | I.6 |
| B-454 | (H.1.7) | I.6 |
| B-455 | (H.2.2) | I.6 |
| B-456 | (H.2.5) | I.6 |
| B-457 | (H.3.2) | I.6 |
| B-458 | (H.3.5) | I.6 |
| B-459 | (H.4.9) | I.6 |
| B-460 | (I.3.1) | I.6 |
| B-461 | (I.3.3) | I.6 |
| B-462 | (J.1.9) | I.6 |
| B-463 | (J.1.12) | I.6 |
| B-464 | (K.1.4) | I.6 |
| B-465 | (K.1.24) | I.6 |
| B-466 | (K.1.58) | I.6 |
| B-467 | (K.1.60) | I.6 |
| B-468 | (K.1.105) | I.6 |
| B-469 | (K.1.106) | I.6 |
| B-470 | (K.1.107) | I.6 |
| B-471 | L.2.1) | I.6 |
| B-472 | L.2.2) | I.6 |
| B-473 | (L.2.3) | I.6 |
| B-474 | (L.2.4) | I.6 |
| B-475 | (L.2.5) | I.6 |
| B-476 | (L.2.6) | I.6 |
| B-477 | (L.2.7) | I.6 |
| B-478 | (L.2.8) | I.6 |
| B-479 | (L.2.9) | I.6 |
| B-480 | (L.2.10) | I.6 |
| B-481 | (A.1.1) | I.7 |
| B-482 | (A.1.9) | I.7 |
| B-483 | (A.1.13) | I.7 |
| B-484 | (A.1.14) | I.7 |
| B-485 | (A.1.17) | I.7 |
| B-486 | (A.1.25) | I.7 |
| B-487 | (A.2.1) | I.7 |
| B-488 | (A.2.4) | I.7 |
| B-489 | (A.2.5) | I.7 |
| B-490 | (A.2.6) | I.7 |
| B-491 | (A.3.2) | I.7 |
| B-492 | (A.3.4) | I.7 |
| B-493 | (A.3.7) | I.7 |
| B-494 | (A.3.9) | I.7 |
| B-495 | (A.3.11) | I.7 |
| B-496 | (A.3.17) | I.7 |
| B-497 | (A.3.22) | I.7 |
| B-498 | (A.3.28) | I.7 |
| B-499 | (A.3.31) | I.7 |
| B-500 | (A.4.5) | I.7 |
| B-501 | (A.5.1) | I.7 |
| B-502 | (B.1.5) | I.7 |
| B-503 | (B.1.8) | I.7 |
| B-504 | (B.1.17) | I.7 |
| B-505 | (B.1.22) | I.7 |
| B-506 | (B.1.23) | I.7 |
| B-507 | (B.1.25) | I.7 |
| B-508 | (B.1.26) | I.7 |
| B-509 | (B.1.28) | I.7 |
| B-510 | (B.1.38) | I.7 |
| B-511 | (B.1.56) | I.7 |
| B-512 | (B.1.57) | I.7 |
| B-513 | (B.2.4) | I.7 |
| B-514 | (B.2.6) | I.7 |
| B-515 | (B.2.8) | I.7 |
| B-516 | (B.3.1) | I.7 |
| B-517 | (C.5.1) | I.7 |
| B-518 | (C.5.2) | I.7 |
| B-519 | (C.5.3) | I.7 |
| B-520 | (D.2.4) | I.7 |
| B-521 | (D.2.5) | I.7 |
| B-522 | (D.2.6) | I.7 |
| B-523 | (D.2.7) | I.7 |
| B-524 | (D.2.9) | I.7 |
| B-525 | (E.1.1) | I.7 |
| B-526 | (E.1.3) | I.7 |
| B-527 | (F.1.5) | I.7 |
| B-528 | (G.4.1) | I.7 |
| B-529 | (G.5.1) | I.7 |
| B-530 | (G.5.3) | I.7 |
| B-531 | (H.1.2) | I.7 |
| B-532 | (H.1.4) | I.7 |
| B-533 | (H.1.5) | I.7 |
| B-534 | (H.1.7) | I.7 |
| B-535 | (H.2.2) | I.7 |
| B-536 | (H.2.5) | I.7 |
| B-537 | (H.3.2) | I.7 |
| B-538 | (H.3.5) | I.7 |
| B-539 | (H.4.9) | I.7 |
| B-540 | (I.3.1) | I.7 |
| B-541 | (I.3.3) | I.7 |
| B-542 | (J.1.9) | I.7 |
| B-543 | (J.1.12) | I.7 |
| B-544 | (K.1.4) | I.7 |
| B-545 | (K.1.24) | I.7 |
| B-546 | (K.1.58) | I.7 |
| B-547 | (K.1.60) | I.7 |
| B-548 | (K.1.105) | I.7 |
| B-549 | (K.1.106) | I.7 |
| B-550 | (K.1.107) | I.7 |
| B-551 | L.2.1) | I.7 |
| B-552 | L.2.2) | I.7 |
| B-553 | (L.2.3) | I.7 |
| B-554 | (L.2.4) | I.7 |
| B-555 | (L.2.5) | I.7 |
| B-556 | (L.2.6) | I.7 |
| B-557 | (L.2.7) | I.7 |
| B-558 | (L.2.8) | I.7 |
| B-559 | (L.2.9) | I.7 |
| B-560 | (L.2.10) | I.7 |
| B-561 | (A.1.1) | I.8 |
| B-562 | (A.1.9) | I.8 |
| B-563 | (A.1.13) | I.8 |
| B-564 | (A.1.14) | I.8 |
| B-565 | (A.1.17) | I.8 |
| B-566 | (A.1.25) | I.8 |
| B-567 | (A.2.1) | I.8 |
| B-568 | (A.2.4) | I.8 |
| B-569 | (A.2.5) | I.8 |
| B-570 | (A.2.6) | I.8 |
| B-571 | (A.3.2) | I.8 |
| B-572 | (A.3.4) | I.8 |
| B-573 | (A.3.7) | I.8 |
| B-574 | (A.3.9) | I.8 |
| B-575 | (A.3.11) | I.8 |
| B-576 | (A.3.17) | I.8 |
| B-577 | (A.3.22) | I.8 |
| B-578 | (A.3.28) | I.8 |
| B-579 | (A.3.31) | I.8 |
| B-580 | (A.4.5) | I.8 |
| B-581 | (A.5.1) | I.8 |
| B-582 | (B.1.5) | I.8 |
| B-583 | (B.1.8) | I.8 |
| B-584 | (B.1.17) | I.8 |
| B-585 | (B.1.22) | I.8 |
| B-586 | (B.1.23) | I.8 |
| B-587 | (B.1.25) | I.8 |
| B-588 | (B.1.26) | I.8 |
| B-589 | (B.1.28) | I.8 |
| B-590 | (B.1.38) | I.8 |
| B-591 | (B.1.56) | I.8 |
| B-592 | (B.1.57) | I.8 |
| B-593 | (B.2.4) | I.8 |
| B-594 | (B.2.6) | I.8 |
| B-595 | (B.2.8) | I.8 |
| B-596 | (B.3.1) | I.8 |
| B-597 | (C.5.1) | I.8 |
| B-598 | (C.5.2) | I.8 |
| B-599 | (C.5.3) | I.8 |
| B-600 | (D.2.4) | I.8 |
| B-601 | (D.2.5) | I.8 |
| B-602 | (D.2.6) | I.8 |
| B-603 | (D.2.7) | I.8 |
| B-604 | (D.2.9) | I.8 |
| B-605 | (E.1.1) | I.8 |
| B-606 | (E.1.3) | I.8 |
| B-607 | (F.1.5) | I.8 |
| B-608 | (G.4.1) | I.8 |
| B-609 | (G.5.1) | I.8 |
| B-610 | (G.5.3) | I.8 |
| B-611 | (H.1.2) | I.8 |
| B-612 | (H.1.4) | I.8 |
| B-613 | (H.1.5) | I.8 |
| B-614 | (H.1.7) | I.8 |
| B-615 | (H.2.2) | I.8 |
| B-616 | (H.2.5) | I.8 |
| B-617 | (H.3.2) | I.8 |
| B-618 | (H.3.5) | I.8 |
| B-619 | (H.4.9) | I.8 |
| B-620 | (I.3.1) | I.8 |
| B-621 | (I.3.3) | I.8 |
| B-622 | (J.1.9) | I.8 |
| B-623 | (J.1.12) | I.8 |
| B-624 | (K.1.4) | I.8 |
| B-625 | (K.1.24) | I.8 |
| B-626 | (K.1.58) | I.8 |
| B-627 | (K.1.60) | I.8 |
| B-628 | (K.1.105) | I.8 |
| B-629 | (K.1.106) | I.8 |
| B-630 | (K.1.107) | I.8 |
| B-631 | L.2.1) | I.8 |
| B-632 | L.2.2) | I.8 |
| B-633 | (L.2.3) | I.8 |
| B-634 | (L.2.4) | I.8 |
| B-635 | (L.2.5) | I.8 |
| B-636 | (L.2.6) | I.8 |
| B-637 | (L.2.7) | I.8 |
| B-638 | (L.2.8) | I.8 |
| B-639 | (L.2.9) | I.8 |
| B-640 | (L.2.10) | I.8 |
| B-641 | (A.1.1) | I.9 |
| B-642 | (A.1.9) | I.9 |
| B-643 | (A.1.13) | I.9 |
| B-644 | (A.1.14) | I.9 |
| B-645 | (A.1.17) | I.9 |
| B-646 | (A.1.25) | I.9 |
| B-647 | (A.2.1) | I.9 |
| B-648 | (A.2.4) | I.9 |
| B-649 | (A.2.5) | I.9 |
| B-650 | (A.2.6) | I.9 |
| B-651 | (A.3.2) | I.9 |
| B-652 | (A.3.4) | I.9 |
| B-653 | (A.3.7) | I.9 |
| B-654 | (A.3.9) | I.9 |
| B-655 | (A.3.11) | I.9 |
| B-656 | (A.3.17) | I.9 |
| B-657 | (A.3.22) | I.9 |
| B-658 | (A.3.28) | I.9 |
| B-659 | (A.3.31) | I.9 |
| B-660 | (A.4.5) | I.9 |
| B-661 | (A.5.1) | I.9 |
| B-662 | (B.1.5) | I.9 |
| B-663 | (B.1.8) | I.9 |
| B-664 | (B.1.17) | I.9 |
| B-665 | (B.1.22) | I.9 |
| B-666 | (B.1.23) | I.9 |
| B-667 | (B.1.25) | I.9 |
| B-668 | (B.1.26) | I.9 |
| B-669 | (B.1.28) | I.9 |
| B-670 | (B.1.38) | I.9 |
| B-671 | (B.1.56) | I.9 |
| B-672 | (B.1.57) | I.9 |
| B-673 | (B.2.4) | I.9 |
| B-674 | (B.2.6) | I.9 |
| B-675 | (B.2.8) | I.9 |
| B-676 | (B.3.1) | I.9 |
| B-677 | (C.5.1) | I.9 |
| B-678 | (C.5.2) | I.9 |
| B-679 | (C.5.3) | I.9 |
| B-680 | (D.2.4) | I.9 |
| B-681 | (D.2.5) | I.9 |
| B-682 | (D.2.6) | I.9 |
| B-683 | (D.2.7) | I.9 |
| B-684 | (D.2.9) | I.9 |
| B-685 | (E.1.1) | I.9 |
| B-686 | (E.1.3) | I.9 |
| B-687 | (F.1.5) | I.9 |
| B-688 | (G.4.1) | I.9 |
| B-689 | (G.5.1) | I.9 |
| B-690 | (G.5.3) | I.9 |
| B-691 | (H.1.2) | I.9 |
| B-692 | (H.1.4) | I.9 |
| B-693 | (H.1.5) | I.9 |
| B-694 | (H.1.7) | I.9 |
| B-695 | (H.2.2) | I.9 |
| B-696 | (H.2.5) | I.9 |
| B-697 | (H.3.2) | I.9 |
| B-698 | (H.3.5) | I.9 |
| B-699 | (H.4.9) | I.9 |
| B-700 | (I.3.1) | I.9 |
| B-701 | (I.3.3) | I.9 |
| B-702 | (J.1.9) | I.9 |
| B-703 | (J.1.12) | I.9 |
| B-704 | (K.1.4) | I.9 |
| B-705 | (K.1.24) | I.9 |
| B-706 | (K.1.58) | I.9 |
| B-707 | (K.1.60) | I.9 |
| B-708 | (K.1.105) | I.9 |
| B-709 | (K.1.106) | I.9 |
| B-710 | (K.1.107) | I.9 |
| B-711 | L.2.1) | I.9 |
| B-712 | L.2.2) | I.9 |
| B-713 | (L.2.3) | I.9 |
| B-714 | (L.2.4) | I.9 |
| B-715 | (L.2.5) | I.9 |
| B-716 | (L.2.6) | I.9 |
| B-717 | (L.2.7) | I.9 |
| B-718 | (L.2.8) | I.9 |
| B-719 | (L.2.9) | I.9 |
| B-720 | (L.2.10) | I.9 |
| B-721 | (A.1.1) | I.10 |
| B-722 | (A.1.9) | I.10 |
| B-723 | (A.1.13) | I.10 |
| B-724 | (A.1.14) | I.10 |
| B-725 | (A.1.17) | I.10 |
| B-726 | (A.1.25) | I.10 |
| B-727 | (A.2.1) | I.10 |
| B-728 | (A.2.4) | I.10 |
| B-729 | (A.2.5) | I.10 |
| B-730 | (A.2.6) | I.10 |
| B-731 | (A.3.2) | I.10 |
| B-732 | (A.3.4) | I.10 |
| B-733 | (A.3.7) | I.10 |
| B-734 | (A.3.9) | I.10 |
| B-735 | (A.3.11) | I.10 |
| B-736 | (A.3.17) | I.10 |
| B-737 | (A.3.22) | I.10 |
| B-738 | (A.3.28) | I.10 |
| B-739 | (A.3.31) | I.10 |
| B-740 | (A.4.5) | I.10 |
| B-741 | (A.5.1) | I.10 |
| B-742 | (B.1.5) | I.10 |
| B-743 | (B.1.8) | I.10 |
| B-744 | (B.1.17) | I.10 |
| B-745 | (B.1.22) | I.10 |
| B-746 | (B.1.23) | I.10 |
| B-747 | (B.1.25) | I.10 |
| B-748 | (B.1.26) | I.10 |
| B-749 | (B.1.28) | I.10 |
| B-750 | (B.1.38) | I.10 |
| B-751 | (B.1.56) | I.10 |
| B-752 | (B.1.57) | I.10 |
| B-753 | (B.2.4) | I.10 |
| B-754 | (B.2.6) | I.10 |
| B-755 | (B.2.8) | I.10 |
| B-756 | (B.3.1) | I.10 |
| B-757 | (C.5.1) | I.10 |
| B-758 | (C.5.2) | I.10 |
| B-759 | (C.5.3) | I.10 |
| B-760 | (D.2.4) | I.10 |
| B-761 | (D.2.5) | I.10 |
| B-762 | (D.2.6) | I.10 |
| B-763 | (D.2.7) | I.10 |
| B-764 | (D.2.9) | I.10 |
| B-765 | (E.1.1) | I.10 |
| B-766 | (E.1.3) | I.10 |
| B-767 | (F.1.5) | I.10 |
| B-768 | (G.4.1) | I.10 |
| B-769 | (G.5.1) | I.10 |
| B-770 | (G.5.3) | I.10 |
| B-771 | (H.1.2) | I.10 |
| B-772 | (H.1.4) | I.10 |
| B-773 | (H.1.5) | I.10 |
| B-774 | (H.1.7) | I.10 |
| B-775 | (H.2.2) | I.10 |
| B-776 | (H.2.5) | I.10 |
| B-777 | (H.3.2) | I.10 |
| B-778 | (H.3.5) | I.10 |
| B-779 | (H.4.9) | I.10 |
| B-780 | (I.3.1) | I.10 |
| B-781 | (I.3.3) | I.10 |
| B-782 | (J.1.9) | I.10 |
| B-783 | (J.1.12) | I.10 |
| B-784 | (K.1.4) | I.10 |
| B-785 | (K.1.24) | I.10 |
| B-786 | (K.1.58) | I.10 |
| B-787 | (K.1.60) | I.10 |
| B-788 | (K.1.105) | I.10 |
| B-789 | (K.1.106) | I.10 |
| B-790 | (K.1.107) | I.10 |
| B-791 | L.2.1) | I.10 |
| B-792 | L.2.2) | I.10 |
| B-793 | (L.2.3) | I.10 |
| B-794 | (L.2.4) | I.10 |
| B-795 | (L.2.5) | I.10 |
| B-796 | (L.2.6) | I.10 |
| B-797 | (L.2.7) | I.10 |
| B-798 | (L.2.8) | I.10 |
| B-799 | (L.2.9) | I.10 |
| B-800 | (L.2.10) | I.10 |
| B-801 | (A.1.1) | I.11 |
| B-802 | (A.1.9) | I.11 |
| B-803 | (A.1.13) | I.11 |
| B-804 | (A.1.14) | I.11 |
| B-805 | (A.1.17) | I.11 |
| B-806 | (A.1.25) | I.11 |
| B-807 | (A.2.1) | I.11 |
| B-808 | (A.2.4) | I.11 |
| B-809 | (A.2.5) | I.11 |
| B-810 | (A.2.6) | I.11 |
| B-811 | (A.3.2) | I.11 |
| B-812 | (A.3.4) | I.11 |
| B-813 | (A.3.7) | I.11 |
| B-814 | (A.3.9) | I.11 |
| B-815 | (A.3.11) | I.11 |
| B-816 | (A.3.17) | I.11 |
| B-817 | (A.3.22) | I.11 |
| B-818 | (A.3.28) | I.11 |
| B-819 | (A.3.31) | I.11 |
| B-820 | (A.4.5) | I.11 |
| B-821 | (A.5.1) | I.11 |
| B-822 | (B.1.5) | I.11 |
| B-823 | (B.1.8) | I.11 |
| B-824 | (B.1.17) | I.11 |
| B-825 | (B.1.22) | I.11 |
| B-826 | (B.1.23) | I.11 |
| B-827 | (B.1.25) | I.11 |
| B-828 | (B.1.26) | I.11 |
| B-829 | (B.1.28) | I.11 |
| B-830 | (B.1.38) | I.11 |
| B-831 | (B.1.56) | I.11 |
| B-832 | (B.1.57) | I.11 |
| B-833 | (B.2.4) | I.11 |
| B-834 | (B.2.6) | I.11 |
| B-835 | (B.2.8) | I.11 |
| B-836 | (B.3.1) | I.11 |
| B-837 | (C.5.1) | I.11 |
| B-838 | (C.5.2) | I.11 |
| B-839 | (C.5.3) | I.11 |
| B-840 | (D.2.4) | I.11 |
| B-841 | (D.2.5) | I.11 |
| B-842 | (D.2.6) | I.11 |
| B-843 | (D.2.7) | I.11 |
| B-844 | (D.2.9) | I.11 |
| B-845 | (E.1.1) | I.11 |
| B-846 | (E.1.3) | I.11 |
| B-847 | (F.1.5) | I.11 |
| B-848 | (G.4.1) | I.11 |
| B-849 | (G.5.1) | I.11 |
| B-850 | (G.5.3) | I.11 |
| B-851 | (H.1.2) | I.11 |
| B-852 | (H.1.4) | I.11 |
| B-853 | (H.1.5) | I.11 |
| B-854 | (H.1.7) | I.11 |
| B-855 | (H.2.2) | I.11 |
| B-856 | (H.2.5) | I.11 |
| B-857 | (H.3.2) | I.11 |
| B-858 | (H.3.5) | I.11 |
| B-859 | (H.4.9) | I.11 |
| B-860 | (I.3.1) | I.11 |
| B-861 | (I.3.3) | I.11 |
| B-862 | (J.1.9) | I.11 |
| B-863 | (J.1.12) | I.11 |
| B-864 | (K.1.4) | I.11 |
| B-865 | (K.1.24) | I.11 |
| B-866 | (K.1.58) | I.11 |
| B-867 | (K.1.60) | I.11 |
| B-868 | (K.1.105) | I.11 |
| B-869 | (K.1.106) | I.11 |
| B-870 | (K.1.107) | I.11 |
| B-871 | L.2.1) | I.11 |
| B-872 | L.2.2) | I.11 |
| B-873 | (L.2.3) | I.11 |
| B-874 | (L.2.4) | I.11 |
| B-875 | (L.2.5) | I.11 |
| B-876 | (L.2.6) | I.11 |
| B-877 | (L.2.7) | I.11 |
| B-878 | (L.2.8) | I.11 |
| B-879 | (L.2.9) | I.11 |
| B-880 | (L.2.10) | I.11 |
| B-881 | (A.1.1) | I.12 |
| B-882 | (A.1.9) | I.12 |
| B-883 | (A.1.13) | I.12 |
| B-884 | (A.1.14) | I.12 |
| B-885 | (A.1.17) | I.12 |
| B-886 | (A.1.25) | I.12 |
| B-887 | (A.2.1) | I.12 |
| B-888 | (A.2.4) | I.12 |
| B-889 | (A.2.5) | I.12 |
| B-890 | (A.2.6) | I.12 |
| B-891 | (A.3.2) | I.12 |
| B-892 | (A.3.4) | I.12 |
| B-893 | (A.3.7) | I.12 |
| B-894 | (A.3.9) | I.12 |
| B-895 | (A.3.11) | I.12 |
| B-896 | (A.3.17) | I.12 |
| B-897 | (A.3.22) | I.12 |
| B-898 | (A.3.28) | I.12 |
| B-899 | (A.3.31) | I.12 |
| B-900 | (A.4.5) | I.12 |
| B-901 | (A.5.1) | I.12 |
| B-902 | (B.1.5) | I.12 |
| B-903 | (B.1.8) | I.12 |
| B-904 | (B.1.17) | I.12 |
| B-905 | (B.1.22) | I.12 |
| B-906 | (B.1.23) | I.12 |
| B-907 | (B.1.25) | I.12 |
| B-908 | (B.1.26) | I.12 |
| B-909 | (B.1.28) | I.12 |
| B-910 | (B.1.38) | I.12 |
| B-911 | (B.1.56) | I.12 |
| B-912 | (B.1.57) | I.12 |
| B-913 | (B.2.4) | I.12 |
| B-914 | (B.2.6) | I.12 |
| B-915 | (B.2.8) | I.12 |
| B-916 | (B.3.1) | I.12 |
| B-917 | (C.5.1) | I.12 |
| B-918 | (C.5.2) | I.12 |
| B-919 | (C.5.3) | I.12 |
| B-920 | (D.2.4) | I.12 |
| B-921 | (D.2.5) | I.12 |
| B-922 | (D.2.6) | I.12 |
| B-923 | (D.2.7) | I.12 |
| B-924 | (D.2.9) | I.12 |
| B-925 | (E.1.1) | I.12 |
| B-926 | (E.1.3) | I.12 |
| B-927 | (F.1.5) | I.12 |
| B-928 | (G.4.1) | I.12 |
| B-929 | (G.5.1) | I.12 |
| B-930 | (G.5.3) | I.12 |
| B-931 | (H.1.2) | I.12 |
| B-932 | (H.1.4) | I.12 |
| B-933 | (H.1.5) | I.12 |
| B-934 | (H.1.7) | I.12 |
| B-935 | (H.2.2) | I.12 |
| B-936 | (H.2.5) | I.12 |
| B-937 | (H.3.2) | I.12 |
| B-938 | (H.3.5) | I.12 |
| B-939 | (H.4.9) | I.12 |
| B-940 | (I.3.1) | I.12 |
| B-941 | (I.3.3) | I.12 |
| B-942 | (J.1.9) | I.12 |
| B-943 | (J.1.12) | I.12 |
| B-944 | (K.1.4) | I.12 |
| B-945 | (K.1.24) | I.12 |
| B-946 | (K.1.58) | I.12 |
| B-947 | (K.1.60) | I.12 |
| B-948 | (K.1.105) | I.12 |
| B-949 | (K.1.106) | I.12 |
| B-950 | (K.1.107) | I.12 |
| B-951 | L.2.1) | I.12 |
| B-952 | L.2.2) | I.12 |
| B-953 | (L.2.3) | I.12 |
| B-954 | (L.2.4) | I.12 |
| B-955 | (L.2.5) | I.12 |
| B-956 | (L.2.6) | I.12 |
| B-957 | (L.2.7) | I.12 |
| B-958 | (L.2.8) | I.12 |
| B-959 | (L.2.9) | I.12 |
| B-960 | (L.2.10) | I.12 |
| B-961 | (A.1.1) | I.13 |
| B-962 | (A.1.9) | I.13 |
| B-963 | (A.1.13) | I.13 |
| B-964 | (A.1.14) | I.13 |
| B-965 | (A.1.17) | I.13 |
| B-966 | (A.1.25) | I.13 |
| B-967 | (A.2.1) | I.13 |
| B-968 | (A.2.4) | I.13 |
| B-969 | (A.2.5) | I.13 |
| B-970 | (A.2.6) | I.13 |
| B-971 | (A.3.2) | I.13 |
| B-972 | (A.3.4) | I.13 |
| B-973 | (A.3.7) | I.13 |
| B-974 | (A.3.9) | I.13 |
| B-975 | (A.3.11) | I.13 |
| B-976 | (A.3.17) | I.13 |
| B-977 | (A.3.22) | I.13 |
| B-978 | (A.3.28) | I.13 |
| B-979 | (A.3.31) | I.13 |
| B-980 | (A.4.5) | I.13 |
| B-981 | (A.5.1) | I.13 |
| B-982 | (B.1.5) | I.13 |
| B-983 | (B.1.8) | I.13 |
| B-984 | (B.1.17) | I.13 |
| B-985 | (B.1.22) | I.13 |
| B-986 | (B.1.23) | I.13 |
| B-987 | (B.1.25) | I.13 |
| B-988 | (B.1.26) | I.13 |
| B-989 | (B.1.28) | I.13 |
| B-990 | (B.1.38) | I.13 |
| B-991 | (B.1.56) | I.13 |
| B-992 | (B.1.57) | I.13 |
| B-993 | (B.2.4) | I.13 |
| B-994 | (B.2.6) | I.13 |
| B-995 | (B.2.8) | I.13 |
| B-996 | (B.3.1) | I.13 |
| B-997 | (C.5.1) | I.13 |
| B-998 | (C.5.2) | I.13 |
| B-999 | (C.5.3) | I.13 |
| B-1000 | (D.2.4) | I.13 |
| B-1001 | (D.2.5) | I.13 |
| B-1002 | (D.2.6) | I.13 |
| B-1003 | (D.2.7) | I.13 |
| B-1004 | (D.2.9) | I.13 |
| B-1005 | (E.1.1) | I.13 |
| B-1006 | (E.1.3) | I.13 |
| B-1007 | (F.1.5) | I.13 |
| B-1008 | (G.4.1) | I.13 |
| B-1009 | (G.5.1) | I.13 |
| B-1010 | (G.5.3) | I.13 |
| B-1011 | (H.1.2) | I.13 |
| B-1012 | (H.1.4) | I.13 |
| B-1013 | (H.1.5) | I.13 |
| B-1014 | (H.1.7) | I.13 |
| B-1015 | (H.2.2) | I.13 |
| B-1016 | (H.2.5) | I.13 |
| B-1017 | (H.3.2) | I.13 |
| B-1018 | (H.3.5) | I.13 |
| B-1019 | (H.4.9) | I.13 |
| B-1020 | (I.3.1) | I.13 |
| B-1021 | (I.3.3) | I.13 |
| B-1022 | (J.1.9) | I.13 |
| B-1023 | (J.1.12) | I.13 |
| B-1024 | (K.1.4) | I.13 |
| B-1025 | (K.1.24) | I.13 |
| B-1026 | (K.1.58) | I.13 |
| B-1027 | (K.1.60) | I.13 |
| B-1028 | (K.1.105) | I.13 |
| B-1029 | (K.1.106) | I.13 |
| B-1030 | (K.1.107) | I.13 |
| B-1031 | L.2.1) | I.13 |
| B-1032 | L.2.2) | I.13 |
| B-1033 | (L.2.3) | I.13 |
| B-1034 | (L.2.4) | I.13 |
| B-1035 | (L.2.5) | I.13 |
| B-1036 | (L.2.6) | I.13 |
| B-1037 | (L.2.7) | I.13 |
| B-1038 | (L.2.8) | I.13 |
| B-1039 | (L.2.9) | I.13 |
| B-1040 | (L.2.10) | I.13 |

The binary mixtures B-1 to B-1040 listed in Table B are used preferably in specific mixture ratios as defined below dependent on the pesticide II and the crop wherein the mixture is used.

The mixtures and the compositions thereof, respectively, are suitable as fungicides effective against a broad spectrum of phytopathogenic fungi, including soil-borne fungi, in particular from Plasmodiophoromycetes, Peronosporomycetes (syn. Oomycetes), Chytridiomycetes, Zygomycetes, Ascomycetes, Basidiomycetes, and Deuteromycetes (syn. Fungi imperfect!). They can be used in crop protection as foliar fungicides, fungicides for seed dressing, and soil fungicides.

The mixtures and the compositions thereof are preferably useful in the control of phytopathogenic fungi on various cultivated plants, such as cereals (e.g. wheat, rye, barley, triticale, oats, millet, corn [maize] or rice); beets (e.g. sugar or fodder beet); fruits, (e.g. pomes: apples, pears, etc.); stone fruits (e.g. plums, peaches, almonds, cherries), or soft fruits, also called berries (e.g. strawberries, raspberries, blackberries, gooseberries, etc.); leguminous plants (e.g. lentils, peas, alfalfa, or soybeans); oil plants (e.g. oilseed rape, mustard, olives, sunflowers, coconut, cocoa beans, castor oil plants, oil palms, ground nuts, or soybeans); cucurbits (e.g. squashes, cucumber, or melons); fiber plants (e.g. cotton, flax, hemp, or jute); citrus fruits (e.g. oranges, lemons, grapefruits, or mandarins); vegetables (e.g. spinach, lettuce, asparagus, cabbages, carrots, onions, tomatoes, potatoes, cucurbits, or paprika); lauraceous plants (e.g. avocados, cinnamon, or camphor); energy and raw material plants (e.g. corn [maize], soybean, oilseed rape, sugar cane, or oil palm); corn; tobacco; nuts; coffee; tea; bananas; vines (table grapes and grape juice grape vines); hop; turf; sweet leaf (also called Stevia); natural rubber plants; or ornamental and forestry plants, (e.g. flowers, shrubs, broad-leaved trees, or evergreens (conifers, eucalypts, etc.)); on the plant propagation material, such as seeds; and on the crop material of these plants.

More preferably, the mixtures and compositions thereof, respectively are used for controlling fungi on field crops, such as potatoes, sugar beets, tobacco, wheat, rye, barley, oats, rice, corn [maize], cotton, soybeans, oilseed rape, legumes, sunflowers, coffee or sugar cane; fruits; vines; ornamentals; or vegetables, such as cucumbers, tomatoes, beans or squashes.

According to a further embodiment, the mixtures and compositions thereof, respectively are used for controlling fungi on cereals such as wheat, rye, barley, oats, rice, millet, and corn.

When used in cereals, preferably, the mixtures according to the invention, comprise as component 1) a compound I selected from compounds I.1, I.2, I.3, I.4, I.5, I.6, I.7, I.8, I.9, I.10, I.11, I.12, and I.13 as defined above, and as component 2) a pesticide II selected from:
A) Respiration inhibitors
   - inhibitors of complex III at Qₒ site (Qol, C3): azoxystrobin (A.1.1), kresoxim-methyl (A.1.9), pyraclostrobin (A. 1.14), trifloxystrobin (A. 1.17), metyltetraprole (A.1.25);
   - inhibitors of complex III at Qᵢ site (Qil, C4): fenpicoxamid (A.2.4), florylpicoxamid (A.2.5);
   - inhibitors of complex II (SDHI, C2): benzovindiflupyr (A.3.2), bixafen (A.3.3), fluopyram (A.3.7), fluxapyroxad (A.3.9), pydiflumetofen (A.3.17), inpyrfluxam (A.3.22), isoflucypram (A.3.31);
B) Sterol biosynthesis inhibitors (SBI fungicides)
   - C14 demethylase inhibitors (DMI, G1): triazoles: epoxiconazole (B.1.8), metconazole (B.1.17), propiconazole (B.1.22), prothioconazole (B.1.23), tebuconazole (B.1.25), tetraconazole (B.1.26), triadimenol (B.1.28), mefentrifluconazole (B.1.38), methyl 2-[2-chloro-4-(4-chlorophenoxy)phenyl]-2-hydroxy-3-(1,2,4-triazol-1-yl)propanoate (B.1.56), 2-[2-chloro-4-(4-chlorophenoxy)phenyl]-2-hydroxy-3-(1,2,4-triazol-1-yl)propanoic acid (B.1.57);
   - delta14-reductase inhibitors (G2): spiroxamine (B.2.8);
D) Inhibitors of cell division and cytoskeleton
   - other cell division inhibitors (B2 to B7): metrafenone (D.2.6), pyriofenone (D.2.7);
H) Inhibitors with Multi Site Action
   - inorganic active substances (M01, M02): sulfur (H.1.7);
   - organochlorine compounds (M04, M05, M06, M08): folpet (H.3.5);
K) Unknown mode of action (U, Unknown)
   - flumetylsulforim (K.1.60).

When used in cereals, more preferably, the mixtures according to the invention, comprise as component 1) a compound I selected from compounds I.1, I.2, I.3, I.4, I.5, I.6, I.7, I.8, I.9, I.10, I.11, I.12, and I.13 and as component 2) a pesticide II selected from pyraclostrobin (A.1.14), metyltetraprole (A. 1.25); fenpicoxamid (A.2.4), florylpicoxamid (A.2.5), benzovindiflupyr (A.3.2), fluxapyroxad (A.3.9), pydiflumetofen (A.3.17), inpyrfluxam (A.3.22), isoflucypram (A.3.31); prothioconazole (B.1.23), mefentrifluconazole (B.1.38), methyl 2-[2-chloro-4-(4-chlorophenoxy)phenyl]-2-hydroxy-3-(1,2,4-triazol-1-yl)propanoate (B.1.56), 2-[2-chloro-4-(4-chlorophenoxy)phenyl]-2-hydroxy-3-(1,2,4-triazol-1-yl)propanoic acid (B.1.57); sulfur (H.1.7); folpet (H.3.5); and flumetylsulforim (K.1.60).

When used in cereals, even more preferably, the mixtures according to the invention, comprise as component 1) a compound I selected from compounds I.1, I.2, I.3, I.4, I.5, I.6, I.7, I.8, I.9, I.10, 1.11, I.12, and I.13; and as component 2) a pesticide II selected from metyltetraprole (A.1.25); fenpicoxamid (A.2.4), florylpicoxamid (A.2.5); fluxapyroxad (A.3.9), pydiflumetofen (A.3.17), inpyrfluxam (A.3.22); prothioconazole (B.1.23), mefentrifluconazole (B.1.38); and sulfur (H.1.7).

When used in cereals, preferably, the mixtures according to the invention as outlined in Table BC comprise as component 1) a compound I selected from compounds I.1, I.2, I.3, I.4, I.5, I.6, I.7, I.8, I.9, I.10, I.11, I.12, and I.13 as defined herein (represented in the third column "C1)" by the expression "(I)" which shall mean a compound selected from compounds 1.1, I.2, I.3, I.4, I.5, I.6, I.7, I.8, I.9, I.10, I.11, I.12, and I.13) and one pesticide II as defined in the second column "C2)", wherein the weight ratio (w:w) of component 2) : component 1) is one of the ratios listed in the fourth column and separated by semicolon, wherein the ratio with an asterisk * is particularly preferred.

**Table BC:**

| **Mixture** | **C2)** | **C1)** | **Ratios of component 2) : component 1) (w:w)** |
|---|---|---|---|
| BC-1 | (A.1.1) | (I) | 1:1 *; 3:2; 2:1; 3:1; 2:3; 4:3; 1:2; 3:4; 1:2.5; 3:5; 4:5; 6:5; 1:3; 1:4 |
| BC-2 | (A.1.9) | (I) | 2:1; 2.5:1; 3:1; 6:5; 5:3; 1:1*; 3:2; 3:4; 3:5; 4:5; 1:2; 1:1.5 |
| BC-3 | (A.1.14) | (I) | 1:1*; 3:2; 2:1; 3:1; 2:3; 4:3; 1:2; 3:4; 1:2.5; 3:5; 4:5; 6:5; 1:3; 1:4 |
| BC-4 | (A.1.17) | (I) | 1:1*; 3:2; 2:1; 3:1; 2:3; 4:3; 1:2; 3:4; 1:2.5; 3:5; 4:5; 6:5; 1:3; 1:4 |
| BC-5 | (A.1.25) | (I) | 6:5; 2:1; 2.5:1; 4:5; 5:3; 3:5; 1:1; 1:2; 1.5:1; 1:2.5; 1:1.5; 3:4; 4:3 |
| BC-6 | (A.2.4) | (I) | 1:1; 3:2; 2:1; 2:3; 4:3; 1:2; 3:4*; 1:2.5; 3:5; 4:5; 1:3 |
| BC-7 | (A.2.5) | (I) | 3:5; 6:5; 1:2.5*; 4:5; 3:10; 1:4; 1:2; 1:5; 2:3; 1:3 |
| BC-8 | (A.3.2) | (I) | 1:1; 2:3; 1:2*; 1:2.5; 1:3; 3:2; 3:4; 3:5; 1:4 |
| BC-9 | (A.3.7) | (I) | 1:1; 3:2; 2:1; 3:1; 2:3; 4:3; 1:2; 3:4*; 1:2.5; 3:5; 4:5; 6:5; 1:3; 1:4 |
| BC-10 | (A.3.9) | (I) | 3:1; 3:2; 1:1*; 3:4; 3:5; 1:2; 2:1; 4:3; 4:5; 2:3; 6:5 |
| BC-11 | (A.3.17) | (I) | 1:1 *; 3:2; 2:1; 3:1; 2:3; 4:3; 1:2; 3:4; 1:2.5; 3:5; 4:5; 6:5; 1:3 |
| BC-12 | (A.3.22) | (I) | 1:1; 2:3; 1:2*; 1:2.5; 1:3; 3:2; 3:4; 3:5; 1:4 |
| BC-13 | (A.3.31) | (I) | 1:1; 2:3; 1:2*; 1:2.5; 1:3; 3:2; 3:4; 3:5; 1:4 |
| BC-14 | (B.1.8) | (I) | 1:1; 2:3; 1:2*; 1:2.5; 1:3; 3:2; 3:4; 3:5; 1:4 |
| BC-15 | (B.1.17) | (I) | 6:5; 2:1; 4:5; 3:5; 1:1; 1:2; 1.5:1; 1:2.5; 1:1.5*; 3:4; 4:3 |
| BC-16 | (B.1.22) | (I) | 3:1; 3:2; 1:1*; 3:4; 3:5; 1:2; 2:1; 4:3; 4:5; 2:3; 6:5 |
| BC-17 | (B.1.23) | (I) | 3:1; 3:2*; 1:1; 3:4; 3:5; 1:2; 2:1; 4:3; 4:5; 2:3; 6:5; 4:1 |
| BC-18 | (B.1.25) | (I) | 3:1; 3:2*; 1:1; 3:4; 3:5; 1:2; 2:1; 4:3; 4:5; 2:3; 6:5; 4:1; 5:1; 2.5:1 |
| BC-19 | (B.1.26) | (I) | 3:1; 3:2*; 1:1; 3:4; 3:5; 1:2; 2:1; 4:3; 4:5; 2:3; 6:5; 4:1 |
| BC-20 | (B.1.28) | (I) | 2:1; 2.5:1; 6:5; 5:3; 1:1 *; 3:4; 3:5; 4:5; 1:2; 1:1.5 |
| BC-21 | (B.1.38) | (I) | 3:1; 3:2*; 1:1; 3:4; 3:5; 1:2; 2:1; 4:3; 4:5; 2:3; 6:5 |
| BC-22 | (B.1.56) | (I) | 3:1; 3:2*; 1:1; 3:4; 3:5; 1:2; 2:1; 4:3; 4:5; 2:3; 6:5 |
| BC-23 | (B.1.57) | (I) | 3:1; 3:2*; 1:1; 3:4; 3:5; 1:2; 2:1; 4:3; 4:5; 2:3; 6:5 |
| BC-24 | (B.2.8) | (I) | 3:1*; 4:1; 5:1; 6:1; 7:1; 7.5:1; 2:1; 2.5:1; 4.5:1; 3:2; 3.5:1; 6:5; 1.5:1; 1:1; 4:3; 5:3 |
| BC-25 | (D.2.6) | (I) | 2:1; 3:1; 2.5:1; 4:3; 5:3; 1:1*; 3:2; 5:4; 4:5; 6:5; 2:3; 5:6 |
| BC-26 | (D.2.7) | (I) | 2:1; 6:5; 1:1 *; 3:4; 3:5; 1:2 |
| BC-27 | (H.1.7) | (I) | 16:1; 20:1; 24:1*; 30:1; 40:1; 11:1; 13:1; 27:1; 8:1; 10:1; 12:1; 15:1; 6:1; 5:1; 7:1; 4:1; 7.5:1 |
| BC-28 | (H.3.5) | (I) | 10:1; 7.5:1; 6:1; 5:1*; 4:1; 3:1; 2.5:1 |
| BC-29 | (K.1.60) | (I) | 1:1; 3:2; 2:1; 2:3; 4:3; 1:2; 3:4*; 1:2.5; 3:5; 4:5; 1:3 |

According to a further embodiment, the mixtures and compositions thereof, respectively are used for controlling phytopathogenic fungi on soybean, in particular to control soybean rust fungi (*Phakopsora pachyrhizi*)*.*

When used in soybeans, preferably, the mixtures according to the invention, comprise as component 1) a compound I selected from compounds I.1, I.2, I.3, I.4, I.5, I.6, I.7, I.8, I.9, I.10, I.11, I.12, and I.13 as defined above, and as component 2) a pesticide II selected from:
A) Respiration inhibitors
   - inhibitors of complex III at Qₒ site (Qol, C3): azoxystrobin (A.1.1), bifemettstrobin (A.1.24), kresoxim-methyl (A.1.9), metominostrobin (A.1.11), picoxystrobin (A.1.13), pyraclostrobin (A.1.14), trifloxystrobin (A.1.17), metyltetraprole (A. 1.25);
   - inhibitors of complex III at Qᵢ site (Qil, C4): metaryipicoxamid (A.2.6);
   - inhibitors of complex II (SDHI, C2): benzovindiflupyr (A.3.2), bixafen (A.3.3), boscalid (A.3.4), fluopyram (A.3.7), fluxapyroxad (A.3.9), isofetamid (A.3.11), pydiflumetofen (A.3.17), inpyrfluxam (A.3.22), fluindapyr (A.3.28), isoflucypram (A.3.31);
   - other respiration inhibitors: fluazinam (A.4.5);
B) Sterol biosynthesis inhibitors (SBI fungicides)
   - C14 demethylase inhibitors (DMI, G1): triazoles: cyproconazole (B.1.4), difenoconazole (B.1.5), epoxiconazole (B.1.8), metconazole (B.1.17), propiconazole (B.1.22), prothioconazole (B.1.23), tebuconazole (B.1.25), tetraconazole (B.1.26), mefentrifluconazole (B.1.38), methyl 2-[2-chloro-4-(4-chlorophenoxy)phenyl]-2-hydroxy-3-(1,2,4-triazol-1-yl)propanoate (B.1.56), 2-[2-chloro-4-(4-chlorophenoxy)phenyl]-2-hydroxy-3-(1,2,4-triazol-1-yl)propanoic acid (B.1.57);
   - delta14-reductase inhibitors (G2): fenpropimorph (B.2.4), fenpropidin (B.2.6);
C) Nucleic acid synthesis inhibitors
   - DHODH inhibitors (A5): ipflufenoquin (C.5.1), feneptamidoquin (C.5.3);
H) Inhibitors with Multi Site Action
   - inorganic active substances (M01, M02): copper oxychloride (H.1.5), sulfur (H.1.7);
   - thio- and dithiocarbamates (M03): mancozeb (H.2.2), metiram (H.2.5);
   - organochlorine compounds (M04, M05, M06, M08): chlorothalonil (H.3.2);
K) Unknown mode of action (U, Unknown)
   - flumetylsulforim (K.1.60), tebufloquin (K.1.24), flufenoxadiazam (K.1.58).

When used in soybeans, more preferably, the mixtures according to the invention, comprise as component 1) a compound I selected from compounds I.1, I.2, I.3, I.4, I.5, I.6, I.7, I.8, I.9, I.10, I.11, I.12, and I.13; and as component 2) a pesticide II selected from pyraclostrobin (A.1.14), metyltetraprole (A. 1.25); metarylpicoxamid (A.2.6); fluxapyroxad (A.3.9), pydiflumetofen (A.3.17), inpyrfluxam (A.3.22), fluindapyr (A.3.28); prothioconazole (B.1.23), tebuconazole (B.1.25), mefentrifluconazole (B.1.38); fenpropimorph (B.2.4), fenpropidin (B.2.6); *N*-[(1*R*)-1-benzyl-1,3-dimethylbutyl]-8-fluoroquinoline-3-carboxamide, *N*-[(1*S*)-1-benzyl-1,3-dimethylbutyl]-8-fluoro-quinoline-3-carboxamide, mixture of 80-100% *N*-[(1*R*)-1-benzyl-1,3-dimethylbutyl]-8-fluoroquinoline-3-carboxamide and 20-0% of corresponding (1S)-isomer (C.5.3); copper oxychloride (H.1.5), sulfur (H.1.7); mancozeb (H.2.2), metiram (H.2.5); chlorothalonil (H.3.2); and flufenoxadiazam (K.1.58).

When used in soybeans, even more preferably, the mixtures according to the invention, comprise as component 1) a compound I selected from compounds I.1, I.2, I.3, I.4, I.5, I.6, I.7, I.8, I.9, I.10, I.11, I.12, and I.13 as defined above; and as component 2) a pesticide II selected from pyraclostrobin, metyltetraprole (A.1.25); metaryipicoxamid (A.2.6); fluxapyroxad (A.3.9), inpyrfluxam (A.3.22), prothioconazole (B.1.23), mefentrifluconazole (B.1.38); fenpropimorph (B.2.4); feneptamidoquin (C.5.3); copper oxychloride (H.1.5); mancozeb (H.2.2), metiram (H.2.5); chlorothalonil (H.3.2); and flufenoxadiazam (K.1.58).

When used in soybean, preferably, the mixtures according to the invention as outlined in Table BS comprise as component 1) a compound I selected from compounds I.1, I.2, I.3, I.4, I.5, I.6, I.7, I.8, I.9, I.10, I.11, I.12, and I.13 as defined herein (represented in the third column "C1)" by the expression "(I)" which shall mean a compound selected from compounds 1.1, I.2, I.3, I.4, I.5, I.6, I.7, I.8, I.9, I.10, I.11, I.12, and I.13) and one pesticide II as defined in the second column "C2)", wherein the weight ratio (w:w) of component 2) : component 1) is one of the ratios listed in the fourth column and separated by semicolon, wherein the ratio with an asterisk * is particularly preferred.

**Table BS:**

| **Mixture** | **C2)** | **C1)** | **Ratios of component 2) : component 1) (w:w)** |
|---|---|---|---|
| BS-1 | (A.1.1) | (I) | 1:1; 3:2; 2:1; 2:3; 10:7; 1:2*; 7:9; 1:2.5; 3:5; 1:1.2; 1:3; 1:1.5; 1:4; 1:5 |
| BS-2 | (A.1.13) | (I) | 1:1; 3:2; 2:1; 2:3; 10:7; 1:2*; 7:9; 1:2.5; 3:5; 1:1.2; 1:3; 1:1.5; 1:4; 1:5 |
| BS-3 | (A.1.14) | (I) | 1:1; 3:2; 2:1; 2:3; 10:7; 1:2*; 7:9; 1:2.5; 3:5; 1:1.2; 1:3; 1:4; 1:5 |
| BS-4 | (A.1.17) | (I) | 1:1; 3:2; 2:1; 2:3; 10:7; 1:2*; 7:9; 1:2.5; 3:5; 1:1.2; 1:3; 1:1.5; 1:4; 1:5 |
| BS-5 | (A.1.25) | (I) | 3:5; 6:5; 1:3; 1:2.5; 6:7; 2:3; 1:4; 1:2*; 1:5; 1:6 |
| BS-6 | (A.2.6) | (I) | 4:5; 4:7; 1:2*; 1:3; 1:4; 1:5; 6:5; 6:7; 2:3; 1:2.5; 3:2; 1:1; 3:5 |
| BS-7 | (A.3.9) | (I) | 4:5; 4:7; 1:2; 1:3; 1:4; 1:5; 6:5; 6:7; 2:3*; 1:2.5; 3:2; 1:1; 3:5 |
| BS-8 | (A.3.17) | (I) | 1:1; 3:2; 2:3; 1: 2*; 7:9; 1:2.5; 3:5; 1:3; 1:4 |
| BS-9 | (A.3.22) | (I) | 3:5; 1:1; 1:2.5; 2:3; 1:3; 1:2*; 1:4; 1:5; 1:6 |
| BS-10 | (A.3.28) | (I) | 3:5; 1:1; 3:2; 1:2.5; 2:3; 1:3; 1:2*; 7:9; 1:4; 1:5; 1:6 |
| BS-11 | (B.1.8) | (I) | 4:5; 4:7; 1:2*; 1:3; 1:4; 1:5; 6:5; 6:7; 2:3; 1:2.5; 3:2; 1:1; 3:5 |
| BS-12 | (B.1.23) | (I) | 3:2; 2:1; 1:1 *; 9:7; 7:9; 3:5; 3:4; 1:2 |
| BS-13 | (B.1.25) | (I) | 2:1; 1:1*; 3:2; 10:7; 2:3; 1:2; 7:9; 1:1.2; 1:2.5; 3:5; 1:1.5; 1:3; 1:4 |
| BS-14 | (B.1.38) | (I) | 2:1; 1:1*; 3:2; 10:7; 2:3; 1:2; 7:9; 1:1.2; 1:2.5; 3:5; 1:1.5; 1:3; 1:4 |
| BS-15 | (B.2.4) | (I) | 3:1; 4:1; 4.5:1; 2:1; 5:3; 2.5:1*; 5:4; 1.5:1; 1:1; 4:3; 3:4 |
| BS-16 | (B.2.6) | (I) | 3:1; 4:1; 4.5:1; 2:1; 2.5:1*; 10:7; 5:3; 1:1; 1:1.5; 5:4; 1.5:1; 1:1.2; 4:3; 5:6; 3:4 |
| BS-17 | (C.5.1) | (I) | 2:3*; 6:7; 1:1; 1.5:1; 3:2; 2:1; 2.5:1; 3:1; 4:1; 1:2; 7:9; 4:3; 10:7; 1:2.5; 3:5; 3:4; 1:1.5; 5:3; 1:3; 4:5; 1:1.2; 5:4; 1:4; 5:6 |
| BS-18 | (C.5.3) | (I) | 2:3*; 6:7; 1:1; 1.5:1; 3:2; 2:1; 2.5:1; 3:1; 4:1; 1:2; 7:9; 4:3; 10:7; 1:2.5; 3:5; 3:4; 1:1.5; 5:3; 1:3; 4:5; 1:1.2; 5:4; 1:4; 5:6 |
| BS-19 | (H.1.5) | (I) | 4:1; 6:1; 8:1; 3:1*; 5:1; 2:1; 1.5:1; 2.5:1; 4:3; 1:1 |
| BS-20 | (H.1.7) | (I) | 16:1; 20:1; 24:1; 30:1; 35:1; 40:1; 11.5:1; 14:1; 17:1*; 21:1; 25:1; 28.5:1; 9:1; 11:1; 13:1; 19:1; 22:1; 6.5:1; 8:1; 10:1; 12.5:1; 14.5:1; 5:1; 7:1; 4:1; 6:1; 7.5:1 |
| BS-21 | (H.2.2) | (I) | 15:1; 18:1; 22.5:1; 11:1; 13:1; 16:1; 8:1; 10:1; 12.5:1; 6:1; 7.5:1; 9:1*; 5:1; 3:1; 4:1 |
| BS-22 | (H.2.5) | (I) | 16:1; 20:1; 24:1; 28:1; 11.5:1; 14:1; 17:1; 9:1; 11:1; 13:1*; 15:1; 6.5:1; 8:1; 10:1; 12:1; 5:1; 7:1; 4:1; 6:1 |
| BS-23 | (H.3.2) | (I) | 7:1; 11:1; 5.5:1; 8:1; 4:1; 6:1*; 3:1; 5:1; 2.5:1; 3:1 |
| BS-24 | (K.1.58) | (I) | 1:1*; 3:2; 2:1; 2.5:1; 2:3; 1:1; 9:7; 4:3; 1:2; 7:9; 1:1; 4:3; 1:2.5; 3:5; 3:4; 1:1 |

The mixtures according to the invention and the compositions thereof are preferably useful in the control of phytopathogenic fungi on various specialty crops, such as fruits, e.g. pomes (apples, pears, etc.), stone fruits (e.g. plums, peaches, almonds, cherries), or soft fruits, also called berries (strawberries, raspberries, blackberries, gooseberries, etc.); cucurbits, e.g. squashes, cucumber, or melons; fiber plants, e.g. cotton, flax, hemp, or jute; citrus fruits, e.g. oranges, lemons, grapefruits, or mandarins; vegetables, e.g. spinach, lettuce, asparagus, cabbages, carrots, onions, tomatoes, potatoes, cucurbits, or paprika.

When used in specialty crops as defined above, oil seed rape and rice, preferably, the mixtures according to the invention, comprise as component 1) a compound I selected from compounds 1.1, I.2, I.3, I.4, I.5, I.6, I.7, I.8, I.9, i.10, 1.11, 1.12, and 1.13, and as component 2) a pesticide II selected from:
A) Respiration inhibitors
   - inhibitors of complex III at Qₒ site (Qol, C3): azoxystrobin (A.1.1), dimoxystrobin (A.1.4), kresoxim-methyl (A.1.9), pyraclostrobin (A.1.14), trifloxystrobin (A.1.17), metyltetraprole (A.1.25);
   - inhibitors of complex III at Qᵢ site (Qil, C4): cyazofamid (A.2.1), florylpicoxamid (A.2.5);
   - inhibitors of complex II (SDHI, C2): boscalid (A.3.4), fluopyram (A.3.7), fluxapyroxad (A.3.9), isofetamid (A.3.11), pydiflumetofen (A.3.17), isoflucypram (A.3.31);
   - other respiration inhibitors: fluazinam (A.4.5);
   - quinone outside inhibitor stigmatellin binding type (QoSI; C8): ametoctradin (A.5.1);
B) Sterol biosynthesis inhibitors (SBI fungicides)
   - C14 demethylase inhibitors (DMI, G1): triazoles: difenoconazole (B.1.5), hexaconazole (B.1.13), prothioconazole (B.1.23), tebuconazole (B.1.25), tetraconazole (B.1.26), mefentrifluconazole (B.1.38), methyl 2-[2-chloro-4-(4-chlorophenoxy)phenyl]-2-hydroxy-3-(1,2,4-triazol-1-yl)propanoate (B.1.56), 2-[2-chloro-4-(4-chlorophenoxy)phenyl]-2-hydroxy-3-(1,2,4-triazol-1-yl)propanoic acid (B.1.57);
   - inhibitors of 3-keto reductase: fenhexamid (B.3.1);
C) Nucleic acid synthesis inhibitors
   - DHODH inhibitors (A5): ipflufenoquin (C.5.1), quinofumelin (C.5.2), feneptamidoquin (C.5.3);
D) Inhibitors of cell division and cytoskeleton
   - other cell division inhibitors (B2 to B7): fluopicolide (D.2.4), zoxamide (D.2.5), fluopimomide (D.2.9);
E) Inhibitors of amino acid and protein synthesis
   - methionine synthesis inhibitors (D1): cyprodinil (E.1.1), pyrimethanil (E.1.3);
F) Signal transduction inhibitors
   - MAP / histidine kinase inhibitors (E2 and E3): iprodione (F.1.2), fludioxonil (F.1.5);
G) Lipid and membrane synthesis inhibitors
   - Phospholipid biosynthesis inhibitors (F2): isoprothiolane (G.1.4);
   - compounds affecting cell membrane permeability and fatty acides (F4): propamocarb (G.4.1);
   - inhibitors of oxysterol binding protein (OSBPI, F9): oxathiapiprolin (G.5.1), fluoxapiprolin (G.5.3);
H) Inhibitors with Multi Site Action
   - inorganic active substances (M01, M02): Bordeaux mixture (H.1.1), copper (H.1.2), copper acetate (H.1.3), copper hydroxide (H.1.4), copper oxychloride (H.1.5), basic copper sulfate (H.1.6), sulfur (H.1.7);
   - thio- and dithiocarbamates (M03): mancozeb (H.2.2), metiram (H.2.5);
   - guanidines and others (M07, M09, M10;M11, M12): dithianon (H.4.9);
I) Cell wall synthesis inhibitors
   - melanin synthesis inhibitors (I1 to I3): trihydroxynaphthalene reductase inhibitors (MBI-R; I1) tricyclazole (I.2.2); polyketide synthase inhibitors (MBI-P, I3): tolprocarb (i.2.6);
   - cellulose synthase inhibitors (H5): dimethomorph (I.3.1), mandipropamid (i.3.3);
J) Plant defence inducers (P1 to P8)
   - probenazole (J.1.2), isotianil (J.1.3), phosphonates: fosetyl (J.1.6), fosetyl-aluminum (J.1.7), phosphorous acid and its salts (J.1.8), potassium or sodium bicarbonate (J.1.9), calcium phosphonate (J.1.11), potassium phosphonate (J.1.12), dichlobentiazox (J.1.13);
K) Unknown mode of action (U, Unknown)
   - cymoxanil (K.1.4), flumetylsulforim (K.1.60), tebufloquin (K.1.24), flufenoxadiazam (K.1.58), *rac*-3-[3-(3-chloro-2-fluoro-phenoxy)-6-methyl-pyridazin-4-yl]-5-[(2-chloro-4-methyl-phenyl)methyl]-5,6-dihydro-4*H*-1,2,4-oxadiazine (K. 1.105), (5*S*)-3-[3-(3-chloro-2-fluoro-phenoxy)-6-methyl-pyridazin-4-yl]-5-[(2-chloro-4-methylphenyl)methyl]-5,6-dihydro-4*H*-1,2,4-oxadiazine (K.1.106), (5*R*)-3-[3-(3-chloro-2-fluoro-phenoxy)-6-methyl-pyridazin-4-yl]-5-[(2-chloro-4-methyl-phenyl)methyl]-5,6-dihydro-4H-1,2,4-oxadiazine (K.1.107);
L2) Biochemical pesticides with fungicidal, bactericidal, viricidal and/or plant defense activator activity: harpin protein, plant oils (BM3): orange oil (L.2.1), limonene (L.2.2), geraniol (L.2.3), thymol (L.2.4); aureobasidin (in particular aureobasidin A (L.2.5)), ambruticin (L.2.6), bafilomycin (L.2.7) (in particular bafilomycin A1, B1 and C1), chlorflavonin (L.2.8), cinnamaldehyde L.2.9), natamycin (L.2.10; F8).

When used in specialty crops as defined above, oil seed rape or rice, more preferably, the mixtures according to the invention, comprise as component 1) a compound I selected from compounds I.1, I.2, I.3, I.4, I.5, I.6, I.7, I.8, I.9, I.10, I.11, I.12, and I.13, and as component 2) a pesticide II selected from azoxystrobin (A.1.1), kresoxim-methyl (A.1.9), pyraclostrobin (A.1.14), trifloxystrobin (A. 1.17), metyltetraprole (A.1.25); florylpicoxamid (A.2.5); boscalid (A.3.4), fluopyram (A.3.7), fluxapyroxad (A.3.9), isofetamid (A.3.11), pydiflumetofen (A.3.17), isoflucypram (A.3.31); fluazinam (A.4.5); difenoconazole (B.1.5), prothioconazole (B.1.23), tebuconazole (B.1.25), tetraconazole (B.1.26), mefentrifluconazole (B.1.38), methyl 2-[2-chloro-4-(4-chlorophenoxy)phenyl]-2-hydroxy-3-(1,2,4-triazol-1-yl)propanoate (B.1.56), 2-[2-chloro-4-(4-chlorophenoxy)phenyl]-2-hydroxy-3-(1,2,4-triazol-1-yl)propanoic acid (B.1.57); fenhexamid (B.3.1); ipflufenoquin (C.5.1), quinofumelin (C.5.2), feneptamidoquin (C.5.3); cyprodinil (E.1.1), pyrimethanil (E.1.3); fludioxonil (F.1.5); sulfur (H.1.7); mancozeb (H.2.2), metiram (H.2.5); potassium or sodium bicarbonate (J.1.9); flumetylsulforim (K.1.60), tebufloquin (K.1.24), flufenoxadiazam (K.1.58), rac-3-[3-(3-chloro-2-fluoro-phenoxy)-6-methyl-pyridazin-4-yl]-5-[(2-chloro-4-methyl-phenyl)methyl]-5,6-dihydro-4*H*-1,2,4-oxadiazine (K. 1.105), (5*S*)-3-[3-(3-chloro-2-fluoro-phenoxy)-6-methyl-pyridazin-4-yl]-5-[(2-chloro-4-methyl-phenyl)methyl]-5,6-dihydro-4*H*-1,2,4-oxadiazine (K.1.106), (5*R*)-3-[3-(3-chloro-2-fluoro-phenoxy)-6-methyl-pyridazin-4-yl]-5-[(2-chloro-4-methyl-phenyl)methyl]-5,6-dihydro-4H-1,2,4-oxadiazine (K. 1.107); orange oil (L.2.1), limonene (L.2.2), geraniol (L.2.3), thymol (L.2.4), aureobasidin (in particular aureobasidin A (L.2.5)), ambruticin (L.2.6), bafilomycin ((L.2.7) bafilomycin A1, B1 and C1), natamycin (L.2.8), chlorflavonin (L.2.9), and cinnamaldehyde (L.2.10).

When used in specialty crops as defined above, oil seed rape or rice, even more preferably, the mixtures according to the invention, comprise as component 1) a compound I selected from compounds I.1, I.2, I.3, I.4, I.5, I.6, I.7, I.8, I.9, I.10, I.11, I.12, and I.13, and as component 2) a pesticide II selected from pyraclostrobin (A.1.14); florylpicoxamid (A.2.5); boscalid (A.3.4), fluxapyroxad (A.3.9), isofetamid (A.3.11), pydiflumetofen (A.3.17); fluazinam (A.4.5); difenoconazole (B.1.5), prothioconazole (B.1.23), mefentrifluconazole (B.1.38); fenhexamid (B.3.1); ipflufenoquin (C.5.1), quinofumelin (C.5.2), pyrimethanil (E.1.3); fludioxonil (F.1.5); sulfur (H.1.7); mancozeb (H.2.2); aureobasidin (in particular aureobasidin A (L.2.5)), and ambruticin (L.2.6).

When used in specialty crops as defined above, oil seed rape or rice, utmost preferably, the mixtures according to the invention, comprise as component 1) a compound I selected from compounds I.1, I.2, I.3, I.4, I.5, I.6, I.7, I.8, I.9, I.10, I.11, I.12, and I.13 as defined above, and as component 2) a pesticide II selected from florylpicoxamid (A.2.5); boscalid (A.3.4), fluxapyroxad (A.3.9), prothioconazole (B.1.23), mefentrifluconazole (B.1.38); ipflufenoquin (C.5.1), fludioxonil (F.1.5); and mancozeb (H.2.2).

When used for treating plant propagation material, in particular seeds, preferably, the mixtures according to the invention, comprise as component 1) a compound I selected from compounds I.1, I.2, I.3, I.4, I.5, I.6, I.7, I.8, I.9, I.10, I.11, 1.12, and 1.13 as defined above; and as component 2) a pesticide II selected from cyclobutrifluram (A.3.24), fluopyram (A.3.7), fluxapyroxad (A.3.9), mefentrifluconazole (B.1.38), metalaxyl (C.1.4), metalaxyl-M (C.1.5), picarbutrazox (K.1.41), fludioxonil (F.1.5), oxathiapiprolin (G.5.1), and clothianidin.

When used in specialty crops as defined above, oil seed rape or rice, preferably, the mixtures according to the invention as outlined in Table BO comprise as component 1) a compound I selected from compounds 1.1, I.2, I.3, I.4, I.5, I.6, I.7, I.8, I.9, I.10, I.11, I.12, and I.13 as defined herein (represented in the third column "C1)" by the expression "(I)" which shall mean a compound selected from compounds I.1, I.2, I.3, I.4, I.5, I.6, I.7, I.8, I.9, I.10, I.11, I.12, and I.13) and one pesticide II as defined in the second column "C2)", wherein the weight ratio (w:w) of component 2) : component 1) is one of the ratios listed in the fourth column and separated by semicolon, wherein the ratio with an asterisk * is particularly preferred.

**Table BO:**

| **Mixtur e** | **C2)** | **C1)** | **Ratios of component 2) : component 1) (w:w)** |
|---|---|---|---|
| BO-1 | (A.1.1) | (I) | 1:1; 3:2; 2:1; 3:1; 2:3*; 4:3; 1:2; 3:4; 1:2.5; 3:5; 4:5; 6:5; 1:3; 1:4 |
| BO-2 | (A.1.14) | (I) | 1:1*; 3:2; 2:1; 3:1; 2:3; 4:3; 1:2; 3:4; 1:2.5; 3:5; 4:5; 6:5; 1:3; 1:4 |
| BO-3 | (A.1.17) | (I) | 1:1; 3:2; 2:1; 3:1; 2:3*; 4:3; 1:2; 3:4; 1:2.5; 3:5; 4:5; 6:5; 1:3; 1:4 |
| BO-4 | (A.1.25) | (I) | 4:5; 1:1; 6:5; 3:2; 2:1; 2.5:1; 4:7; 2:3*; 4:3; 5:3; 1:2.5; 1:2; 3:5; 3:4; 5:4; 1:3; 1:4; 5:6; 1:5; 3:8; 1:1.5 |
| BO-5 | (A.2.1) | (I) | 1:1*; 1:2; 1:2.5; 1:3; 1:4; 2:1; 2:3; 3:2; 3:4; 3:5; 3:8; 4:3; 4:5; 6:5 |
| BO-6 | (A.2.4) | (I) | |
| BO-7 | (A.2.5) | (I) | 1:6; 1:5; 1:4; 1:3; 3:8; 1:2*; 1:2.5; 2:3; 3:5; 4:5; 1:1; 6:5; 3:2; 2:1; 4:7; 4:3; 3:4 |
| BO-8 | (A.3.4) | (I) | 5:4; 3:1; 3:2*; 1:1; 3:4; 3:5; 1:2; 2:1; 4:3; 4:5; 2:3; 6:5; 4:1; 5:1; 2.5:1; 5:3; 5:6 |
| BO-9 | (A.3.7) | (I) | 3:1; 3:2*; 1:1; 3:4; 3:5; 1:2; 2:1; 4:3; 4:5; 2:3; 6:5; 4:1 |
| BO-10 | (A.3.9) | (I) | 4:5; 1:1 *; 6:5; 3:2; 2:1; 2.5:1; 4:7; 2:3; 4:3; 5:3; 1:2.5; 1:2; 3:5; 3:4; 5:4; 1:3; 1:4; 5:6; 1:5; 3:8; 1:1.5 |
| BO-11 | (A.3.11) | (I) | 8:1; 10:1; 12:1; 5.5:1; 6.5:1; 4:1; 5:1*; 6:1; 3:1; 2.5:1; 3.5:1; 2:1 |
| BO-12 | (A.3.17) | (I) | 1:1; 3:2*; 2:1; 3:1; 2:3; 4:3; 1:2; 3:4; 1:2.5; 3:5; 4:5; 6:5; 1:3; 1:4 |
| BO-13 | (A.3.31) | (I) | 1:1; 1:1.5; 1:2.5; 1.5:1; 1:2; 1:3; 1:4; 2.5:1; 2:1; 2:3; 3:1; 3:2*; 3:4; 3:5; 3:8; 4:1; 4:3; 4:5; 5:3; 5:4; 5:6; 6:5 |
| BO-14 | (A.4.5) | (I) | 2.5:1; 3:1; 3.5:1; 4:1; 5:1; 6.5:1*; 6:1; 7.5:1; 8:1; 10:1; 12:1; 15:1 |
| BO-15 | (A.5.1) | (I) | 1.5:1; 1:1; 2.5:1*; 2:1; 3.5:1; 3:1; 3:2; 4:1; 4:3; 5:1; 5:3; 5:4; 6:1 |
| BO-16 | (B.1.5) | (I) | 1:1; 3:2; 2:1; 3:1; 2:3; 4:3*; 1:2; 3:4; 1:2.5; 3:5; 4:5; 6:5; 1:3; 1:4 |
| BO-17 | (B.1.23) | (I) | 3:1; 3:2*; 1:1; 3:4; 3:5; 1:2; 2:1; 4:3; 4:5; 2:3; 6:5; 4:1 |
| BO-18 | (B.1.25) | (I) | 1.5:1; 1:1; 1:1.5; 1:2; 10:1; 2.5:1; 2:1*; 2:3; 3.5:1; 3:1; 3:2; 3:4; 4:1; 4:3; 4:5; 5.5:1; 5:1; 5:3; 5:4; 5:6; 6.5:1; 6:1; 6:5; 8:1 |
| BO-19 | (B.1.26) | (I) | 3:1; 3:2*; 1:1; 3:4; 3:5; 1:2; 2:1; 4:3; 4:5; 2:3; 6:5; 4:1 |
| BO-20 | (B.1.38) | (I) | 1:1; 3:2*; 2:1; 3:1; 2:3; 4:3; 1:2; 3:4; 1:2.5; 3:5; 4:5; 6:5; 1:3; 1:4 |
| BO-21 | (B.1.56) | (I) | 1:1; 1:1.5; 1:2.5; 1.5:1; 1:2; 1:3; 1:4; 2.5:1; 2:1; 2:3; 3:1; 3:2*; 3:4; 3:5; 3:8; 4:1; 4:3; 4:5; 5:3; 5:4; 5:6; 6:5 |
| BO-22 | (B.1.57) | (I) | 1:1; 1:1.5; 1:2.5; 1.5:1; 1:2; 1:3; 1:4; 2.5:1; 2:1; 2:3; 3:1; 3:2*; 3:4; 3:5; 3:8; 4:1; 4:3; 4:5; 5:3; 5:4; 5:6; 6:5 |
| BO-23 | (B.3.1) | (I) | 2.5:1; 3:1; 3.5:1; 4:1; 5:1; 6.5:1*; 6:1; 7.5:1; 8:1; 10:1; 12:1; 15:1 |
| BO-24 | (C.5.1) | (I) | 1:1*; 1:1.5; 1:2.5; 1.5:1; 1:2; 1:3; 1:4; 2.5:1; 2:1; 2:3; 3:1; 3:2; 3:4; 3:5; 3:8; 4:1; 4:3; 4:5; 5:3; 5:4; 5:6; 6:5 |
| BO-25 | (C.5.2) | (I) | 1:1*; 1:1.5; 1:2.5; 1.5:1; 1:2; 1:3; 1:4; 2.5:1; 2:1; 2:3; 3:1; 3:2; 3:4; 3:5; 3:8; 4:1; 4:3; 4:5; 5:3; 5:4; 5:6; 6:5 |
| BO-26 | (C.5.3) | (I) | 1:1*; 1:1.5; 1:2.5; 1.5:1; 1:2; 1:3; 1:4; 2.5:1; 2:1; 2:3; 3:1; 3:2; 3:4; 3:5; 3:8; 4:1; 4:3; 4:5; 5:3; 5:4; 5:6; 6:5 |
| BO-27 | (D.2.4) | (I) | 1:1*; 3:2; 2:1; 3:1; 2:3; 4:3; 1:2; 3:4; 1:2.5; 3:5; 4:5; 6:5; 1:3; 1:4 |
| BO-28 | (D.2.5) | (I) | 1.5:1*; 1:1; 1:1.5; 1:2; 2.5:1; 2:1; 2:3; 3:1; 3:2; 3:4; 4:1; 4:3; 4:5; 5:3; 5:4; 5:6; 6:5 |
| BO-29 | (D.2.9) | (I) | 1:1*; 3:2; 2:1; 3:1; 2:3; 4:3; 1:2; 3:4; 1:2.5; 3:5; 4:5; 6:5; 1:3; 1:4 |
| BO-30 | (E.1.1) | (I) | 5:4; 3:1; 3:2*; 1:1; 3:4; 3:5; 1:2; 2:1; 4:3; 4:5; 2:3; 6:5; 4:1; 5:1; 2.5:1; 5:3; 5:6 |
| BO-31 | (E.1.3) | (I) | 2:1; 2.5:1; 3:1; 3.5:1; 4:1; 5:1; 5.5:1; 6:1*; 6.5:1; 7.5:1; 8:1; 10:1; 11:1; 12:1; 15:1; 16:1 |
| BO-32 | (F.1.5) | (I) | 1:1; 1.5:1; 2:1*; 2.5:1; 3.5:1; 4:1; 5:1; 4:3; 5:3; 5:4 |
| BO-33 | (G.4.1) | (I) | 2.5:1; 3.5:1; 3:1; 4.5:1; 4:1; 5:1; 6.5:1; 6:1; 7.5:1*; 7:1; 8:1; 9:1; 10:1; 11:1; 12:1; 13:1; 15:1; 16:1; 18:1; 20:1; 24:1 |
| BO-34 | (G.5.1) | (I) | 1:1; 1:2; 1:2.5*; 1:3; 1:4; 1:5; 1:6; 1:7.5; 1:8; 2:1; 2:3; 3:2; 3:4; 3:5; 3:8; 4:3; 4:5; 4:7; 6:5; 1:10 |
| BO-35 | (G.5.3) | (I) | 1:1; 1:2; 1:2.5*; 1:3; 1:4; 1:5; 1:6; 1:7.5; 1:8; 2:1; 2:3; 3:2; 3:4; 3:5; 3:8; 4:3; 4:5; 4:7; 6:5; 1:10 |
| BO-36 | (H.1.2) | (I) | 2:1; 2.5:1; 3:1; 3:2; 3.5:1; 4.5:1*; 4:1; 5.5:1; 5:1; 6.5:1; 6:1; 7.5:1; 7:1; 7:3; 7:4; 8:1; 9:1; 10:1; 11:1; 12:1; 13:1; 15:1; 16:1; 18:1; 20:1; 24:1; 30:1 |
| BO-37 | (H.1.5) | (I) | 2:1; 2.5:1; 3:1; 3:2; 3.5:1; 4.5:1*; 4:1; 5.5:1; 5:1; 6.5:1; 6:1; 7.5:1; 7:1; 7:3; 7:4; 8:1; 9:1; 10:1; 11:1; 12:1; 13:1; 15:1; 16:1; 18:1; 20:1; 24:1; 30:1 |
| BO-38 | (H.1.7) | (I) | 16:1; 20:1; 24:1*; 30:1; 40:1; 11:1; 13:1; 27:1; 8:1; 10:1; 12:1; 15:1; 6:1; 5:1; 7:1; 4:1; 7.5:1 |
| BO-39 | (H.2.2) | (I) | 4:1; 4.5:1; 5:1; 6:1; 7:1; 8:1; 9:1*; 10:1; 11:1; 12:1; 13:1; 16:1; 18:1; 20:1; 24:1 |
| BO-40 | (H.2.5) | (I) | 4:1; 4.5:1; 5:1; 6:1; 7:1; 8:1; 9:1; 10:1; 11:1; 12:1*; 13:1; 14:1; 16:1; 18.5:1; 18:1; 20:1; 24:1; 28:1 |
| BO-41 | (H.4.9) | (I) | 1.5:1; 1:1; 2.5:1; 2:1; 3.5:1; 3:1*; 3:2; 4.5:1; 4:1; 4:3; 5.5:1; 5:1; 5:3; 5:4; 6.5:1; 6:1; 7.5:1; 7:1; 7:3; 7:4; 8:1; 10:1; 11:1; 12:1; 15:1; 16:1 |
| BO-42 | (I.3.1) | (I) | 1.5:1; 1:1; 1:1.5; 1:2; 10:1; 2.5:1*; 2:1; 2:3; 3.5:1; 3:1; 3:2; 3:4; 4:1; 4:3; 4:5; 5.5:1; 5:1; 5:3; 5:4; 5:6; 6.5:1; 6:1; 6:5; 8:1 |
| BO-43 | (I.3.3) | (I) | 1:1*; 3:2; 2:1; 3:1; 2:3; 4:3; 1:2; 3:4; 1:2.5; 3:5; 4:5; 6:5; 1:3; 1:4 |
| BO-44 | (J.1.9) | (I) | 5:1; 6:1; 7.5:1; 7:1; 8:1; 9:1; 10:1; 11:1; 12:1; 13:1; 14:1; 15:1*; 16:1; 18.5:1; 20:1; 24:1; 27:1; 28:1; 30:1; 40:1; 60:1 |
| BO-45 | (J.1.12) | (I) | 16:1; 20:1; 24:1; 30:1; 40:1; 11:1; 13:1; 27:1; 8:1; 10:1*; 12:1; 15:1; 6:1; 5:1; 7:1; 4:1; 7.5:1 |
| BO-46 | (K.1.4) | (I) | 1.5:1*; 1:1; 1:1.5; 1:2; 2.5:1; 2:1; 2:3; 3:1; 3:2; 3:4; 4:1; 4:3; 4:5; 5:3; 5:4; 5:6; 6:5 |
| BO-47 | (K.1.60) | (I) | 1:1; 1:1.5; 1:2; 2.5:1; 2:1; 2:3; 3:1; 3:2*; 3:4; 3:5; 3:8; 4:3; 4:5; 5:3; 5:4; 5:6; 6:5 |
| BO-48 | (K.1.105) | (I) | 1:1; 1:1.5; 1:2.5; 1.5:1; 1:2; 1:3; 1:4; 2.5:1; 2:1; 2:3; 3:1; 3:2*; 3:4; 3:5; 3:8; 4:1; 4:3; 4:5; 5:3; 5:4; 5:6; 6:5 |
| BO-49 | (K.1.106) | (I) | 1:1; 1:1.5; 1:2.5; 1.5:1; 1:2; 1:3; 1:4; 2.5:1; 2:1; 2:3; 3:1; 3:2*; 3:4; 3:5; 3:8; 4:1; 4:3; 4:5; 5:3; 5:4; 5:6; 6:5 |
| BO-50 | (K.1.107) | (I) | 1:1; 1:1.5; 1:2.5; 1.5:1; 1:2; 1:3; 1:4; 2.5:1; 2:1; 2:3; 3:1; 3:2*; 3:4; 3:5; 3:8; 4:1; 4:3; 4:5; 5:3; 5:4; 5:6; 6:5 |
| BO-51 | L.2.1) | (I) | 1:1*; 1:1.5; 1:2.5; 1.5:1; 1:2; 1:3; 1:4; 2.5:1; 2:1; 2:3; 3:1; 3:2; 3:4; 3:5; 3:8; 4:1; 4:3; 4:5; 5:3; 5:4; 5:6; 6:5 |
| BO-52 | L.2.2) | (I) | 1:1*; 1:1.5; 1:2.5; 1.5:1; 1:2; 1:3; 1:4; 2.5:1; 2:1; 2:3; 3:1; 3:2; 3:4; 3:5; 3:8; 4:1; 4:3; 4:5; 5:3; 5:4; 5:6; 6:5 |
| BO-53 | (L.2.3) | (I) | 1:1*; 1:1.5; 1:2.5; 1.5:1; 1:2; 1:3; 1:4; 2.5:1; 2:1; 2:3; 3:1; 3:2; 3:4; 3:5; 3:8; 4:1; 4:3; 4:5; 5:3; 5:4; 5:6; 6:5 |
| BO-54 | (L.2.4) | (I) | 1:1*; 1:1.5; 1:2.5; 1.5:1; 1:2; 1:3; 1:4; 2.5:1; 2:1; 2:3; 3:1; 3:2; 3:4; 3:5; 3:8; 4:1; 4:3; 4:5; 5:3; 5:4; 5:6; 6:5 |
| BO-55 | (L.2.5) | (I) | 1:1; 1: 2*; 1:2.5; 1:3; 1:4; 1:5; 1:6; 1:8; 2:1; 2:3; 3:2; 3:4; 3:5; 3:8; 4:3; 4:5 |
| BO-56 | (L.2.6) | (I) | 1:1; 1: 2*; 1:2.5; 1:3; 1:4; 1:5; 1:6; 1:8; 2:1; 2:3; 3:2; 3:4; 3:5; 3:8; 4:3; 4:5 |
| BO-57 | (L.2.7) | (I) | 1:1; 1: 2*; 1:2.5; 1:3; 1:4; 1:5; 1:6; 1:8; 2:1; 2:3; 3:2; 3:4; 3:5; 3:8; 4:3; 4:5 |
| BO-58 | (L.2.8) | (I) | 1:1; 1:1.5*; 1:2.5; 1.5:1; 1:2; 1:3; 1:4; 2.5:1; 2:1; 2:3; 3:1; 3:2; 3:4; 3:5; 3:8; 4:1; 4:3; 4:5; 5:3; 5:4; 5:6; 6:5 |
| BO-59 | (L.2.9) | (I) | 1:1; 1:1.5*; 1:2.5; 1.5:1; 1:2; 1:3; 1:4; 2.5:1; 2:1; 2:3; 3:1; 3:2; 3:4; 3:5; 3:8; 4:1; 4:3; 4:5; 5:3; 5:4; 5:6; 6:5 |
| BO-60 | (L.2.10) | (I) | 1:1*; 1:1.5; 1:2.5; 1.5:1; 1:2; 1:3; 1:4; 2.5:1; 2:1; 2:3; 3:1; 3:2; 3:4; 3:5; 3:8; 4:1; 4:3; 4:5; 5:3; 5:4; 5:6; 6:5 |

The term "plant propagation material" is to be understood to denote all the generative parts of the plant, such as seeds; and vegetative plant materials, such as cuttings and tubers (e.g. potatoes), which can be used for the multiplication of the plant. This includes seeds, roots, fruits, tubers, bulbs, rhizomes, shoots, sprouts and other parts of plants; including seedlings and young plants to be transplanted after germination or after emergence from soil.

Preferably, treatment of plant propagation materials with the mixtures according to the invention and compositions thereof, respectively, is used for controlling fungi on cereals, such as wheat, rye, barley and oats; rice, corn, cotton and soybeans.

According to the invention all of the above cultivated plants are understood to comprise all species, subspecies, variants, varieties and/or hybrids which belong to the respective cultivated plants, including but not limited to winter and spring varieties, in particular in cereals such as wheat and barley, as well as oilseed rape, e.g. winter wheat, spring wheat, winter barley etc, further including dwarf, semi-dwarf and full-dwarf varieties and/or hybrids with reduced height and thicker and shorter stems, e.g. short stature corn (also called 'smart corn'), semi-dwarf wheat and dwarf rice.

Corn (Zea *mays*) is also known as Indian corn or maize which comprises all kinds of corn such as field corn and sweet corn. According to the invention all maize or corn subspecies and/or varieties are comprised, in particular flour corn (Zea *mays* var. *amylacea*)*,* popcorn (Zea *mays* var. *everta*), dent corn (Zea *mays* var. *indentata*), flint corn (Zea *mays* var. *indurata*), sweet corn (Zea *mays* var. *saccharata* and var. *rugosa*)*,* waxy corn (Zea *mays* var. *ceratina*)*,* amylomaize (high amylose Zea *mays* varieties), pod corn or wild maize (Zea *mays* var. *tunicata*) and striped maize (Zea *mays* var. *japonica*)*.*

Most soybean cultivars are classifiable into indeterminate and determinate growth habit, whereas *Glycine soja,* the wild progenitor of soybean, is indeterminate (PNAS 2010, 107 (19) 8563-8568). The indeterminate growth habit (Maturity Group, MG 00 to MG 4.9) is characterized by a continuation of vegetative growth after flowering begins whereas determinate soybean varieties (MG 5 to MG 8) characteristically have finished most of their vegetative growth when flowering begins. According to the invention all soybean cultivars or varieties are comprised, in particular indeterminate and determinate cultivars or varieties.

The term "cultivated plants" is to be understood as including plants which have been modified by mutagenesis or genetic engineering to provide a new trait to a plant or to modify an already present trait. Mutagenesis includes random mutagenesis using X-rays or mutagenic chemicals, but also targeted mutagenesis to create mutations at a specific locus of a plant genome. Targeted mutagenesis frequently uses oligonucleotides or proteins like CRISPR/Cas, zinc-finger nucleases, TALENs or meganucleases. Genetic engineering usually uses recombinant DNA techniques to create modifications in a plant genome which under natural circumstances cannot readily be obtained by cross breeding, mutagenesis or natural recombination. Typically, one or more genes are integrated into the genome of a plant to add a trait or improve or modify a trait. These integrated genes are also referred to as transgenes, while plant comprising such transgenes are referred to as transgenic plants. The process of plant transformation usually produces several transformation events, which differ in the genomic locus in which a transgene has been integrated. Plants comprising a specific transgene on a specific genomic locus are usually described as comprising a specific "event", which is referred to by a specific event name. Traits which have been introduced in plants or have been modified include herbicide tolerance, insect resistance, increased yield and tolerance to abiotic conditions, like drought.

Herbicide tolerance has been created by using mutagenesis and genetic engineering. Plants which have been rendered tolerant to acetolactate synthase (ALS) inhibitor herbicides by mutagenesis and breeding are e.g. available under the name Clearfield^{®}. Herbicide tolerance to glyphosate, glufosinate, 2,4-D, dicamba, oxynil herbicides, like bromoxynil and ioxynil, sulfonylurea herbicides, ALS inhibitors and 4-hydroxyphenylpyruvate dioxygenase (HPPD) inhibitors, like isoxaflutole and mesotrione, has been created via the use of transgenes.

Transgenes to provide herbicide tolerance traits comprise: for tolerance to glyphosate: cp4 epsps, epsps grg23ace5, mepsps, 2mepsps, gat4601, gat4621, goxv247; for tolerance to glufosinate: pat and bar, for tolerance to 2,4-D: aad-1, aad-12; for tolerance to dicamba: dmo; for tolerance to oxynil herbicies: bxn; for tolerance to sulfonylurea herbicides: zm-hra, csr1-2, gm-hra, S4-HrA; for tolerance to ALS inhibitors: csr1-2; and for tolerance to HPPD inhibitors: hppdPF, W336, avhppd-03.

Transgenic corn events comprising herbicide tolerance genes include, but are not limited to, DAS40278, MON801, MON802, MON809, MON810, MON832, MON87411, MON87419, MON87427, MON88017, MON89034, NK603, GA21, MZHG0JG, HCEM485, VCO-Ø1981-5, 676, 678, 680, 33121, 4114, 59122, 98140, Bt10, Bt176, CBH-351, DBT418, DLL25, MS3, MS6, MZIR098, T25, TC1507 and TC6275. Transgenic soybean events comprising herbicide tolerance genes include, but are not limited to, GTS 40-3-2, MON87705, MON87708, MON87712, MON87769, MON89788, A2704-12, A2704-21, A5547-127, A5547-35, DP356043, DAS44406-6, DAS68416-4, DAS-81419-2, GU262, SYHTØH2, W62, W98, FG72 and CV127. Transgenic cotton events comprising herbicide tolerance genes include, but are not limited to, 19-51a, 31707, 42317, 81910, 281-24-236, 3006-210-23, BXN10211, BXN10215, BXN10222, BXN10224, MON1445, MON1698, MON88701, MON88913, GHB119, GHB614, LLCotton25, T303-3 and T304-40. Transgenic canola events comprising herbicide tolerance genes are for example, but not excluding others, MON88302, HCR-1, HCN10, HCN28, HCN92, MS1, MS8, PHY14, PHY23, PHY35, PHY36, RF1, RF2 and RF3.

Transgenes providing insect resistance include but are not limited to, toxin genes of *Bacillus* spp. and synthetic variants thereof (e.g. cry1A, cry1Ab, cry1Ab-Ac, cry1Ac, cry1A.105, cry1F, cry1Fa2, cry2Ab2, cry2Ae, mcry3A, ecry3.1Ab, cry3Bb1, cry34Ab1, cry35Ab1, cry9C, vip3A(a), and vip3Aa20); transgenes of plant origin (e.g. coding for protease inhibitors, like CpTI and pinll); and transgenes producing double-stranded RNA (e.g. dvsnf7). Transgenic insect resistance corn events include, but are not limited to, Bt10, Bt11, Bt176, MON801, MON802, MON809, MON810, MON863, MON87411, MON88017, MON89034, 33121, 4114, 5307, 59122, TC1507, TC6275, CBH-351, MIR162, DBT418 and MZIR098. Transgenic insect resistance soybean events include, but are not limited to, MON87701, MON87751 and DAS-81419. Transgenic cotton events comprising genes for insecticidal proteins include, but are not limited to, SGK321, MON531, MON757, MON1076, MON15985, 31707, 31803, 31807, 31808, 42317, BNLA-601, Event1, COT67B, COT102, T303-3, T304-40, GFM Cry1A, GK12, MLS 9124, 281-24-236, 3006-210-23, GHB119 and SGK321.

Cultivated plants with increased yield have been created by using the transgene athb17 (e.g., corn event MON87403), or bbx32 (e.g. soybean event MON87712).

Cultivated plants comprising a modified oil content have been created by using the transgenes: gm-fad2-1, Pj.D6D, Nc.Fad3, fad2-1A and fatb1-A (e.g. soybean events 260-05, MON87705 and MON87769).

Tolerance to abiotic conditions, such as drought, has been created by using the transgene cspB (corn event MON87460) and Hahb-4 (soybean event IND-ØØ41Ø-5).

Traits are frequently combined by combining genes in a transformation event or by combining different events during the breeding process resulting in a cultivated plant with stacked traits. Preferred combinations of traits are combinations of herbicide tolerance traits to different groups of herbicides, combinations of insect tolerance to different kind of insects, in particular tolerance to lepidopteran and coleopteran insects, combinations of herbicide tolerance with one or several types of insect resistance, combinations of herbicide tolerance with increased yield as well as combinations of herbicide tolerance and tolerance to abiotic conditions.

Plants comprising singular or stacked traits as well as the genes and events providing these traits are well known in the art: information to the mutagenized or integrated genes and the respective events are available from websites of the "International Service for the Acquisition of Agri-biotech Applications (ISAAA)" (http://www.isaaa.org/gmapprovaldatabase) and the "Center for Environmental Risk Assessment (CERA)" (http://cera-gmc.org/GMCropDatabase). Further information can be found for canola events MS1, MS8, RF3, GT73, MON88302, KK179 in WO01/031042, WO01/041558, WO01/041558, WO02/036831, WO11/153186, WO13/003558; for cotton events MON1445, MON15985, MON531 (MON15985), LLCotton25, MON88913, COT102, 281-24-236, 3006-210-23, COT67B, GHB614, T304-40, GHB119, MON88701, 81910 in WO02/034946, WO02/100163, WO02/100163, WO03/013224, WO04/072235, WO04/039986, WO05/103266, WO05/103266, WO06/128573, WO07/017186, WO08/122406, WO08/151780, WO12/134808, WO13/112527; for corn events GA21, MON810, DLL25, TC1507, MON863, MIR604, LY038, MON88017, 3272, 59122, NK603, MIR162, MON89034, 98140, 32138, MON87460, 5307, 4114, MON87427, DAS40278, MON87411, 33121, MON87403, MON87419 in WO98/044140, US02/102582, US03/126634, WO04/099447, WO04/011601, WO05/103301, WO05/061720, WO05/059103, WO06/098952, WO06/039376, US2007/292854, WO07/142840, WO07/140256, WO08/112019, WO09/103049, WO09/111263, WO10/077816, WO11/084621, WO11/062904, WO11/022469, WO13/169923, WO14/116854, WO15/053998, WO15/142571; for potato events E12, F10, J3, J55, V11, X17, Y9 in WO14/178910, WO14/178913, WO14/178941, WO14/179276, WO16/183445, WO17/062831, WO17/062825; for rice events LLRICE06, LLRICE601, LLRICE62 in WO00/026345, WO00/026356, WO00/026345; and for soybean events H7-1, MON89788, A2704-12, A5547-127, DP305423, DP356043, MON87701, MON87769, CV127, MON87705, DAS68416-4, MON87708, MON87712, SYHT0H2, DAS81419, DAS81419 x DAS44406-6, MON87751 in WO04/074492, WO06/130436, WO06/108674, WO06/108675, WO08/054747, WO08/002872, WO09/064652, WO09/102873, WO10/080829, WO10/037016, WO11/066384, WO11/034704, WO12/051199, WO12/082548, WO13/016527, WO13/016516, WO14/201235.

The use of the mixtures and compositions thereof, respectively, on cultivated plants may result in effects which are specific to a cultivated plant comprising a certain transgene or event. These effects might involve changes in growth behavior or changed resistance to biotic or abiotic stress factors (e.g. enhanced yield, early vigour, early or delayed ripening, changed amino acid or fatty acid spectrum or content; enhanced resistance or tolerance to insects, nematodes, fungal, bacterial, mycoplasma, viral or viroid pathogens; or cold or heat tolerance).

The mixtures and compositions thereof, respectively, are particularly suitable for controlling the following causal agents of plant diseases: *Albugo* spp. (white rust) on ornamentals, vegetables (e.g. *A*. *candida*) and sunflowers (e.g. *A. tragopogonís*); *Alternaria* spp. (Alternaria leaf spot) on vegetables (e.g. *A*. *dauci* or *A*. *porri*)*,* oilseed rape (*A*. *brassicicola* or *brassicae*)*,* sugar beets (*A*. *tenuis*)*,* fruits (*A*. *grandis*)*,* rice, soybeans, potatoes and tomatoes (*A*. *solani, A. grandis* or *A*. *alternata*)*,* tomatoes (*A*. *solani* or *alternata*) and wheat (*A*. *triticina*); *Aphanomyces* spp. on sugar beets and vegetables; *Ascochyta* spp. on vegetables and cereals (*A*. *tritici* on wheat; *A*. *hordei* on barley); *Aureobasidium* zeae (syn. *Kapatiella* zeae) on corn; *Bipolaris* and *Drechslera* spp. (teleomorph: *Cochliobolus* spp.), e.g. Southern leaf blight (*D*. *maydis*) or Northern leaf blight (*B*. *zeicola*) on corn; spot blotch (*B*. *sorokiniana*) on cereals and B. *oryzae* on rice and turfs; *Blumeria* (formerly *Erysiphe*) *graminis* (powdery mildew) on cereals (e.g. wheat or barley); *Botrytis* spp. *e.g. B*. *cinerea* (teleomorph: *Botryotinia fuckeliana:* grey mold) on fruits and berries (e.g. strawberries), vegetables (e.g. lettuce, carrots, celery and cabbages); *B*. *squamosa* or *B*. *allii* on onions, oilseed rape, ornamentals (*B eliptica*)*,* vines, forestry plants and wheat; *Bremia lactucae* (downy mildew) on lettuce; *Cerato-cystis* (syn. *Ophiostoma*) spp. (rot or wilt) on broad-leaved trees and evergreens (*C*. *ulmi* on elm); *Cercospora* spp. (Cercospora leaf spots) on corn (*C*. *zeae-maydis*), rice, sugar beets (*C*. *beticola*)*,* sugar cane, vegetables, coffee, soybeans (*C*. *sojina* or *kikuchii*) and rice; *Cladobotryum* (*syn. Dactylium*) spp. (*C*. *mycophilum* (teleomorph: Nectria *albertinii, Nectria rosella* syn. *Hypomyces rosellus*) on mushrooms; *Cladosporium* spp. on tomatoes (*C*. *fulvum:* leaf mold) and cereals (*C*. *herbarum* (black ear) on wheat); *Claviceps purpurea* (ergot) on cereals; *Cochliobolus* (anamorph: *Helminthosporium* or *Bipolaris*) spp. (leaf spots) on corn (*C*. *carbonum*)*,* cereals (*C*. *sativus,* anamorph: *B*. *sorokiniana*) and rice (*C*. *miyabeanus,* anamorph: *H. oryzae*); *Colletotrichum* (teleomorph: *Glomerella*) spp. (anthracnose) on cotton (*C*. *gossypii)*, corn (*C*. *graminicola:* stalk rot), soft fruits, potatoes (*C*. *coccodes:* black dot), beans (*C*. *lindemuthianum*)*,* soybeans (*C*. *truncatum* or *gloeosporioides*), vegetables (*C*. *lagenarium* or *capsici*), fruits (e.g. *C*. *acutatum),* coffee (*C*. *kahawae or coffeanum)* and *C*. *gloeosporioides* on various crops; *Corticium* spp., e.g. *C*. sasa-*kii* (sheath blight) on rice; *Corynespora cassiicola* (leaf spots) on soybeans, cotton and ornamentals; *Cycloconium* spp., e.g. C. *oleaginum* on olive trees; *Cylindrocarpon* spp. (fruit tree canker or young vine decline, teleomorph: Nec*tria* or *Neonectria* spp.) on fruit trees, vines (*C*. *liriodendri,* teleomorph: *Neonectria liriodendri:* Black Foot Disease) and ornamentals; *Dematophora* (teleomorph: *Rosellinia) necatrix* (root and stem rot) on soybeans; *Diaporthe* spp., e.g. *D. phaseolorum* (damping off) on soybeans; *Drechslera* (syn. *Helminthosporium,* teleomorph: *Pyrenophora)* spp. on corn, cereals (*D*. *teres:* net blotch on barley; *D*. *tritici-repentis:* tan spot on wheat), rice and turf; Esca (dieback, apoplexy) on vines, caused by *Formitiporia* (syn. *Phellinus*) *punctata, F. mediterranea, Phaeomoniella chlamydo-spora, Phaeoacremonium aleophilum* and/or *Botryosphaeria obtusa; Elsinoe* spp. (anthracnose) on pome fruits (*E*. *pyri*)*,* soft fruits (*E*. *veneta)* and vines (*E*. *ampelina); Entyloma oryzae* (leaf smut) on rice; *Epicoccum* spp. (black mold) on wheat; *Erysiphe* spp. (powdery mildew) on sugar beets (*E*. *betae*)*,* vegetables (e.g. *E. pisi*)*,* such as cucurbits (*E*. *cichoracearum*)*,* cabbages, oilseed rape (e.g. *E*. *cruciferarum); Eutypa lata* (Eutypa canker or dieback, anamorph: *Cytosporina lata,* syn. *Libertella blepharis)* on fruit trees, vines and ornamental woods; *Exserohilum* (syn. *Helminthosporium)* spp. on corn (*E*. *furcicum); Fusarium* (teleomorph: Gibberella) spp. (wilt, root or stem rot) e.g. on cereals (*F*. *graminearum* or *culmorum:* root rot, scab or head blight), tomatoes (*F*. *oxysporum),* soybeans (*F*. *virguli-forme, cuneirostruum, tucumaniae* and *brasiliense:* sudden death syndrome), and corn (*F*. *verticiffloides*); *Gaeumannomyces graminis* (take-all) on cereals (wheat, barley corn); *Gibberella* spp. on cereals (*G*. zeae) and rice (*G*. *fujikuroi:* Bakanae disease); *Glomerella cingulata* on vines, pome fruits and cotton (*G*. *gossypii*); Grainstaining complex on rice; *Guignardia bidwellii* (black rot) on vines; *Gymnosporangium* spp. on rosaceous plants (pears rust: G. *sabinae)* and junipers; *Helminthosporium* spp. (syn. Drechslera, teleomorph: *Cochliobolus*) on corn, cereals, potatoes and rice; *Hemileia* spp., e.g. on coffee (*H*. *vastatrix:* leaf rust); *Isariopsis clavispora* (syn. *Pseudocercospora vitis*) on vines; *Macrophomina phaseolina* (root and stem rot) on soybeans and cotton; *Microdochium* (syn. *Fusarium) nivale* (pink snow mold) on cereals (wheat or barley); *Microsphaera diffusa* (powdery mildew) on soybeans; *Monilinia* spp., e.g. *M. laxa, fructicola* and *fructigena* (bloom and twig blight, brown rot) on rosaceous plants (stone fruits); *Mycosphaerella* spp. on cereals (M. *graminicola* [anamorph: *Zymoseptoria tritici* formerly *Septoria tritici*]: Septoria blotch on wheat), bananas (M. fijiensis [syn. Pseudocercospora fijiensis]: black Sigatoka disease; *M. musicola),* soft fruits, ground nuts (M. *arachidis* [anamorph: *Cercospora arachidicola*] or *M*. *berkeleyi* on peanuts), peas (M. *pisi*)*,* and brassicas (M. *brassiciola); Peronospora* spp. (downy mildew) on cabbage (P. *brassicae),* oilseed rape (*P. parasi-tica*), onions (P. *destructor),* tobacco (P. *tabacina)* and soybeans (P. *manshurica); Phakopsora pachyrhizi* and *meibomiae* (soybean rust) on soybeans; *Phialophora* spp. e.g. on vines (P. *tracheiphila* and *tetraspora)* and soybeans (P. *gregata:* stem rot); *Phoma* spp. on oilseed rape and cabbage (P. *lingam* syn. *Leptosphaeria maculans* and *biglo*bosa: Phoma stem canker), sugar beet (P. *betae:* root rot, leaf spot and damping-off) and corn (*P. zeae-maydis,* syn. *Phyllostica* zeae); *Phomopsis* spp. on sunflowers, vines (P. *viticola*: cane and leaf spot) and soybeans (stem rot: *P*. *phaseoli,* teleomorph: *Diaporthe phaseolorum); Physoderma maydis* (brown spots) on corn; *Phytophthora* spp. (wilt, root, leaf, fruit and stem root) e.g. on paprika and cucurbits (P. *capsici*)*,* soybeans (P. *megasperma,* syn. *P*. *sojae),* potatoes and tomatoes (*P*. *infestans:* late blight), and broad-leaved trees (P. *ramorum:* sudden oak death); *Plasmo-diophora brassicae* (club root) e.g. on cabbage, oilseed rape, radish; *Plasmopara* spp., on vines (P. *viticola:* downy mildew) and sunflowers (P. *halstedii*); *Podosphaera* spp. (powdery mildew) on rosaceous plants, hop, pomes (P. *leucotricha* on apples), soft fruits and curcurbits (*P. xanfhii*); *Polymyxa* spp. on cereals (*P*. *graminis* on wheat and barley) and sugar beets (P. *betae*) including thereby transmitted viral diseases; *Pseudocercosporella herpotrichoides* (syn. *Oculimacula yallundae, O. acuformis:* eyespot, teleomorph: *Tapesia yallundae*) on cereals, e.g. wheat or barley; *Pseudoperonospora* (downy mildew) e.g. on cucurbits (P. *cubensis*) and hop (P. *humili*); *Pseudopezicula tracheiphila* (red fire disease or ,rotbrenner', anamorph: *Phialophora*) on vines; *Puccinia* spp. (rusts) e.g. on cereals (wheat, barley or rye: *P*. *triticina:* brown or leaf rust, *P. striiformis:* stripe or yellow rust, *P. hordei:* dwarf rust, *P. graminis:* stem or black rust, *P. recondita:* brown or leaf rust), sugar cane (P. *kuehnii:* orange rust) and aspargus (P. *asparagi); Pyrenopeziza spp.* e.g. on oilseed rape (P. *brassicae); Pyrenophora* (anamorph: *Drechslera) tritici-repentis* (tan spot) on wheat or *P*. *teres* (net blotch) on barley; *Pyricularia* spp., e.g. *P. oryzae* (teleomorph: *Magnaporthe grisea:* rice blast) on rice and *P*. *grisea* on turf and cereals; *Pythium* spp. (damping-off) e.g. on turf, rice, corn, wheat, cotton, oilseed rape, sunflower, soybeans, sugar beets, vegetables (e.g. *P. ultimum* or *aphanidermatum)* and mushrums (P. *oligan-drum*); *Ramularia* spp., e.g. *R. collo-cygni* (Ramularia leaf spots) on barley, *R. areola* (teleomorph: *Mycosphaerella areola*) on cotton and *R. beticola* on sugar beets; *Rhizoctonia* spp. e.g. on cotton, rice, potatoes, turf, corn, oilseed rape, potatoes, sugar beets, vegetables, soybeans (*R*. *solani:* root and stem rot), rice (*R*. *solani:* sheath blight) and wheat and barley (R. *cerealis:* spring blight); *Rhizopus stolonifer* (black mold, soft rot) on strawberries, carrots, cabbage, vines and tomatoes; *Rhynchosporium secalis* and *commune* (scald) on barley, rye and triticale; *Sarocla-dium oryzae* and *attenuatum* (sheath rot) on rice; *Sclerotinia* spp. (stem rot or white mold) on vegetables (*S*. *minor* and S. *sclerotiorum*) and field crops, such as oilseed rape, sunflowers (*S*. *sclerotiorum*) and soybeans (*S*. *sclerotiorum and rolfsii*)*,* peanut, vegetables, corn, cereals and ornamentals; *Septoria* spp. on various plants, e.g. S. *glycines* (brown spot) on soybeans, S. *tritici* (syn. *Zymoseptoria tritici,* Septoria blotch) on wheat and S. (syn. *Stagonospora) nodorum* (Stagonospora blotch) on cereals; *Uncinula* (syn. *Erysiphe) necator* (powdery mildew, anamorph: *Oidium tuckeri*) on vines; *Setosphaeria* spp. (leaf blight) on corn (S. *turcicum,* syn. *Helminthosporium)* and turf; *Sphacelo-theca* spp. (smut) on corn, (*S. reiliana,* syn. *Ustilago:* head smut), sorghum und sugar cane; *Sphaerotheca fuliginea* (syn. *Podosphaera xanthii:* powdery mildew) on cucurbits; *Spongospora subterranea* (powdery scab) on potatoes and thereby transmitted viral diseases; *Stagonospora* spp. on cereals (wheat: S. *nodorum:* Stagonospora blotch, teleomorph: *Lepfosphaeria*); *Synchytrium endobioticum* on potatoes (potato wart disease); *Taphrina* spp., e.g. *T. deformans* (leaf curl disease) on peaches and *T. pruni* (plum pocket) on plums; *Thielaviopsis* spp. (black root rot) on tobacco, pome fruits, vegetables, soybeans and cotton, e.g. *T. basicola* (syn. *Chalara elegans*); *Tilletia* spp. (common bunt or stinking smut) on cereals (wheat: *T. tritici*: wheat bunt, *T. controversa:* dwarf bunt); *Trichoderma harzianum* on mushrooms; *Typhula incarnata* (grey snow mold) on barley or wheat; *Urocystis* spp., e.g. *U. occulta* (stem smut) on rye; *Uromyces* spp. (rust) on vegetables (beans: *U. appendiculatus,* syn. *phaseoli*)*,* sugar beets (U. *betae* or *beticola*) and on pulses (*U. vignae, pisi, viciae-fabae* and *fabae*); *Ustilago* spp. (loose smut) on cereals (U. *nuda* and *avaenae*), corn (*U. maydis:* corn smut) and sugar cane; *Venturia* spp. (scab) on apples (V. *inaequalis*) and pears; and *Verticillium* spp. (wilt) e.g. on fruits (strawberry: V. *dahliae*)*,* ornamentals, vines, soft fruits, vegetables and field crops (oilseed rape: V. *longisporum*)*,* and mushrooms (V. *fungicola); Zymoseptoria tritici* on cereals.

The mixtures and compositions thereof, respectively, are particularly suitable for controlling the following causal agents of plant diseases: rusts on soybean and cereals (e.g. *Phakopsora pachyrhizi* and *P. meibomiae* on soy; *Puccinia tritici* and *P. striiformis* on wheat); molds on specialty crops, soybean, oil seed rape and sunflowers (e.g. *Botrytis cinerea* on strawberries and vines, *Sclerotinia sclerotiorum,* S. *minor* and S. *rolfsii* on oil seed rape, sunflowers and soybean); Fusarium diseases on cereals (e.g. *Fusarium culmorum* and *F. graminearum* on wheat); downy mildews on specialty crops (e.g. *Plasmopara viticola* on vines, *Phytophthora infestans* on potatoes); powdery mildews on specialty crops and cereals (e.g. *Uncinula necator* on vines, *Erysiphe* spp. on various specialty crops, *Blumeria graminis* on cereals); and leaf spots on cereals, soybean and corn (e.g. *Septoria tritici* and S. *nodorum* on cereals, S. *glycines* on soybean, *Cercospora* spp. on corn and soybean).

The mixtures and compositions thereof, respectively, are particularly suitable for controlling the following causal agents of plant diseases: rusts (*Puccinales* fungi) on various plants; preferably rusts on soybean and cereals; more preferably selected from *Phakopsora pachyrhizi* and *P. meibomiae* causing Asian soybean rust on soy, *Puccinia graminis* causing stem or black rust on cereals, *P. triticina* (syn. *P. recondita*) causing wheat brown or leaf rust, *P*. *striiformis* causing yellow or stripe rust on wheat, *P. hordei* causing barley leaf rust, *P. sorghi* causing common corn rust, and *P. polysora* causing Southern leaf corn rust.

Thus, the invention also relates to a method for treating phytopathogenic rust fungi (from the order of *Puccinales*) comprising: treating the infected plants curatively and/or preventively the plants that are at risk of being diseased from the said phytopathogenic rust fungi, and/or applying to the said phytopathogenic fungi, with an agrochemical composition comprising at least a pesticide II as defined herein and one compound I at a dose rate of 50 to 200 g per ha, more preferably in said method the plants are selected from soybean and cereals.

It has been observed that populations of phytopathogenic fungi apparently consisting of non-resistant strains can readily develop resistance. The mixtures can be applied under such conditions, too, to prevent the formation of resistance and the spread of resistant strains altogether. In this regard it is useful that they have strong activity also against non-resistant phytopathogenic fungi.

Fungicide-resistant strains of various phytopathogenic fungi have been reported, with strains resistant to one or more fungicides from various mode of action classes being observed by target-site mutations in the genes of the respective proteins (e.g. Qol (C3, according to FRAC convention, for details www.frac.info), quinone outside stigmatellin binding subsite inhibitors (QoSI; C8), and quinone inside inhibitors (Qil; C4): CytB target protein; sterol demeth-ylation (DMI, G1): Cyp51[Erg11]; carboxylic acid amides (CAA, H5): CesA3; SDHI (C2): SdhB, SdhC and SdhD; dicarboximides (E3): Os-1 (including Bos1, Daf1 etc.); keto reductase inhibitors (KRI; Class III SBIs; G3): Erg27; and oxysterol binding protein inhibitors (OSBPI; F9): ORP1.

Examples of mutation sites of genes encoding such target proteins resulting in the listed single amino acid exchanges, deletions or insertions in the respective target protein sequences conferring resistance against certain fungicides in phytopathogenic fungi are indicated in Table M (see also Pest Manag Sci 72(8) 2016: 1449-1459).

**Table M:**

| **Fungus** | **Target proteins of fungicides: amino acid changes, deletions, or insertions** (separated by commas) |
|---|---|
| *Alternaria alternata* | CytB: G143A; SdhB: H277R/Y; SdhC: H134R; SdhD: H133R |
| A. *arborescens* | CytB: G143A |
| A. *brassicicola* | Os-1: E753K |
| *A. longipes* | Os-1: G420D |
| *A. solani* | CytB: F129L; Cyp51: L143F, G446S, G462S; SdhB: H278R/Y; SdhC: N75S, H134R; SdhD: H133R |
| *A. tomatophila* | CytB: G143A |
| *Aspergillus flavus* | Cyp51: Y132N, K197N, D282E, M288L, H399P, T469S, D411N, T454P |
| *A. fumigatus* | Cyp51: N22D, S52T, G54E/K/R/V/W**, Q88H, L98H, V101F, Y121F, N125I, G138C/R/S, Q141H, H147Y, F219S, M220K/I/T/V, T289A, S297T, P394L, Y431C, G432S, G434C, T440A, G448S, Y491H, F495I |
| A. *parasiticus* | Cyp51: G54W |
| *Blumeria graminis f. sp. hordei* | CytB: G143A; Cyp51: S97T, Y136F, K147Q, S509T |
| *B. g. f. sp. tritici* | CytB: G143A; Cyp51: S79T, Y136F, K175N, V349A, S509T |
| *Botryotinia fuckeliana* | CytB: G143A; SdhB: P225H/F/L/T, N230I, H272L/R/V/Y: SdhC: P80H/L, A85V; SdhD: H132R; Os-1: I365N/R/S, V368F, Q369H/P, N373S, T447S; Erq27: S9G, F26S, P57A, T63I, G170R, V192I, L195F, N196T, A210G, I232M, P238S/Δ, P250S, P269L, ΔP298, V309M, A314V, S336C, V365A, E368D, N369D, E375K, A378T, L400F/S, Y408S, F412I/S/V/C, A461S, R496T |
| *Candida albicans* | Cyp51: A61V, Y132F/H, K143E, S405F, F449S, G464S, R467K, I471T |
| *Cercospora beticola* | CytB: G143A; Cyp51: L144F, M145W, E297K, I309T, I330T, P384S, I387M, E460Q, Y464S |
| *C. sojina* | CytB: G143A |
| *Cladosporium carpophilum* | CytB: G143A |
| *Colletotrichum graminicola* | CytB: G143A |
| *Corynespora cassiicola* | CytB: G143A; SdhB: H278R, H278Y, I280V; SdhC: S73P, N75S; SdhD: S89P, G109V |
| *Didymella rabiei* | CytB: G143A |
| *Erysiphe necator* | CytB: G143A; Cyp51: Y136F; SdhB: H242R; I244V; SdhC: A83V, G169D/S |
| *Eurotium oryzae* | SdhB: H249L/N/Y; SdhC: T90I; SdhD: D124E |
| *Glomerella cingulata* | CytB: G143A |
| *G. graminicola* | CytB: G143A |
| *Magnaporthe oryzae* | CytB: F129L, G143A |
| *Microdochium majus; nivale* | CytB: G143A |
| *Monilinia fructicola* | Cyp51: Y136F, A381G |
| *Mycosphaerella fijiensis* | CytB: G143A; Cyp51: S97T, Y136F, A313G, A381G, Y461D, G462A, Y463D/H/N |
| *Parastagonospora nodorum* | CytB: G143A; Cyp51: Y134F |
| *Phakopsora pachyrhizi* | CytB: F129L; Cyp51: F120L, V130A, Y131F/H, K142R, I145F/V, F154Y, I475T; SdhC: I86F, N88S/D, G92R, H154R, |
| *Phytophthora capsici* | CesA3: Q1077K, V1109L/M; ORP1*: L733W, N767I, S768F/Y, G770V, ΔG818+ΔF819, N835S/Δ, N837F, N837T+S910C, G839W, P861H, L863W, I877F/Y |
| *P. drechsleri* | CesA3: V1109L |
| *P. infestans* | CesA3: G1105S/A/V, V1109L; ORP1*: G770V, N837I/F/L, I877F |
| *P. sojae* | ORP1*: L733W, S768F, S768Y, N837F, N837Y, P861H, L863W, I877Y |
| *Plasmopara viticola* | CytB: S34L, F129L, G143A, L201S, E203-DE-V204#, E203-VE-V204#; E203-E-V204^{#}; CesA3: G1105S/V; ORP1: N837I, I877F |
| *Plenodomus biglobosus* | SdhB: H274Y, I276V; SdhC: S132R |
| *Pleospora allii* | CytB: G143A; SdhB: P225L, H272R/Y; Os-1: F267L, L290S, T765R, Q777R |
| *Podosphaera fusca* | CytB: G143A |
| *P. leucofricha* | SdhC: G149R |
| *P. xanthii* | CytB: G143A; SdhB: K39E, N201I, I245V; SdhC: A86V, G151R, G172D, S176D; SdhD: S121P, H137R/Q |
| *Pseudoperonospora cubensis* | CytB: G143A; CesA3: G1105V/W; ORP1*: G705V, L798W, I812F |
| *Puccinia friticina* | Cyp51: Y134F; SdhC: I87F, N89S/K |
| *Pyrenopeziza brassicae* | Cyp51: S508T |
| *Pyrenophora teres* | CytB. F129L; G143A; SdhB: H277Y; SdhC: K49E, R64K, S73P, N75S, G79R, H134R, S135R; SdhD: D124E/N, H134R/Y, G138V, D145G, E178K |
| *P. tritici-repentis* | CytB: F129L, G137R, G143A |
| *Pythium aphanidermatum* | CytB: F129L |
| *Ramularia collo-cygni* | CytB: G143A; Cyp51: A311S, I325T, I328L, I381T, I384L, Y405H, D458G, Y459C/N, G460D/V, Y461H, Y461N; SdhB: N224T, R264P, H266L/R/Y, T267I, I268V, R364P; SdhC: N87S/Y, G91R, H146R/L, R152M, H153R, G171D |
| *Rhynchosporium secalis* | CytB: G143A; SdhC: N85S |
| *Saccharomyces cerevisiae* | Cyp51: Y140F/H |
| *Sclerotinia sclerotiorum* | SdhB: H273R, H273Y; SdhC: G91R, H146R, G150R; SdhD: T108K, H132R |
| *Stagonosporopsis cucurbifacearum* | SdhB: H277R, H277Y |
| *Thanatephorus cucumeris* | CytB: F129L |
| *Ustilago maydis* | SdhB: H257L |
| *Venturia inaequalis* | CytB: G143A; Cyp51: V132A, Y133F, L140F, M141V, M141T, M190L, E441 K/G, D442H/Y, Y443C/D, G444D/S, Y445H/S; SdhB: T253I; SdhC: N85S, H151R |
| *Zymoseptoria tritici* | CytB: G37V, F129L, Y132C, G137R, G143A; Cyp51: L50S, D107V, D134G, V136A/C/G, Y137F, M145L, N178S, S188N, S208T, N284H, H303Y, A311G, G312A, A379G, I381V/P/Δ, A410T, G412A, Y459C/D/N/S/P/Δ, G460D, ΔG460, Y461D/H/S, V490L, G510C, N513K, S524T; SdhB: N225I/T, T268I/A, I269V, H273Y; SdhC: I29V, N33T, N34T, T79I/N, W80L/S, A84I/V, L85P, N86K/S/A/G, G90R, H145R, R151 M/G/T/S, H152R/Y, I161S, V166M, G170D; SdhD: R47W, I50F, M114V, D129E/G/S/T, R135S, G179D, K186R |

| | |
|---|---|
| * based on alignment to reference sequence from *Phytophthora infestans*; ** G54E/K/R/V/W indicates the possibility of five different amino acid changes at position 54; Δ indicates a deletion of an amino acid; # refers to an amino acid insertion. | |

Thus, the mixtures are particularly useful to control such fungicide-resistant strains of phytopathogenic fungi described in Table M. Such strains may have one or more resistances derived from one or more mutations of one or more genes encoding target proteins of various kinds of the fungicides including, but not limited to, the mutations listed in Table M and/or a resistance derived from an overexpression of the respective target protein.

In addition, certain strains of fungi may have developed so-called multidrug resistance eventually leading to a broad cross resistance to many structurally and functionally unrelated compounds. "Multidrug resistance" (MDR) also called "pleiotropic drug resistance" (PDR) describes a resistance phenomenon usually caused by overexpression of certain membrane transporters, leading to an increased activity of efflux pump which export certain substrates, e.g., fungal toxins but also fungicidal compounds. Examples of such membrane transporters include ATP-binding cassette (ABC) transporters and Major Facilitator Superfamily (MFS) transporters. Overexpression of membrane transporters can be confirmed, e.g., by measuring an amount of the transporter protein or of the corresponding mRNA. The measured amount of mRNA may be, e.g., 2-fold, 5-fold, 20-fold, up to 100-fold or more, relative to the mRNA amount of the corresponding fungicide-sensitive wild-type fungus.

The mixtures can be applied to control a plant disease that is caused by a multidrug-resistant (MDR) fungus. The multidrug-resistant fungus may have in addition one or more resistances derived from one or more mutations of one or more genes encoding target proteins of various kinds of the fungicides including but not limited to the mutations listed in Table M and/or a resistance derived from an overexpression of the target protein. Thus, the mixtures are also particularly useful to control such multidrug-resistant fungi.

According to another embodiment of the invention, the invention also relates to a use of the mixtures according to the invention for combating phytopathogenic fungi containing a mutation in the mitochondrial cytochrome b gene conferring resistance to Qo inhibitors. According to a further embodiment of the invention, the invention also relates to a method for combating phytopathogenic fungi containing a mutation in the mitochondrial cytochrome b gene conferring resistance to Qo inhibitors, comprising: treating the phytopathogenic fungi containing a mutation in the mitochondrial cytochrome b gene conferring resistance to Qo inhibitors or the materials, plants, the soil or seeds that are at risk of being diseased from phytopathogenic fungi containing a mutation in the mitochondrial cytochrome b gene conferring resistance to Qo inhibitors with an effective amount of a mixture according to the invention, or a composition comprising it thereof.

The term "phytopathogenic fungi containing a mutation in the mitochondrial cytochrome b gene conferring resistance to Qo inhibitors" is to be understood that at least 10% of the fungal isolates to be controlled contain a mutation in the mitochondrial cytochrome b gene conferring resistance to Qo inhibitors, more preferably at least 30%, even more preferably at least 50%, and most preferably at least 75% of the fungi, in particular from 90 to 100%.

According to another embodiment of the invention, the invention also relates to a method for combating phytopathogenic fungi containing a mutation in the mitochondrial cytochrome b gene conferring resistance to Qo inhibitors, comprising: treating the phytopathogenic fungi whereof at least 10% contain a mutation in the mitochondrial cytochrome b gene conferring resistance to Qo inhibitors or the materials, plants, the soil or seeds that are at risk of being diseased from phytopathogenic fungi containing a mutation in the mitochondrial cytochrome b gene conferring resistance to Qo inhibitors with a mixture according to the invention, or a composition comprising it thereof; more preferably at least 30%, even more preferably at least 50%, and most preferably at least 75% of the fungi contain a mutation in the mitochondrial cytochrome b gene conferring resistance to Qo inhibitors.

According to one embodiment of the use and the method for combating phytopathogenic fungi containing a mutation in the mitochondrial cytochrome b gene conferring resistance to Qo inhibitors, the mutation in the mitochondrial cytochrome b gene of the phytopathogenic fungi is G143A.

The mutation G143A in the cytochrome b (cytb, also referred to as cob) gene shall mean any substitution of nucleotides of codon 143 encoding "G" (glycine; e.g. GGT, GGC, GGA or GGG) that leads to a codon encoding "A" (alanine; e.g. GCT, GCC, GCA or GCG), for example the substitution of the second nucleotide of codon 143 'G' to 'C' (GGT to GCT), in the cytochrome b gene resulting in a single amino acid substitution in the position 143 from G (glycine) to A (alanine) (G143A) in the cytochrome b protein (Cytb). In the present invention, the mutation G143A in the cytochrome b gene shall be understood to be a single amino acid substitution in the position 143 from G (glycine) to A (alanine) (G143A) in the cytochrome b protein.

According to a further embodiment, the phytopathogenic fungi containing a mutation in the mitochondrial cytochrome b gene conferring resistance to Qo inhibitors, wherein the mutation in the mitochondrial cytochrome b gene of the phytopathogenic fungi is G143A, are selected from the group consisting of *Alternaria alternata, Blumeria graminis, Pyriculania oryzae* (also known as *Magnaporthe grisea*), *Septoria tritici* (also known as *Mycosphaerella graminicola*)*, Mycosphaerella fijiensis, Venturia inaequalis, Pyrenophora teres, Pyrenophona tritici-repentis* and *Plasmopara viticola,* in particular *Septoria tritici.*

According to another embodiment of the use and the method for combating phytopathogenic fungi containing a mutation in the mitochondrial cytochrome b gene conferring resistance to Qo inhibitors, the mutation in the mitochondrial cytochrome b gene is F129L.

The mutation F129L in the cytochrome b (cytb, also referred to as cob) gene shall mean any substitution of nucleotides of codon 129 encoding "F" (phenylalanine; e.g. TTT or TTC) that leads to a codon encoding "L" (leucine; e.g. TTA, TTG, TTG, CTT, CTC, CTA or CTG), for example the substitution of the first nucleotide of codon 129 'T' to 'C' (TTT to CTT), in the cytochrome b gene resulting in a single amino acid substitution in the position 129 from F (phenylalanine) to L (leucine) (F129L) in the cytochrome b protein (Cytb). In the present invention, the mutation F129L in the cytochrome b gene shall be understood to be a single amino acid substitution in the position 129 from F (phenylalanine) to L (leucine) (F129L) in the cytochrome b protein.

Many other phytopathogenic fungi acquired the F129L mutation in the cytochrome b gene conferring resistance to Qo inhibitors, such as rusts, in particular soybean rust (*Phakopsora pachyrhizi* and *Phakopsora meibromiae*) as well as fungi from the genera Alternaria, Pyrenophora and Rhizoctonia. Preferred fungal species are *Alternaria solani, Phakopsora pachyrhizi, Phakopsora meibromiae, Pyrenophora teres, Pyrenophora tritici-repentis* and *Rhizoctonia solani;* in particular *Phakopsora pachyrhizi.*

In one aspect, the present invention relates to the method of protecting plants susceptible to and/or under attack by phytopathogenic fungi containing an amino acid substitution F129L in the mitochondrial cytochrome b protein conferring resistance to Qo inhibitors, which method comprises applying to said plants, treating plant propagation material of said plants with, and/or applying to said phytopathogenic fungi, a mixture according to the invention or a composition comprising such mixture.

According to another embodiment, the method for combating phytopathogenic fungi, comprises: a) identifying the phytopathogenic fungi containing an amino acid substitution F129L in the mitochondrial cytochrome b protein conferring resistance to Qo inhibitors, or the materials, plants, the soil or seeds that are at risk of being diseased from phytopathogenic fungi as defined herein, and b) treating said fungi or the materials, plants, the soil or plant propagation material with a mixture according to the invention, or a composition comprising it thereof.

The term "phytopathogenic fungi an amino acid substitution F129L in the mitochondrial cytochrome b protein conferring resistance to Qo inhibitors" is to be understood that at least 10% of the fungal isolates to be controlled contain a such F129L substitution in the mitochondrial cytochrome b protein conferring resistance to Qo inhibitors, preferably at least 30%, more preferably at least 50%, even more preferably at at least 75% of the fungi, most preferably between 90 and 100%; in particular between 95 and 100%.

The mixtures and compositions thereof, respectively, are also suitable for controlling harmful microorganisms in the protection of stored products or harvest, and in the protection of materials.

The term "stored products or harvest" is understood to denote natural substances of plant or animal origin and their processed forms for which long-term protection is desired. Stored products of plant origin, e.g. stalks, leaves, tubers, seeds, fruits or grains, can be protected in the freshly harvested state or in processed form, e.g. pre-dried, moistened, comminuted, ground, pressed or roasted, which process is also known as post-harvest treatment. Also falling under the definition of stored products is timber, whether in the form of crude timber, such as construction timber, electricity pylons and barriers, or in the form of finished articles, such as furniture or objects made from wood. Stored products of animal origin are hides, leather, furs, hairs and alike. Preferably, "stored products" is understood to denote natural substances of plant origin and their processed forms, more preferably fruits and their processed forms, such as pomes, stone fruits, soft fruits and citrus fruits and their processed forms, where application of the mixtures and compositions thereof can also prevent disadvantageous effects such as decay, discoloration or mold.

The term "protection of materials" is to be understood to denote the protection of technical and non-living materials, such as adhesives, glues, wood, paper, paperboard, textiles, leather, paint dispersions, plastics, cooling lubricants, fiber, or fabrics against the infestation and destruction by harmful microorganisms, such as fungi and bacteria.

When used in the protection of materials or stored products, the amount of active substance applied depends on the kind of application area and on the desired effect. Amounts customarily applied in the protection of materials are 0.001 g to 2 kg, preferably 0.005 g to 1 kg of active substance per cubic meter of treated material.

The mixtures and compositions thereof, respectively, may be used for improving the health of a plant. The invention relates to a method for improving plant health by treating a plant, its propagation material, and/or the locus where the plant is growing or is to grow with an effective amount of the mixtures and compositions thereof, respectively.

The term "plant health" is to be understood to denote a condition of the plant and/or its products which is determined by several indicators alone or in combination with each other, such as yield (e.g. increased biomass and/or increased content of valuable ingredients), plant vigor (e.g. improved plant growth and/or greener leaves ("greening effect")), quality (e.g. improved content or composition of certain ingredients), and tolerance to abiotic and/or biotic stress. The above identified indicators for the health condition of a plant may be interdependent or may result from each other.

The mixtures are employed as such or in form of compositions by treating the fungi, the plants, plant propagation materials, such as seeds; soil, surfaces, materials, or rooms to be protected from fungal attack with a fungicidally effective amount of the active substances. The application can be carried out both before and after the infection of the plants, plant propagation materials, such as seeds; soil, surfaces, materials or rooms by the fungi.

An agrochemical composition comprises a fungicidally effective amount of a mixture. The term "fungicidally effective amount" denotes an amount of the composition or of the mixture, which is sufficient for controlling harmful fungi on cultivated plants or in the protection of stored products or harvest or of materials and which does not result in a substantial damage to the treated plants, the treated stored products or harvest, or to the treated materials. Such an amount can vary in a broad range and is dependent on various factors, such as the fungal species to be controlled, the treated cultivated plant, stored product, harvest or material, the climatic conditions, and the specific mixture used.

Plant propagation materials may be treated with mixtures as such or a composition comprising such mixture prophylactically either at or before planting or transplanting.

When employed in plant protection, the amounts of active substances applied range, depending on the kind of effect desired, from 0.001 to 2 kg per ha, preferably from 0.005 to 2 kg per ha, more preferably from 0.05 to 0.9 kg per ha, and in particular from 0.1 to 0.75 kg per ha.

In treatment of plant propagation materials such as seeds, e.g. by dusting, coating, or drenching, amounts of active substance per 100 kg of plant propagation material (preferably seeds) range generally from 0.1 to 1000 g, preferably from 1 to 1000 g, more preferably from 1 to 100 g and most preferably from 5 to 100 g.

The user applies the agrochemical composition usually from a predosage device, a knapsack sprayer, a spray tank, a spray plane, or an irrigation system. Usually, the agrochemical composition is made up with water, buffer, and/or further auxiliaries to the desired application concentration and the ready-to-use spray liquor or the agrochemical composition according to the invention is thus obtained. Usually, 20 to 2000 liters, preferably 50 to 400 liters, of the ready-to-use spray liquor are applied per hectare of agricultural useful area.

The mixtures and the compositions containing them may be applied in combination with, or by utilizing smart agricultural technologies, such as precision agriculture, remote and proximate imaging and image recognition, or smart agricultural site management programs. Such technologies typically include models, e.g. computer programs, that support the user by considering information from a variety of sources to increase quality and yield of harvested material, reduce damage by pests including the prediction of pest pressure and smart application of crop protection products, secure environmental protection, support quick and reliable agronomic decision making, reduce usage of fertilizers and crop protection products, reduce product residues in consumables, increase spatial and temporal precision of agronomical measures, automate processes, and enable traceability of measures. Commercially available systems which include agronomic models are e.g. FieldScripts^{™} (The Climate Corporation), Xarvio^{™} (BASF) and AGLogic^{™} (John Deere).

Information input for these models includes, but is not limited to, soil data, information on: the plants that are currently growing or that may grow at the area of interest including crops and/or unwanted vegetation, weather, the location of the area and directly derivable information thereof, pest pressure, beneficial organisms; comprising forecast, present and / or historic information of any of the aforementioned.

The information usable for precision agriculture may be based on input by at least one user, be accessible from external data sources and databases, or be based on sensor data. Data sources typically include proximate-detection systems like soil-borne sensors and remote sensing as may be achieved by imaging with unmanned airborne vehicles like drones, or satellites. Sensors may be included in an Internet-of-Things system and may be directly or indirectly connected to the processing unit, e.g. via a wireless network and/or cloud applications. The information is typically taken into account by at least one processing unit and used to provide recommendations, and to generate control signals.

Typical technologies that are used in smart agricultural technologies include self-steering ro-bots (such as tractors, harvesters, drones), artificial intelligence (e.g. machine learning), imaging technologies (e.g. image segmentation technologies), big data analysis, model generation, cloud computing, and machine-to-machine communication.

Precision agriculture or farming is characterized by spatially and/or temporally resolved, targeted application of active ingredients like pesticides, plant-growth-regulators, fertilizers, and/or water including the variation of application rates over the agronomic site, zone or spot application, and of the spatially and/or temporally resolved, targeted planting or seeding of desired plant propagation material to an agronomic site. Precision farming typically includes the use of geo-positioning technologies like GPS for gaining information on the location and boundaries of the area of interest, the utilized application equipment, sensing equipment and recorded data, and to control the actions of farm vehicles such as spraying. By combining geo-positioning data with (digital) maps, it is possible to (semi)-automate agricultural measures at the site of interest, e.g. by using (semi)-autonomous spraying or seeding equipment. Precision farming typically includes the application of smart spraying equipment, e.g. spot spraying, and precision spraying, e.g. by irrigation systems, tractors, robots, helicopters, airplanes, unmanned aerial vehicles, such as drones. Such equipment usually includes input sensors (e.g. camera) and a processing unit configured to analyze the input data and configured to provide a recommendation or decision based on the analysis of input data to apply the compounds I or compositions comprising them to the agronomic site, e.g. the soil, the crop plants, or to control pests in a specific and precise manner. Pests may be detected, identified, and/or classified from imagery acquired by a camera. Such identification and classification can make use of image processing algorithms, which may utilize artificial intelligence (e.g. machine learning algorithms), or decision trees. In this manner, the compounds I or compositions described herein can be applied only at the required location, point in time and dose rate.

The mixtures according to the invention can be converted into customary types of agrochemical compositions, such as solutions, emulsions, suspensions, dusts, powders, pastes, granules, pressings, capsules, and mixtures thereof. Examples for composition types (see also "Catalogue of pesticide formulation types and international coding system", Technical Monograph No. 2, 8th Ed. May 2022, CropLife International) are suspensions (e.g. SC, CD, FS), emulsifiable concentrates (e.g. EC), emulsions (e.g. EW, EC, ES, ME), capsules (e.g. CS, ZC), pastes, pastilles, wettable powders or dusts (e.g. WP, SP, WS, DP, DS), pressings (e.g. BR, TB, DT), granules (e.g. WG, SG, GR, FG, GG, MG), insecticidal articles (e.g. LN), as well as gel formulations for the treatment of plant propagation materials, such as seeds (e.g. GF). The compositions are prepared in a known manner (e.g. Mollet and Grubemann, Formulation technology, Wiley VCH, Weinheim, 2000; Agrow Reports DS243, T&F Informa, London, 2005). The invention also relates to agrochemical compositions comprising an auxiliary and a mixture as defined herein.

Suitable auxiliaries are solvents, liquid carriers, solid carriers or fillers, surfactants, dispersants, emulsifiers, wetters, adjuvants, solubilizers, penetration enhancers, protective colloids, adhesion agents, thickeners, humectants, repellents, attractants, feeding stimulants, compatibilizers, bactericides, anti-freezing agents, anti-foaming agents, colorants, tackifiers, and binders.

Suitable solvents and liquid carriers are water and organic solvents, such as mineral oil fractions of medium to high boiling point, e.g. kerosene, diesel oil; oils of vegetable or animal origin; aliphatic, cyclic and aromatic hydrocarbons, e.g. toluene, paraffin, tetrahydronaphthalene, and alkylated naphthalenes; alcohols, e.g. ethanol, propanol, butanol, benzyl alcohol, cyclohexanol, glycols; dimethyl sulfoxide (DMSO); ketones, e.g. cyclohexanone; esters, e.g. lactates, carbonates, fatty acid esters, gamma-butyrolactone; fatty acids; phosphonates; amines; amides, e.g. N-methyl pyrrolidone, fatty acid dimethyl amides; and mixtures thereof.

Suitable solid carriers or fillers are mineral earths, e.g. silicates, silica gels, talc, kaolins, limestone, lime, chalk, clays, dolomite, diatomaceous earth, bentonite, calcium sulfate, magnesium sulfate, magnesium oxide; polysaccharides, e.g. cellulose, starch; fertilizers, e.g. ammonium sulfate, ammonium phosphate, ammonium nitrate, ureas; products of vegetable origin, e.g. cereal meal, tree bark meal, wood meal, nutshell meal, and mixtures thereof.

Suitable surfactants are surface-active compounds, such as anionic, cationic, nonionic and amphoteric surfactants, block polymers, polyelectrolytes, and mixtures thereof. Such surfactants can be used as emulsifier, dispersant, solubilizer, wetter, penetration enhancer, protective colloid, or adjuvant. Examples of surfactants are listed in McCutcheon's, Vol.1: Emulsifiers & Detergents, McCutcheon's Directories, Glen Rock, USA, 2008 (Int. Ed. or North American Ed.).

Suitable anionic surfactants are alkali, alkaline earth or ammonium salts of sulfonates, sulfates, phosphates, carboxylates, and mixtures thereof. Examples of sulfonates are alkylaryl sulfonates, diphenyl sulfonates, alpha-olefin sulfonates, lignin sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and of alkyl naphthalenes, sulfosuccinates, or sulfosuccinamates. Examples of sulfates are sulfates of fatty acids, of oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates.

Suitable nonionic surfactants are alkoxylates, *N*-substituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of *N*-substituted fatty acid amides are fatty acid glucamides or fatty acid alkanolamides. Examples of esters are fatty acid esters, glycerol esters, or monoglycerides. Examples of sugar-based surfactants are sorbitans, ethoxylated sorbitans, sucrose and glucose esters, or alkylpolyglucosides. Examples of polymeric surfactants are home- or copolymers of vinyl pyrrolidone, vinyl alcohols, or vinyl acetate.

Suitable cationic surfactants are quaternary surfactants, for example quaternary ammonium compounds with one or two hydrophobic groups, or salts of long-chain primary amines. Suitable amphoteric surfactants are alkylbetains and imidazolines. Suitable block polymers are block polymers of the A-B or A-B-A type comprising blocks of polyethylene oxide and polypropylene oxide, or of the A-B-C type comprising alkanol, polyethylene oxide, and polypropylene oxide. Suitable polyelectrolytes are polyacids or polybases. Examples of polyacids are alkali salts of polyacrylic acid or polyacid comb polymers. Examples of polybases are polyvinyl amines or polyethylene amines.

Suitable adjuvants are compounds, which have a negligible or even no pesticidal activity themselves, and which improve the biological performance of the mixtures according to the invention on the target. Examples are surfactants, mineral or vegetable oils, and other auxiliaries, e.g. as listed by Knowles, Adjuvants and additives, Agrow Reports DS256, T&F Informa UK, 2006, chapter 5. Suitable thickeners are polysaccharides (e.g. xanthan gum, carboxymethyl cellulose), inorganic clays (organically modified or unmodified), polycarboxylates, and silicates. Suitable bactericides are bronopol and isothiazolinone derivatives, such as alkylisothiazolinones and benzisothiazo-linones. Suitable anti-freezing agents are ethylene glycol, propylene glycol, urea, and glycerin. Suitable anti-foaming agents are silicones, long chain alcohols, and salts of fatty acids. Suitable colorants (e.g. in red, blue, or green) are pigments of low water solubility and water-soluble dyes. Examples are inorganic colorants (e.g. iron oxide, titan oxide, iron hexacyanoferrate) and organic colorants (e.g. alizarin-, azo- and phthalocyanine colorants). Suitable tackifiers or binders are polyvinyl pyrrolidones, polyvinyl acetates, polyvinyl alcohols, polyacrylates, biological or synthetic waxes, and cellulose ethers.

The agrochemical compositions generally comprise between 0.01 and 95 %, preferably between 0.1 and 90 %, more preferably between 1 and 70 %, and in particular between 10 and 60 %, by weight of active ingredients (e.g. at least one compound I and at least one pesticide II). The agrochemical compositions generally comprise between 5 and 99.9 %, preferably between 10 and 99.9 %, more preferably between 30 and 99 %, and in particular between 40 and 90 %, by weight of at least one auxiliary. The active ingredients (e.g. compounds I and pesticides II, optionally pesticides III) are employed in a purity of 90 % to 100 %, preferably from 95-% to 100 % (according to NMR spectrum).

For the purposes of treatment of plant propagation materials, particularly seeds, solutions for seed treatment (LS), suspo-emulsions (SE), flowable concentrates (FS), powders for dry treatment (DS), water-dispersible powders for slurry treatment (WS), water-soluble powders (SS), emulsions (ES), emulsifiable concentrates (EC), and gels (GF) are usually employed. The compositions in question give, after two-to-tenfold dilution, active ingredients concentrations of 0.01 to 60 % by weight, preferably from 0.1 to 40 %, in the ready-to-use preparations. Application can be carried out before or during sowing. Methods for applying compound I and compositions thereof, respectively, onto plant propagation material, especially seeds, include dressing, coating, pelleting, dusting, soaking, as well as in-furrow application methods. Preferably, compound I or the compositions thereof, respectively, are applied on to the plant propagation material by a method such that germination is not induced, e.g. by seed dressing, pelleting, coating, and dusting.

Various types of oils, wetters, adjuvants, fertilizers, or micronutrients, and further pesticides (e.g. fungicides, growth regulators, herbicides, insecticides, safeners) may be added to the mixtures according to the invention or the compositions thereof as premix, or, not until immediately prior to use (tank mix). These agents can be admixed with the compositions according to the invention in a weight ratio of 1:100 to 100:1, preferably 1:10 to 10:1.

Mixing the binary mixtures according to the invention or the compositions comprising them in the use form as fungicides with other pesticides, in particular fungicides, results in many cases in an expansion of the fungicidal spectrum of activity or in a prevention of fungicide resistance development. Furthermore, in many cases, synergistic effects are obtained (synergistic mixtures).

The following list of pesticides III from classes A) to O), in conjunction with which the binary mixture of compounds I and pesticide II can be used, is intended to illustrate the possible combinations but does not limit them, provided that the pesticide III in a specific ternary mixture is different from the pesticide II in the specific mixture (component 2) and component 3) are not identical):
A) Respiration (C)
   - complex III at Qₒ site (Qol, C3): azoxystrobin (A.1.1), bifemetstrobin (A.1.24), bifujunzhi (A.1.37), coumethoxystrobin (A.1.2), coumoxystrobin (A.1.3), dimoxystrobin (A.1.4), enestroburin (A.1.5), famoxadone (A.1.21), fenamidone (A.1.23), fenaminstrobin (A.1.6), flufenoxystrobin (A.1.7), fluoxastrobin (A.1.8), kresoxim-methyl (A.1.9), mandestrobin (A.1.10), metominostrobin (A.1.11), metyltetraprole (A.1.25; member of MoA subgroup A), orysastrobin (A.1.12), picoxystrobin (A.1.13), pyraclostrobin (A.1.14), pyrametostrobin (A.1.15), pyraoxystrobin (A.1.16), pyribencarb (A.1.19), pyriminostrobin (A.1.36), triclopyricarb (A.1.20), trifloxystrobin (A.1.17), 2-(2-(3-(2,6-dichlorophenyl)-1-methyl-allylideneaminooxymethyl)-phenyl)-2-methoxyimino-*N*-methyl-acetamide (A.1.18), methyl-*N*-[2-[(1,4-dimethyl-5-phenyl-pyrazol-3-yl)oxylmethyl]phenyl]-*N*-methoxy-carbamate (A.1.22), (*Z*,2*E*)-5-[1-(2,4-dichlorophenyl)pyrazol-3-yl]-oxy-2-methoxyimino-*N*,3-dimethyl-pent-3-enamide (A.1.34), (*Z*,2*E*)-5-[1-(4-chlorophenyl)pyrazol-3-yl]oxy-2-methoxyimino-*N*,3-dimethyl-pent-3-enamide (A.1.35), 2-(ortho-((2,5-dimethylphenyl-oxymethylen)phenyl)-3-methoxy-acrylic acid methylester (A.1.38), methyl (*Z*)-3-methoxy-2-[2-methyl-5-(3-propylpyrazol-1-yl)phenoxy]prop-2-enoate, methyl (*Z*)-2-[5-(3-isopropylpyrazol-1-yl)-2-methyl-phenoxy]-3-methoxy-prop-2-enoate, methyl (*Z*)-3-methoxy-2-[2-methyl-5-[3-(trifluoromethyl)pyrazol-1-yl]phenoxy]prop-2-enoate, methyl (*Z*)-3-methoxy-2-[2-methyl-5-(4-propyltriazol-2-yl)phenoxy]prop-2-enoate, methyl (*Z*)-3-methoxy-2-[2-methyl-5-[4-(trifluoromethyl)triazol-2-yl]phenoxy]prop-2-enoate, methyl (*Z*)-2-[5-(4-isopropyl-triazol-2-yl)-2-methyl-phenoxy]-3-methoxy-prop-2-enoate, methyl (*Z*)-2-(5-cyclobutyl-2-methyl-phenoxy)-3-methoxy-prop-2-enoate, methyl (*Z*)-2-(5-cyclopentyl-2-methyl-phenoxy)-3-methoxy-prop-2-enoate, methyl (*Z*)-2-(5-cyclopropyl-2-methyl-phenoxy)-3-methoxy-prop-2-enoate, methyl (*Z*)-2-(5-cyclohexyl-2-methyl-phenoxy)-3-methoxy-prop-2-enoate, methyl (*E*)-3-methoxy-2-[(2-methyl-5-phenyl-phenyl)methyl]prop-2-enoate, methyl (*E*)-3-methoxy-2-[[5-[(*E*)-*N*-methoxy-*C*-methyl-carbonimidoyl]-2,4-dimethyl-phenyl]methyl]prop-2-enoate; methyl (*E*)-2-[[5-(2-cyclopropylethynyl)-2,4-dimethyl-phenyl]methyl]-3-methoxy-prop-2-enoate; methyl (*E*)-3-methoxy-2-(2-phenyl-1,3-benzoxazol-4-yl)prop-2-enoate; methyl (*E*)-3-methoxy-2-(2-phenyl-1,3-benzothiazol-4-yl)prop-2-enoate; methyl (*E*)-3-methoxy-2-(2-phenyl-1,3-benzoxazol-7-yl)prop-2-enoate; methyl (*Z*)-2-[6-(2-cyclopropyl-ethynyl)benzimidazol-1-yl]-3-methoxy-prop-2-enoate; methyl (*Z*)-3-methoxy-2-(6-phenylbenzimidazol-1-yl)prop-2-enoate; methyl (*Z*)-2-(3-chloro-6-phenyl-indol-1-yl)-3-methoxy-prop-2-enoate; methyl (*Z*)-2-(2,3-dichloro-6-phenyl-indol-1-yl)-3-methoxy-prop-2-enoate; methyl (*Z*)-3-methoxy-2-[6-[(*E*)-methoxyiminomethyl]indol-1-yl]prop-2-enoate; methyl (*Z*)-3-methoxy-2-[6-[(*E*)-*N*-methoxy-*C*-methyl-carbonimidoyl]indol-1-yl]prop-2-enoate, methyl *N*-[[5-[1-(2,6-difluoro-4-isopropyl-phenyl)pyrazol-3-yl]-2-methyl-phenyl]methyl]carbamate, methyl *N*-[[5-[1-(4-cyclopropyl-2,6-difluoro-phenyl)pyrazol-3-yl]-2-methyl-phenyl]methyl]carbamate, methyl *N*-[[5-[1-(4-chloro-2,6-difluoro-phenyl)pyrazol-3-yl]-2-methyl-phenyl]methyl]carbamate, methyl *N*-[[5-[1-[2,6-difluoro-4-(trifluoromethyl)phenyl]pyrazol-3-yl]-2-methyl-phenyl]methyl]carbamate;
   - complex III at Qᵢ site (Qil, C4): cyazofamid (A.2.1), amisulbrom (A.2.2), [(6*S*,7*R*,8*R*)-8-benzyl-3-[(3-hydroxy-4-methoxy-pyridine-2-carbonyl)amino]-6-methyl-4,9-dioxo-1,5-dioxonan-7-yl]-2-methylpropanoate (A.2.3), fenpicoxamid (A.2.4), florylpicoxamid (A.2.5), metarylpicoxamid (A.2.6);
   - complex II (SDHI, C2): benodanil (A.3.1), benzovindiflupyr (A.3.2), bixafen (A.3.3), boscalid (A.3.4), carboxin (A.3.5), cyclobutrifluram (A.3.24), fenfuram (A.3.6), fluopyram (A.3.7), flutolanil (A.3.8), fluxapyroxad (A.3.9), furametpyr (A.3.10), inpyrfluxam (A.3.22), isofetamid (A.3.11), isoflucypram (A.3.31), isopyrazam (A.3.12), mepronil (A.3.13), oxycarboxin (A.3.14), penflufen (A.3.15), penthiopyrad (A.3.16), pydiflumetofen (A.3.17), pyrapropoyne (A.3.23), pyraziflumid (A.3.18), sedaxane (A.3.19), tecloftalam (A.3.20), thifluzamide (A.3.21), fluindapyr (A.3.28), *N*-[2-[2-chloro-4-(trifluoromethyl)phenoxy]phenyl]-3-(difluoromethyl)-5-fluoro-1-methylpyrazole-4-carboxamide (A.3.29), methyl (*E*)-2-[2-[(5-cyano-2-methyl-phenoxy)methyl]phenyl]-3-methoxy-prop-2-enoate (A.3.30), 2-(difluoromethyl)-*N*-(1,1,3-trimethyl-indan-4-yl)pyridine-3-carboxamide (A.3.32), 2-(difluoromethyl)-*N*-[(3R)-1,1,3-trimethylindan-4-yl]pyridine-3-carboxamide (A.3.33), 2-(difluoromethyl)-N-(3-ethyl-1,1-dimethyl-indan-4-yl)pyridine-3-carboxamide (A.3.34), 2-(difluoromethyl)-*N*-[(3*R*)-3-ethyl-1,1-dimethyl-indan-4-yl]pyridine-3-carboxamide (A.3.35), 2-(difluoromethyl)-*N*-(1,1-dimethyl-3-propyl-indan-4-yl)-pyridine-3-carboxamide (A.3.36), 2-(difluoromethyl)-*N*-[(3*R*)-1,1-dimethyl-3-propyl-indan-4-yl]pyridine-3-carboxamide (A.3.37), 2-(difluoromethyl)-*N*-(3-isobutyl-1,1-dimethyl-indan-4-yl)pyridine-3-carboxamide (A.3.38), 2-(difluoromethyl)-*N*-[(3*R*)-3-isobutyl-1,1-dimethyl-indan-4-yl]pyridine-3-carboxamide (A.3.39);
   - complex I NADH oxido-reductase (C1): diflumetorim (A.4.1);
   - uncouplers (C5): binapacryl (A.4.2), dinobuton (A.4.3), dinocap (A.4.4), fluazinam (A.4.5), meptyldinocap (A.4.6), ferimzone (A.4.7);
   - inhibitors of ox. phosphorylation (C6): fentin salts, e.g. fentin-acetate (A.4.8), fentin chloride (A.4.9) or fentin hydroxide (A.4.10);
   - ATP transport: silthiofam (A.4.11);
   - quinone inside and outside inhibitor stigmatellin binding type (QioSi; C8): ametoctradin (A.5.1);
B) Sterol biosynthesis (G)
   - C14 demethylase (DMI, G1): triazoles: azaconazole (B.1.1), bitertanol (B.1.2), bromuconazole (B.1.3), cyproconazole (B.1.4), difenoconazole (B.1.5), diniconazole (B.1.6), diniconazole-M (B.1.7), epoxiconazole (B.1.8), fenbuconazole (B.1.9), fluoxytioconazole (B.1.33), fluquinconazole (B.1.10), flusilazole (B.1.11), flutriafol (B.1.12), hexaconazole (B.1.13), imibenconazole (B.1.14), ipconazole (B.1.15), ipfentrifluconazole (B.1.37), mefentrifluconazole (B.1.38), metconazole (B.1.17), myclobutanil (B.1.18), oxpoconazole (B.1.19), paclobutrazole (B.1.20), penconazole (B.1.21), propiconazole (B.1.22), prothioconazole (B.1.23), simeconazole (B.1.24), tebuconazole (B.1.25), tetraconazole (B.1.26), triadimefon (B.1.27), triadimenol (B.1.28), triticonazole (B.1.29), uniconazole (B.1.30), 2-(2,4-difluorophenyl)-1,1-difluoro-3-(tetrazol-1-yl)-1-[5-[4-(2,2,2-trifluoroethoxy)phenyl]-2-pyridyl]propan-2-ol (B.1.31), 2-(2,4-difluorophenyl)-1,1-difluoro-3-(tetrazol-1-yl)-1-[5-[4-(trifluoromethoxy)-phenyl]-2-pyridyl]propan-2-ol (B.1.32), 2-(chloromethyl)-2-methyl-5-(*p*-tolylmethyl)-1-(1,2,4-triazol-1-ylmethyl)-cyclopentanol (B.1.43), 4-[[6-[2-(2,4-difluorophenyl)-1,1-difluoro-2-hydroxy-3-(1,2,4-triazol-1-yl)propyl]-3-pyridyl]oxy]benzonitrile (B.1.53), 2-[6-(4-bromophenoxy)-2-(trifluoromethyl)-3-pyridyl]-1-(1,2,4-triazol-1-yl)-propan-2-ol (B.1.54), 2-[6-(4-chlorophenoxy)-2-(trifluoromethyl)-3-pyridyl]-1-(1,2,4-triazol-1-yl)propan-2-ol (B.1.55), (2*R*)-2-[4-(4-chlorophenoxy)-2-(trifluoromethyl)phenyl]-1-(1,2,4-triazol-1-yl)propan-2-ol, (2*S*)-2-[4-(4-chlorophenoxy)-2-(trifluoromethyl)phenyl]-1-(1,2,4-triazol-1-yl)propan-2-ol, methyl 2-[2-chloro-4-(4-chlorophenoxy)phenyl]-2-hydroxy-3-(1,2,4-triazol-1-yl)propanoate (B.1.56), 2-[2-chloro-4-(4-chlorophenoxy)-phenyl]-2-hydroxy-3-(1,2,4-triazol-1-yl)propanoic acid (B.1.57); imidazoles: imazalil (B.1.44), pefurazoate (B.1.45), prochloraz (B.1.46), triflumizole (B.1.47); pyrimidines, pyridines, piperazines: fenarimol (B.1.49), pyrifenox (B.1.50), triforine (B.1.51), [3-(4-chloro-2-fluoro-phenyl)-5-(2,4-difluorophenyl)isoxazol-4-yl]-(3-pyridyl)methanol (B.1.52);
   - delta14-reductase (G2): aldimorph (B.2.1), dodemorph (B.2.2), dodemorph-acetate (B.2.3), fenpropidin (B.2.6), fenpropimorph (B.2.4), piperalin (B.2.7), spiroxamine (B.2.8), tridemorph (B.2.5);
   - 3-keto reductase (G3): fenhexamid (B.3.1), fenpyrazamine (B.3.2);
   - other: chlorphenomizole (B.4.1);
C) Nucleic acids metabolism (A)
   - RNA polymerase I (A1): benalaxyl (C.1.1), benalaxyl-M (C.1.2), kiralaxyl (C.1.3), metalaxyl (C.1.4), metalaxyl-M (C.1.5), ofurace (C.1.6), oxadixyl (C.1.7);
   - adenosine deaminase (A2): bupirimate (C.2.4), 5-fluoro-2-(*p*-tolylmethoxy)pyrimidin-4-amine (C.2.6), 5-fluoro-2-(4-fluorophenylmethoxy)pyrimidin-4-amine (C.2.7), 5-fluoro-2-(4-chlorophenylmethoxy)pyrimidin-4-amine (C.2.8);
   - DNA/RNA synthesis (A3): 5-fluorocytosine (C.2.5), hymexazole (C.2.1), octhilinone (C.2.2),
   - gyrase (A4): oxolinic acid (C.2.3);
   - dihydroorotate dehydrogenase (DHODH; A5): ipflufenoquin (C.5.1), quinofumelin (C.5.2), feneptamidoquin (C.5.3);
D) Cytoskeleton and motor protein (B)
   - tubulin polymerization (MBC; B1): benomyl (D.1.1), carbendazim (D.1.2), fuberidazole (0.1.3), pyridachlometyl (D.1.6), thiabendazole (D.1.4), thiophanate-methyl (D.1.5), *N*-ethyl-2-[(3-ethynyl-8-methyl-6-quinolyl)oxy]butanamide (D.1.8), *N*-ethyl-2-[(3-ethynyl-8-methyl-6-quinolyl)oxy]-2-methylsulfanyl-acetamide (D.1.9), 2-[(3-ethynyl-8-methyl-6-quinolyl)oxy]-*N*-(2-fluoroethyl)butanamide (D.1.10), 2-[(3-ethynyl-8-methyl-6-quinolyl)oxy]-*N*-(2-fluoroethyl)-2-methoxy-acetamide (D.1.11), 2-[(3-ethynyl-8-methyl-6-quinolyl)oxy]-*N*-propyl-butanamide (D.1.12), 2-[(3-ethynyl-8-methyl-6-quinolyl)oxy]-2-methoxy-*N*-propyl-acetamide (D.1.13), 2-[(3-ethynyl-8-methyl-6-quinolyl)-oxy]-2-methylsulfanyl-*N*-propyl-acetamide (D.1.14), 2-[(3-ethynyl-8-methyl-6-quinolyl)oxy]-*N*-(2-fluoroethyl)-2-methylsulfanyl-acetamide (D.1.15), 4-(2-bromo-4-fluoro-phenyl)-*N*-(2-chloro-6-fluoro-phenyl)-2,5-dimethylpyrazol-3-amine (D.1.16), 4-(2-bromo-4-fluorophenyl)-N-(2-fluoro-6-nitrophenyl)-1,3-dimethyl-1*H*-pyrazol-5-amine, 4-(2-chloro-4,6-difluorophenyl)-*N*-(2-fluoro-6-nitrophenyl)-1,3-dimethyl-1*H*-pyrazol-5-amine, 4-(2-chloro-4-fluorophenyl)-*N*-(2-fluoro-6-nitrophenyl)-3-ethyl-1-methyl-1*H*-pyrazol-5-amine, 4-(2-chloro-4-fluorophenyl)-N-(2-fluoro-4-methyl-6-nitrophenyl)-1,3-dimethyl-1*H*-pyrazol-5-amine, 4-(2-chloro-4-fluorophenyl)-*N*-(2-fluoro-6-nitrophenyl)-1,3-dimethyl-1*H*-pyrazol-5-amine, 4-(2,4-difluorophenyl)-*N*-(2-fluoro-6-nitrophenyl)-1,3-dimethyl-1*H*-pyrazol-5-amine;
   - tubulin polymerization (B2): diethofencarb (D.2.1),
   - tubulin polymersation (B3): ethaboxam (D.2.2), zoxamide (D.2.5);
   - cell division (B4): pencycuron (D.2.3);
   - spectrin-like proteins (B5): fluopicolide (D.2.4), fluopimomide (D.2.9);
   - actin/myosin/fimbrin function (B6): metrafenone (D.2.6), phenamacril (D.2.8), pyriofenone (D.2.7);
E) Amino acids and protein synthesis (D)
   - methionine synthesis (D1): cyprodinil (E.1.1), mepanipyrim (E.1.2), pyrimethanil (E.1.3);
   - ribosome, termination step (D2): blasticidin-S (E.2.1);
   - ribosome initiation step (D3): kasugamycin (E.2.2), kasugamycin hydrochloride-hydrate (E.2.3);
   - ribosome initiation step (D4): streptomycin (E.2.5);
   - ribosome elongation step (D5): mildiomycin (E.2.4), oxytetracyclin (E.2.6);
F) Signal transduction
   - mechanism unknown (E1): proquinazid (F.2.2), quinoxyfen (F.2.1);
   - MAP/histidine kinase os-2 (E2): fludioxonil (F.1.5);
   - MAP/histidine kinase os-1 (E3): iprodione (F.1.2), procymidone (F.1.3), vinclozolin (F.1.4);
G) Lipid synthesis or transport / membrane (F)
   - methyl transferase (F2): edifenphos (G.1.1), iprobenfos (G.1.2), isoprothiolane (G.1.4); pyrazophos (G.1.3);
   - cell peroxidation (F3): biphenyl (G.2.5), chloroneb (G.2.6), dicloran (G.2.1), etridiazole (G.2.7), quintozene (G.2.2), tecnazene (G.2.3), tolclofos-methyl (G.2.4);
   - cell membrane permeability (F4): propamocarb (G.4.1);
   - ergosterol binding (F8): natamycin;
   - oxysterol binding protein (F9): fluoxapiprolin (G.5.3), oxathiapiprolin (G.5.1), 4-[1-[2-[3-(difluoromethyl)-5-methyl-pyrazol-1-yl]acetyl]-4-piperidyl]-*N*-tetralin-1-yl-pyridine-2-carboxamide (G.5.4), 4-[1-[2-[3,5-bis(difluoromethyl)-pyrazol-1-yl]acetyl]-4-piperidyl]-*N*-tetralin-1-yl-pyridine-2-carboxamide (G.5.5), 4-[1-[2-[3-(difluoromethyl)-5-(trifluoromethyl)pyrazol-1-yl]acetyl]-4-piperidyl]-*N*-tetralin-1-yl-pyridine-2-carboxamide (G.5.6), 4-[1-[2-[5-cyclopropyl-3-(difluoromethyl)pyrazol-1-yl]acetyl]-4-piperidyl]-*N*-tetralin-1-yl-pyridine-2-carboxamide (G.5.7), 4-[1-[2-[5-methyl-3-(trifluoromethyl)pyrazol-1-yl]acetyl]-4-piperidyl]-*N*-tetralin-1-yl-pyridine-2-carboxamide (G.5.8), 4-[1-[2-[5-(difluoromethyl)-3-(trifluoromethyl)pyrazol-1-yl]acetyl]-4-piperidyl]-*N*-tetralin-1-yl-pyridine-2-carboxamide (G.5.9), 4-[1-[2-[3,5-bis(trifluoromethyl)pyrazol-1-yl]acetyl]-4-piperidyl]-*N*-tetralin-1-yl-pyridine-2-carboxamide (G.5.10), (4-[1-[2-[5-cyclopropyl-3-(trifluoromethyl)pyrazol-1-yl]acetyl]-4-piperidyl]-*N*-tetralin-1-yl-pyridine-2-carboxamide (G.5.11), (1-(4-(4-(5-(2,6-dichlorophenyl)-4,5-dihydroisoxazol-3-yl)thiazol-2-yl)piperidin-1-yl)-2-((3-trifluoromethyl)pyrazin-2-yl)oxy)ethan-1-one, 1-(4-(4-(5-(2-chloro-6-fluorophenyl)-4,5-dihydroisoxazol-3-yl)thiazol-2-yl)piperidin-1-yl)-2-((3-trifluoromethyl)pyridin-2-yl)oxy)ethan-1-one, tert-butyl 4-(4-(5-(2-bromo-6-fluorophenyl)-4,5-dihydroisoxazol-3-yl)thiazol-2-yl)piperidin-1-carboxylate, ((2-(3-(2-(1-(2-(3,5-bis(trifluoromethyl)-1*H*-pyrazol-1-yl)acetyl)piperidin-4-yl)thiazol-4-yl)-4,5-dihydroisoxazo-5-yl)-3-fluorophenyl)imino)dimethyl-λ⁶-sulfanone, ((2-(3-(2-(1-(2-(3,5-bis(difluoromethyl)-1*H*-pyrazol-1-yl)acetyl)piperidin-4-yl)thiazol-4-yl)-4,5-dihydroisoxazo-5-yl)-3-fluorophenyl)imino)dimethyl-λ⁶-sulfanone, ((2-(3-(2-(1-(2-(3,5-bis(difluoromethyl)-1*H*-pyrazol-1-yl)acetyl)piperidin-4-yl)thiazol-4-yl)-4,5-dihydroisoxazo-5-yl)-3-chorophenyl)imino)(isopropyl)(methyl)-λ⁶-sulfanone, ((2-(3-(2-(1-(2-(3,5-bis(trifluoromethyl)-1*H*-pyrazol-1-yl)acetyl)piperidin-4-yl)thiazol-4-yl)-4,5-dihydroisoxazo-5-yl)-3-fluorophenyl)imino)(isopropyl)(methyl)-λ⁶-sulfanone, ((2-(3-(2-(1-(2-(3,5-bis(difluoromethyl)-1*H*-pyrazol-1-yl)acetyl)piperidin-4-yl)thiazol-4-yl)-4,5-dihydroisoxazo-5-yl)-3-(trifluoromethyl)phenyl)imino)dimethyl-λ⁶-sulfanone, ((3-fluoro-2-(3-(2-(1-(2-(5-methyl-3-(trifluoromethyl)-1*H*-pyrazol-1-yl)acetyl)piperidin-4-yl)thiazol-4-yl)-4,5-dihydroisoxazo-5-yl)-phenyl)imino)dimethyl-λ⁶-sulfanone;
H) Multi Site Activity (M)
   - inorganics (M01): Bordeaux mixture (H.1.1), copper (H.1.2), copper acetate (H.1.3), copper hydroxide (H.1.4), copper oxychloride (H.1.5), basic copper sulfate (H.1.6), sulfur (H.1.7);
   - dithiocarbamates and relatives: ferbam (H.2.1), mancozeb (H.2.2), maneb (H.2.3), metam (H.2.4), metiram (H.2.5), propineb (H.2.6), thiram (H.2.7), zineb (H.2.8), ziram (H.2.9), zinc thiazole (H.2.10);
   - organochlorine compounds (M04, M05, M06, M08): anilazine (H.3.1), captafol (H.3.3), captan (H.3.4), chlorothalonil (H.3.2), dichlofluanid (H.3.6), dichlorophen (H.3.7), folpet (H.3.5), hexachlorobenzene (H.3.8), pentachlorphenole (H.3.9) and its salts, phthalide (H.3.10), tolylfluanid (H.3.11);
   - guanidines, quinones, quinoxalines, maleimides, thiocarbamates (M07, M09, M10, M11, M12): chinomethionat (H.4.13), dithianon (H.4.9), fluoroimide (H.4.11), guanidine (H.4.1), guazatine (H.4.4), guazatine-acetate (H.4.5), iminoctadine (H.4.6), iminoctadine-triacetate (H.4.7), iminoctadine-tris(albesilate) (H.4.8), methasulfocarb (H.4.12), 2,6-dimethyl-1*H*,5*H*-[1,4]dithiino[2,3-c:5,6-c']dipyrrole-1,3,5,7(2*H*,6*H*)-tetraone (H.4.10),
I) Cell wall biosynthesis (H) and melanin synthesis in cell wall (I)
   - chitin synthase (H4): polyoxin B (i.1.2);
   - cellulose synthase (H5): benthiavalicarb (i.3.5), dimethomorph (i.3.1), flumorph (i.3.2), iprovalicarb (i.3.6), mandipropamid (i.3.3), pyrimorph (i.3.4), valifenalate (i.3.7);
   - reductase in melanin synthesis (MBI-R; i1) pyroquilon (i.2.1), tricyclazole (i.2.2);
   - dehydratase in melanin synthesis (MBI-D, I2); carpropamid (i.2.3), dicyclomet (i.2.4), fenoxanil (i.2.5);
   - polyketide synthase in melanin synthesis (MBI-P, I3): tolprocarb (i.2.6);
J) Plant defence induction (P1 to P8)
   - salicylate-related (P01-P03, P08): acibenzolar-S-methyl (J.1.1), probenazole (J.1.2), isotianil (J.1.3), tiadinil (J.1.4), dichlobentiazox (J.1.13); phosphonates (P07): fosetyl (J.1.6), fosetyl-aluminum (J.1.7), phosphorous acid and its salts (J.1.8), calcium phosphonate (J.1.11), potassium phosphonate (J.1.12); others: potassium or sodium bicarbonate (J.1.9), 4-cyclopropyl-*N*-(2,4-di¬methoxy¬phenyl)thiadiazole-5-carboxamide (J.1.10);
K) Unknown mode of action (U)
   - aminopyrifen (K.1.54), benziothiazolinone (K.1.48), bromothalonil (K.1.49), bronopol (K.1.1), cyflufenamid (K.1.3), cymoxanil (K.1.4), dazomet (K.1.5), debacarb (K.1.6), diclomezine (K.1.8), difenzoquat (K.1.9), difenzoquat-methylsulfate (K.1.10), diphenylamin (K.1.11), dodine, dodine free base (K.1.18), fenitropan (K.1.12), flufenoxadiazam (K.1.58) [MoA proposed: class II histone deacetylase inhibitor], flumetover (K.1.14), flumetylsulforim (K.1.60), flusulfamide (K.1.15), flutianil (K.1.16), harpin (K.1.17), nitrapyrin (K.1.19), nitrothal-isopropyl (K.1.20), oxine-copper (K.1.22), picarbutrazox (K.1.41), pyrisoxazole (K.1.37), seboctylamine (K.1.61), tebufloquin (K.1.24), tecloftalam (K.1.25), triazoxide (K.1.26), validamycin (K.1.2); *N*'-(4-(4-chloro-3-trifluoromethyl-phenoxy)-2,5-dimethyl-phenyl)-*N*-ethyl-*N*-methyl formamidine (K.1.27), *N'*-(4-(4-fluoro-3-trifluoromethyl-phenoxy)-2,5-dimethyl-phenyl)-*N*-ethyl-*N*-methyl formamidine (K.1.28), *N'*-[4-[[3-[(4-chlorophenyl)methyl]-1,2,4-thiadiazol-5-yl]oxy]-2,5-dimethyl-phenyl]-*N*-ethyl-*N*-methyl-formamidine (K.1.29), *N*'-(5-bromo-6-indan-2-yloxy-2-methyl-3-pyridyl)-*N*-ethyl-*N*-methyl-formamidine (K.1.30), *N*'-[5-bromo-6-[1-(3,5-difluorophenyl)ethoxy]-2-methyl-3-pyridyl]-*N*-ethyl-*N*-methyl-formamidine (K.1.31), *N*'-[5-bromo-6-(4-isopropylcyclohexoxy)-2-methyl-3-pyridyl]-*N*-ethyl-*N*-methyl-formamidine (K.1.32), *N*'-[5-bromo-2-methyl-6-(1-phenylethoxy)-3-pyridyl]-*N*-ethyl-*N*-methyl-formamidine (K.1.33), *N*'-(2-methyl-5-trifluoromethyl-4-(3-trimethylsilanyl-propoxy)-phenyl)-*N*-ethyl-*N*-methyl formamidine (K.1.34), *N*'-(5-difluoromethyl-2-methyl-4-(3-trimethylsilanyl-propoxy)-phenyl)-*N*-ethyl-*N*-methyl formamidine (K.1.35), 2-(4-chloro-phenyl)-*N*-[4-(3,4-dimethoxy-phenyl)-isoxazol-5-yl]-2-prop-2-ynyloxy-acetamide (K.1.36), 3-[5-(4-methylphenyl)-2,3-dimethyl-isoxazolidin-3-yl]-pyridine (K.1.38), 5-chloro-1-(4,6-dimethoxy-pyrimidin-2-yl)-2-methyl-1*H*-benzoimidazole (K. 1.39), ethyl (*Z*)-3-amino-2-cyano-3-phenyl-prop-2-enoate (K.1.40), pentyl *N*-[6-[[(*Z*)-[(1-methyltetrazol-5-yl)-phenyl-methylene]amino]oxymethyl]-2-pyridyl]carbamate (K.1.42), but-3-ynyl *N*-[6-[[(*Z*)-[(1-methyltetrazol-5-yl)-phenyl-methylene]amino]oxymethyl]-2-pyridyl]carbamate (K.1.43), 2-(6-benzyl-2-pyridyl)quinazoline (K.1.50), 2-[6-(3-fluoro-4-methoxy-phenyl)-5-methyl-2-pyridyl]-quinazoline (K.1.51), *N*'-(2,5-dimethyl-4-phenoxy-phenyl)-*N*-ethyl-*N*-methyl-formamidine (K.1.53), *N*'-[5-bromo-2-methyl-6-(1-methyl-2-propoxy-ethoxy)-3-pyridyl]-*N*-ethyl-*N*-methyl-formamidine (K.1.56), *N*'-[4-(4,5-dichlorothiazol-2-yl)oxy-2,5-dimethyl-phenyl]-*N*-ethyl-*N*-methyl-formamidine (K.1.57), *N*-methyl-4-[5-(trifluoromethyl)-1,2,4-oxadiazol-3-yl]benzenecarbothioamide (K.1.59), *N*-methoxy-*N*-[[4-[5-(trifluoromethyl)-1,2,4-oxadiazol-3-yl]phenyl]methyl]cyclopropanecarboxamide (K.1.61), *N*-((4-[5-(trifluoromethyl)-1,2,4-oxadiazol-3-yl]phenyl)-methyl)propanamide (K.1.62), 3,3,3-trifluoro-*N*-[[3-fluoro-4-[5-(trifluoromethyl)-1,2,4-oxadiazol-3-yl]phenyl]methyl]propanamide (K.1.63), 3,3,3-trifluoro-*N*-[[2-fluoro-4-[5-(trifluoromethyl)-1,2,4-oxadiazol-3-yl]phenyl]methyl]-propanamide (K.1.64), *N*-[2,3-difluoro-4-[5-(trifluoromethyl)-1,2,4-oxadiazol-3-yl]benzyl]butanamide (K.1.65), *N*-[[2,3-difluoro-4-[5-(trifluoromethyl)-1,2,4-oxadiazol-3-yl]phenyl]methyl]-3,3,3-trifluoro-propanamide (K.1.66), 1-methoxy-1-methyl-3-[[4-[5-(trifluoromethyl)-1,2,4-oxadiazol-3-yl]phenyl]methyl]urea (K.1.67), 1,1-diethyl-3-[[4-[5-[trifluoromethyl]-1,2,4-oxadiazol-3-yl]phenyl]methyl]urea (K.1.68), *N*,2-dimethoxy-*N*-[[4-[5-(trifluoromethyl)-1,2,4-oxadiazol-3-yl]phenyl]methyl]propanamide (K.1.69), *N*-ethyl-2-methyl-*N*-[[4-[5-(trifluoromethyl)-1,2,4-oxadiazol-3-yl]phenyl]methyl]propanamide (K.1.70), 1-methoxy-3-methyl-1-[[4-[5-(trifluoromethyl)-1,2,4-oxadiazol-3-yl]phenyl]methyl]urea (K.1.71), 1-[[4-[5-(trifluoromethyl)-1,2,4-oxadiazol-3-yl]phenyl]methyl]pyrrolidin-2-one (K.1.72), 1-[[4-[5-(trifluoromethyl)-1,2,4-oxadiazol-3-yl]phenyl]methyl]piperidin-2-one (K.1.73), 4-[[4-[5-(trifluoromethyl)-1,2,4-oxadiazol-3-yl]phenyl]methyl]morpholin-3-one (K.1.74), 4,4-dimethyl-2-[[4-[5-(trifluoromethyl)-1,2,4-oxadiazol-3-yl]phenyl]methyl]isoxazolidin-3-one (K.1.75), 2-[[4-[5-(trifluoromethyl)-1,2,4-oxadiazol-3-yl]phenyl]methyl]isoxazolidin-3-one (K.1.76), 5,5-dimethyl-2-[[4-[5-(trifluoromethyl)-1,2,4-oxadiazol-3-yl]phenyl]methyl]isoxazolidin-3-one (K.1.77), 3,3-dimethyl-1-[[4-[5-(trifluoromethyl)-1,2,4-oxadiazol-3-yl]phenyl]methyl]piperidin-2-one (K.1.78), 2-[[4-[5-(trifluoromethyl)-1,2,4-oxadiazol-3-yl]phenyl]methyl]oxazinan-3-one (K.1.79), 1-[[3-fluoro-4-[5-(trifluoromethyl)-1,2,4-oxadiazol-3-yl]phenyl]methyl]azepan-2-one (K.1.80), 4,4-dimethyl-1-[[4-[5-(trifluoromethyl)-1,2,4-oxadiazol-3-yl]phenyl]methyl]pyrrolidin-2-one (K.1.81), 5-methyl-1-[[4-[5-(trifluoromethyl)-1,2,4-oxadiazol-3-yl]phenyl]methyl]pyrrolidin-2-one (K.1.82), ethyl 1-[[4-[5-(trifluoromethyl)-1,2,4-oxadiazol-3-yl]phenyl]methyl]pyrazole-4-carboxylate (K.1.83), *N*-methyl-1-[[4-[5-(trifluoromethyl)-1,2,4-oxadiazol-3-yl]phenyl]methyl]pyrazole-4-carboxamide (K.1.84), *N*,*N*-dimethyl-1-[4-[5-(trifluoromethyl)-1,2,4-oxadiazol-3-yl]benzyl]-1*H*-1,2,4-triazol-3-amine (K.1.85), *N*-methoxy-*N*-methyl-1-[[4-[5-(trifluoromethyl)-1,2,4-oxadiazol-3-yl]phenyl]methyl]pyrazole-4-carboxamide (K.1.86), propyl-1-[[4-[5-(trifluoromethyl)-1,2,4-oxadiazol-3-yl]phenyl]methyl]pyrazole-4-carboxamide (K.1.87), *N*-methoxy-1-[[4-[5-(trifluoromethyl)-1,2,4-oxadiazol-3-yl]phenyl]methyl]pyrazole-4-carboxamide (K.1.88), *N*-allyl-*N*-[[4-[5-(trifluoromethyl)-1,2,4-oxadiazol-3-yl]phenyl]methyl]propanamide (K.1.89), 3-ethyl-1-methoxy-1-[[4-[5-(trifluoromethyl)-1,2,4-oxadiazol-3-yl]phenyl]methyl]-urea (K.1.90), 1,3-dimethoxy-1-[[4-[5-(trifluoromethyl)-1,2,4-oxadiazol-3-yl]phenyl]methyl]urea (K.1.91), *N*-allyl-*N*-[[4-[5-(trifluoromethyl)-1,2,4-oxadiazol-3-yl]phenyl]methyl]acetamide (K.1.92), *N*-[4-[5-(trifluoromethyl)-1,2,4-oxadiazol-3-yl]benzyl]cyclopropanecarboxamide (K.1.93), 1-methyl-3-[[4-[5-(trifluoromethyl)-1,2,4-oxadiazol-3-yl]phenyl]methyl]urea (K.1.94), *N*'-[2-chloro-4-(2-fluorophenoxy)-5-methyl-phenyl]-*N*-ethyl-*N*-methyl-formamidine (K.1.95), *N*'-[2-chloro-4-[(4-methoxy-phenyl)methyl]-5-methyl-phenyl]-*N*-ethyl-*N*-methyl-formamidine (K.1.96), *N*'-[2-chloro-4-[(4-cyano-phenyl)methyl]-5-methyl-phenyl]-*N*-ethyl-*N*-methyl-formamidine (K.1.97), *N*'-[2,5-dimethyl-4-(*o*-tolylmethyl)phenyl]-*N*-ethyl-*N*-methyl-formamidine (K.1.98), 6-chloro-3-(3-cyclopropyl-2-fluoro-phenoxy)-*N*-[2-(2,4-dimethylphenyl)-2,2-difluoro-ethyl]-5-methyl-pyridazine-4-carboxamide (K.1.99), 3-(3-bromo-2-fluoro-phenoxy)-6-chloro-*N*-[2-(2-chloro-4-methyl-phenyl)-2,2-difluoro-ethyl]-5-methyl-pyridazine-4-carboxamide (K.1.100), 6-chloro-*N*-[2-(2-chloro-4-methyl-phenyl)-2,2-difluoro-ethyl]-3-(3-cyclopropyl-2-fluoro-phenoxy)-5-methyl-pyridazine-4-carboxamide (K.1.101), 6-chloro-3-(3-cyclopropyl-2-fluoro-phenoxy)-*N*-[2-(3,4-dimethylphenyl)-2,2-difluoro-ethyl]-5-methyl-pyridazine-4-carboxamide (K.1.102), 6-chloro-3-(3-chloro-2-fluoro-phenoxy)-*N*-[2-(2,4-dimethylphenyl)-2,2-difluoro-ethyl]-5-methyl-pyridazine-4-carboxamide (K.1.103), *N*-[2-(2-bromo-4-methyl-phenyl)-2,2-difluoro-ethyl]-6-chloro-3-(3-cyclopropyl-2-fluoro-phenoxy)-5-methylpyridazine-4-carboxamide (K.1.104), 2-[cyano-(2,6-difluoro-4-pyridyl)amino]-5-methyl-*N*-spiro[3.4]octan-3-yl-thiazole-4-carboxamide, 2-[acetyl-(2,6-difluoro-4-pyridyl)amino]-*N*-(2,2-dimethylcyclobutyl)-5-methyl-thiazole-4-carboxamide, 2-[(2,6-difluoro-4-pyridyl)-(2-methoxyacetyl)amino]-*N*-(2,2-dimethylcyclobutyl)-5-methyl-thiazole-4-carboxamide, 2-[cyano-(2,6-difluoro-4-pyridyl)amino]-*N*-(2,2-dimethylcyclobutyl)-5-methyl-thiazole-4-carboxamide, *N*-[1-[[3-[2-(5-fluoro-2-methoxy-phenyl)-2-hydroxy-ethyl]-5-[(*Z*)-*N*-isopropoxy-*C*-methyl-carbon-imidoyl]-2,6-dioxo-pyrimidin-1-yl]methyl]-2-methyl-propyl]-2-methyl-propanamide, *N*-[1-[[3-[2-(5-fluoro-2-methoxyphenyl)-2-hydroxy-ethyl]-5-[(*Z*)-*N*-isopropoxy-*C*-methyl-carbonimidoyl]-2,6-dioxo-pyrimidin-1-yl]methyl]-2-methylpropyl]-2,2-dimethyl-propanamide, *N*-[2-[3-[2-(5-fluoro-2-methoxy-phenyl)-2-hydroxy-ethyl]-5-[(*Z*)-*N*-isopropoxy-*C*-methyl-carbonimidoyl]-2,6-dioxo-pyrimidin-1-yl]-1-methyl-ethyl]-2-methyl-propanamide, *N*-[2-[3-[2-hydroxy-2-(2-methoxyphenyl)ethyl]-5-[(*Z*)-*N*-isopropoxy-*C*-methyl-carbonimidoyl]-2,6-dioxo-pyrimidin-1-yl]-1-methyl-ethyl]-2-methyl-propanamide, *N*-[2-[3-[2-(2-cyanoethoxy)-2-(5-fluoro-2-methoxy-phenyl)ethyl]-5-[(*Z*)-*N*-isopropoxy-C-methyl-carbonimidoyl]-2,6-dioxo-pyrimidin-1-yl]-1-methyl-ethyl]-2-methyl-propanamide, rac-3-[3-(3-chloro-2-fluoro-phenoxy)-6-methyl-pyridazin-4-yl]-5-[(2-chloro-4-methyl-phenyl)methyl]-5,6-dihydro-4*H*-1,2,4-oxadiazine, (5*S*)-3-[3-(3-chloro-2-fluoro-phenoxy)-6-methyl-pyridazin-4-yl]-5-[(2-chloro-4-methyl-phenyl)methyl]-5,6-dihydro-4*H*-1,2,4-oxadiazine, (5*R*)-3-[3-(3-chloro-2-fluoro-phenoxy)-6-methyl-pyridazin-4-yl]-5-[(2-chloro-4-methylphenyl)methyl]-5,6-dihydro-4*H*-1,2,4-oxadiazine, 2-(4-fluorophenoxy)-1-[4-[5-(trifluoromethyl)-1,2,4-oxadiazol-3-yl]phenyl]ethanone, 2-[(6-fluoro-3-pyridyl)oxy]-1-[4-[5-(trifluoromethyl)-1,2,4-oxadiazol-3-yl]phenyl]ethanone, 2-(4-fluoroanilino)-1-[4-[5-(trifluoromethyl)-1,2,4-oxadiazol-3-yl]phenyl]ethenone, ethyl 1-[[4-[[2-(trifluoromethyl)-1,3-dioxolan-2-yl]methoxy]phenyl]methyl]-1H-pyrazole-4-carboxylate, ethyl 1-[[4-[[(1Z)-2-ethoxy-3,3,3-trifluoro-1-propen-1-yl]oxy]phenyl]methyl]-1*H*-pyrazole-4-carboxylate;
L) Biopesticides
   L1) Microbial pesticides with fungicidal, bactericidal, viricidal and/or plant defense activator activity: *Ampelomyces quisqualis*, *Aspergillus flavus, Aureobasidium pullulans, Bacillus altitudinis, B. amyloliquefaciens, B. amyloliquefaciens* ssp. *plantarum* (also referred to as B. *velezensis*), *B. megaterium, B. mojavensis, B. mycoides, B. pumilus, B. simplex, B. solisalsi, B. subtilis, B. subtilis* var. *amyloliquefaciens, B. velezensis, Candida oleophila, C. saitoana, Clavibactermichiganensis* (bacteriophages), *Coniothyrium minitans, Cryphonectria parasitica, Cryptococcus albidus, Dilophosphora alopecuri, Fusarium oxysporum, Clonostachys rosea* f. *catenulate* (also named *Gliocladium catenulatum), Gliocladium roseum, Lysobacter antibioticus, L. enzymogenes, Metschnikowia fructicola, Microdochium dimerum, Microsphaeropsis ochra*cea, *Muscodor albus, Paenibacillus alvei, Paenibacillus epiphyticus, P. polymyxa, Pantoea vagans, Penicillium bilaiae, Phlebiopsis gigantea, Pseudomonas* sp., *Pseudomonas chloraphis, Pseudozyma flocculosa, Pichia anomala, Pythium oligandrum, Sphaerodes mycoparasitica*, *Streptomyces griseoviridis,* S. *lydicus,* S. *violaceusniger, Talaromyces flavus, Trichoderma asperelloides, T. asperellum, T. atroviride, T. fertile, T. gamsii*, *T. harmatum, T. harzianum, T. polysporum, T. stromatícum, T. virens, T. viride, Typhula phacorrhiza, Ulocladium oudemansii*, *Verticillium dahliae,* zucchini yellow mosaic virus (avirulent strain);
   L2) Biochemical pesticides with fungicidal, bactericidal, viricidal and/or plant defense activator activity: harpin protein, plant oils (BM3): tea tree oil, orange oil (L.2.1), eugenol, limonene (L.2.2), geraniol (L.2.3), thymol (L.2.4); Reynoutria sachalinensis extract, aureobasidin (in particular aureobasidin A (L.2.5)), ambruticin (L.2.6), bafilomycin (L.2.7) (in particular bafilomycin A1, B1 and C1), chlorflavonin (L.2.8), cinnamaldehyde (L.2.9), natamycin (L.2.10; F8);
   L3) Microbial pesticides with insecticidal, acaricidal, molluscidal and/or nematicidal activity: *Agrobacterium radiobacter, Bacillus cereus, B. firmus, B. thuringiensis, B. thuringiensis* ssp. *aizawai, B. t.* ssp. *israelensis, B*. *t*. ssp. *galleriae, B. t.* ssp. *kurstaki, B*. *t.* ssp. *fenebrionis*, *Beauveria bassiana, B. brongniartii*, *Burkholderia* spp., *Chromobacterium subtsugae, Cydia pomonella* granulovirus (CpGV), *Cryptophlebia leucotreta* granulovirus (CrleGV), *Flavobacterium* spp., *Helicoverpa armigera* nucleopolyhedrovirus (HearNPV), *Helicoverpa* zea nucleopolyhedrovirus (HzNPV), *Helicoverpa* zea single capsid nucleopolyhedrovirus (HzSNPV), *Heterorhabditis bacteriophora, Isaria fumosorosea, Lecanicillium longisporum, L. muscarium, Metarhizium anisopliae, M. anisopliae* var. *anisopliae, M. anisopliae* var. *acridum, Nomuraea rileyi, Paecilomyces fumosoroseus, P. lilacinus, Paenibacillus popilliae, Pasteuria* spp., *P. nishizawae, P. penetrans, P. ramosa, P. thornea, P. usgae, Pseudomonas fluorescens, Spodoptera littoralis* nucleopolyhedrovirus (SpliNPV), *Steinernema carpocapsae*, *S*. *feltiae*, *S*. *kraussei, Streptomyces galbus, S*. *microflavus*;
   L4) Biochemical pesticides with insecticidal, acaricidal, molluscidal, pheromone and/or nematicidal activity: L-carvone, citral, (*E*,*Z*)-7,9-dodecadien-1-yl acetate, ethyl formate, (*E*,*Z*)-2,4-ethyl decadienoate (pear ester), (*Z*,*Z*,*E*)-7, 11, 13-hexadecatrienal, heptyl butyrate, isopropyl myristate, lavanulyl senecioate, cis-jasmone, 2-methyl-1-butanol, methyl eugenol, methyl jasmonate, (*E*,*Z*)-2,13-octadecadien-1-ol, (*E*,*Z*)-2,13-octadecadien-1-ol acetate, (*E*,*Z*)-3,13-octadecadien-1-ol, (*R*)-1-octen-3-ol, pentatermanone, (*E*,*Z*,*Z*)-3,8,11-tetradecatrienyl acetate, (*Z*,*E*)-9,12-tetradecadien-1-yl acetate, (*Z*)-7-tetradecen-2-one, (*Z*)-9-tetradecen-1-yl acetate, (*Z*)-11-tetradecenal, (*Z*)-11-tetradecen-1-ol, extract of *Chenopodium ambrosiodes,* Neem oil, Quillay extract;
   L5) Microbial pesticides with plant stress reducing, plant growth regulator, plant growth promoting and/or yield enhancing activity: *Azospirillum amazonense, A*. *brasilense, A*. *lipoferum*, *A. irakense, A*. *halopraeferens, Bradyrhizobium* spp., *B*. *elkanii, B. japonicum, B. liaoningense*, *B. lupini, Delftia acidovorans, Glomus infraradices, Mesorhizobium* spp., *Rhizobium leguminosarum* bv. *phaseoli, R. I.* bv. *trifolii*, *R. I.* bv. *viciae, R. tropici, Sinorhizobium meliloti*;
O) Insecticides from classes O.1 to O.29 (IRAC classes 1 to 29):
   O.1 Acetylcholine esterase (AChE) inhibitors: carbamates (1A): aldicarb, alanycarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, triazamate, trimethacarb, XMC, xylylcarb; organophosphates (1B): acephate, azamethiphos, azinphos-ethyl, azinphosmethyl, cadusafos, chlorethoxyfos, chlorfenvinphos, chlormephos, chlorpyrifos, chlorpyrifos-methyl, coumaphos, cyanophos, demeton-S-methyl, diazinon, dichlorvos, dicrotophos, dimethoate, dimethylvinphos, disulfoton, EPN, ethion, ethoprophos, famphur, fenamiphos, fenitrothion, fenthion, fosthiazate, heptenophos, imicyafos, isofenphos, isopropyl O-(methoxyaminothio-phosphoryl) salicylate, isoxathion, malathion, mecarbam, methamidophos, methidathion, mevinphos, monocrotophos, naled, omethoate, oxydemeton-methyl, parathion, parathion-methyl, phenthoate, phorate, phosalone, phosmet, phosphamidon, phoxim, pirimiphos- methyl, profenofos, propetamphos, prothiofos, pyraclofos, pyridaphenthion, quinalphos, sulfotep, tebupirimfos, temephos, terbufos, tetrachlorvinphos, thiometon, triazophos, trichlorfon, vamidothion;
   O.2 GABA-gated chloride channel blockers: (2A): chlordane, endosulfan; (2B): ethiprole, fipronil, flufiprole, nicofluprole, pyrafluprole, pyriprole;
   O.3 Sodium channel modulators: pyrethroids (3A): acrinathrin, allethrin, d-*cis*-trans allethrin, d-*trans* allethrin, bifenthrin, *kappa*-bifenthrin, bioallethrin, bioallethrin S-cylclopentenyl, bioresmethrin, cycloprothrin, cyfluthrin, *beta*-cyfluthrin, cyhalothrin, *lambda*-cyhalothrin, *gamma*-cyhalothrin, cypermethrin, *alpha*-cypermethrin, *beta*-cypermethrin, *theta*-cypermethrin, zeta-cypermethrin, cyphenothrin, deltamethrin, empenthrin, esfenvalerate, etofenprox, fenpropathrin, fenvalerate, flucythrinate, flumethrin, *tau*-fluvalinate, halfenprox, heptafluthrin, imiprothrin, meperfluthrin, metofluthrin, momfluorothrin, *epsilon*-momfluorothrin, permethrin, phenothrin, prallethrin, profluthrin, pyrethrins (pyrethrum), resmethrin, silafluofen, tefluthrin, *kappa*-tefluthrin, tetramethylfluthrin, tetramethrin, tralomethrin, transfluthrin; (3B): DDT, methoxychlor;
   O.4 Nicotinic acetylcholine receptor (nAChR) competitive modulators: neonicotinoids (4A): acetamiprid, clothianidin, cycloxaprid, dinotefuran, imidacloprid, nitenpyram, thiacloprid, thiamethoxam; 4,5-dihydro-*N*-nitro-1-(2-oxiranyl-methyl)-1*H*-imidazol-2-amine, (2*E*)-1-[(6-chloropyridin-3-yl)methyl]-*N'*-nitro-2-pentylidenehydrazinecarboximid-amide; 1-[(6-chloropyridin-3-yl)methyl]-7-methyl-8-nitro-5-propoxy-1,2,3,5,6,7-hexahydroimidazo[1,2-a]pyridine; (4B) nicotine; sufoximines (4C): sulfoxaflor; butenolindes (4D): flupyradifurone; mesionics (4E): dicloromezotiaz, fenmezoditiaz, triflumezopyrim, pyridylidenes (4F): flupyrimin, 1-[(2-chlorothiazol-5-yl)methyl]-3-(3,5-dimethyl-isoxazol-4-yl)pyrido[1,2-a]pyrimidine-2,4-dione;
   O.5 nAChR allosteric modulators: spinetoram, spinosad;
   O.6 Glutamate gated chloride channel allosteric modulators: abamectin, emamectin benzoate, ivermectin, lepimectin, milbemectin;
   O.7 Juvenile hormone receptor modulators: hormone analogs (7A): hydroprene, kinoprene, methoprene; fenoxycarb (7B), pyriproxyfen (7C);
   O.8 miscellaneous non-specific (multi-site) inhibitors: methyl bromide and other alkyl halides; chloropicrin, cryolite, sulfuryl fluoride, borax, tartar emetic;
   O.9 Chordotonal organ TRPV channel modulators: afidopyropen, pymetrozine, pyrifluquinazon;
   O.10 Mite growth inhibitors: clofentezine, diflovidazin, hexythiazox; etoxazole;
   O.11 Microbial disruptors of midgut membranes: *Bacillus thuringiensis* subsp. *israelensis,* B. *t.* subsp. *aizawai, B. t.* subsp. *kurstaki, B*. *t*. subsp. *tenebrionis, B*. *sphaericus*; *B.t.* crop proteins: Cry1Ab, Cry1Ac, Cry1Fa, Cry2Ab, mCry3A, Cry3Ab, Cry3Bb, Cry34/35Ab1;
   O.12 Inhibitors of mitochondrial ATP synthase: diafenthiuron; azocyclotin, cyhexatin, fenbutatin oxide, propargite, tetradifon;
   O.13 Uncouplers of oxidative phosphorylation via disruption of the proton gradient: chlorfenapyr, DNOC, sulfluramid;
   O.14 nAChR channel blockers: bensultap, cartap hydrochloride, thiocyclam, thiosultap-sodium;
   O.15 Inhibitors of the chitin biosynthesis CHS1: bistrifluron, chlorfluazuron, diflubenzuron, flucycloxuron, flufenoxuron, hexaflumuron, lufenuron, novaluron, noviflumuron, teflubenzuron, triflumuron;
   O.16 Inhibitors of the chitin biosynthesis type 1: buprofezin;
   O.17 Moulting disruptors: cyromazine;
   O.18 Ecdyson receptor agonists: methoxyfenozide, tebufenozide, halofenozide, fufenozide, chromafenozide;
   O.19 Octopamin receptor agonists: amitraz;
   O.20 Mitochondrial complex III electron transport inhibitors - Qo site: hydramethylnon, acequinocyl, fluacrypyrim, flupyroxystrobin, bifenazate;
   O.21 Mitochondrial complex I electron transport inhibitors: fenazaquin, fenpyroximate, pyrimidifen, pyridaben, tebufenpyrad, tolfenpyrad; rotenone;
   O.22 Voltage-dependent sodium channel blockers: indoxacarb, metaflumizone, oxazosulfyl, 2-[2-(4-cyanophenyl)-1-[3-(trifluoromethyl)phenyl]ethylidene]-*N*-[4-(difluoromethoxy)phenyl]-hydrazinecarboxamide, *N*-(3-chloro-2-methylphenyl)-2-[(4-chlorophenyl)-[4-[methyl(methylsulfonyl)amino]phenyl]methylene]-hydrazinecarboxamide, *N*-[4-chloro-2-[[(1,1-dimethylethyl)amino]carbonyl]-6-methylphenyl]-1-(3-chloro-2-pyridinyl)-3-(fluoromethoxy)-1*H*-pyrazole-5-carboxamide, 2-[2-(4-cyanophenyl)-1-[3-(trifluoromethyl)phenyl]ethylidene]-*N-*[4-(difluoromethoxy)phenyl]-hydrazinecarboxamide;
   O.23 Inhibitors of the of acetyl CoA carboxylase: spidoxamat, spirodiclofen, spiromesifen, spirotetramat, spiropidion, spirobudifen, 11-(4-chloro-2,6-dimethylphenyl)-12-hydroxy-1,4-dioxa-9-azadispiro[4.2.4.2]tetradec-11-en-10-one;
   O.24 Mitochondrial complex IV electron transport inhibitors: aluminium phosphide, calcium phosphide, phosphine, zinc phosphide, cyanide;
   O.25 Mitochondrial complex II electron transport inhibitors: cyclobutrifluram, cyenopyrafen, cyflumetofen, cyetpyrafen, pyflubumide;
   O.28 Ryanodine receptor-modulators: chlorantraniliprole, cyantraniliprole, cyclaniliprole, cyhalodiamide, flubendiamide, pixoaniliprole, fluchlodiniliprole, tetrachlorantraniliprole, tetraniliprole, tiorantraniliprole, (*R*)-3-chloro-*N*¹-{2-methyl-4-[1,2,2,2-tetrafluoro-1-(trifluoromethyl)ethyl]phenyl}-*N*²-(1-methyl-2-methylsulfonylethyl)phthalamide, (*S*)-3-chloro-N¹-{2-methyl-4-[1,2,2,2-tetrafluoro-1-(trifluoromethyl)ethyl]phenyl}-*N*²-(1-methyl-2-methylsulfonylethyl)phthalamide, methyl-2-[3,5-dibromo-2-({[3-bromo-1-(3-chloropyridin-2-yl)-1*H*-pyrazol-5-yl]-carbonyl}amino)benzoyl]-1,2-dimethylhydrazinecarboxylate; *N*-[4,6-dichloro-2-[(diethyl-lambda-4-sulfanylidene)-carbamoyl]-phenyl]-2-(3-chloro-2-pyridyl)-5-(trifluoromethyl)pyrazole-3-carboxamide; *N*-[4-chloro-2-[(diethyl-*lambda*-4-sulfanylidene)carbamoyl]-6-methyl-phenyl]-2-(3-chloro-2-pyridyl)-5-(trifluoromethyl)pyrazole-3-carboxamide; *N*-[2-(5-amino-1,3,4-thiadiazol-2-yl)-4-chloro-6-methylphenyl]-3-bromo-1-(3-chloro-2-pyridinyl)-1*H*-pyrazole-5-carboxamide; 3-chloro-1-(3-chloro-2-pyridinyl)-*N*-[2,4-dichloro-6-[[(1-cyano-1-methylethyl)amino]-carbonyl]phenyl]-1*H*-pyrazole-5-carboxamide; *N*-[4-chloro-2-[[(1,1-dimethylethyl)amino]carbonyl]-6-methylphenyl]-1-(3-chloro-2-pyridinyl)-3-(fluoromethoxy)-1*H*-pyrazole-5-carboxamide; *N*-[2-(5-amino-1,3,4-thiadiazol-2-yl)-4-chloro-6-methylphenyl]-3-bromo-1-(3-chloro-2-pyridinyl)-1*H*-pyrazole-5-carboxamide;
   O.29 Chordotonal organ modulators: flonicamid;
   O.30 GABA-gated chloride channel allosteric modulators: broflanilide, cyproflanilide, fluralaner, fluxametamide, isocycloseram, lotilaner, piperflanilide, sarolaner, tigolaner, umifoxolaner;
   O.33 Calcium-activated potassium channel modulators: acynonapyr;
   O.34 Mitochondrial complex III electron transport inhibitors - Qi site: flometoquin;
   O.35 RNA interference mediated target suppressors: ledprona;
   O.36: Chordotonal organ modulators: dimpropyridaz;
   O.UN Unknown or uncertain mode of action: afoxolaner, azadirachtin, amidoflumet, benzoximate, benzpyrimoxan, bromopropylate, bisulfufen, chinomethionat, dicofol, fluazaindolizine, flufenerim, fluensulfone, fluhexafon, flupentiofenox, indazapyroxamet, isoflualanam, metaldehyde, metoxadiazone, piperonyl butoxide, pyridalyl, sulfiflumin, tioxazafen, trifluenfuronate, tyclopyrazoflor;11-(4-chloro-2,6-dimethylphenyl)-12-hydroxy-1,4-dioxa-9-azadispiro[4.2.4.2]-tetradec-11-en-10-one, 3-(4'-fluoro-2,4-dimethylbiphenyl-3-yl)-4-hydroxy-8-oxa-1-azaspiro[4.5]dec-3-en-2-one, 4-cyano-*N*-[2-cyano-5-[[[2,6-dibromo-4-[1,2,2,3,3,3-hexafluoro-1-(trifluoromethyl)propyl]phenyl]amino]carbonyl]phenyl]-2-methyl-benzamide, 4-cyano-3-[(4-cyano-2-methyl-benzoyl)amino]-*N*-[2,6-dichloro-4-[1,2,2,3,3,3-hexafluoro-1-(trifluoromethyl)propyl]phenyl]-2-fluoro-benzamide, *N*-[5-[[[2-chloro-6-cyano-4-[1,2,2,3,3,3-hexafluoro-1-(trifluoromethyl)propyl]phenyl]amino]carbonyl]-2-cyano-phenyl]-4-cyano-2-methyl-benzamide, *N*-[5-[[[2-bromo-6-chloro-4-[2,2,2-trifluoro-1-hydroxy-1-(trifluoromethyl)ethyl]phenyl]-amino]carbonyl]-2-cyano-phenyl]-4-cyano-2-methyl-benzamide, *N*-[5-[[[2-bromo-6-chloro-4-[1,2,2,3,3,3-hexafluoro-1-(trifluoromethyl)propyl]phenyl]amino]carbonyl]-2-cyano-phenyl]-4-cyano-2-methyl-benzamide, 4-cyano-*N*-[2-cyano-5-[[[2,6-dichloro-4-[1,2,2,3,3,3-hexafluoro-1-(trifluoromethyl)propyl]phenyl]amino]carbonyl]phenyl]-2-methyl-benzamide, 1-[2-fluoro-4-methyl-5-[(2,2,2-trifluoroethyl)sulfinyl]phenyl]-3-(trifluoromethyl)-1*H*-1,2,4-triazole-5-amine, *N*-[5-[[[2-bromo-6-chloro-4-[1,2,2,2-tetrafluoro-1-(trifluoromethyl)ethyl]phenyl]amino]-carbonyl]-2-cyano-phenyl]-4-cyano-2-methyl-benzamide, 4-cyano-*N*-[2-cyano-5-[[[2,6-dichloro-4-[1,2,2,2-tetrafluoro-1-(trifluoromethyl)ethyl]phenyl]amino]carbonyl]phenyl]-2-methyl-benzamide, 5-[3-[2,6-dichloro-4-(3,3-dichloroallyloxy)phenoxy]propoxy]-1*H*-pyrazole; *N*-[5-[[2-bromo-6-chloro-4-[1,2,2,3,3,3-hexafluoro-1-(trifluoromethyl)-propyl]phenyl]carbamoyl]-2-cyano-phenyl]-4-cyano-2-methyl-benzamide; 4-cyano-*N*-[2-cyano-5-[[2,6-dichloro-4-[1,2,2,3,3,3-hexafluoro-1-(trifluoromethyl)-propyl]phenyl]carbamoyl]phenyl]-2-methyl-benzamide; 4-cyano-*N*-[2-cyano-5-[[2,6-dichloro-4-[1,2,2,2-tetrafluoro-1-(trifluoromethyl)ethyl]phenyl]carbamoyl]¬phenyl]-2-methyl-benzamide; *N*-[5-[[2-bromo-6-chloro-4-[1,2,2,2-tetrafluoro-1-(trifluoromethyl)ethyl]phenyl]carba¬moyl]-2-cyano-phenyl]-4-cyano-2-methyl-benzamide; 2-(1,3-dioxan-2-yl)-6-[2-(3-pyridinyl)-5-thiazolyl]-pyridine; 2-[6-[2-(5-fluoro-3-pyridinyl)-5-thiazo¬lyl]-2-pyridinyl]-pyrimidine; 2-[6-[2-(3-pyridinyl)-5-thiazolyl]-2-pyridinyl]-pyrimidine; *N*-methylsul¬fonyl-6-[2-(3-pyridyl)thiazol-5-yl]pyridine-2-carboxamide; *N*-methylsulfonyl-6-[2-(3-pyridyl)thiazol-5-yl]pyridine-2-carboxamide; 1-[(6-chloro-3-pyridinyl)methyl]-1,2,3,5,6,7-hexahydro-5-methoxy-7-methyl-8-nitro-imidazo[1,2-a]pyridine; 1-[(6-chloropyridin-3-yl)methyl]-7-methyl-8-nitro-1,2,3,5,6,7-hexahydroimidazo[1,2-a]pyridin-5-ol; *N*-(3-chloro-2-methylphenyl)-2-[(4-chlorophenyl)-[4-[methyl-(methylsulfonyl)amino]phenyl]methylene]-hydrazinecarboxamide; 1-[(6-chloro-3-pyridinyl)methyl]-1,2,3,5,6,7-hexahydro-5-methoxy-7-methyl-8-nitro-imidazo[1,2-a]pyridine; 2-(3-pyridinyl)-*N*-(2-pyrimidinylmethyl)-2*H*-indazole-5-carboxamide; *N*-[4-chloro-3-[[(phenylmethyl)amino]carbonyl]phenyl]-1-methyl-3-(1,1,2,2,2-pentafluoroethyl)-4-(trifluoromethyl)-1*H*-pyrazole-5-carboxamide; *N*-[4-chloro-3-[[(phenylmethyl)amino]carbonyl]-phenyl]-1-methyl-3-(1,1,2,2,2-pentafluoroethyl)-4-(trifluoromethyl)-1*H*-pyrazole-5-carboxamide; 2-(3-ethylsulfonyl-2-pyridyl)-3-methyl-6-(trifluoromethyl)imidazo[4,5-b]pyridine, 2-[3-ethylsulfonyl-5-(trifluoromethyl)-2-pyridyl]-3-methyl-6-(trifluoromethyl)imidazo[4,5-b]pyridine; *N*-[4-chloro-3-(cyclopropylcarbamoyl)phenyl]-2-methyl-5-(1,1,2,2,2-pentafluoroethyl)-4-(trifluoromethyl)pyrazole-3-carboxamide, *N*-[4-chloro-3-[(1-cyanocyclopropyl)-carbamoyl]phenyl]-2-methyl-5-(1,1,2,2,2-pentafluoroethyl)-4-(trifluoromethyl)pyrazole-3-carboxamide; [(2*S*,3*R*,4*R*,5*S*,6*S*)-3,5-dimethoxy-6-methyl-4-propoxy-tetrahydropyran-2-yl]-*N*-[4-[1-[4-(trifluoromethoxy)phenyl]-1,2,4-triazol-3-yl]phenyl]carbamate; [(2*S*,3*R*,4*R*,5*S*,6*S*)-3,4,5-trimethoxy-6-methyl-tetrahydropyran-2-yl]-*N*-[4-[1-[4-(trifluoromethoxy)phenyl]-1,2,4-triazol-3-yl]phenyl]carbamate; [(2*S*,3*R*,4*R*,5*S*,6*S*)-3,5-dimethoxy-6-methyl-4-propoxy-tetrahydropyran-2-yl]-*N*-[4-[1-[4-(1,1,2,2,2-pentafluoroethoxy)phenyl]-1,2,4-triazol-3-yl]phenyl]carbamate; [(2*S*,3*R*,4*R*,5*S*,6*S*)-3,4,5-trimethoxy-6-methyl-tetrahydropyran-2-yl]-*N*-[4-[1-[4-(1,1,2,2,2-pentafluoroethoxy)phenyl]-1,2,4-triazol-3-yl]phenyl]carbamate; (2*Z*)-3-(2-isopropylphenyl)-2-[(*E*)-[4-[1-[4-(trifluoromethoxy)phenyl]-1,2,4-triazol-3-yl]phenyl]methylenehydrazono]thiazolidin-4-one, (2*Z*)-3-(2-isopropylphenyl)-2-[(*E*)-[4-[1-[4-(1,1,2,2,2-pentafluoroethoxy)phenyl]-1,2,4-triazol-3-yl]phenyl]methylenehydrazono]thiazolidin-4-one, (2*Z*)-3-(2-isopro¬pyl¬phenyl)-2-[(*E*)-[4-[1-[4-(1,1,2,2,2-pentafluoroethoxy)phenyl]-1,2,4-triazol-3-yl]phenyl]methylenehydrazono]thiazolidin-4-one; 2-(6-chloro-3-ethylsulfonyl-imidazo[1,2-a]pyridin-2-yl)-3-methyl-6-(trifluoromethyl)imidazo[4,5-b]pyridine, 2-(6-bromo-3-ethylsulfonyl-imidazo[1,2-a]pyridin-2-yl)-3-methyl-6-(trifluoromethyl)imidazo[4,5-b]pyridine, 2-(3-ethylsulfonyl-6-iodo-imidazo[1,2-a]pyridin-2-yl)-3-methyl-6-(trifluoromethyl)imidazo[4,5-b]pyridine, 2-(7-chloro-3-ethylsulfonyl-imidazo[1,2-a]pyridin-2-yl)-3-methyl-6-(trifluoromethyl)imidazo[4,5-b]pyridine, 2-(7-chloro-3-ethylsulfonyl-imidazo[1,2-a]pyridin-2-yl)-3-methyl-6-(trifluoromethyl)imidazo[4,5-b]pyridine, 2-(3-ethylsulfonyl-7-iodo-imidazo-[1,2-a]pyridin-2-yl)-3-methyl-6-(trifluoromethyl)imidazo[4,5-b]pyridine, 3-ethylsulfonyl-6-iodo-2-[3-methyl-6-(trifluoromethyl)imidazo[4,5-b]pyridin-2-yl]imidazo[1,2-a]pyridine-8-carbonitrile, 2-[3-ethylsulfonyl-8-fluoro-6-(trifluoromethyl)imidazo[1,2-a]pyridin-2-yl]-3-methyl-6-(trifluoromethyl)imidazo[4,5-b]pyridine, 2-[3-ethylsulfonyl-7-(trifluoromethyl)imidazo[1,2-a]pyridin-2-yl]-3-methyl-6-(trifluoromethylsulfinyl)imidazo[4,5-b]pyridine, 2-[3-ethylsulfonyl-7-(trifluoromethyl)imidazo[1,2-a]pyridin-2-yl]-3-methyl-6-(trifluoromethyl)imidazo[4,5-c]pyridine, 2-(6-bromo-3-ethylsulfonyl-imidazo[1,2-a]pyridin-2-yl)-6-(trifluoromethyl)pyrazolo[4,3-c]pyridine; *N*-[[2-fluoro-4-[(2*S*,3*S*)-2-hydroxy-3-(3,4,5-trichlorophenyl)-3-(trifluoromethyl)pyrrolidin-1-yl]phenyl]methyl]cyclopropanecarboxamide, *N*-[3-chloro-1-(3-pyridyl)pyrazol-4-yl]-2-methylsulfonyl-propanamide, *N*-[4-chloro-3-[(1-cyano-cyclopropyl)carbamoyl]phenyl]-2-methyl-4-methylsulfonyl-5-(1,1,2,2,2-pentafluoroethyl)pyrazole-3-carboxamide, 1,4-dimethyl-2-[2-(pyridin-3-yl)-2*H*-indazol-5-yl]-1,2,4-triazolidine-3,5-dione, *N*-[4-chloro-2-(3-pyridyl)thiazol-5-yl]-*N*-ethyl-3-methylsulfonyl-propanamide, *N*-cyclopropyl-5-[(5*S*)-5-(3,5-dichloro-4-fluoro-phenyl)-5-(trifluoromethyl)-4*H*-isoxazol-3-yl]isoquinoline-8-carboxamide, 5-[(5S)-5-(3,5-dichloro-4-fluoro-phenyl)-5-(trifluoromethyl)-4*H*-isoxazol-3-yl]-*N*-(pyrimidin-2-ylmethyl)isoquinoline-8-carboxamide, *N*-[1-(2,6-difluorophenyl)pyrazol-3-yl]-2-(trifluoromethyl)benzamide, 5-((1*R*,3*R*)-3-(3,5-bis(trifluoromethyl)phenyl)-2,2-dichlorocyclopropane-1-carboxamido)-2-chloro-*N*-(3-(2,2-difluoroacetamido)-2,4-difluorophenyl)benzamide, 1-[6-(2,2-difluoro-7-methyl-[1,3]dioxolo[4,5-f]benzimidazol-6-yl)-5-ethylsulfonyl-3-pyridyl]cyclopropanecarbonitrile, 6-(5-cyclopropyl-3-ethylsulfonyl-2-pyridyl)-2,2-difluoro-7-methyl-[1,3]dioxolo[4,5-f]benzimidazole, 3,5-bis(trifluoromethyl)-*N*-[(1*S*)-1-[1-[6-(trifluoromethyl)-4-pyrimidinyl]-1*H*-1,2,4-triazol-5-yl]ethyl]-benzamide, 2-(3-ethylsulfonyl-2-pyridyl)-5-(2,2,3,3,3-pentafluoropropoxy)pyrazine, 2-[3-ethylsulfonyl-6-(trifluoromethyl)pyrazolo[1,5-a]pyridin-2-yl]-3-methyl-6-(trifluoromethyl)imidazo[4,5-b]pyridine, 9-(methoxymethyl)-5-(3-pyridyl)-2-oxa-5,6,9,14-tetrazatricyclo[8.4.0.0^{3,7}]tetradeca-1(10),3,6,11,13-pentaen-8-one, 2-[5-[(*E*)-2-chloro-3,3,3-trifluoro-prop-1-enyl]-1-methyl-imidazol-2-yl]-5-cyclopropyl-3-ethylsulfonyl-pyridine, 2-(5-cyclopropyl-3-ethylsulfonyl-2-pyridyl)-5-(trifluoromethylsulfinyl)-1,3-benzoxazole.

When used as ternary mixture of compounds I and pesticide II and pesticide III, preferably, the mixtures according to the invention, comprise as component 1) a compound I selected from compounds I.1, I.2, I.3, I.4, I.5, I.6, I.7, I.8, I.9, I.10, I.11, I.12, and I.13 as defined above, and as component 2) a pesticide II selected from metyltetraprole (A.1.25), pydiflumetofen (A.3.17), prothioconazole (B.1.23), mefentrifluconazole (B.1.38), and feneptamidoquin (C.5.3), and as component 3) a pesticide III selected from the list above, provided that component 2) and component 3) are not identical (e.g. pesticide II and pesticide II cannot be both (B.1.38)).

When used as ternary mixture of compounds I and pesticide II and pesticide III, more preferably, the mixtures according to the invention, comprise as component 1) a compound I selected from compounds I.1, I.2, I.3, I.4, I.5, I.6, I.7, I.8, I.9, I.10, I.11, I.12, and I.13 as defined above, and as component 2) a pesticide II as defined above for any binary mixture according to the invention, and as component 3) a pesticide III selected from pyraclostrobin (A.1.14), fenpicoxamid (A.2.4), florylpicoxamid (A.2.5), metarylpicoxamid (A.2.6), fluxapyroxad (A.3.9), inpyrfluxam (A.3.22). isoflucypram (A.3.31), prothioconazole (B.1.23), mefentrifluconazole (B.1.38), fenpropoimorph (B.2.4), copper oxychloride (H.1.5), mancozeb (H.2.2), metiram (H.2.5), chlorothalonil (H.3.2), flufenoxadiazam (K.1.58), and flumetylsulforim (K.1.60), provided that component 2) and component 3) are not identical (e.g. pesticide II and pesticide II cannot be both (B.1.38)).

When used as ternary mixture of compounds I and pesticide II and pesticide III, even more preferably, the mixtures according to the invention, comprise as component 1) a compound I selected from compounds I.1, I.2, I.3, I.4, I.5, I.6, I.7, I.8, I.9, I.10, I.11, I.12, and I.13 as defined above, and as component 2) a pesticide II selected from metyltetraprole (A.1.25), pydiflumetofen (A.3.17), prothioconazole (B.1.23), mefentrifluconazole (B.1.38), and feneptamidoquin (C.5.3), and as component 3) a pesticide III selected from pyraclostrobin (A.1.14), fenpicoxamid (A.2.4), florylpicoxamid (A.2.5), metarylpicoxamid (A.2.6), fluxapyroxad (A.3.9), inpyrfluxam (A.3.22). isoflucypram (A.3.31), prothioconazole (B.1.23), mefentrifluconazole (B.1.38), fenpropoimorph (B.2.4), copper oxychloride (H.1.5), mancozeb (H.2.2), metiram (H.2.5), chlorothalonil (H.3.2), flufenoxadiazam (K.1.58), and flumetylsulforim (K.1.60), provided that component 2) and component 3) are not identical (e.g. pesticide II and pesticide II cannot be both (B.1.38)).

Particularly preferred ternary mixtures are the ternary mixtures T-1 to T-780 of Table T, where each row represents one aspect of the mixtures according to the invention.

**Table T**

| **Mixture** | **C1)** | **C2)** | **C3)** |
|---|---|---|---|
| T-1 | I.1 | (A.1.25) | (B.1.38) |
| T-2 | I.1 | (A.1.25) | (B.1.23) |
| T-3 | I.1 | (A.1.25) | (K.1.58) |
| T-4 | I.1 | (A.1.25) | (H.1.5) |
| T-5 | I.1 | (A.1.25) | (A.3.9) |
| T-6 | I.1 | (A.1.25) | (H.2.2) |
| T-7 | I.1 | (A.1.25) | (B.2.4) |
| T-8 | I.1 | (A.1.25) | (A.2.6) |
| T-9 | I.1 | (A.1.25) | (H.3.2) |
| T-10 | I.1 | (A.1.25) | (A.1.14) |
| T-11 | I.1 | (A.1.25) | (H.2.5) |
| T-12 | I.1 | (B.1.23) | (B.1.38) |
| T-13 | I.1 | (B.1.23) | (K.1.58) |
| T-14 | I.1 | (B.1.23) | (H.1.5) |
| T-15 | I.1 | (B.1.23) | (A.3.9) |
| T-16 | I.1 | (B.1.23) | (H.2.2) |
| T-17 | I.1 | (B.1.23) | (B.2.4) |
| T-18 | I.1 | (B.1.23) | (A.2.6) |
| T-19 | I.1 | (B.1.23) | (H.3.2) |
| T-20 | I.1 | (B.1.23) | (A.1.14) |
| T-21 | I.1 | (B.1.23) | (H.2.5) |
| T-22 | I.1 | (B.1.38) | (K.1.58) |
| T-23 | I.1 | (B.1.38) | (H.1.5) |
| T-24 | I.1 | (B.1.38) | (A.3.9) |
| T-25 | I.1 | (B.1.38) | (H.2.2) |
| T-26 | I.1 | (B.1.38) | (B.2.4) |
| T-27 | I.1 | (B.1.38) | (A.2.6) |
| T-28 | I.1 | (B.1.38) | (H.3.2) |
| T-29 | I.1 | (B.1.38) | (A.1.14) |
| T-30 | I.1 | (B.1.38) | (H.2.5) |
| T-31 | I.1 | (B.1.38) | (K.1.60) |
| T-32 | I.1 | (B.1.38) | (A.2.5) |
| T-33 | I.1 | (B.1.38) | (A.2.4) |
| T-34 | I.1 | (B.1.38) | (A.3.22) |
| T-35 | I.1 | (B.1.38) | (A.3.31) |
| T-36 | I.1 | (C.5.3) | (K.1.58) |
| T-37 | I.1 | (C.5.3) | (B.1.23) |
| T-38 | I.1 | (C.5.3) | (H.1.5) |
| T-39 | I.1 | (C.5.3) | (A.3.9) |
| T-40 | I.1 | (C.5.3) | (H.2.2) |
| T-41 | I.1 | (C.5.3) | (B.2.4) |
| T-42 | I.1 | (C.5.3) | (A.2.6) |
| T-43 | I.1 | (C.5.3) | (H.3.2) |
| T-44 | I.1 | (C.5.3) | (A.1.14) |
| T-45 | I.1 | (C.5.3) | (H.2.5) |
| T-46 | I.1 | (C.5.3) | (B.1.38) |
| T-47 | I.1 | (C.5.3) | (A.1.25) |
| T-48 | I.1 | (A.3.17) | (K.1.58) |
| T-49 | I.1 | (A.3.17) | (H.1.5) |
| T-50 | I.1 | (A.3.17) | (A.3.9) |
| T-51 | I.1 | (A.3.17) | (H.2.2) |
| T-52 | I.1 | (A.3.17) | (B.2.4) |
| T-53 | I.1 | (A.3.17) | (A.2.6) |
| T-54 | I.1 | (A.3.17) | (H.3.2) |
| T-55 | I.1 | (A.3.17) | (A.1.14) |
| T-56 | I.1 | (A.3.17) | (H.2.5) |
| T-57 | I.1 | (A.3.17) | (B.1.38) |
| T-58 | I.1 | (A.3.17) | (B.1.23) |
| T-59 | I.1 | (A.3.17) | (C.5.3) |
| T-60 | I.1 | (A.3.17) | (A.1.25) |
| T-61 | I.2 | (A.1.25) | (B.1.38) |
| T-62 | I.2 | (A.1.25) | (B.1.23) |
| T-63 | I.2 | (A.1.25) | (K.1.58) |
| T-64 | I.2 | (A.1.25) | (H.1.5) |
| T-65 | I.2 | (A.1.25) | (A.3.9) |
| T-66 | I.2 | (A.1.25) | (H.2.2) |
| T-67 | I.2 | (A.1.25) | (B.2.4) |
| T-68 | I.2 | (A.1.25) | (A.2.6) |
| T-69 | I.2 | (A.1.25) | (H.3.2) |
| T-70 | I.2 | (A.1.25) | (A.1.14) |
| T-71 | I.2 | (A.1.25) | (H.2.5) |
| T-72 | I.2 | (B.1.23) | (B.1.38) |
| T-73 | I.2 | (B.1.23) | (K.1.58) |
| T-74 | I.2 | (B.1.23) | (H.1.5) |
| T-75 | I.2 | (B.1.23) | (A.3.9) |
| T-76 | I.2 | (B.1.23) | (H.2.2) |
| T-77 | I.2 | (B.1.23) | (B.2.4) |
| T-78 | I.2 | (B.1.23) | (A.2.6) |
| T-79 | I.2 | (B.1.23) | (H.3.2) |
| T-80 | I.2 | (B.1.23) | (A.1.14) |
| T-81 | I.2 | (B.1.23) | (H.2.5) |
| T-82 | I.2 | (B.1.38) | (K.1.58) |
| T-83 | I.2 | (B.1.38) | (H.1.5) |
| T-84 | I.2 | (B.1.38) | (A.3.9) |
| T-85 | I.2 | (B.1.38) | (H.2.2) |
| T-86 | I.2 | (B.1.38) | (B.2.4) |
| T-87 | I.2 | (B.1.38) | (A.2.6) |
| T-88 | I.2 | (B.1.38) | (H.3.2) |
| T-89 | I.2 | (B.1.38) | (A.1.14) |
| T-90 | I.2 | (B.1.38) | (H.2.5) |
| T-91 | I.2 | (B.1.38) | (K.1.60) |
| T-92 | I.2 | (B.1.38) | (A.2.5) |
| T-93 | I.2 | (B.1.38) | (A.2.4) |
| T-94 | I.2 | (B.1.38) | (A.3.22) |
| T-95 | I.2 | (B.1.38) | (A.3.31) |
| T-96 | I.2 | (C.5.3) | (K.1.58) |
| T-97 | I.2 | (C.5.3) | (B.1.23) |
| T-98 | I.2 | (C.5.3) | (H.1.5) |
| T-99 | I.2 | (C.5.3) | (A.3.9) |
| T-100 | I.2 | (C.5.3) | (H.2.2) |
| T-101 | I.2 | (C.5.3) | (B.2.4) |
| T-102 | I.2 | (C.5.3) | (A.2.6) |
| T-103 | I.2 | (C.5.3) | (H.3.2) |
| T-104 | I.2 | (C.5.3) | (A.1.14) |
| T-105 | I.2 | (C.5.3) | (H.2.5) |
| T-106 | I.2 | (C.5.3) | (B.1.38) |
| T-107 | I.2 | (C.5.3) | (A.1.25) |
| T-108 | I.2 | (A.3.17) | (K.1.58) |
| T-109 | I.2 | (A.3.17) | (H.1.5) |
| T-110 | I.2 | (A.3.17) | (A.3.9) |
| T-111 | I.2 | (A.3.17) | (H.2.2) |
| T-112 | I.2 | (A.3.17) | (B.2.4) |
| T-113 | I.2 | (A.3.17) | (A.2.6) |
| T-114 | I.2 | (A.3.17) | (H.3.2) |
| T-115 | I.2 | (A.3.17) | (A.1.14) |
| T-116 | I.2 | (A.3.17) | (H.2.5) |
| T-117 | I.2 | (A.3.17) | (B.1.38) |
| T-118 | I.2 | (A.3.17) | (B.1.23) |
| T-119 | I.2 | (A.3.17) | (C.5.3) |
| T-120 | I.2 | (A.3.17) | (A.1.25) |
| T-121 | I.3 | (A.1.25) | (B.1.38) |
| T-122 | I.3 | (A.1.25) | (B.1.23) |
| T-123 | I.3 | (A.1.25) | (K.1.58) |
| T-124 | I.3 | (A.1.25) | (H.1.5) |
| T-125 | I.3 | (A.1.25) | (A.3.9) |
| T-126 | I.3 | (A.1.25) | (H.2.2) |
| T-127 | I.3 | (A.1.25) | (B.2.4) |
| T-128 | I.3 | (A.1.25) | (A.2.6) |
| T-129 | I.3 | (A.1.25) | (H.3.2) |
| T-130 | I.3 | (A.1.25) | (A.1.14) |
| T-131 | I.3 | (A.1.25) | (H.2.5) |
| T-132 | I.3 | (B.1.23) | (B.1.38) |
| T-133 | I.3 | (B.1.23) | (K.1.58) |
| T-134 | I.3 | (B.1.23) | (H.1.5) |
| T-135 | I.3 | (B.1.23) | (A.3.9) |
| T-136 | I.3 | (B.1.23) | (H.2.2) |
| T-137 | I.3 | (B.1.23) | (B.2.4) |
| T-138 | I.3 | (B.1.23) | (A.2.6) |
| T-139 | I.3 | (B.1.23) | (H.3.2) |
| T-140 | I.3 | (B.1.23) | (A.1.14) |
| T-141 | I.3 | (B.1.23) | (H.2.5) |
| T-142 | I.3 | (B.1.38) | (K.1.58) |
| T-143 | I.3 | (B.1.38) | (H.1.5) |
| T-144 | I.3 | (B.1.38) | (A.3.9) |
| T-145 | I.3 | (B.1.38) | (H.2.2) |
| T-146 | I.3 | (B.1.38) | (B.2.4) |
| T-147 | I.3 | (B.1.38) | (A.2.6) |
| T-148 | I.3 | (B.1.38) | (H.3.2) |
| T-149 | I.3 | (B.1.38) | (A.1.14) |
| T-150 | I.3 | (B.1.38) | (H.2.5) |
| T-151 | I.3 | (B.1.38) | (K.1.60) |
| T-152 | I.3 | (B.1.38) | (A.2.5) |
| T-153 | I.3 | (B.1.38) | (A.2.4) |
| T-154 | I.3 | (B.1.38) | (A.3.22) |
| T-155 | I.3 | (B.1.38) | (A.3.31) |
| T-156 | I.3 | (C.5.3) | (K.1.58) |
| T-157 | I.3 | (C.5.3) | (B.1.23) |
| T-158 | I.3 | (C.5.3) | (H.1.5) |
| T-159 | I.3 | (C.5.3) | (A.3.9) |
| T-160 | I.3 | (C.5.3) | (H.2.2) |
| T-161 | I.3 | (C.5.3) | (B.2.4) |
| T-162 | I.3 | (C.5.3) | (A.2.6) |
| T-163 | I.3 | (C.5.3) | (H.3.2) |
| T-164 | I.3 | (C.5.3) | (A.1.14) |
| T-165 | I.3 | (C.5.3) | (H.2.5) |
| T-166 | I.3 | (C.5.3) | (B.1.38) |
| T-167 | I.3 | (C.5.3) | (A.1.25) |
| T-168 | I.3 | (A.3.17) | (K.1.58) |
| T-169 | I.3 | (A.3.17) | (H.1.5) |
| T-170 | I.3 | (A.3.17) | (A.3.9) |
| T-171 | I.3 | (A.3.17) | (H.2.2) |
| T-172 | I.3 | (A.3.17) | (B.2.4) |
| T-173 | I.3 | (A.3.17) | (A.2.6) |
| T-174 | I.3 | (A.3.17) | (H.3.2) |
| T-175 | I.3 | (A.3.17) | (A.1.14) |
| T-176 | I.3 | (A.3.17) | (H.2.5) |
| T-177 | I.3 | (A.3.17) | (B.1.38) |
| T-178 | I.3 | (A.3.17) | (B.1.23) |
| T-179 | I.3 | (A.3.17) | (C.5.3) |
| T-180 | I.3 | (A.3.17) | (A.1.25) |
| T-181 | I.4 | (A.1.25) | (B.1.38) |
| T-182 | I.4 | (A.1.25) | (B.1.23) |
| T-183 | I.4 | (A.1.25) | (K.1.58) |
| T-184 | I.4 | (A.1.25) | (H.1.5) |
| T-185 | I.4 | (A.1.25) | (A.3.9) |
| T-186 | I.4 | (A.1.25) | (H.2.2) |
| T-187 | I.4 | (A.1.25) | (B.2.4) |
| T-188 | I.4 | (A.1.25) | (A.2.6) |
| T-189 | I.4 | (A.1.25) | (H.3.2) |
| T-190 | I.4 | (A.1.25) | (A.1.14) |
| T-191 | I.4 | (A.1.25) | (H.2.5) |
| T-192 | I.4 | (B.1.23) | (B.1.38) |
| T-193 | I.4 | (B.1.23) | (K.1.58) |
| T-194 | I.4 | (B.1.23) | (H.1.5) |
| T-195 | I.4 | (B.1.23) | (A.3.9) |
| T-196 | I.4 | (B.1.23) | (H.2.2) |
| T-197 | I.4 | (B.1.23) | (B.2.4) |
| T-198 | I.4 | (B.1.23) | (A.2.6) |
| T-199 | I.4 | (B.1.23) | (H.3.2) |
| T-200 | I.4 | (B.1.23) | (A.1.14) |
| T-201 | I.4 | (B.1.23) | (H.2.5) |
| T-202 | I.4 | (B.1.38) | (K.1.58) |
| T-203 | I.4 | (B.1.38) | (H.1.5) |
| T-204 | I.4 | (B.1.38) | (A.3.9) |
| T-205 | I.4 | (B.1.38) | (H.2.2) |
| T-206 | I.4 | (B.1.38) | (B.2.4) |
| T-207 | I.4 | (B.1.38) | (A.2.6) |
| T-208 | I.4 | (B.1.38) | (H.3.2) |
| T-209 | I.4 | (B.1.38) | (A.1.14) |
| T-210 | I.4 | (B.1.38) | (H.2.5) |
| T-211 | I.4 | (B.1.38) | (K.1.60) |
| T-212 | I.4 | (B.1.38) | (A.2.5) |
| T-213 | I.4 | (B.1.38) | (A.2.4) |
| T-214 | I.4 | (B.1.38) | (A.3.22) |
| T-215 | I.4 | (B.1.38) | (A.3.31) |
| T-216 | I.4 | (C.5.3) | (K.1.58) |
| T-217 | I.4 | (C.5.3) | (B.1.23) |
| T-218 | I.4 | (C.5.3) | (H.1.5) |
| T-219 | I.4 | (C.5.3) | (A.3.9) |
| T-220 | I.4 | (C.5.3) | (H.2.2) |
| T-221 | I.4 | (C.5.3) | (B.2.4) |
| T-222 | I.4 | (C.5.3) | (A.2.6) |
| T-223 | I.4 | (C.5.3) | (H.3.2) |
| T-224 | I.4 | (C.5.3) | (A.1.14) |
| T-225 | I.4 | (C.5.3) | (H.2.5) |
| T-226 | I.4 | (C.5.3) | (B.1.38) |
| T-227 | I.4 | (C.5.3) | (A.1.25) |
| T-228 | I.4 | (A.3.17) | (K.1.58) |
| T-229 | I.4 | (A.3.17) | (H.1.5) |
| T-230 | I.4 | (A.3.17) | (A.3.9) |
| T-231 | I.4 | (A.3.17) | (H.2.2) |
| T-232 | I.4 | (A.3.17) | (B.2.4) |
| T-233 | I.4 | (A.3.17) | (A.2.6) |
| T-234 | I.4 | (A.3.17) | (H.3.2) |
| T-235 | I.4 | (A.3.17) | (A.1.14) |
| T-236 | I.4 | (A.3.17) | (H.2.5) |
| T-237 | I.4 | (A.3.17) | (B.1.38) |
| T-238 | I.4 | (A.3.17) | (B.1.23) |
| T-239 | I.4 | (A.3.17) | (C.5.3) |
| T-240 | I.4 | (A.3.17) | (A.1.25) |
| T-241 | I.5 | (A.1.25) | (B.1.38) |
| T-242 | I.5 | (A.1.25) | (B.1.23) |
| T-243 | I.5 | (A.1.25) | (K.1.58) |
| T-244 | I.5 | (A.1.25) | (H.1.5) |
| T-245 | I.5 | (A.1.25) | (A.3.9) |
| T-246 | I.5 | (A.1.25) | (H.2.2) |
| T-247 | I.5 | (A.1.25) | (B.2.4) |
| T-248 | I.5 | (A.1.25) | (A.2.6) |
| T-249 | I.5 | (A.1.25) | (H.3.2) |
| T-250 | I.5 | (A.1.25) | (A.1.14) |
| T-251 | I.5 | (A.1.25) | (H.2.5) |
| T-252 | I.5 | (B.1.23) | (B.1.38) |
| T-253 | I.5 | (B.1.23) | (K.1.58) |
| T-254 | I.5 | (B.1.23) | (H.1.5) |
| T-255 | I.5 | (B.1.23) | (A.3.9) |
| T-256 | I.5 | (B.1.23) | (H.2.2) |
| T-257 | I.5 | (B.1.23) | (B.2.4) |
| T-258 | I.5 | (B.1.23) | (A.2.6) |
| T-259 | I.5 | (B.1.23) | (H.3.2) |
| T-260 | I.5 | (B.1.23) | (A.1.14) |
| T-261 | I.5 | (B.1.23) | (H.2.5) |
| T-262 | I.5 | (B.1.38) | (K.1.58) |
| T-263 | I.5 | (B.1.38) | (H.1.5) |
| T-264 | I.5 | (B.1.38) | (A.3.9) |
| T-265 | I.5 | (B.1.38) | (H.2.2) |
| T-266 | I.5 | (B.1.38) | (B.2.4) |
| T-267 | I.5 | (B.1.38) | (A.2.6) |
| T-268 | I.5 | (B.1.38) | (H.3.2) |
| T-269 | I.5 | (B.1.38) | (A.1.14) |
| T-270 | I.5 | (B.1.38) | (H.2.5) |
| T-271 | I.5 | (B.1.38) | (K.1.60) |
| T-272 | I.5 | (B.1.38) | (A.2.5) |
| T-273 | I.5 | (B.1.38) | (A.2.4) |
| T-274 | I.5 | (B.1.38) | (A.3.22) |
| T-275 | I.5 | (B.1.38) | (A.3.31) |
| T-276 | I.5 | (C.5.3) | (K.1.58) |
| T-277 | I.5 | (C.5.3) | (B.1.23) |
| T-278 | I.5 | (C.5.3) | (H.1.5) |
| T-279 | I.5 | (C.5.3) | (A.3.9) |
| T-280 | I.5 | (C.5.3) | (H.2.2) |
| T-281 | I.5 | (C.5.3) | (B.2.4) |
| T-282 | I.5 | (C.5.3) | (A.2.6) |
| T-283 | I.5 | (C.5.3) | (H.3.2) |
| T-284 | I.5 | (C.5.3) | (A.1.14) |
| T-285 | I.5 | (C.5.3) | (H.2.5) |
| T-286 | I.5 | (C.5.3) | (B.1.38) |
| T-287 | I.5 | (C.5.3) | (A.1.25) |
| T-288 | I.5 | (A.3.17) | (K.1.58) |
| T-289 | I.5 | (A.3.17) | (H.1.5) |
| T-290 | I.5 | (A.3.17) | (A.3.9) |
| T-291 | I.5 | (A.3.17) | (H.2.2) |
| T-292 | I.5 | (A.3.17) | (B.2.4) |
| T-293 | I.5 | (A.3.17) | (A.2.6) |
| T-294 | I.5 | (A.3.17) | (H.3.2) |
| T-295 | I.5 | (A.3.17) | (A.1.14) |
| T-296 | I.5 | (A.3.17) | (H.2.5) |
| T-297 | I.5 | (A.3.17) | (B.1.38) |
| T-298 | I.5 | (A.3.17) | (B.1.23) |
| T-299 | I.5 | (A.3.17) | (C.5.3) |
| T-300 | I.5 | (A.3.17) | (A.1.25) |
| T-301 | I.6 | (A.1.25) | (B.1.38) |
| T-302 | I.6 | (A.1.25) | (B.1.23) |
| T-303 | I.6 | (A.1.25) | (K.1.58) |
| T-304 | I.6 | (A.1.25) | (H.1.5) |
| T-305 | I.6 | (A.1.25) | (A.3.9) |
| T-306 | I.6 | (A.1.25) | (H.2.2) |
| T-307 | I.6 | (A.1.25) | (B.2.4) |
| T-308 | I.6 | (A.1.25) | (A.2.6) |
| T-309 | I.6 | (A.1.25) | (H.3.2) |
| T-310 | I.6 | (A.1.25) | (A.1.14) |
| T-311 | I.6 | (A.1.25) | (H.2.5) |
| T-312 | I.6 | (B.1.23) | (B.1.38) |
| T-313 | I.6 | (B.1.23) | (K.1.58) |
| T-314 | I.6 | (B.1.23) | (H.1.5) |
| T-315 | I.6 | (B.1.23) | (A.3.9) |
| T-316 | I.6 | (B.1.23) | (H.2.2) |
| T-317 | I.6 | (B.1.23) | (B.2.4) |
| T-318 | I.6 | (B.1.23) | (A.2.6) |
| T-319 | I.6 | (B.1.23) | (H.3.2) |
| T-320 | I.6 | (B.1.23) | (A.1.14) |
| T-321 | I.6 | (B.1.23) | (H.2.5) |
| T-322 | I.6 | (B.1.38) | (K.1.58) |
| T-323 | I.6 | (B.1.38) | (H.1.5) |
| T-324 | I.6 | (B.1.38) | (A.3.9) |
| T-325 | I.6 | (B.1.38) | (H.2.2) |
| T-326 | I.6 | (B.1.38) | (B.2.4) |
| T-327 | I.6 | (B.1.38) | (A.2.6) |
| T-328 | I.6 | (B.1.38) | (H.3.2) |
| T-329 | I.6 | (B.1.38) | (A.1.14) |
| T-330 | I.6 | (B.1.38) | (H.2.5) |
| T-331 | I.6 | (B.1.38) | (K.1.60) |
| T-332 | I.6 | (B.1.38) | (A.2.5) |
| T-333 | I.6 | (B.1.38) | (A.2.4) |
| T-334 | I.6 | (B.1.38) | (A.3.22) |
| T-335 | I.6 | (B.1.38) | (A.3.31) |
| T-336 | I.6 | (C.5.3) | (K.1.58) |
| T-337 | I.6 | (C.5.3) | (B.1.23) |
| T-338 | I.6 | (C.5.3) | (H.1.5) |
| T-339 | I.6 | (C.5.3) | (A.3.9) |
| T-340 | I.6 | (C.5.3) | (H.2.2) |
| T-341 | I.6 | (C.5.3) | (B.2.4) |
| T-342 | I.6 | (C.5.3) | (A.2.6) |
| T-343 | I.6 | (C.5.3) | (H.3.2) |
| T-344 | I.6 | (C.5.3) | (A.1.14) |
| T-345 | I.6 | (C.5.3) | (H.2.5) |
| T-346 | I.6 | (C.5.3) | (B.1.38) |
| T-347 | I.6 | (C.5.3) | (A.1.25) |
| T-348 | I.6 | (A.3.17) | (K.1.58) |
| T-349 | I.6 | (A.3.17) | (H.1.5) |
| T-350 | I.6 | (A.3.17) | (A.3.9) |
| T-351 | I.6 | (A.3.17) | (H.2.2) |
| T-352 | I.6 | (A.3.17) | (B.2.4) |
| T-353 | I.6 | (A.3.17) | (A.2.6) |
| T-354 | I.6 | (A.3.17) | (H.3.2) |
| T-355 | I.6 | (A.3.17) | (A.1.14) |
| T-356 | I.6 | (A.3.17) | (H.2.5) |
| T-357 | I.6 | (A.3.17) | (B.1.38) |
| T-358 | I.6 | (A.3.17) | (B.1.23) |
| T-359 | I.6 | (A.3.17) | (C.5.3) |
| T-360 | I.6 | (A.3.17) | (A.1.25) |
| T-361 | I.7 | (A.1.25) | (B.1.38) |
| T-362 | I.7 | (A.1.25) | (B.1.23) |
| T-363 | I.7 | (A.1.25) | (K.1.58) |
| T-364 | I.7 | (A.1.25) | (H.1.5) |
| T-365 | I.7 | (A.1.25) | (A.3.9) |
| T-366 | I.7 | (A.1.25) | (H.2.2) |
| T-367 | I.7 | (A.1.25) | (B.2.4) |
| T-368 | I.7 | (A.1.25) | (A.2.6) |
| T-369 | I.7 | (A.1.25) | (H.3.2) |
| T-370 | I.7 | (A.1.25) | (A.1.14) |
| T-371 | I.7 | (A.1.25) | (H.2.5) |
| T-372 | I.7 | (B.1.23) | (B.1.38) |
| T-373 | I.7 | (B.1.23) | (K.1.58) |
| T-374 | I.7 | (B.1.23) | (H.1.5) |
| T-375 | I.7 | (B.1.23) | (A.3.9) |
| T-376 | I.7 | (B.1.23) | (H.2.2) |
| T-377 | I.7 | (B.1.23) | (B.2.4) |
| T-378 | I.7 | (B.1.23) | (A.2.6) |
| T-379 | I.7 | (B.1.23) | (H.3.2) |
| T-380 | I.7 | (B.1.23) | (A.1.14) |
| T-381 | I.7 | (B.1.23) | (H.2.5) |
| T-382 | I.7 | (B.1.38) | (K.1.58) |
| T-383 | I.7 | (B.1.38) | (H.1.5) |
| T-384 | I.7 | (B.1.38) | (A.3.9) |
| T-385 | I.7 | (B.1.38) | (H.2.2) |
| T-386 | I.7 | (B.1.38) | (B.2.4) |
| T-387 | I.7 | (B.1.38) | (A.2.6) |
| T-388 | I.7 | (B.1.38) | (H.3.2) |
| T-389 | I.7 | (B.1.38) | (A.1.14) |
| T-390 | I.7 | (B.1.38) | (H.2.5) |
| T-391 | I.7 | (B.1.38) | (K.1.60) |
| T-392 | I.7 | (B.1.38) | (A.2.5) |
| T-393 | I.7 | (B.1.38) | (A.2.4) |
| T-394 | I.7 | (B.1.38) | (A.3.22) |
| T-395 | I.7 | (B.1.38) | (A.3.31) |
| T-396 | I.7 | (C.5.3) | (K.1.58) |
| T-397 | I.7 | (C.5.3) | (B.1.23) |
| T-398 | I.7 | (C.5.3) | (H.1.5) |
| T-399 | I.7 | (C.5.3) | (A.3.9) |
| T-400 | I.7 | (C.5.3) | (H.2.2) |
| T-401 | I.7 | (C.5.3) | (B.2.4) |
| T-402 | I.7 | (C.5.3) | (A.2.6) |
| T-403 | I.7 | (C.5.3) | (H.3.2) |
| T-404 | I.7 | (C.5.3) | (A.1.14) |
| T-405 | I.7 | (C.5.3) | (H.2.5) |
| T-406 | I.7 | (C.5.3) | (B.1.38) |
| T-407 | I.7 | (C.5.3) | (A.1.25) |
| T-408 | I.7 | (A.3.17) | (K.1.58) |
| T-409 | I.7 | (A.3.17) | (H.1.5) |
| T-410 | I.7 | (A.3.17) | (A.3.9) |
| T-411 | I.7 | (A.3.17) | (H.2.2) |
| T-412 | I.7 | (A.3.17) | (B.2.4) |
| T-413 | I.7 | (A.3.17) | (A.2.6) |
| T-414 | I.7 | (A.3.17) | (H.3.2) |
| T-415 | I.7 | (A.3.17) | (A.1.14) |
| T-416 | I.7 | (A.3.17) | (H.2.5) |
| T-417 | I.7 | (A.3.17) | (B.1.38) |
| T-418 | I.7 | (A.3.17) | (B.1.23) |
| T-419 | I.7 | (A.3.17) | (C.5.3) |
| T-420 | I.7 | (A.3.17) | (A.1.25) |
| T-421 | I.8 | (A.1.25) | (B.1.38) |
| T-422 | I.8 | (A.1.25) | (B.1.23) |
| T-423 | I.8 | (A.1.25) | (K.1.58) |
| T-424 | I.8 | (A.1.25) | (H.1.5) |
| T-425 | I.8 | (A.1.25) | (A.3.9) |
| T-426 | I.8 | (A.1.25) | (H.2.2) |
| T-427 | I.8 | (A.1.25) | (B.2.4) |
| T-428 | I.8 | (A.1.25) | (A.2.6) |
| T-429 | I.8 | (A.1.25) | (H.3.2) |
| T-430 | 1.8 | (A.1.25) | (A.1.14) |
| T-431 | I.8 | (A.1.25) | (H.2.5) |
| T-432 | I.8 | (B.1.23) | (B.1.38) |
| T-433 | I.8 | (B.1.23) | (K.1.58) |
| T-434 | I.8 | (B.1.23) | (H.1.5) |
| T-435 | I.8 | (B.1.23) | (A.3.9) |
| T-436 | I.8 | (B.1.23) | (H.2.2) |
| T-437 | I.8 | (B.1.23) | (B.2.4) |
| T-438 | I.8 | (B.1.23) | (A.2.6) |
| T-439 | I.8 | (B.1.23) | (H.3.2) |
| T-440 | I.8 | (B.1.23) | (A.1.14) |
| T-441 | I.8 | (B.1.23) | (H.2.5) |
| T-442 | I.8 | (B.1.38) | (K.1.58) |
| T-443 | I.8 | (B.1.38) | (H.1.5) |
| T-444 | I.8 | (B.1.38) | (A.3.9) |
| T-445 | I.8 | (B.1.38) | (H.2.2) |
| T-446 | I.8 | (B.1.38) | (B.2.4) |
| T-447 | I.8 | (B.1.38) | (A.2.6) |
| T-448 | I.8 | (B.1.38) | (H.3.2) |
| T-449 | I.8 | (B.1.38) | (A.1.14) |
| T-450 | I.8 | (B.1.38) | (H.2.5) |
| T-451 | I.8 | (B.1.38) | (K.1.60) |
| T-452 | I.8 | (B.1.38) | (A.2.5) |
| T-453 | I.8 | (B.1.38) | (A.2.4) |
| T-454 | I.8 | (B.1.38) | (A.3.22) |
| T-455 | I.8 | (B.1.38) | (A.3.31) |
| T-456 | I.8 | (C.5.3) | (K.1.58) |
| T-457 | I.8 | (C.5.3) | (B.1.23) |
| T-458 | I.8 | (C.5.3) | (H.1.5) |
| T-459 | I.8 | (C.5.3) | (A.3.9) |
| T-460 | I.8 | (C.5.3) | (H.2.2) |
| T-461 | I.8 | (C.5.3) | (B.2.4) |
| T-462 | I.8 | (C.5.3) | (A.2.6) |
| T-463 | I.8 | (C.5.3) | (H.3.2) |
| T-464 | I.8 | (C.5.3) | (A.1.14) |
| T-465 | I.8 | (C.5.3) | (H.2.5) |
| T-466 | I.8 | (C.5.3) | (B.1.38) |
| T-467 | I.8 | (C.5.3) | (A.1.25) |
| T-468 | I.8 | (A.3.17) | (K.1.58) |
| T-469 | I.8 | (A.3.17) | (H.1.5) |
| T-470 | I.8 | (A.3.17) | (A.3.9) |
| T-471 | I.8 | (A.3.17) | (H.2.2) |
| T-472 | I.8 | (A.3.17) | (B.2.4) |
| T-473 | I.8 | (A.3.17) | (A.2.6) |
| T-474 | I.8 | (A.3.17) | (H.3.2) |
| T-475 | I.8 | (A.3.17) | (A.1.14) |
| T-476 | I.8 | (A.3.17) | (H.2.5) |
| T-477 | I.8 | (A.3.17) | (B.1.38) |
| T-478 | I.8 | (A.3.17) | (B.1.23) |
| T-479 | I.8 | (A.3.17) | (C.5.3) |
| T-480 | I.8 | (A.3.17) | (A.1.25) |
| T-481 | I.9 | (A.1.25) | (B.1.38) |
| T-482 | I.9 | (A.1.25) | (B.1.23) |
| T-483 | I.9 | (A.1.25) | (K.1.58) |
| T-484 | I.9 | (A.1.25) | (H.1.5) |
| T-485 | I.9 | (A.1.25) | (A.3.9) |
| T-486 | I.9 | (A.1.25) | (H.2.2) |
| T-487 | I.9 | (A.1.25) | (B.2.4) |
| T-488 | I.9 | (A.1.25) | (A.2.6) |
| T-489 | I.9 | (A.1.25) | (H.3.2) |
| T-490 | I.9 | (A.1.25) | (A.1.14) |
| T-491 | I.9 | (A.1.25) | (H.2.5) |
| T-492 | I.9 | (B.1.23) | (B.1.38) |
| T-493 | I.9 | (B.1.23) | (K.1.58) |
| T-494 | I.9 | (B.1.23) | (H.1.5) |
| T-495 | I.9 | (B.1.23) | (A.3.9) |
| T-496 | I.9 | (B.1.23) | (H.2.2) |
| T-497 | I.9 | (B.1.23) | (B.2.4) |
| T-498 | I.9 | (B.1.23) | (A.2.6) |
| T-499 | I.9 | (B.1.23) | (H.3.2) |
| T-500 | I.9 | (B.1.23) | (A.1.14) |
| T-501 | I.9 | (B.1.23) | (H.2.5) |
| T-502 | I.9 | (B.1.38) | (K.1.58) |
| T-503 | I.9 | (B.1.38) | (H.1.5) |
| T-504 | I.9 | (B.1.38) | (A.3.9) |
| T-505 | I.9 | (B.1.38) | (H.2.2) |
| T-506 | I.9 | (B.1.38) | (B.2.4) |
| T-507 | I.9 | (B.1.38) | (A.2.6) |
| T-508 | I.9 | (B.1.38) | (H.3.2) |
| T-509 | I.9 | (B.1.38) | (A.1.14) |
| T-510 | I.9 | (B.1.38) | (H.2.5) |
| T-511 | I.9 | (B.1.38) | (K.1.60) |
| T-512 | I.9 | (B.1.38) | (A.2.5) |
| T-513 | I.9 | (B.1.38) | (A.2.4) |
| T-514 | I.9 | (B.1.38) | (A.3.22) |
| T-515 | I.9 | (B.1.38) | (A.3.31) |
| T-516 | I.9 | (C.5.3) | (K.1.58) |
| T-517 | I.9 | (C.5.3) | (B.1.23) |
| T-518 | I.9 | (C.5.3) | (H.1.5) |
| T-519 | I.9 | (C.5.3) | (A.3.9) |
| T-520 | I.9 | (C.5.3) | (H.2.2) |
| T-521 | I.9 | (C.5.3) | (B.2.4) |
| T-522 | I.9 | (C.5.3) | (A.2.6) |
| T-523 | I.9 | (C.5.3) | (H.3.2) |
| T-524 | I.9 | (C.5.3) | (A.1.14) |
| T-525 | I.9 | (C.5.3) | (H.2.5) |
| T-526 | I.9 | (C.5.3) | (B.1.38) |
| T-527 | I.9 | (C.5.3) | (A.1.25) |
| T-528 | I.9 | (A.3.17) | (K.1.58) |
| T-529 | I.9 | (A.3.17) | (H.1.5) |
| T-530 | I.9 | (A.3.17) | (A.3.9) |
| T-531 | I.9 | (A.3.17) | (H.2.2) |
| T-532 | I.9 | (A.3.17) | (B.2.4) |
| T-533 | I.9 | (A.3.17) | (A.2.6) |
| T-534 | I.9 | (A.3.17) | (H.3.2) |
| T-535 | I.9 | (A.3.17) | (A.1.14) |
| T-536 | I.9 | (A.3.17) | (H.2.5) |
| T-537 | I.9 | (A.3.17) | (B.1.38) |
| T-538 | I.9 | (A.3.17) | (B.1.23) |
| T-539 | I.9 | (A.3.17) | (C.5.3) |
| T-540 | I.9 | (A.3.17) | (A.1.25) |
| T-541 | I.10 | (A.1.25) | (B.1.38) |
| T-542 | I.10 | (A.1.25) | (B.1.23) |
| T-543 | I.10 | (A.1.25) | (K.1.58) |
| T-544 | I.10 | (A.1.25) | (H.1.5) |
| T-545 | I.10 | (A.1.25) | (A.3.9) |
| T-546 | I.10 | (A.1.25) | (H.2.2) |
| T-547 | I.10 | (A.1.25) | (B.2.4) |
| T-548 | I.10 | (A.1.25) | (A.2.6) |
| T-549 | I.10 | (A.1.25) | (H.3.2) |
| T-550 | I.10 | (A.1.25) | (A.1.14) |
| T-551 | I.10 | (A.1.25) | (H.2.5) |
| T-552 | I.10 | (B.1.23) | (B.1.38) |
| T-553 | I.10 | (B.1.23) | (K.1.58) |
| T-554 | I.10 | (B.1.23) | (H.1.5) |
| T-555 | I.10 | (B.1.23) | (A.3.9) |
| T-556 | I.10 | (B.1.23) | (H.2.2) |
| T-557 | I.10 | (B.1.23) | (B.2.4) |
| T-558 | I.10 | (B.1.23) | (A.2.6) |
| T-559 | I.10 | (B.1.23) | (H.3.2) |
| T-560 | I.10 | (B.1.23) | (A.1.14) |
| T-561 | I.10 | (B.1.23) | (H.2.5) |
| T-562 | I.10 | (B.1.38) | (K.1.58) |
| T-563 | I.10 | (B.1.38) | (H.1.5) |
| T-564 | I.10 | (B.1.38) | (A.3.9) |
| T-565 | I.10 | (B.1.38) | (H.2.2) |
| T-566 | I.10 | (B.1.38) | (B.2.4) |
| T-567 | I.10 | (B.1.38) | (A.2.6) |
| T-568 | I.10 | (B.1.38) | (H.3.2) |
| T-569 | I.10 | (B.1.38) | (A.1.14) |
| T-570 | I.10 | (B.1.38) | (H.2.5) |
| T-571 | I.10 | (B.1.38) | (K.1.60) |
| T-572 | I.10 | (B.1.38) | (A.2.5) |
| T-573 | I.10 | (B.1.38) | (A.2.4) |
| T-574 | I.10 | (B.1.38) | (A.3.22) |
| T-575 | I.10 | (B.1.38) | (A.3.31) |
| T-576 | I.10 | (C.5.3) | (K.1.58) |
| T-577 | I.10 | (C.5.3) | (B.1.23) |
| T-578 | I.10 | (C.5.3) | (H.1.5) |
| T-579 | I.10 | (C.5.3) | (A.3.9) |
| T-580 | I.10 | (C.5.3) | (H.2.2) |
| T-581 | I.10 | (C.5.3) | (B.2.4) |
| T-582 | I.10 | (C.5.3) | (A.2.6) |
| T-583 | I.10 | (C.5.3) | (H.3.2) |
| T-584 | I.10 | (C.5.3) | (A.1.14) |
| T-585 | I.10 | (C.5.3) | (H.2.5) |
| T-586 | I.10 | (C.5.3) | (B.1.38) |
| T-587 | I.10 | (C.5.3) | (A.1.25) |
| T-588 | I.10 | (A.3.17) | (K.1.58) |
| T-589 | I.10 | (A.3.17) | (H.1.5) |
| T-590 | I.10 | (A.3.17) | (A.3.9) |
| T-591 | I.10 | (A.3.17) | (H.2.2) |
| T-592 | I.10 | (A.3.17) | (B.2.4) |
| T-593 | I.10 | (A.3.17) | (A.2.6) |
| T-594 | I.10 | (A.3.17) | (H.3.2) |
| T-595 | I.10 | (A.3.17) | (A.1.14) |
| T-596 | I.10 | (A.3.17) | (H.2.5) |
| T-597 | I.10 | (A.3.17) | (B.1.38) |
| T-598 | I.10 | (A.3.17) | (B.1.23) |
| T-599 | I.10 | (A.3.17) | (C.5.3) |
| T-600 | I.10 | (A.3.17) | (A.1.25) |
| T-601 | I.11 | (A.1.25) | (B.1.38) |
| T-602 | I.11 | (A.1.25) | (B.1.23) |
| T-603 | I.11 | (A.1.25) | (K.1.58) |
| T-604 | I.11 | (A.1.25) | (H.1.5) |
| T-605 | I.11 | (A.1.25) | (A.3.9) |
| T-606 | I.11 | (A.1.25) | (H.2.2) |
| T-607 | I.11 | (A.1.25) | (B.2.4) |
| T-608 | I.11 | (A.1.25) | (A.2.6) |
| T-609 | I.11 | (A.1.25) | (H.3.2) |
| T-610 | I.11 | (A.1.25) | (A.1.14) |
| T-611 | I.11 | (A.1.25) | (H.2.5) |
| T-612 | I.11 | (B.1.23) | (B.1.38) |
| T-613 | I.11 | (B.1.23) | (K.1.58) |
| T-614 | I.11 | (B.1.23) | (H.1.5) |
| T-615 | I.11 | (B.1.23) | (A.3.9) |
| T-616 | I.11 | (B.1.23) | (H.2.2) |
| T-617 | I.11 | (B.1.23) | (B.2.4) |
| T-618 | I.11 | (B.1.23) | (A.2.6) |
| T-619 | I.11 | (B.1.23) | (H.3.2) |
| T-620 | I.11 | (B.1.23) | (A.1.14) |
| T-621 | I.11 | (B.1.23) | (H.2.5) |
| T-622 | I.11 | (B.1.38) | (K.1.58) |
| T-623 | I.11 | (B.1.38) | (H.1.5) |
| T-624 | I.11 | (B.1.38) | (A.3.9) |
| T-625 | I.11 | (B.1.38) | (H.2.2) |
| T-626 | I.11 | (B.1.38) | (B.2.4) |
| T-627 | I.11 | (B.1.38) | (A.2.6) |
| T-628 | I.11 | (B.1.38) | (H.3.2) |
| T-629 | I.11 | (B.1.38) | (A.1.14) |
| T-630 | I.11 | (B.1.38) | (H.2.5) |
| T-631 | I.11 | (B.1.38) | (K.1.60) |
| T-632 | I.11 | (B.1.38) | (A.2.5) |
| T-633 | I.11 | (B.1.38) | (A.2.4) |
| T-634 | I.11 | (B.1.38) | (A.3.22) |
| T-635 | I.11 | (B.1.38) | (A.3.31) |
| T-636 | I.11 | (C.5.3) | (K.1.58) |
| T-637 | I.11 | (C.5.3) | (B.1.23) |
| T-638 | I.11 | (C.5.3) | (H.1.5) |
| T-639 | I.11 | (C.5.3) | (A.3.9) |
| T-640 | I.11 | (C.5.3) | (H.2.2) |
| T-641 | I.11 | (C.5.3) | (B.2.4) |
| T-642 | I.11 | (C.5.3) | (A.2.6) |
| T-643 | I.11 | (C.5.3) | (H.3.2) |
| T-644 | I.11 | (C.5.3) | (A.1.14) |
| T-645 | I.11 | (C.5.3) | (H.2.5) |
| T-646 | I.11 | (C.5.3) | (B.1.38) |
| T-647 | I.11 | (C.5.3) | (A.1.25) |
| T-648 | I.11 | (A.3.17) | (K.1.58) |
| T-649 | I.11 | (A.3.17) | (H.1.5) |
| T-650 | I.11 | (A.3.17) | (A.3.9) |
| T-651 | I.11 | (A.3.17) | (H.2.2) |
| T-652 | I.11 | (A.3.17) | (B.2.4) |
| T-653 | I.11 | (A.3.17) | (A.2.6) |
| T-654 | I.11 | (A.3.17) | (H.3.2) |
| T-655 | I.11 | (A.3.17) | (A.1.14) |
| T-656 | I.11 | (A.3.17) | (H.2.5) |
| T-657 | I.11 | (A.3.17) | (B.1.38) |
| T-658 | I.11 | (A.3.17) | (B.1.23) |
| T-659 | I.11 | (A.3.17) | (C.5.3) |
| T-660 | I.11 | (A.3.17) | (A.1.25) |
| T-661 | I.12 | (A.1.25) | (B.1.38) |
| T-662 | I.12 | (A.1.25) | (B.1.23) |
| T-663 | I.12 | (A.1.25) | (K.1.58) |
| T-664 | I.12 | (A.1.25) | (H.1.5) |
| T-665 | I.12 | (A.1.25) | (A.3.9) |
| T-666 | I.12 | (A.1.25) | (H.2.2) |
| T-667 | I.12 | (A.1.25) | (B.2.4) |
| T-668 | I.12 | (A.1.25) | (A.2.6) |
| T-669 | I.12 | (A.1.25) | (H.3.2) |
| T-670 | I.12 | (A.1.25) | (A.1.14) |
| T-671 | I.12 | (A.1.25) | (H.2.5) |
| T-672 | I.12 | (B.1.23) | (B.1.38) |
| T-673 | I.12 | (B.1.23) | (K.1.58) |
| T-674 | I.12 | (B.1.23) | (H.1.5) |
| T-675 | I.12 | (B.1.23) | (A.3.9) |
| T-676 | I.12 | (B.1.23) | (H.2.2) |
| T-677 | I.12 | (B.1.23) | (B.2.4) |
| T-678 | I.12 | (B.1.23) | (A.2.6) |
| T-679 | I.12 | (B.1.23) | (H.3.2) |
| T-680 | I.12 | (B.1.23) | (A.1.14) |
| T-681 | I.12 | (B.1.23) | (H.2.5) |
| T-682 | I.12 | (B.1.38) | (K.1.58) |
| T-683 | I.12 | (B.1.38) | (H.1.5) |
| T-684 | I.12 | (B.1.38) | (A.3.9) |
| T-685 | I.12 | (B.1.38) | (H.2.2) |
| T-686 | I.12 | (B.1.38) | (B.2.4) |
| T-687 | I.12 | (B.1.38) | (A.2.6) |
| T-688 | I.12 | (B.1.38) | (H.3.2) |
| T-689 | I.12 | (B.1.38) | (A.1.14) |
| T-690 | I.12 | (B.1.38) | (H.2.5) |
| T-691 | I.12 | (B.1.38) | (K.1.60) |
| T-692 | I.12 | (B.1.38) | (A.2.5) |
| T-693 | I.12 | (B.1.38) | (A.2.4) |
| T-694 | I.12 | (B.1.38) | (A.3.22) |
| T-695 | I.12 | (B.1.38) | (A.3.31) |
| T-696 | I.12 | (C.5.3) | (K.1.58) |
| T-697 | I.12 | (C.5.3) | (B.1.23) |
| T-698 | I.12 | (C.5.3) | (H.1.5) |
| T-699 | I.12 | (C.5.3) | (A.3.9) |
| T-700 | I.12 | (C.5.3) | (H.2.2) |
| T-701 | I.12 | (C.5.3) | (B.2.4) |
| T-702 | I.12 | (C.5.3) | (A.2.6) |
| T-703 | I.12 | (C.5.3) | (H.3.2) |
| T-704 | I.12 | (C.5.3) | (A.1.14) |
| T-705 | I.12 | (C.5.3) | (H.2.5) |
| T-706 | I.12 | (C.5.3) | (B.1.38) |
| T-707 | I.12 | (C.5.3) | (A.1.25) |
| T-708 | I.12 | (A.3.17) | (K.1.58) |
| T-709 | I.12 | (A.3.17) | (H.1.5) |
| T-710 | I.12 | (A.3.17) | (A.3.9) |
| T-711 | I.12 | (A.3.17) | (H.2.2) |
| T-712 | I.12 | (A.3.17) | (B.2.4) |
| T-713 | I.12 | (A.3.17) | (A.2.6) |
| T-714 | I.12 | (A.3.17) | (H.3.2) |
| T-715 | I.12 | (A.3.17) | (A.1.14) |
| T-716 | I.12 | (A.3.17) | (H.2.5) |
| T-717 | I.12 | (A.3.17) | (B.1.38) |
| T-718 | I.12 | (A.3.17) | (B.1.23) |
| T-719 | I.12 | (A.3.17) | (C.5.3) |
| T-720 | I.12 | (A.3.17) | (A.1.25) |
| T-721 | I.13 | (A.1.25) | (B.1.38) |
| T-722 | I.13 | (A.1.25) | (B.1.23) |
| T-723 | I.13 | (A.1.25) | (K.1.58) |
| T-724 | I.13 | (A.1.25) | (H.1.5) |
| T-725 | I.13 | (A.1.25) | (A.3.9) |
| T-726 | I.13 | (A.1.25) | (H.2.2) |
| T-727 | I.13 | (A.1.25) | (B.2.4) |
| T-728 | I.13 | (A.1.25) | (A.2.6) |
| T-729 | I.13 | (A.1.25) | (H.3.2) |
| T-730 | I.13 | (A.1.25) | (A.1.14) |
| T-731 | I.13 | (A.1.25) | (H.2.5) |
| T-732 | I.13 | (B.1.23) | (B.1.38) |
| T-733 | I.13 | (B.1.23) | (K.1.58) |
| T-734 | I.13 | (B.1.23) | (H.1.5) |
| T-735 | I.13 | (B.1.23) | (A.3.9) |
| T-736 | I.13 | (B.1.23) | (H.2.2) |
| T-737 | I.13 | (B.1.23) | (B.2.4) |
| T-738 | I.13 | (B.1.23) | (A.2.6) |
| T-739 | I.13 | (B.1.23) | (H.3.2) |
| T-740 | I.13 | (B.1.23) | (A.1.14) |
| T-741 | I.13 | (B.1.23) | (H.2.5) |
| T-742 | I.13 | (B.1.38) | (K.1.58) |
| T-743 | I.13 | (B.1.38) | (H.1.5) |
| T-744 | I.13 | (B.1.38) | (A.3.9) |
| T-745 | I.13 | (B.1.38) | (H.2.2) |
| T-746 | I.13 | (B.1.38) | (B.2.4) |
| T-747 | I.13 | (B.1.38) | (A.2.6) |
| T-748 | I.13 | (B.1.38) | (H.3.2) |
| T-749 | I.13 | (B.1.38) | (A.1.14) |
| T-750 | I.13 | (B.1.38) | (H.2.5) |
| T-751 | I.13 | (B.1.38) | (K.1.60) |
| T-752 | I.13 | (B.1.38) | (A.2.5) |
| T-753 | I.13 | (B.1.38) | (A.2.4) |
| T-754 | I.13 | (B.1.38) | (A.3.22) |
| T-755 | I.13 | (B.1.38) | (A.3.31) |
| T-756 | I.13 | (C.5.3) | (K.1.58) |
| T-757 | I.13 | (C.5.3) | (B.1.23) |
| T-758 | I.13 | (C.5.3) | (H.1.5) |
| T-759 | I.13 | (C.5.3) | (A.3.9) |
| T-760 | I.13 | (C.5.3) | (H.2.2) |
| T-761 | I.13 | (C.5.3) | (B.2.4) |
| T-762 | I.13 | (C.5.3) | (A.2.6) |
| T-763 | I.13 | (C.5.3) | (H.3.2) |
| T-764 | I.13 | (C.5.3) | (A.1.14) |
| T-765 | I.13 | (C.5.3) | (H.2.5) |
| T-766 | I.13 | (C.5.3) | (B.1.38) |
| T-767 | I.13 | (C.5.3) | (A. 1.25) |
| T-768 | I.13 | (A.3.17) | (K.1.58) |
| T-769 | I.13 | (A.3.17) | (H.1.5) |
| T-770 | I.13 | (A.3.17) | (A.3.9) |
| T-771 | I.13 | (A.3.17) | (H.2.2) |
| T-772 | I.13 | (A.3.17) | (B.2.4) |
| T-773 | I.13 | (A.3.17) | (A.2.6) |
| T-774 | I.13 | (A.3.17) | (H.3.2) |
| T-775 | I.13 | (A.3.17) | (A.1.14) |
| T-776 | I.13 | (A.3.17) | (H.2.5) |
| T-777 | I.13 | (A.3.17) | (B.1.38) |
| T-778 | I.13 | (A.3.17) | (B.1.23) |
| T-779 | I.13 | (A.3.17) | (C.5.3) |
| T-780 | I.13 | (A.3.17) | (A.1.25) |

For each mixture in Table T, C1) denotes component 1); C 2) component 2), and C3) component 3).

An even more preferred embodiment relates to ternary mixtures of Table TR, wherein the weight ratio (w:w:w) of component 1) : component 2) : component 3) is defined in the List TR.

### List TR:

For each mixture T-1 to T-780 as defined in Table T, the preferred ratio of component 1) : component 2) : component 3) on weight basis (w:w:w) is as follows: T-1: 3:2:3; T-2: 3:2:3; T-3: 3:2:3; T-4: 3:2:9; T-5: 3:2:2; T-6: 3:2:18; T-7: 3:2:7; T-8: 3:2:2; T-9: 3:2:12; T-10: 3:2:2; T-11: 3:2:18; T-12: 1:1:1; T-13: 1:1:1; T-14: 1:1:3; T-15: 3:3:2; T-16: 1:1:9; T-17: 1:3; T-18: 3:3:2; T-19: 1:1:6; T-20: 2:2:1; T-21: 1:1:9; T-22: 1:1:1; T-23: 1:1:3; T-24: 3:3:2; T-25: 1:1:9; T-26: 1:3; T-27: 3:3:2; T-28: 1:1:6; T-29: 2:2:1; T-30: 1:1:9; T-31: 2:3:2; T-32: 2:3:1; T-33: 2:3:2; T-34: 2:3:1; T-35: 2:3:1; T-36: 3:2:3; T-37: 3:2:3; T-38: 3:2:9; T-39: 3:2:2; T-40: 3:2:18; T-41: 3:2:7; T-42: 3:2:2; T-43: 3:2:12; T-44: 3:2:2; T-45: 3:2:18; T-46: 3:2:3; T-47: 1:1:1; T-48: 3:2:3; T-49: 3:2:9; T-50: 3:2:2; T-51: 3:2:18; T-52: 3:2:7; T-53: 3:2:2; T-54: 3:2:12; T-55: 3:2:2; T-56: 3:2:18; T-57: 1:1:1; T-58: 1:1:1; T-59: 1:1:1; T-60: 1:1:1; T-61: 3:2:3; T-62: 3:2:3; T-63: 3:2:3; T-64: 3:2:9; T-65: 3:2:2; T-66: 3:2:18; T-67: 3:2:7; T-68: 3:2:2; T-69: 3:2:12; T-70: 3:2:2; T-71: 3:2:18; T-72: 1:1:1; T-73: 1:1:1; T-74: 1:1:3; T-75: 3:3:2; T-76: 1:1:9; T-77: 1:3; T-78: 3:3:2; T-79: 1:1:6; T-80: 2:2:1; T-81: 1:1:9; T-82: 1:1:1; T-83: 1:1:3; T-84: 3:3:2; T-85: 1:1:9; T-86: 1:3; T-87: 3:3:2; T-88: 1:1:6; T-89: 2:2:1; T-90: 1:1:9; T-91: 2:3:2; T-92: 2:3:1; T-93: 2:3:2; T-94: 2:3:1; T-95: 2:3:1; T-96: 3:2:3; T-97: 3:2:3; T-98: 3:2:9; T-99: 3:2:2; T-100: 3:2:18; T-101: 3:2:7; T-102: 3:2:2; T-103: 3:2:12; T-104: 3:2:2; T-105: 3:2:18; T-106: 3:2:3; T-107: 1:1:1; T-108: 3:2:3; T-109: 3:2:9; T-110: 3:2:2; T-111: 3:2:18; T-112: 3:2:7; T-113: 3:2:2; T-114: 3:2:12; T-115: 3:2:2; T-116: 3:2:18; T-117: 1:1:1; T-118: 1:1:1; T-119: 1:1:1; T-120: 1:1:1; T-121: 3:2:3; T-122: 3:2:3; T-123: 3:2:3; T-124: 3:2:9; T-125: 3:2:2; T-126: 3:2:18; T-127: 3:2:7; T-128: 3:2:2; T-129: 3:2:12; T-130: 3:2:2; T-131: 3:2:18; T-132: 1:1:1; T-133: 1:1:1; T-134: 1:1:3; T-135: 3:3:2; T-136: 1:1:9; T-137: 1:3; T-138: 3:3:2; T-139: 1:1:6; T-140: 2:2:1; T-141: 1:1:9; T-142: 1:1:1; T-143: 1:1:3; T-144: 3:3:2; T-145: 1:1:9; T-146: 1:3; T-147: 3:3:2; T-148: 1:1:6; T-149: 2:2:1; T-150: 1:1:9; T-151: 2:3:2; T-152: 2:3:1; T-153: 2:3:2; T-154: 2:3:1; T-155: 2:3:1; T-156: 3:2:3; T-157: 3:2:3; T-158: 3:2:9; T-159: 3:2:2; T-160: 3:2:18; T-161: 3:2:7; T-162: 3:2:2; T-163: 3:2:12; T-164: 3:2:2; T-165: 3:2:18; T-166: 3:2:3; T-167: 1:1:1; T-168: 3:2:3; T-169: 3:2:9; T-170: 3:2:2; T-171: 3:2:18; T-172: 3:2:7; T-173: 3:2:2; T-174: 3:2:12; T-175: 3:2:2; T-176: 3:2:18; T-177: 1:1:1; T-178: 1:1:1; T-179: 1:1:1; T-180: 1:1:1; T-181: 3:2:3; T-182: 3:2:3; T-183: 3:2:3; T-184: 3:2:9; T-185: 3:2:2; T-186: 3:2:18; T-187: 3:2:7; T-188: 3:2:2; T-189: 3:2:12; T-190: 3:2:2; T-191: 3:2:18; T-192: 1:1:1; T-193: 1:1:1; T-194: 1:1:3; T-195: 3:3:2; T-196: 1:1:9; T-197: 1:3; T-198: 3:3:2; T-199: 1:1:6; T-200: 2:2:1; T-201: 1:1:9; T-202: 1:1:1; T-203: 1:1:3; T-204: 3:3:2; T-205: 1:1:9; T-206: 1:3; T-207: 3:3:2; T-208: 1:1:6; T-209: 2:2:1; T-210: 1:1:9; T-211: 2:3:2; T-212: 2:3:1; T-213: 2:3:2; T-214: 2:3:1; T-215: 2:3:1; T-216: 3:2:3; T-217: 3:2:3; T-218: 3:2:9; T-219: 3:2:2; T-220: 3:2:18; T-221: 3:2:7; T-222: 3:2:2; T-223: 3:2:12; T-224: 3:2:2; T-225: 3:2:18; T-226: 3:2:3; T-227: 1:1:1; T-228: 3:2:3; T-229: 3:2:9; T-230: 3:2:2; T-231: 3:2:18; T-232: 3:2:7; T-233: 3:2:2; T-234: 3:2:12; T-235: 3:2:2; T-236: 3:2:18; T-237: 1:1:1; T-238: 1:1:1; T-239: 1:1:1; T-240: 1:1:1; T-241: 3:2:3; T-242: 3:2:3; T-243: 3:2:3; T-244: 3:2:9; T-245: 3:2:2; T-246: 3:2:18; T-247: 3:2:7; T-248: 3:2:2; T-249: 3:2:12; T-250: 3:2:2; T-251: 3:2:18; T-252: 1:1:1; T-253: 1:1:1; T-254: 1:1:3; T-255: 3:3:2; T-256: 1:1:9; T-257: 1:3; T-258: 3:3:2; T-259: 1:1:6; T-260: 2:2:1; T-261: 1:1:9; T-262: 1:1:1; T-263: 1:1:3; T-264: 3:3:2; T-265: 1:1:9; T-266: 1:3; T-267: 3:3:2; T-268: 1:1:6; T-269: 2:2:1; T-270: 1:1:9; T-271: 2:3:2; T-272: 2:3:1; T-273: 2:3:2; T-274: 2:3:1; T-275: 2:3:1; T-276: 3:2:3; T-277: 3:2:3; T-278: 3:2:9; T-279: 3:2:2; T-280: 3:2:18; T-281: 3:2:7; T-282: 3:2:2; T-283: 3:2:12; T-284: 3:2:2; T-285: 3:2:18; T-286: 3:2:3; T-287: 1:1:1; T-288: 3:2:3; T-289: 3:2:9; T-290: 3:2:2; T-291: 3:2:18; T-292: 3:2:7; T-293: 3:2:2; T-294: 3:2:12; T-295: 3:2:2; T-296: 3:2:18; T-297: 1:1:1; T-298: 1:1:1; T-299: 1:1:1; T-300: 1:1:1; T-301: 3:2:3; T-302: 3:2:3; T-303: 3:2:3; T-304: 3:2:9; T-305: 3:2:2; T-306: 3:2:18; T-307: 3:2:7; T-308: 3:2:2; T-309: 3:2:12; T-310: 3:2:2; T-311: 3:2:18; T-312: 1:1:1; T-313: 1:1:1; T-314: 1:1:3; T-315: 3:3:2; T-316: 1:1:9; T-317: 1:3; T-318: 3:3:2; T-319: 1:1:6; T-320: 2:2:1; T-321: 1:1:9; T-322: 1:1:1; T-323: 1:1:3; T-324: 3:3:2; T-325: 1:1:9; T-326: 1:3; T-327: 3:3:2; T-328: 1:1:6; T-329: 2:2:1; T-330: 1:1:9; T-331: 2:3:2; T-332: 2:3:1; T-333: 2:3:2; T-334: 2:3:1; T-335: 2:3:1; T-336: 3:2:3; T-337: 3:2:3; T-338: 3:2:9; T-339: 3:2:2; T-340: 3:2:18; T-341: 3:2:7; T-342: 3:2:2; T-343: 3:2:12; T-344: 3:2:2; T-345: 3:2:18; T-346: 3:2:3; T-347: 1:1:1; T-348: 3:2:3; T-349: 3:2:9; T-350: 3:2:2; T-351: 3:2:18; T-352: 3:2:7; T-353: 3:2:2; T-354: 3:2:12; T-355: 3:2:2; T-356: 3:2:18; T-357: 1:1:1; T-358: 1:1:1; T-359: 1:1:1; T-360: 1:1:1; T-361: 3:2:3; T-362: 3:2:3; T-363: 3:2:3; T-364: 3:2:9; T-365: 3:2:2; T-366: 3:2:18; T-367: 3:2:7; T-368: 3:2:2; T-369: 3:2:12; T-370: 3:2:2; T-371: 3:2:18; T-372: 1:1:1; T-373: 1:1:1; T-374: 1:1:3; T-375: 3:3:2; T-376: 1:1:9; T-377: 1:3; T-378: 3:3:2; T-379: 1:1:6; T-380: 2:2:1; T-381: 1:1:9; T-382: 1:1:1; T-383: 1:1:3; T-384: 3:3:2; T-385: 1:1:9; T-386: 1:3; T-387: 3:3:2; T-388: 1:1:6; T-389: 2:2:1; T-390: 1:1:9; T-391: 2:3:2; T-392: 2:3:1; T-393: 2:3:2; T-394: 2:3:1; T-395: 2:3:1; T-396: 3:2:3; T-397: 3:2:3; T-398: 3:2:9; T-399: 3:2:2; T-400: 3:2:18; T-401: 3:2:7; T-402: 3:2:2; T-403: 3:2:12; T-404: 3:2:2; T-405: 3:2:18; T-406: 3:2:3; T-407: 1:1:1; T-408: 3:2:3; T-409: 3:2:9; T-410: 3:2:2; T-411: 3:2:18; T-412: 3:2:7; T-413: 3:2:2; T-414: 3:2:12; T-415: 3:2:2; T-416: 3:2:18; T-417: 1:1:1; T-418: 1:1:1; T-419: 1:1:1; T-420: 1:1:1; T-421: 3:2:3; T-422: 3:2:3; T-423: 3:2:3; T-424: 3:2:9; T-425: 3:2:2; T-426: 3:2:18; T-427: 3:2:7; T-428: 3:2:2; T-429: 3:2:12; T-430: 3:2:2; T-431: 3:2:18; T-432: 1:1:1; T-433: 1:1:1; T-434: 1:1:3; T-435: 3:3:2; T-436: 1:1:9; T-437: 1:3; T-438: 3:3:2; T-439: 1:1:6; T-440: 2:2:1; T-441: 1:1:9; T-442: 1:1:1; T-443: 1:1:3; T-444: 3:3:2; T-445: 1:1:9; T-446: 1:3; T-447: 3:3:2; T-448: 1:1:6; T-449: 2:2:1; T-450: 1:1:9; T-451: 2:3:2; T-452: 2:3:1; T-453: 2:3:2; T-454: 2:3:1; T-455: 2:3:1; T-456: 3:2:3; T-457: 3:2:3; T-458: 3:2:9; T-459: 3:2:2; T-460: 3:2:18; T-461: 3:2:7; T-462: 3:2:2; T-463: 3:2:12; T-464: 3:2:2; T-465: 3:2:18; T-466: 3:2:3; T-467: 1:1:1; T-468: 3:2:3; T-469: 3:2:9; T-470: 3:2:2; T-471: 3:2:18; T-472: 3:2:7; T-473: 3:2:2; T-474: 3:2:12; T-475: 3:2:2; T-476: 3:2:18; T-477: 1:1:1; T-478: 1:1:1; T-479: 1:1:1; T-480: 1:1:1; T-481: 3:2:3; T-482: 3:2:3; T-483: 3:2:3; T-484: 3:2:9; T-485: 3:2:2; T-486: 3:2:18; T-487: 3:2:7; T-488: 3:2:2; T-489: 3:2:12; T-490: 3:2:2; T-491: 3:2:18; T-492: 1:1:1; T-493: 1:1:1; T-494: 1:1:3; T-495: 3:3:2; T-496: 1:1:9; T-497: 1:3; T-498: 3:3:2; T-499: 1:1:6; T-500: 2:2:1; T-501: 1:1:9; T-502: 1:1:1; T-503: 1:1:3; T-504: 3:3:2; T-505: 1:1:9; T-506: 1:3; T-507: 3:3:2; T-508: 1:1:6; T-509: 2:2:1; T-510: 1:1:9; T-511: 2:3:2; T-512: 2:3:1; T-513: 2:3:2; T-514: 2:3:1; T-515: 2:3:1; T-516: 3:2:3; T-517: 3:2:3; T-518: 3:2:9; T-519: 3:2:2; T-520: 3:2:18; T-521: 3:2:7; T-522: 3:2:2; T-523: 3:2:12; T-524: 3:2:2; T-525: 3:2:18; T-526: 3:2:3; T-527: 1:1:1; T-528: 3:2:3; T-529: 3:2:9; T-530: 3:2:2; T-531: 3:2:18; T-532: 3:2:7; T-533: 3:2:2; T-534: 3:2:12; T-535: 3:2:2; T-536: 3:2:18; T-537: 1:1:1; T-538: 1:1:1; T-539: 1:1:1; T-540: 1:1:1; T-541: 3:2:3; T-542: 3:2:3; T-543: 3:2:3; T-544: 3:2:9; T-545: 3:2:2; T-546: 3:2:18; T-547: 3:2:7; T-548: 3:2:2; T-549: 3:2:12; T-550: 3:2:2; T-551: 3:2:18; T-552: 1:1:1; T-553: 1:1:1; T-554: 1:1:3; T-555: 3:3:2; T-556: 1:1:9; T-557: 1:3; T-558: 3:3:2; T-559: 1:1:6; T-560: 2:2:1; T-561: 1:1:9; T-562: 1:1:1; T-563: 1:1:3; T-564: 3:3:2; T-565: 1:1:9; T-566: 1:3; T-567: 3:3:2; T-568: 1:1:6; T-569: 2:2:1; T-570: 1:1:9; T-571: 2:3:2; T-572: 2:3:1; T-573: 2:3:2; T-574: 2:3:1; T-575: 2:3:1; T-576: 3:2:3; T-577: 3:2:3; T-578: 3:2:9; T-579: 3:2:2; T-580: 3:2:18; T-581: 3:2:7; T-582: 3:2:2; T-583: 3:2:12; T-584: 3:2:2; T-585: 3:2:18; T-586: 3:2:3; T-587: 1:1:1; T-588: 3:2:3; T-589: 3:2:9; T-590: 3:2:2; T-591: 3:2:18; T-592: 3:2:7; T-593: 3:2:2; T-594: 3:2:12; T-595: 3:2:2; T-596: 3:2:18; T-597: 1:1:1; T-598: 1:1:1; T-599: 1:1:1; T-600: 1:1:1; T-601: 3:2:3; T-602: 3:2:3; T-603: 3:2:3; T-604: 3:2:9; T-605: 3:2:2; T-606: 3:2:18; T-607: 3:2:7; T-608: 3:2:2; T-609: 3:2:12; T-610: 3:2:2; T-611: 3:2:18; T-612: 1:1:1; T-613: 1:1:1; T-614: 1:1:3; T-615: 3:3:2; T-616: 1:1:9; T-617: 1:3; T-618: 3:3:2; T-619: 1:1:6; T-620: 2:2:1; T-621: 1:1:9; T-622: 1:1:1; T-623: 1:1:3; T-624: 3:3:2; T-625: 1:1:9; T-626: 1:3; T-627: 3:3:2; T-628: 1:1:6; T-629: 2:2:1; T-630: 1:1:9; T-631: 2:3:2; T-632: 2:3:1; T-633: 2:3:2; T-634: 2:3:1; T-635: 2:3:1; T-636: 3:2:3; T-637: 3:2:3; T-638: 3:2:9; T-639: 3:2:2; T-640: 3:2:18; T-641: 3:2:7; T-642: 3:2:2; T-643: 3:2:12; T-644: 3:2:2; T-645: 3:2:18; T-646: 3:2:3; T-647: 1:1:1; T-648: 3:2:3; T-649: 3:2:9; T-650: 3:2:2; T-651: 3:2:18; T-652: 3:2:7; T-653: 3:2:2; T-654: 3:2:12; T-655: 3:2:2; T-656: 3:2:18; T-657: 1:1:1; T-658: 1:1:1; T-659: 1:1:1; T-660: 1:1:1; T-661: 3:2:3; T-662: 3:2:3; T-663: 3:2:3; T-664: 3:2:9; T-665: 3:2:2; T-666: 3:2:18; T-667: 3:2:7; T-668: 3:2:2; T-669: 3:2:12; T-670: 3:2:2; T-671: 3:2:18; T-672: 1:1:1; T-673: 1:1:1; T-674: 1:1:3; T-675: 3:3:2; T-676: 1:1:9; T-677: 1:3; T-678: 3:3:2; T-679: 1:1:6; T-680: 2:2:1; T-681: 1:1:9; T-682: 1:1:1; T-683: 1:1:3; T-684: 3:3:2; T-685: 1:1:9; T-686: 1:3; T-687: 3:3:2; T-688: 1:1:6; T-689: 2:2:1; T-690: 1:1:9; T-691: 2:3:2; T-692: 2:3:1; T-693: 2:3:2; T-694: 2:3:1; T-695: 2:3:1; T-696: 3:2:3; T-697: 3:2:3; T-698: 3:2:9; T-699: 3:2:2; T-700: 3:2:18; T-701: 3:2:7; T-702: 3:2:2; T-703: 3:2:12; T-704: 3:2:2; T-705: 3:2:18; T-706: 3:2:3; T-707: 1:1:1; T-708: 3:2:3; T-709: 3:2:9; T-710: 3:2:2; T-711: 3:2:18; T-712: 3:2:7; T-713: 3:2:2; T-714: 3:2:12; T-715: 3:2:2; T-716: 3:2:18; T-717: 1:1:1; T-718: 1:1:1; T-719: 1:1:1; T-720: 1:1:1; T-721: 3:2:3; T-722: 3:2:3; T-723: 3:2:3; T-724: 3:2:9; T-725: 3:2:2; T-726: 3:2:18; T-727: 3:2:7; T-728: 3:2:2; T-729: 3:2:12; T-730: 3:2:2; T-731: 3:2:18; T-732: 1:1:1; T-733: 1:1:1; T-734: 1:1:3; T-735: 3:3:2; T-736: 1:1:9; T-737: 1:3; T-738: 3:3:2; T-739: 1:1:6; T-740: 2:2:1; T-741: 1:1:9; T-742: 1:1:1; T-743: 1:1:3; T-744: 3:3:2; T-745: 1:1:9; T-746: 1:3; T-747: 3:3:2; T-748: 1:1:6; T-749: 2:2:1; T-750: 1:1:9; T-751: 2:3:2; T-752: 2:3:1; T-753: 2:3:2; T-754: 2:3:1; T-755: 2:3:1; T-756: 3:2:3; T-757: 3:2:3; T-758: 3:2:9; T-759: 3:2:2; T-760: 3:2:18; T-761: 3:2:7; T-762: 3:2:2; T-763: 3:2:12; T-764: 3:2:2; T-765: 3:2:18; T-766: 3:2:3; T-767: 1:1:1; T-768: 3:2:3; T-769: 3:2:9; T-770: 3:2:2; T-771: 3:2:18; T-772: 3:2:7; T-773: 3:2:2; T-774: 3:2:12; T-775: 3:2:2; T-776: 3:2:18; T-777: 1:1:1; T-778: 1:1:1; T-779: 1:1:1; T-780: 1:1:1.

### Examples

### Compounds I

### Example 1: Ambruticin VS3 (compound I.3)

50 ml pre-cultures of the *Sorangium celluslosum* strain SoCe8405 (provided by the Helmholtz-Institute for Pharmaceutical Research Saarland, Saarbrücken, Germany) were inoculated from an agar plate and incubated for one week with shaking (180 rpm) in H-medium (soy flour 0.2%, glucose 0.2%, starch 0.8%, yeast extract 0.2%, CaCl₂ 0.1%, MgSO₄ 0.1%, HEPES 11.9 g/L, Fe-EDTA 8 mg/L) at 30°C. Thereafter, larger cultures were inoculated with a 1:10 dilution of the pre-culture followed by another incubation period with shaking (180 rpm) at 30°C for one week. Subsequently, 2% XAD-16 adsorbent resin was added, and the culture was incubated for another week on the shaker (180 rpm) at 30°C. Then, after removal of the culture broth, the adsorbent resin beads were extracted with 1x volume methanol. The crude product was purified by reversed-phase HPLC, eluted using a gradient of acetonitrile in water containing 0.1% acetic acid. The product Ambruticin VS3 was obtained as a white solid after lyophilization of desired fractions.

### Biological studies

### Microtests - use examples 1-10

The active compounds were formulated separately as a stock solution having a concentration of 10,000 ppm in DMSO. The stock solutions were mixed according to the ratio, pipetted onto a micro titer plate (MTP) and diluted with water to the stated concentrations. Spore suspensions in aqueous biomalt solution were added according to the respective use example no.:
1. *Cercospora sojina* (CERCSO)
2*. Colletotrichum orbiculare* (COLLLA)
3. *Sclerotinia sclerotiorum* (SCLESC)
4. *Septoria tritici* (SEPTTR)
5. *Botrytis cinerea* (BOTRCI)
6. *Botrytis cinerea,* SDHI (P225F) resistant and Qol resistant (G143A) (BOTRCI res.)
7. *Alternaria solani* (ALTESO)
8. *Alternaria alternata* (ALTEAL)
9. *Cercospora beticula* (CERCBE)
10. *Cercospora zea maydis* (CERCZM)

The plates were placed in a water vapor-saturated chamber at a temperature of 18°C. Using an absorption photometer, the MTPs were measured at 405 nm 7 days after the inoculation. The measured parameters were compared to the growth of the active compound-free control variant (100%) and the fungus-free blank value to determine the relative growth in % of the pathogens in the respective active compounds. These percentages were converted into efficacies.

The expected efficacies of the mixtures (last column labeled with an asterisk * in the tables below) were determined using Colby's formula [R.S. Colby, "Calculating synergistic and antagonistic responses of herbicide combinations", Weeds 15, 20-22 (1967)] and compared with the observed efficacies.

The results of microtest use examples 1-10 are shown in the following Tables 1-10.

**Table 1: Activity against CERCSO**

| **Compound / mixture tested** | **Concentration (ppm)** | **Mixture ratio** | **Observed efficacy (%)** | **Calculated efficacy* (%)** |
|---|---|---|---|---|
| I.3 | 0.063 | - | 44 | |
| | 0.032 | - | 0 | |
| | 0.008 | - | 0 | |
| | 0.002 | - | 3 | |
| Difenoconazole | 0.063 | - | 57 | |
| Fluazinam | 0.063 | - | 64 | |
| Fludioxonil | 0.063 | - | 32 | |
| Fluxapyroxad | 0.016 | - | 16 | |
| Inpyrfluxam | 0.063 | - | 35 | |
| Ipflufenoquin | 0.032 | - | 35 | |
| Mefentrifluconazole | 0.016 | - | 25 | |
| Metyltetraprolee | 0.063 | - | 70 | |
| Pyraclostrobin | 0.063 | - | 14 | |
| I.3 + Difenoconazole | 0.063 | 1 : 1 | 93 | 75 |
| | 0.063 | | | |
| I.3 + Fluazinam | 0.063 | 1 : 1 | 97 | 80 |
| | 0.063 | | | |
| I.3 + Fludioxonil | 0.032 | 1 : 2 | 67 | 32 |
| | 0.063 | | | |
| I.3 + Fluxapyroxad | 0.016 | 1 : 1 | 46 | 26 |
| | 0.016 | | | |
| I.3 + Inpyrfluxam | 0.032 | 1 : 2 | 53 | 35 |
| | 0.063 | | | |
| I.3 + Ipflufenoquin | 0.032 | 1 : 1 | 55 | 35 |
| | 0.032 | | | |
| I.3 + Mefentrifluconazole | 0.008 | 1 : 2 | 44 | 25 |
| | 0.016 | | | |
| I.3 + Mefentrifluconazole | 0.002 | 1 : 8 | 47 | 28 |
| | 0.016 | | | |
| I.3 + Metyltetraprole | 0.032 | 1 : 2 | 88 | 70 |
| | 0.063 | | | |
| I.3 + Pyraclostrobin | 0.008 | 1 : 8 | 34 | 14 |
| | 0.063 | | | |
| I.3 + Pyraclostrobin | 0.032 | 1 : 2 | 37 | 14 |
| | 0.063 | | | |

**Table 2: Activity against COLLLA**

| **Compound / mixture tested** | **Concentration (ppm)** | **Mixture ratio** | **Observed efficacy (%)** | **Calculated efficacy* (%)** |
|---|---|---|---|---|
| I.3 | 0.063 | - | 66 | |
| | 0.032 | - | 6 | |
| | 0.016 | - | 9 | |
| | 0.008 | - | 9 | |
| | 0.004 | - | 2 | |
| Pydiflumetofen | 0.063 | - | 4 | |
| Azoxystrobin | 0.063 | - | 71 | |
| | 0.032 | - | 36 | |
| Boscalid | 0.063 | - | 0 | |
| Difenoconazol | 0.063 | - | 21 | |
| Fluazinam | 0.032 | - | 83 | |
| Fluxapyroxad | 0.063 | - | 5 | |
| Inpyrfluxam | 0.063 | - | 2 | |
| Ipflufenoquin | 0.063 | - | 74 | |
| | 0.032 | - | 7 | |
| Isoflucypram | 0.063 | - | 1 | |
| Mefentrifluconazol | 0.063 | - | 15 | |
| Metyltetraprole | 0.063 | - | 23 | |
| Prothioconazol | 0.063 | - | 27 | |
| Pyraclostrobin | 0.032 | - | 81 | |
| Pyrimethanil | 0.063 | - | 13 | |
| I.3 + Pydiflumetofen | 0.032 | 1 : 2 | 36 | 10 |
| | 0.063 | | | |
| I.3 + Azoxystrobin | 0.032 | 1 : 2 | 97 | 73 |
| | 0.063 | | | |
| I.3 + Azoxystrobin | 0.016 | 1 : 2 | 99 | 74 |
| | 0.063 | | | |
| I.3 + Azoxystrobin | 0.032 | 1 : 1 | 99 | 40 |
| | 0.032 | | | |
| I.3 + Azoxystrobin | 0.008 | 1 : 8 | 93 | 74 |
| | 0.063 | | | |
| I.3 + Boscalid | 0.032 | 1 : 2 | 33 | 6 |
| | 0.063 | | | |
| I.3 + Difenoconazole | 0.032 | 1 : 2 | 60 | 26 |
| | 0.063 | | | |
| I.3 + Fluazinam | 0.016 | 1 : 2 | 100 | 84 |
| | 0.032 | | | |
| I.3 + Fluxapyroxad | 0.032 | 1 : 2 | 41 | 11 |
| | 0.063 | | | |
| I.3 + Inpyrfluxam | 0.032 | 1 : 2 | 52 | 8 |
| | 0.063 | | | |
| I.3 + Ipflufenoquin | 0.032 | 1 : 2 | 99 | 76 |
| | 0.063 | | | |
| I.3 + Ipflufenoquin | 0.032 | 1 : 1 | 84 | 12 |
| | 0.032 | | | |
| I.3 + Ipflufenoquin | 0.016 | 1 : 4 | 100 | 77 |
| | 0.063 | | | |
| I.3 + Ipflufenoquin | 0.008 | 1 : 8 | 99 | 77 |
| | 0.063 | | | |
| I.3 + Ipflufenoquin | 0.004 | 1 : 16 | 91 | 75 |
| | 0.063 | | | |
| I.3 + Isoflucypram | 0.032 | 1 : 2 | 33 | 7 |
| | 0.063 | | | |
| I.3 + Mefentrifluconazole | 0.032 | 1 : 2 | 60 | 20 |
| | 0.063 | | | |
| I.3 + Metyltetraprole | 0.032 | 1 : 2 | 99 | 28 |
| | 0.063 | | | |
| I.3 + Metyltetraprole | 0.063 | 1 : 1 | 100 | 74 |
| | 0.063 | | | |
| I.3 + Metyltetraprole | 0.008 | 1 : 8 | 58 | 31 |
| | 0.063 | | | |
| I.3 + Prothioconazole | 0.032 | 1 : 2 | 94 | 31 |
| | 0.063 | | | |
| I.3 + Prothioconazole | 0.063 | 1 : 1 | 95 | 75 |
| | 0.063 | | | |
| I.3 + Prothioconazole | 0.016 | 1 : 4 | 97 | 34 |
| | 0.063 | | | |
| I.3 + Prothioconazole | 0.008 | 1 : 8 | 85 | 34 |
| | 0.063 | | | |
| I.3 + Prothioconazole | 0.004 | 1 : 16 | 85 | 28 |
| | 0.063 | | | |
| I.3 + Pyraclostrobin | 0.032 | 1 : 1 | 100 | 82 |
| | 0.032 | | | |
| I.3 + Pyrimethanil | 0.032 | 1 : 2 | 36 | 19 |
| | 0.063 | | | |

**Table 3: Activity against SCLESC**

| **Compound / mixture tested** | **Concentration (ppm)** | **Mixture ratio** | **Observed efficacy (%)** | **Calculated efficacy* (%)** |
|---|---|---|---|---|
| I.3 | 0.016 | - | 71 | |
| | 0.008 | - | 19 | |
| Pydiflumetofen | 0.063 | - | 72 | |
| | 0.032 | - | 34 | |
| | 0.016 | - | 13 | |
| Azoxystrobin | 0.063 | - | 25 | |
| | 0.032 | - | 7 | |
| | 0.016 | - | 2 | |
| | 0.008 | - | 0 | |
| Boscalid | 0.063 | - | 41 | |
| | 0.016 | - | 28 | |
| Fluazinam | 0.063 | - | 32 | |
| Fludioxonil | 0.032 | - | 65 | |
| | 0.016 | - | 25 | |
| Fluxapyroxad | 0.063 | - | 64 | |
| | 0.032 | - | 50 | |
| | 0.016 | - | 35 | |
| Inpyrfluxam | 0.063 | - | 54 | |
| | 0.032 | - | 38 | |
| | 0.016 | - | 16 | |
| Ipflufenoquin | 0.063 | - | 10 | |
| | 0.008 | - | 0 | |
| Isoflucypram | 0.016 | - | 18 | |
| Mefentrifluconazole | 0.016 | - | 2 | |
| Metyltetraprole | 0.008 | - | 0 | |
| Prothioconazole | 0.016 | - | 4 | |
| | 0.008 | - | 0 | |
| Pyraclostrobin | 0.063 | - | 37 | |
| | 0.016 | - | 2 | |
| Pyrimethanil | 0.063 | - | 11 | |
| | 0.008 | - | 1 | |
| I.3 + Pydiflumetofen | 0.016 | 1 : 1 | 100 | 75 |
| | 0.016 | | | |
| I.3 + Pydiflumetofen | 0.016 | 1 : 2 | 99 | 81 |
| | 0.032 | | | |
| I.3 + Pydiflumetofen | 0.008 | 1 : 4 | 90 | 46 |
| | 0.032 | | | |
| I.3 + Pydiflumetofen | 0.008 | 1 : 8 | 97 | 77 |
| | 0.063 | | | |
| I.3 + Azoxystrobin | 0.008 | 1 : 1 | 52 | 19 |
| | 0.008 | | | |
| I.3 + Azoxystrobin | 0.008 | 1 : 2 | 39 | 20 |
| | 0.016 | | | |
| I.3 + Azoxystrobin | 0.008 | 1 : 4 | 46 | 25 |
| | 0.032 | | | |
| I.3 + Azoxystrobin | 0.008 | 1 : 8 | 74 | 40 |
| | 0.063 | | | |
| I.3 + Boscalid | 0.016 | 1 : 1 | 99 | 72 |
| | 0.016 | | | |
| I.3 + Boscalid | 0.008 | 1 : 2 | 49 | 21 |
| | 0.016 | | | |
| I.3 + Boscalid | 0.008 | 1 : 8 | 90 | 52 |
| | 0.063 | | | |
| I.3 + Fluazinam | 0.016 | 1 : 4 | 100 | 80 |
| | 0.063 | | | |
| I.3 + Fludioxonil | 0.016 | 1 : 1 | 100 | 78 |
| | 0.016 | | | |
| I.3 + Fludioxonil | 0.008 | 1 : 2 | 85 | 39 |
| | 0.016 | | | |
| I.3 + Fludioxonil | 0.008 | 1 : 4 | 97 | 72 |
| | 0.032 | | | |
| I.3 + Fludioxonil | 0.004 | 1 : 8 | 92 | 73 |
| | 0.032 | | | |
| I.3 + Fluxapyroxad | 0.016 | 1 : 1 | 100 | 81 |
| | 0.016 | | | |
| I.3 + Fluxapyroxad | 0.008 | 1 : 2 | 82 | 47 |
| | 0.016 | | | |
| I.3 + | 0.008 | 1 : 4 | 83 | 60 |
| Fluxapyroxad | 0.032 | | | |
| I.3 + Fluxapyroxad | 0.008 | 1 : 8 | 94 | 70 |
| | 0.063 | | | |
| I.3 + Inpyrfluxam | 0.016 | 1 : 1 | 99 | 75 |
| | 0.016 | | | |
| I.3 + Inpyrfluxam | 0.016 | 1 : 2 | 100 | 82 |
| | 0.032 | | | |
| I.3 + Inpyrfluxam | 0.008 | 1 : 4 | 75 | 50 |
| | 0.032 | | | |
| I.3 + Inpyrfluxam | 0.008 | 1 : 8 | 93 | 63 |
| | 0.063 | | | |
| I.3 + Ipflufenoquin | 0.008 | 1 : 1 | 39 | 19 |
| | 0.008 | | | |
| I.3 + Ipflufenoquin | 0.016 | 1 : 4 | 99 | 74 |
| | 0.063 | | | |
| I.3 + Ipflufenoquin | 0.008 | 1 : 8 | 68 | 27 |
| | 0.063 | | | |
| I.3 + Isoflucypram | 0.016 | 1 : 1 | 99 | 76 |
| | 0.016 | | | |
| I.3 + Isoflucypram | 0.008 | 1 : 2 | 68 | 33 |
| | 0.016 | | | |
| I.3 + Mefentrifluconazole | 0.016 | 1 : 1 | 100 | 71 |
| | 0.016 | | | |
| I.3 + Metyltetraprole | 0.008 | 1 : 1 | 61 | 19 |
| | 0.008 | | | |
| I.3 + Prothioconazole | 0.008 | 1 : 1 | 40 | 19 |
| | 0.008 | | | |
| I.3 + Prothioconazole | 0.008 | 1 : 2 | 46 | 23 |
| | 0.016 | | | |
| I.3 + Pyraclostrobin | 0.016 | 1 : 1 | 99 | 71 |
| | 0.016 | | | |
| I.3 + Pyraclostrobin | 0.008 | 1 : 3 | 45 | 19 |
| | 0.016 | | | |
| I.3 + Pyraclostrobin | 0.016 | 1 : 4 | 100 | 82 |
| | 0.063 | | | |
| I.3 + Pyrimethanil | 0.008 | 1 : 1 | 68 | 20 |
| | 0.008 | | | |
| I.3 + Pyrimethanil | 0.008 | 1 : 8 | 68 | 28 |
| | 0.063 | | | |

**Table 4: Activity against SEPTTR**

| **Compound / mixture tested** | **Concen-tration (ppm)** | **Mixture** | **Observed efficacy (%)** | **Calculated efficacy* (%)** |
|---|---|---|---|---|
| I.3 | 0.032 | - | 2 | |
| | 0.016 | - | 3 | |
| | 0.008 | - | 1 | |
| | 0.004 | - | 0 | |
| Pydiflumetofen | 0.008 | - | 51 | |
| Difenoconazole | 0.016 | - | 69 | |
| Fluxapyroxad | 0.063 | - | 14 | |
| Inpyrfluxam | 0.063 | - | 20 | |
| Metyltetraprole | 0.063 | - | 78 | |
| | 0.032 | - | 16 | |
| Prothioconazole | 0.016 | - | 16 | |
| I.3 + Pydiflumetofen | 0.008 | 1 : 1 | 69 | 51 |
| | 0.008 | | | |
| I.3 + Difenoconazol | 0.016 | 1 : 1 | 89 | 70 |
| | 0.016 | | | |
| I.3 + Fluxapyroxad | 0.004 | 1 : 16 | 53 | 14 |
| | 0.063 | | | |
| I.3 + Inpyrfluxam | 0.032 | 1 : 2 | 42 | 22 |
| | 0.063 | | | |
| I.3 + Metyltetraprole | 0.032 | 1 : 2 | 95 | 78 |
| | 0.063 | | | |
| I.3 + Metyltetraprole | 0.032 | 1 : 1 | 43 | 17 |
| | 0.032 | | | |
| I.3 + Prothioconazol | 0.008 | 1 : 2 | 54 | 17 |
| | 0.016 | | | |
| I.3 + Prothioconazol | 0.016 | 1 : 1 | 68 | 19 |
| | 0.016 | | | |
| I.3 + Prothioconazol | 0.004 | 1 : 4 | 82 | 16 |
| | 0.016 | | | |

**Table 5: Activity against BOTRCI**

| **Compound / mixture tested** | **Concen-tration (ppm)** | **Mixture ratio** | **Observed efficacy (%)** | **Calculated efficacy* (%)** |
|---|---|---|---|---|
| I.3 | 0.008 | - | 54 | |
| | 0.004 | - | 3 | |
| | 0.002 | - | 1 | |
| | 0.001 | - | 0 | |
| Pydiflumetofen | 0.063 | - | 55 | |
| | 0.032 | - | 4 | |
| | 0.016 | - | 2 | |
| Azoxystrobin | 0.063 | - | 9 | |
| Boscalid | 0.063 | - | 27 | |
| Fluazinam | 0.063 | - | 57 | |
| Fludioxonil | 0.016 | - | 26 | |
| | 0.008 | - | 26 | |
| Fluxapyroxad | 0.063 | - | 59 | |
| | 0.032 | - | 37 | |
| | 0.016 | - | 26 | |
| Inpyrfluxam | 0.063 | - | 52 | |
| | 0.032 | - | 24 | |
| | 0.016 | - | 3 | |
| Ipflufenoquin | 0.063 | - | 23 | |
| Isoflucypram | 0.063 | - | 46 | |
| Metyltetraprole | 0.063 | - | 0 | |
| | 0.016 | - | 0 | |
| Pyraclostrobin | 0.063 | - | 3 | |
| | 0.032 | - | 0 | |
| | 0.016 | - | 0 | |
| Pyrimethanil | 0.063 | - | 25 | |
| | 0.032 | - | 4 | |
| I.3 + Pydiflumetofen | 0.004 | 1 : 4 | 24 | 4 |
| | 0.016 | | | |
| I.3 + Pydiflumetofen | 0.004 | 1 : 8 | 30 | 7 |
| | 0.032 | | | |
| I.3 + Pydiflumetofen | 0.004 | 1 : 16 | 84 | 57 |
| | 0.063 | | | |
| I.3 + Azoxystrobin | 0.008 | 1 : 8 | 88 | 58 |
| | 0.063 | | | |
| I.3 + Azoxystrobin | 0.004 | 1 : 16 | 59 | 11 |
| | 0.063 | | | |
| I.3 + Boscalid | 0.008 | 1 : 8 | 93 | 66 |
| | 0.063 | | | |
| I.3 + Boscalid | 0.004 | 1 : 16 | 74 | 29 |
| | 0.063 | | | |
| I.3 + Fluazinam | 0.008 | 1 : 8 | 99 | 80 |
| | 0.063 | | | |
| I.3 + Fluazinam | 0.004 | 1 : 16 | 84 | 58 |
| | 0.063 | | | |
| I.3 + Fludioxonil | 0.008 | 1 : 1 | 90 | 66 |
| | 0.008 | | | |
| I.3 + Fludioxonil | 0.008 | 1 : 2 | 100 | 66 |
| | 0.016 | | | |
| I.3 + Fludioxonil | 0.004 | 1 : 4 | 86 | 28 |
| | 0.016 | | | |
| I.3 + Fludioxonil | 0.001 | 1 : 16 | 69 | 26 |
| | 0.016 | | | |
| I.3 + Fludioxonil | 0.001 | 1 : 16 | 47 | 26 |
| | 0.016 | | | |
| I.3 + Fluxapyroxad | 0.008 | 1 : 2 | 84 | 66 |
| | 0.016 | | | |
| I.3 + Fluxapyroxad | 0.004 | 1 : 8 | 69 | 39 |
| | 0.032 | | | |
| I.3 + Fluxapyroxad | 0.004 | 1 : 16 | 85 | 60 |
| | 0.063 | | | |
| I.3 + Inpyrfluxam | 0.008 | 1 : 2 | 78 | 55 |
| | 0.016 | | | |
| I.3 + Inpyrfluxam | 0.004 | 1 : 8 | 74 | 26 |
| | 0.032 | | | |
| I.3 + Inpyrfluxam | 0.004 | 1 : 16 | 81 | 54 |
| | 0.063 | | | |
| I.3 + Ipflufenoquin | 0.008 | 1 : 8 | 86 | 64 |
| | 0.063 | | | |
| I.3 + Ipflufenoquin | 0.004 | 1 : 16 | 53 | 25 |
| | 0.063 | | | |
| I.3 + Isoflucypram | 0.004 | 1 : 16 | 84 | 46 |
| | 0.063 | | | |
| I.3 + Metyltetraprole | 0.008 | 1 : 2 | 73 | 55 |
| | 0.016 | | | |
| I.3 + Metyltetraprole | 0.008 | 1 : 8 | 85 | 54 |
| | 0.063 | | | |
| I.3 + Metyltetraprole | 0.004 | 1 : 16 | 35 | 3 |
| | 0.063 | | | |
| I.3 + Pyraclostrobin | 0.008 | 1 : 2 | 79 | 54 |
| | 0.016 | | | |
| I.3 + Pyraclostrobin | 0.008 | 1 : 4 | 77 | 54 |
| | 0.032 | | | |
| I.3 + Pyraclostrobin | 0.008 | 1 : 8 | 93 | 55 |
| | 0.063 | | | |
| I.3 + Pyraclostrobin | 0.004 | 1 : 16 | 72 | 6 |
| | 0.063 | | | |
| I.3 + Pyrimethanil | 0.008 | 1 : 4 | 72 | 56 |
| | 0.032 | | | |
| I.3 + Pyrimethanil | 0.008 | 1 : 8 | 87 | 65 |
| | 0.063 | | | |
| I.3 + Pyrimethanil | 0.004 | 1 : 16 | 53 | 27 |
| | 0.063 | | | |

**Table 6: Activity against BOTRCI res.**

| **Compound / mixture tested** | **Concen-tration (ppm)** | **Mixture ratio** | **Observed efficacy (%)** | **Calculated efficacy* (%)** |
|---|---|---|---|---|
| I.3 | 0.008 | - | 56 | |
| | 0.002 | - | 0 | |
| Boscalid | 0.063 | - | 0 | |
| Fludioxonil | 0.032 | - | 81 | |
| | 0.016 | - | 48 | |
| Ipflufenoquin | 0.063 | - | 0 | |
| Metyltetraprole | 0.016 | - | 0 | |
| Pyraclostrobin | 0.063 | - | 0 | |
| I.3 + Boscalid | 0.008 | 1 : 8 | 72 | 56 |
| | 0.063 | | | |
| I.3 + Fludioxonil | 0.008 | 1 : 2 | 100 | 77 |
| | 0.016 | | | |
| I.3 + Fludioxonil | 0.002 | 1 : 16 | 98 | 81 |
| | 0.032 | | | |
| I.3 + Ipflufenoquin | 0.008 | 1 : 8 | 80 | 56 |
| | 0.063 | | | |
| I.3 + Metyltetraprole | 0.008 | 1 : 2 | 72 | 56 |
| | 0.016 | | | |
| I.3 + Pyraclostrobin | 0.008 | 1 : 8 | 72 | 56 |
| | 0.063 | | | |

**Table 7: Activity against ALTESO**

| **Compound / mixture tested** | **Concen-tration (ppm)** | **Mixture ratio** | **Observed efficacy (%)** | **Calculated efficacy* (%)** |
|---|---|---|---|---|
| I.3 | 0.063 | - | 60 | |
| | 0.032 | - | 0 | |
| | 0.016 | - | 0 | |
| | 0.008 | - | 0 | |
| | 0.004 | - | 0 | |
| | 0.002 | - | 0 | |
| | 0.0005 | - | 0 | |
| Azoxystrobin | 0.032 | - | 42 | |
| Boscalid | 0.032 | - | 49 | |
| | 0.016 | - | 36 | |
| Difenoconazole | 0.063 | - | 38 | |
| Fludioxonil | 0.063 | - | 61 | |
| | 0.032 | - | 29 | |
| Fluxapyroxad | 0.004 | - | 11 | |
| Inpyrfluxam | 0.063 | - | 70 | |
| Ipflufenoquin | 0.032 | - | 30 | |
| Metyltetraprole | 0.063 | - | 59 | |
| | 0.032 | - | 15 | |
| Prothioconazole | 0.063 | - | 0 | |
| Pyraclostrobin | 0.016 | - | 33 | |
| Pyrimethanil | 0.063 | - | 0 | |
| I.3 + Azoxystrobin | 0.032 | 1 : 1 | 70 | 42 |
| | 0.032 | | | |
| I.3 + Azoxystrobin | 0.008 | 1 : 4 | 76 | 42 |
| | 0.032 | | | |
| I.3 + Azoxystrobin | 0.002 | 1 : 16 | 60 | 42 |
| | 0.032 | | | |
| I.3 + Boscalid | 0.032 | 1 : 1 | 76 | 49 |
| | 0.032 | | | |
| I.3 + Boscalid | 0.002 | 1 : 8 | 53 | 36 |
| | 0.016 | | | |
| I.3 + Difenoconazole | 0.063 | 1 : 1 | 100 | 75 |
| | 0.063 | | | |
| I.3 + Difenoconazole | 0.032 | 1 : 2 | 80 | 38 |
| | 0.063 | | | |
| I.3 + Fludioxonil | 0.032 | 1 : 1 | 72 | 29 |
| | 0.032 | | | |
| I.3 + Fludioxonil | 0.032 | 1 : 2 | 100 | 61 |
| | 0.063 | | | |
| I.3 + Fludioxonil | 0.016 | 1 : 4 | 100 | 61 |
| | 0.063 | | | |
| I.3 + Fludioxonil | 0.008 | 1 : 8 | 92 | 61 |
| | 0.063 | | | |
| I.3 + Fludioxonil | 0.004 | 1 : 16 | 84 | 61 |
| | 0.063 | | | |
| I.3 + Fluxapyroxad | 0.0005 | 1 : 8 | 65 | 11 |
| | 0.004 | | | |
| I.3 + Inpyrfluxam | 0.032 | 1 : 2 | 90 | 70 |
| | 0.063 | | | |
| I.3 + Ipflufenoquin | 0.016 | 1 : 2 | 64 | 30 |
| | 0.032 | | | |
| I.3 + Ipflufenoquin | 0.032 | 1 : 1 | 69 | 30 |
| | 0.032 | | | |
| I.3 + Ipflufenoquin | 0.008 | 1 : 4 | 57 | 30 |
| | 0.032 | | | |
| I.3 + Ipflufenoquin | 0.004 | 1 : 8 | 56 | 30 |
| | 0.032 | | | |
| I.3 + Metyltetraprole | 0.032 | 1 : 1 | 75 | 15 |
| | 0.032 | | | |
| I.3 + Metyltetraprole | 0.032 | 1 : 2 | 98 | 59 |
| | 0.063 | | | |
| I.3 + Metyltetraprole | 0.016 | 1 : 4 | 77 | 59 |
| | 0.063 | | | |
| I.3 + Prothioconazole | 0.032 | 1 : 2 | 37 | 0 |
| | 0.063 | | | |
| I.3 + Pyraclostrobin | 0.016 | 1 : 1 | 65 | 33 |
| | 0.016 | | | |
| I.3 + | 0.063 | 1 : 1 | 87 | 60 |
| Pyrimethanil | 0.063 | | | |

**Table 8: Activity against ALTEAL**

| **Compound / mixture tested** | **Concen-tration (ppm)** | **Mixture ratio** | **Observed efficacy (%)** | **Calculated efficacy* (%)** |
|---|---|---|---|---|
| I.3 | 0.063 | - | 42 | |
| | 0.032 | - | 24 | |
| | 0.016 | - | 6 | |
| | 0.008 | - | 1 | |
| Pydiflumetofen | 0.032 | - | 45 | |
| Azoxystrobin | 0.063 | - | 22 | |
| Boscalid | 0.063 | - | 17 | |
| Fluxapyroxad | 0.063 | - | 46 | |
| | 0.032 | - | 25 | |
| Inpyrfluxam | 0.063 | - | 13 | |
| Isoflucypram | 0.063 | - | 31 | |
| Mefentrifluconazole | 0.032 | - | 15 | |
| Metyltetraprole | 0.063 | - | 5 | |
| Pyraclostrobin | 0.063 | - | 35 | |
| I.3 + Pydiflumetofen | 0.032 | 1 : 1 | 82 | 58 |
| | 0.032 | | | |
| I.3 + Pydiflumetofen | 0.016 | 1 : 2 | 70 | 48 |
| | 0.032 | | | |
| I.3 + Pydiflumetofen | 0.008 | 1 : 4 | 70 | 45 |
| | 0.032 | | | |
| I.3 + Azoxystrobin | 0.063 | 1 : 1 | 77 | 54 |
| | 0.063 | | | |
| I.3 + Azoxystrobin | 0.032 | 1 : 2 | 58 | 41 |
| | 0.063 | | | |
| I.3 + Boscalid | 0.063 | 1 : 1 | 73 | 51 |
| | 0.063 | | | |
| I.3 + Fluxapyroxad | 0.032 | 1 : 1 | 62 | 43 |
| | 0.032 | | | |
| I.3 + Fluxapyroxad | 0.032 | 1 : 2 | 79 | 59 |
| | 0.063 | | | |
| I.3 + Fluxapyroxad | 0.016 | 1 : 4 | 77 | 50 |
| | 0.063 | | | |
| I.3 + Fluxapyroxad | 0.008 | 1 : 8 | 66 | 47 |
| | 0.063 | | | |
| I.3 + Inpyrfluxam | 0.032 | 1 : 2 | 55 | 34 |
| | 0.063 | | | |
| I.3 + Isoflucypram | 0.063 | 1 : 1 | 80 | 60 |
| | 0.063 | | | |
| I.3 + | 0.032 | 1 : 2 | 78 | 48 |
| Isoflucypram | 0.063 | | | |
| I.3 + Isoflucypram | 0.008 | 1 : 8 | 42 | 32 |
| | 0.063 | | | |
| I.3 + Mefentrifluconazole | 0.032 | 1 : 2 | 62 | 35 |
| | 0.032 | | | |
| I.3 + Metyltetraprole | 0.063 | 1 : 1 | 76 | 45 |
| | 0.063 | | | |
| I.3 + Metyltetraprole | 0.032 | 1 : 2 | 63 | 28 |
| | 0.063 | | | |
| I.3 + Pyraclostrobin | 0.063 | 1 : 1 | 86 | 62 |
| | 0.063 | | | |
| I.3 + Pyraclostrobin | 0.032 | 1 : 2 | 71 | 51 |
| | 0.063 | | | |
| I.3 + Pyraclostrobin | 0.016 | 1 : 4 | 64 | 39 |
| | 0.063 | | | |

**Table 9: Activity against CERCBE**

| **Compound / mixture tested** | **Concen-tration (ppm)** | **Mixture ratio** | **Observed efficacy (%)** | **Calculated efficacy* (%)** |
|---|---|---|---|---|
| I.3 | 0.063 | - | 13 | |
| | 0.032 | - | 18 | |
| | 0.004 | - | 17 | |
| Ipflufenoquin | 0.063 | - | 5 | |
| Mefentrifluconazole | 0.063 | - | 57 | |
| Metyltetraprole | 0.063 | - | 50 | |
| Pyraclostrobin | 0.016 | - | 0 | |
| I.3 + Ipflufenoquin | 0.063 | 1 : 1 | 49 | 18 |
| | 0.063 | | | |
| I.3 + Ipflufenoquin | 0.032 | 1 : 2 | 44 | 22 |
| | 0.063 | | | |
| I.3 + Mefentrifluconazole | 0.063 | 1 : 1 | 80 | 63 |
| | 0.063 | | | |
| I.3 + Metyltetraprole | 0.063 | 1 : 1 | 78 | 56 |
| | 0.063 | | | |
| I.3 + Pyraclostrobin | 0.004 | 1 : 4 | 36 | 17 |
| | 0.016 | | | |

**Table 10: Activity against CERCZM**

| **Compound / mixture tested** | **Concen-tration (ppm)** | **Mixture ratio** | **Observed efficacy (%)** | **Calculated efficacy* (%)** |
|---|---|---|---|---|
| I.3 | 0.016 | - | 30 | |
| | 0.004 | - | 19 | |
| | 0.002 | - | 9 | |
| Boscalid | 0.016 | - | 27 | |
| Mefentrifluconazole | 0.004 | - | 12 | |
| Pyraclostrobin | 0.002 | - | 70 | |
| I.3 + Boscalid | 0.016 | 1 : 1 | 66 | 49 |
| | 0.016 | | | |
| I.3 + Mefentrifluconazole | 0.004 | 1 : 1 | 51 | 28 |
| | 0.004 | | | |
| I.3 + Pyraclostrobin | 0.002 | 1 : 1 | 90 | 73 |
| | 0.002 | | | |

The results in Tables 1-10 show that the mixtures according to the invention have a higher observed fungicidal efficacy than expected according to Colby's formula. Thus, the mixtures according to the invention show a synergistic effect against phytopathogenic fungi.

## Claims

1. A mixture comprising as components,
1) at least one compound of formula Ia, Ib or Ic 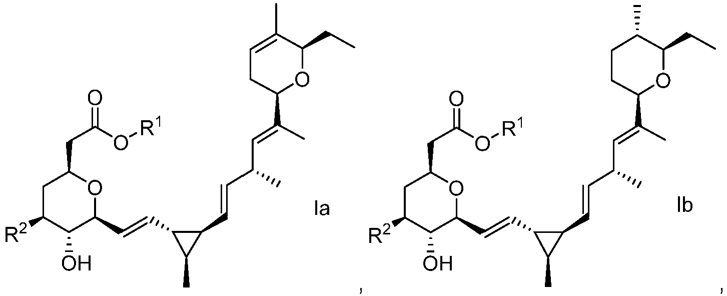 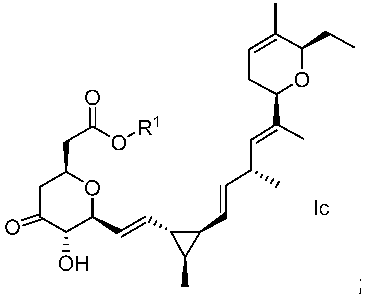 wherein
R¹ is selected from H or CH₃; and
R² is selected from OH, NH₂, NHCH₃, N(CH₃)₂, N(CH₃)₃⁺,
and agriculturally acceptable salts and N-oxides thereof;
and
2) at least one pesticide II selected from the groups A) to O):
A) Respiration
- complex III at Qₒ site: azoxystrobin, bifemetstrobin, bifujunzhi, coumethoxystrobin, coumoxystrobin, dimoxystrobin, enestroburin, famoxadone, fenamidone, fenaminstrobin, flufenoxystrobin, fluoxastrobin, kresoxim-methyl, mandestrobin, metominostrobin, metyltetraprole, orysastrobin, picoxystrobin, pyraclostrobin, pyrametostrobin, pyraoxystrobin, pyribencarb, pyriminostrobin, triclopyricarb, trifloxystrobin, 2-(2-(3-(2,6-dichlorophenyl)-1-methyl-allylideneaminooxymethyl)-phenyl)-2-methoxyimino-*N*-methylacetamide, methyl-*N*-[2-[(1,4-dimethyl-5-phenyl-pyrazol-3-yl)oxylmethyl]phenyl]-*N*-methoxy-carbamate, (*Z*,2*E*)-5-[1-(2,4-dichlorophenyl)pyrazol-3-yl]-oxy-2-methoxyimino-*N,*3-dimethyl-pent-3-enamide, (*Z*,2*E*)-5-[1-(4-chlorophenyl)pyrazol-3-yl]oxy-2-methoxyimino-*N*,3-dimethyl-pent-3-enamide, 2-(ortho-((2,5-dimethylphenyl-oxymethylen)phenyl)-3-methoxy-acrylic acid methylester, methyl (*Z*)-3-methoxy-2-[2-methyl-5-(3-propylpyrazol-1-yl)phenoxy]prop-2-enoate, methyl (*Z*)-2-[5-(3-isopropylpyrazol-1-yl)-2-methyl-phenoxy]-3-methoxy-prop-2-enoate, methyl (*Z*)-3-methoxy-2-[2-methyl-5-[3-(trifluoromethyl)-pyrazol-1-yl]phenoxy]prop-2-enoate, methyl (*Z*)-3-methoxy-2-[2-methyl-5-(4-propyltriazol-2-yl)phenoxy]-prop-2-enoate, methyl (*Z*)-3-methoxy-2-[2-methyl-5-[4-(trifluoromethyl)triazol-2-yl]phenoxy]prop-2-enoate, methyl (*Z*)-2-[5-(4-isopropyltriazol-2-yl)-2-methyl-phenoxy]-3-methoxy-prop-2-enoate, methyl (*Z*)-2-(5-cyclobutyl-2-methyl-phenoxy)-3-methoxy-prop-2-enoate, methyl (*Z*)-2-(5-cyclopentyl-2-methyl-phenoxy)-3-methoxy-prop-2-enoate, methyl (*Z*)-2-(5-cyclopropyl-2-methyl-phenoxy)-3-methoxy-prop-2-enoate, methyl (*Z*)-2-(5-cyclohexyl-2-methyl-phenoxy)-3-methoxy-prop-2-enoate, methyl (*E*)-3-methoxy-2-[(2-methyl-5-phenyl-phenyl)methyl]prop-2-enoate; methyl (*E*)-3-methoxy-2-[[5-[(*E*)-*N*-methoxy-*C*-methyl-carbonimidoyl]-2,4-dimethyl-phenyl]methyl]prop-2-enoate; methyl (*E*)-2-[[5-(2-cyclopropylethynyl)-2,4-dimethyl-phenyl]methyl]-3-methoxy-prop-2-enoate; methyl (*E*)-3-methoxy-2-(2-phenyl-1,3-benzoxazol-4-yl)prop-2-enoate; methyl (*E*)-3-methoxy-2-(2-phenyl-1,3-benzothiazol-4-yl)prop-2-enoate; methyl (*E*)-3-methoxy-2-(2-phenyl-1,3-benzoxazol-7-yl)prop-2-enoate; methyl (*Z*)-2-[6-(2-cyclopropylethynyl)-benzimidazol-1-yl]-3-methoxy-prop-2-enoate; methyl (*Z*)-3-methoxy-2-(6-phenylbenzimidazol-1-yl)prop-2-enoate; methyl (*Z*)-2-(3-chloro-6-phenyl-indol-1-yl)-3-methoxy-prop-2-enoate; methyl (*Z*)-2-(2,3-dichloro-6-phenyl-indol-1-yl)-3-methoxy-prop-2-enoate; methyl (*Z*)-3-methoxy-2-[6-[(*E*)-methoxyiminomethyl]indol-1-yl]prop-2-enoate; methyl (*Z*)-3-methoxy-2-[6-[(*E*)-*N*-methoxy-C-methyl-carbonimidoyl]indol-1-yl]prop-2-enoate, methyl *N*-[[5-[1-(2,6-difluoro-4-isopropyl-phenyl)pyrazol-3-yl]-2-methyl-phenyl]methyl]carbamate, methyl *N*-[[5-[1-(4-cyclopropyl-2,6-difluoro-phenyl)pyrazol-3-yl]-2-methyl-phenyl]methyl]carbamate, methyl *N*-[[5-[1-(4-chloro-2,6-difluoro-phenyl)pyrazol-3-yl]-2-methyl-phenyl]methyl]carbamate, methyl *N*-[[5-[1-[2,6-difluoro-4-(trifluoromethyl)phenyl]pyrazol-3-yl]-2-methyl-phenyl]methyl]carbamate;
- complex III at Qᵢ site: cyazofamid, amisulbrom, [(6*S*,7*R*,8*R*)-8-benzyl-3-[(3-hydroxy-4-methoxy-pyridine-2-carbonyl)amino]-6-methyl-4,9-dioxo-1,5-dioxonan-7-yl]-2-methylpropanoate, fenpicoxamid, florylpicoxamid, metarylpicoxamid;
- complex II: benodanil, benzovindiflupyr, bixafen, boscalid, carboxin, cyclobutrifluram, fenfuram, fluopyram, flutolanil, fluxapyroxad, furametpyr, inpyrfluxam, isofetamid, isoflucypram, isopyrazam, mepronil, oxycar-boxin, penflufen, penthiopyrad, pydiflumetofen, pyrapropoyne, pyraziflumid, sedaxane, tecloftalam, thiflu-zamide, fluindapyr, *N*-[2-[2-chloro-4-(trifluoromethyl)phenoxy]phenyl]-3-(difluoromethyl)-5-fluoro-1-methylpyrazole-4-carboxamide, methyl (*E*)-2-[2-[(5-cyano-2-methyl-phenoxy)methyl]phenyl]-3-methoxy-prop-2-enoate, 2-(difluoromethyl)-*N*-(1,1,3-trimethyl-indan-4-yl)pyridine-3-carboxamide, 2-(difluoromethyl)-*N*-[(3*R*)-1,1,3-trimethylindan-4-yl]pyridine-3-carboxamide, 2-(difluoromethyl)-*N*-(3-ethyl-1,1-dimethyl-indan-4-yl)pyridine-3-carboxamide, 2-(difluoromethyl)-*N*-[(3R)-3-ethyl-1,1-dimethyl-indan-4-yl]pyridine-3-carboxamide, 2-(difluoromethyl)-*N*-(1,1-dimethyl-3-propyl-indan-4-yl)pyridine-3-carboxamide, 2-(difluoromethyl)-*N*-[(3*R*)-1,1-dimethyl-3-propyl-indan-4-yl]pyridine-3-carboxamide, 2-(difluoromethyl)-*N*-(3-isobutyl-1,1-dimethyl-indan-4-yl)pyridine-3-carboxamide, 2-(difluoromethyl)-*N*-[(3*R*)-3-isobutyl-1,1-dimethyl-indan-4-yl]-pyridine-3-carboxamide;
- complex I NADH oxido-reductase: diflumetorim;
- uncouplers: binapacryl, dinobuton, dinocap, fluazinam, meptyldinocap, ferimzone;
- inhibitors of ox. phosphorylation: fentin salts, e.g. fentin-acetate, fentin chloride or fentin hydroxide;
- ATP transport: silthiofam;
- quinone inside and outside inhibitor stigmatellin binding type: ametoctradin;
B) Sterol biosynthesis
- C14 demethylase: triazoles: azaconazole, bitertanol, bromuconazole, cyproconazole, difenoconazole, diniconazole, diniconazole-M, epoxiconazole, fenbuconazole, fluoxytioconazole, fluquinconazole, flusilazole, flutriafol, hexaconazole, imibenconazole, ipconazole, ipfentrifluconazole, mefentrifluconazole, metconazole, myclobutanil, oxpoconazole, paclobutrazole, penconazole, propiconazole, prothioconazole, simeconazole, tebuconazole, tetraconazole, triadimefon, triadimenol, triticonazole, uniconazole, 2-(2,4-difluorophenyl)-1,1-difluoro-3-(tetrazol-1-yl)-1-[5-[4-(2,2,2-trifluoroethoxy)phenyl]-2-pyridyl]propan-2-ol, 2-(2,4-difluorophenyl)-1,1-difluoro-3-(tetrazol-1-yl)-1-[5-[4-(trifluoromethoxy)phenyl]-2-pyridyl]propan-2-ol, 2-(chloromethyl)-2-methyl-5-(p-tolylmethyl)-1-(1,2,4-triazol-1-ylmethyl)cyclopentanol, 4-[[6-[2-(2,4-difluorophenyl)-1,1-difluoro-2-hydroxy-3-(1,2,4-triazol-1-yl)propyl]-3-pyridyl]oxy]benzonitrile, 2-[6-(4-bromo-phenoxy)-2-(trifluoromethyl)-3-pyridyl]-1-(1,2,4-triazol-1-yl)propan-2-ol, 2-[6-(4-chlorophenoxy)-2-(trifluoromethyl)-3-pyridyl]-1-(1,2,4-triazol-1-yl)propan-2-ol, (2*R*)-2-[4-(4-chlorophenoxy)-2-(trifluoromethyl)phenyl]-1-(1,2,4-triazol-1-yl)propan-2-ol, (2*S*)-2-[4-(4-chlorophenoxy)-2-(trifluoromethyl)phenyl]-1-(1,2,4-triazol-1-yl)propan-2-ol, methyl 2-[2-chloro-4-(4-chlorophenoxy)phenyl]-2-hydroxy-3-(1,2,4-triazol-1-yl)propanoate, 2-[2-chloro-4-(4-chlorophenoxy)phenyl]-2-hydroxy-3-(1,2,4-triazol-1-yl)propanoic acid; imidazoles: imazalil, pefurazoate, prochloraz, triflumizole; pyrimidines, pyridines, piperazines: fenarimol, pyrifenox, triforine, [3-(4-chloro-2-fluoro-phenyl)-5-(2,4-difluorophenyl)isoxazol-4-yl]-(3-pyridyl)methanol;
- delta14-reductase: aldimorph, dodemorph, dodemorph-acetate, fenpropidin, fenpropimorph, piperalin, spiroxamine, tridemorph;
- 3-keto reductase: fenhexamid, fenpyrazamine;
- other: chlorphenomizole;
C) Nucleic acids metabolism
- RNA polymerase I: benalaxyl, benalaxyl-M, kiralaxyl, metalaxyl, metalaxyl-M, ofurace, oxadixyl;
- adenosine deaminase: bupirimate, 5-fluoro-2-(p-tolylmethoxy)pyrimidin-4-amine, 5-fluoro-2-(4-fluoro-phenylmethoxy)pyrimidin-4-amine, 5-fluoro-2-(4-chlorophenylmethoxy)pyrimidin-4-amine;
- DNA/RNA synthesis: 5-fluorocytosine, hymexazole, octhilinone,
- gyrase (A4): oxolinic acid;
- dihydroorotate dehydrogenase: ipflufenoquin, quinofumelin, feneptamidoquin;
D) Cytoskeleton and motor protein
- tubulin polymerization: benomyl, carbendazim, fuberidazole, pyridachlometyl, thiabendazole, thiophanate-methyl, *N*-ethyl-2-[(3-ethynyl-8-methyl-6-quinolyl)oxy]butanamide, *N*-ethyl-2-[(3-ethynyl-8-methyl-6-quinolyl)oxy]-2-methylsulfanyl-acetamide, 2-[(3-ethynyl-8-methyl-6-quinolyl)oxy]-*N*-(2-fluoroethyl)butanamide, 2-[(3-ethynyl-8-methyl-6-quinolyl)oxy]-*N*-(2-fluoroethyl)-2-methoxy-acetamide, 2-[(3-ethynyl-8-methyl-6-quinolyl)oxy]-*N*-propyl-butanamide, 2-[(3-ethynyl-8-methyl-6-quinolyl)oxy]-2-methoxy-*N*-propyl-acetamide, 2-[(3-ethynyl-8-methyl-6-quinolyl)oxy]-2-methylsulfanyl-*N*-propyl-acetamide, 2-[(3-ethynyl-8-methyl-6-quinolyl)oxy]-*N*-(2-fluoroethyl)-2-methylsulfanyl-acetamide, 4-(2-bromo-4-fluoro-phenyl)-*N*-(2-chloro-6-fluoro-phenyl)-2,5-dimethyl-pyrazol-3-amine, 4-(2-bromo-4-fluorophenyl)-*N*-(2-fluoro-6-nitrophenyl)-1,3-dimethyl-1*H*-pyrazol-5-amine, 4-(2-chloro-4,6-difluorophenyl)-*N*-(2-fluoro-6-nitrophenyl)-1,3-dimethyl-1*H*-pyrazol-5-amine, 4-(2-chloro-4-fluorophenyl)-*N*-(2-fluoro-6-nitrophenyl)-3-ethyl-1-methyl-1*H*-pyrazol-5-amine, 4-(2-chloro-4-fluorophenyl)-*N*-(2-fluoro-4-methyl-6-nitrophenyl)-1,3-dimethyl-1*H*-pyrazol-5-amine, 4-(2-chloro-4-fluorophenyl)-*N*-(2-fluoro-6-nitrophenyl)-1,3-dimethyl-1*H*-pyrazol-5-amine, 4-(2,4-difluorophenyl)-*N*-(2-fluoro-6-nitrophenyl)-1,3-dimethyl-1*H*-pyrazol-5-amine;
- tubulin polymerization: diethofencarb,
- tubulin polymersation: ethaboxam, zoxamide;
- cell division: pencycuron;
- spectrin-like proteins: fluopicolide, fluopimomide;
- actin/myosin/fimbrin function: metrafenone, phenamacril, pyriofenone;
E) Amino acids and protein synthesis
- methionine synthesis: cyprodinil, mepanipyrim, pyrimethanil;
- ribosome, termination step: blasticidin-S;
- ribosome initiation step: kasugamycin, kasugamycin hydrochloride-hydrate;
- ribosome initiation step: streptomycin;
- ribosome elongation step: mildiomycin, oxytetracyclin;
F) Signal transduction
- mechanism unknown: proquinazid, quinoxyfen;
- MAP/histidine kinase os-2: fludioxonil;
- MAP/histidine kinase os-1: iprodione, procymidone, vinclozolin;
G) Lipid synthesis or transport / membrane
- methyl transferase: edifenphos, iprobenfos, isoprothiolane; pyrazophos;
- cell peroxidation: biphenyl, chloroneb, dicloran, etridiazole, quintozene, tecnazene, tolclofos-methyl;
- cell membrane permeability: propamocarb;
- ergosterol binding: natamycin;
- oxysterol binding protein: fluoxapiprolin, oxathiapiprolin, 4-[1-[2-[3-(difluoromethyl)-5-methyl-pyrazol-1-yl]-acetyl]-4-piperidyl]-N-tetralin-1-yl-pyridine-2-carboxamide, 4-[1-[2-[3,5-bis(difluoromethyl)pyrazol-1-yl]acetyl]-4-piperidyl]-*N*-tetralin-1-yl-pyridine-2-carboxamide, 4-[1-[2-[3-(difluoromethyl)-5-(trifluoromethyl)pyrazol-1-yl]acetyl]-4-piperidyl]-*N*-tetralin-1-yl-pyridine-2-carboxamide, 4-[1-[2-[5-cyclopropyl-3-(difluoromethyl)-pyrazol-1-yl]acetyl]-4-piperidyl]-*N*-tetralin-1-yl-pyridine-2-carboxamide, 4-[1-[2-[5-methyl-3-(trifluoromethyl)pyrazol-1-yl]acetyl]-4-piperidyl]-*N*-tetralin-1-yl-pyridine-2-carboxamide, 4-[1-[2-[5-(difluoromethyl)-3-(trifluoromethyl)pyrazol-1-yl]acetyl]-4-piperidyl]-*N*-tetralin-1-yl-pyridine-2-carboxamide, 4-[1-[2-[3,5-bis(trifluoromethyl)pyrazol-1-yl]acetyl]-4-piperidyl]-*N*-tetralin-1-yl-pyridine-2-carboxamide, (4-[1-[2-[5-cyclopropyl-3-(trifluoromethyl)pyrazol-1-yl]acetyl]-4-piperidyl]-*N*-tetralin-1-yl-pyridine-2-carboxamide, (1-(4-(4-(5-(2,6-dichlorophenyl)-4,5-dihydroisoxazol-3-yl)thiazol-2-yl)piperidin-1-yl)-2-((3-trifluoromethyl)pyrazin-2-yl)oxy)-ethan-1-one, 1-(4-(4-(5-(2-chloro-6-fluorophenyl)-4,5-dihydroisoxazol-3-yl)thiazol-2-yl)piperidin-1-yl)-2-((3-trifluoromethyl)pyridin-2-yl)oxy)ethan-1-one, tert-butyl 4-(4-(5-(2-bromo-6-fluorophenyl)-4,5-dihydroisoxazol-3-yl)thiazol-2-yl)piperidin-1-carboxylate, ((2-(3-(2-(1-(2-(3,5-bis(trifluoromethyl)-1*H*-pyrazol-1-yl)-acetyl)piperidin-4-yl)thiazol-4-yl)-4,5-dihydroisoxazo-5-yl)-3-fluorophenyl)imino)dimethyl-λ⁶-sulfanone, ((2-(3-(2-(1-(2-(3,5-bis(difluoromethyl)-1*H*-pyrazol-1-yl)acetyl)piperidin-4-yl)thiazol-4-yl)-4,5-dihydroisoxazo-5-yl)-3-fluorophenyl)imino)dimethyl-λ⁶-sulfanone, ((2-(3-(2-(1-(2-(3,5-bis(difluoromethyl)-1*H*-pyrazol-1-yl)acetyl)piperidin-4-yl)thiazol-4-yl)-4,5-dihydroisoxazo-5-yl)-3-chorophenyl)imino)(isopropyl)(methyl)-λ⁶-sulfanone, ((2-(3-(2-(1-(2-(3,5-bis(trifluoromethyl)-1*H*-pyrazol-1-yl)acetyl)piperidin-4-yl)thiazol-4-yl)-4,5-dihydroisoxazo-5-yl)-3-fluorophenyl)imino)(isopropyl)(methyl)-λ⁶-sulfanone, ((2-(3-(2-(1-(2-(3,5-bis(difluoromethyl)-1*H*-pyrazol-1-yl)acetyl)piperidin-4-yl)thiazol-4-yl)-4,5-dihydroisoxazo-5-yl)-3-(trifluoromethyl)-phenyl)imino)dimethyl-λ⁶-sulfanone, ((3-fluoro-2-(3-(2-(1-(2-(5-methyl-3-(trifluoromethyl)-1*H*-pyrazol-1-yl)-acetyl)piperidin-4-yl)thiazol-4-yl)-4,5-dihydroisoxazo-5-yl)-phenyl)imino)dimethyl-λ⁶-sulfanone;
H) Multi Site Activity
- inorganics: Bordeaux mixture, copper, copper acetate, copper hydroxide, copper oxychloride, basic copper sulfate, sulfur;
- dithiocarbamates and relatives: ferbam, mancozeb, maneb, metam, metiram, propineb, thiram, zineb, ziram, zinc thiazole;
- organochlorine compounds: anilazine, captafol, captan, chlorothalonil, dichlofluanid, dichlorophen, folpet, hexachlorobenzene, pentachlorphenole and its salts, phthalide, tolylfluanid;
- guanidines, quinones, quinoxalines, maleimides, thiocarbamates: chinomethionat, dithianon, fluoroimide, guanidine, guazatine, guazatine-acetate, iminoctadine, iminoctadine-triacetate, iminoctadine-tris(albesilate), methasulfocarb, 2,6-dimethyl-1*H*,5*H*-[1,4]dithiino[2,3-c:5,6-c']dipyrrole-1,3,5,7(2*H*,6*H*)-tetraone;
I) Cell wall biosynthesis and melanin synthesis in cell wall
- chitin synthase: polyoxin B;
- cellulose synthase: benthiavalicarb, dimethomorph, flumorph, iprovalicarb, mandipropamid, pyrimorph, valifenalate;
- reductase in melanin synthesis: pyroquilon, tricyclazole;
- dehydratase in melanin synthesis: carpropamid, dicyclomet, fenoxanil;
- polyketide synthase in melanin synthesis: tolprocarb;
J) Plant defence induction
- salicylate-related: acibenzolar-S-methyl, probenazole, isotianil, tiadinil, dichlobentiazox; phosphonates: fosetyl, fosetyl-aluminum, phosphorous acid and its salts, calcium phosphonate, potassium phosphonate; others: potassium or sodium bicarbonate, 4-cyclopropyl-*N*-(2,4-di'methoxy'phenyl)thiadiazole-5-carboxamide;
K) Unknown mode of action
- aminopyrifen, benziothiazolinone, bromothalonil, bronopol, cyflufenamid, cymoxanil, dazomet, debacarb, diclomezine, difenzoquat, difenzoquat-methylsulfate, diphenylamin, dodine, dodine free base, fenitropan, flufenoxadiazam [MoA proposed: class II histone deacetylase inhibitor], flumetover, flumetylsulforim, flusulfamide, flutianil, harpin, nitrapyrin, nitrothal-isopropyl, oxine-copper, picarbutrazox, pyrisoxazole, seboctylamine, tebufloquin, tecloftalam, triazoxide, validamycin; *N*'-(4-(4-chloro-3-trifluoromethyl-phenoxy)-2,5-dimethyl-phenyl)-*N*-ethyl-*N*-methyl formamidine, *N*'-(4-(4-fluoro-3-trifluoromethyl-phenoxy)-2,5-dimethyl-phenyl)-*N*-ethyl-*N*-methyl formamidine, *N*'-[4-[[3-[(4-chlorophenyl)methyl]-1,2,4-thiadiazol-5-yl]oxy]-2,5-dimethyl-phenyl]-*N*-ethyl-*N*-methyl-formamidine, *N*'-(5-bromo-6-indan-2-yloxy-2-methyl-3-pyridyl)-*N*-ethyl-*N*-methyl-formamidine, *N*'-[5-bromo-6-[1-(3,5-difluorophenyl)ethoxy]-2-methyl-3-pyridyl]-*N*-ethyl-*N*-methyl-formamidine, *N*'-[5-bromo-6-(4-isopropylcyclohexoxy)-2-methyl-3-pyridyl]-*N*-ethyl-*N*-methyl-formamidine, *N*'-[5-bromo-2-methyl-6-(1-phenylethoxy)-3-pyridyl]-*N*-ethyl-*N*-methyl-formamidine, *N*'-(2-methyl-5-trifluoromethyl-4-(3-trimethylsilanyl-propoxy)-phenyl)-*N*-ethyl-*N*-methyl formamidine, *N*'-(5-difluoromethyl-2-methyl-4-(3-trimethylsilanyl-propoxy)-phenyl)-*N*-ethyl-*N*-methyl formamidine, 2-(4-chloro-phenyl)-*N*-[4-(3,4-dimethoxy-phenyl)-isoxazol-5-yl]-2-prop-2-ynyloxy-acetamide, 3-[5-(4-methylphenyl)-2,3-dimethyl-isoxazolidin-3-yl]-pyridine, 5-chloro-1-(4,6-dimethoxy-pyrimidin-2-yl)-2-methyl-1*H*-benzoimidazole, ethyl (*Z*)-3-amino-2-cyano-3-phenyl-prop-2-enoate, pentyl *N*-[6-[[(*Z*)-[(1-methyltetrazol-5-yl)-phenyl-methylene]amino]oxymethyl]-2-pyridyl]carbamate, but-3-ynyl *N*-[6-[[(*Z*)-[(1-methyltetrazol-5-yl)-phenyl-methylene]amino]oxymethyl]-2-pyridyl]carbamate, 2-(6-benzyl-2-pyridyl)quinazoline, 2-[6-(3-fluoro-4-methoxy-phenyl)-5-methyl-2-pyridyl]quinazoline, *N*'-(2,5-dimethyl-4-phenoxy-phenyl)-*N*-ethyl-*N*-methyl-formamidine, *N*'-[5-bromo-2-methyl-6-(1-methyl-2-propoxy-ethoxy)-3-pyridyl]-*N*-ethyl-*N*-methyl-formamidine, *N*'-[4-(4,5-dichlorothiazol-2-yl)oxy-2,5-dimethyl-phenyl]-*N*-ethyl-*N*-methyl-formamidine, *N*-methyl-4-[5-(trifluoromethyl)-1,2,4-oxadiazol-3-yl]benzenecarbothioamide, *N*-methoxy-*N*-[[4-[5-(trifluoromethyl)-1,2,4-oxadiazol-3-yl]phenyl]methyl]cyclopropanecarboxamide, *N*-((4-[5-(trifluoromethyl)-1,2,4-oxadiazol-3-yl]phenyl)methyl)propanamide, 3,3,3-trifluoro-*N*-[[3-fluoro-4-[5-(trifluoromethyl)-1,2,4-oxadiazol-3-yl]phenyl]methyl]propanamide, 3,3,3-trifluoro-*N*-[[2-fluoro-4-[5-(trifluoromethyl)-1,2,4-oxadiazol-3-yl]phenyl]methyl]propanamide, *N*-[2,3-difluoro-4-[5-(trifluoromethyl)-1,2,4-oxadiazol-3-yl]benzyl]butanamide,*N*-[[2,3-difluoro-4-[5-(trifluoromethyl)-1,2,4-oxadiazol-3-yl]phenyl]methyl]-3,3,3-trifluoro-propanamide, 1-methoxy-1-methyl-3-[[4-[5-(trifluoromethyl)-1,2,4-oxadiazol-3-yl]phenyl]methyl]urea, 1,1-diethyl-3-[[4-[5-[trifluoromethyl]-1,2,4-oxadiazol-3-yl]phenyl]methyl]urea, *N*,2-dimethoxy-*N*-[[4-[5-(trifluoromethyl)-1,2,4-oxadiazol-3-yl]phenyl]methyl]propanamide, *N*-ethyl-2-methyl-*N*-[[4-[5-(trifluoromethyl)-1,2,4-oxadiazol-3-yl]phenyl]methyl]propanamide, 1-methoxy-3-methyl-1-[[4-[5-(trifluoromethyl)-1,2,4-oxadiazol-3-yl]phenyl]methyl]urea, 1-[[4-[5-(trifluoromethyl)-1,2,4-oxadiazol-3-yl]phenyl]methyl]pyrrolidin-2-one, 1-[[4-[5-(trifluoromethyl)-1,2,4-oxadiazol-3-yl]phenyl]methyl]piperidin-2-one, 4-[[4-[5-(trifluoromethyl)-1,2,4-oxadiazol-3-yl]phenyl]methyl]morpholin-3-one, 4,4-dimethyl-2-[[4-[5-(trifluoromethyl)-1,2,4-oxadiazol-3-yl]phenyl]methyl]isoxazolidin-3-one, 2-[[4-[5-(trifluoromethyl)-1,2,4-oxadiazol-3-yl]phenyl]-methyl]isoxazolidin-3-one, 5,5-dimethyl-2-[[4-[5-(trifluoromethyl)-1,2,4-oxadiazol-3-yl]phenyl]methyl]-isoxazolidin-3-one, 3,3-dimethyl-1-[[4-[5-(trifluoromethyl)-1,2,4-oxadiazol-3-yl]phenyl]methyl]piperidin-2-one, 2-[[4-[5-(trifluoromethyl)-1,2,4-oxadiazol-3-yl]phenyl]methyl]oxazinan-3-one, 1-[[3-fluoro-4-[5-(trifluoromethyl)-1,2,4-oxadiazol-3-yl]phenyl]methyl]azepan-2-one, 4,4-dimethyl-1-[[4-[5-(trifluoromethyl)-1,2,4-oxadiazol-3-yl]phenyl]methyl]pyrrolidin-2-one, 5-methyl-1-[[4-[5-(trifluoromethyl)-1,2,4-oxadiazol-3-yl]phenyl]methyl]pyrrolidin-2-one, ethyl 1-[[4-[5-(trifluoromethyl)-1,2,4-oxadiazol-3-yl]phenyl]methyl]-pyrazole-4-carboxylate, *N*-methyl-1-[[4-[5-(trifluoromethyl)-1,2,4-oxadiazol-3-yl]phenyl]methyl]pyrazole-4-carboxamide, *N*,*N*-dimethyl-1-[4-[5-(trifluoromethyl)-1,2,4-oxadiazol-3-yl]benzyl]-1H-1,2,4-triazol-3-amine, *N*-methoxy-*N*-methyl-1-[[4-[5-(trifluoromethyl)-1,2,4-oxadiazol-3-yl]phenyl]methyl]pyrazole-4-carboxamide, propyl-1-[[4-[5-(trifluoromethyl)-1,2,4-oxadiazol-3-yl]phenyl]methyl]pyrazole-4-carboxamide, *N*-methoxy-1-[[4-[5-(trifluoromethyl)-1,2,4-oxadiazol-3-yl]phenyl]methyl]pyrazole-4-carboxamide, *N*-allyl-*N*-[[4-[5-(trifluoromethyl)-1,2,4-oxadiazol-3-yl]phenyl]methyl]propanamide, 3-ethyl-1-methoxy-1-[[4-[5-(trifluoromethyl)-1,2,4-oxadiazol-3-yl]phenyl]methyl]urea, 1,3-dimethoxy-1-[[4-[5-(trifluoromethyl)-1,2,4-oxadiazol-3-yl]phenyl]methyl]urea, *N*-allyl-*N*-[[4-[5-(trifluoromethyl)-1,2,4-oxadiazol-3-yl]phenyl]methyl]acetamide, *N*-[4-[5-(trifluoromethyl)-1,2,4-oxadiazol-3-yl]benzyl]cyclopropanecarboxamide, 1-methyl-3-[[4-[5-(trifluoromethyl)-1,2,4-oxadiazol-3-yl]phenyl]methyl]urea, *N*'-[2-chloro-4-(2-fluorophenoxy)-5-methyl-phenyl]-*N*-ethyl-*N*-methyl-formamidine, *N*'-[2-chloro-4-[(4-methoxy-phenyl)methyl]-5-methylphenyl]-*N*-ethyl-*N*-methyl-formamidine, *N*'-[2-chloro-4-[(4-cyano-phenyl)methyl]-5-methyl-phenyl]-*N*-ethyl-*N*-methyl-formamidine, *N*'-[2,5-dimethyl-4-(o-tolylmethyl)phenyl]-*N*-ethyl-*N*-methyl-formamidine, 6-chloro-3-(3-cyclopropyl-2-fluoro-phenoxy)-N-[2-(2,4-dimethylphenyl)-2,2-difluoro-ethyl]-5-methyl-pyridazine-4-carboxamide, 3-(3-bromo-2-fluoro-phenoxy)-6-chloro-*N*-[2-(2-chloro-4-methyl-phenyl)-2,2-difluoro-ethyl]-5-methyl-pyridazine-4-carboxamide (K.1.100), 6-chloro-*N*-[2-(2-chloro-4-methyl-phenyl)-2,2-difluoro-ethyl]-3-(3-cyclopropyl-2-fluoro-phenoxy)-5-methyl-pyridazine-4-carboxamide (K.1.101), 6-chloro-3-(3-cyclopropyl-2-fluoro-phenoxy)-*N*-[2-(3,4-dimethylphenyl)-2,2-difluoro-ethyl]-5-methyl-pyridazine-4-carboxamide (K.1.102), 6-chloro-3-(3-chloro-2-fluoro-phenoxy)-*N*-[2-(2,4-dimethylphenyl)-2,2-difluoro-ethyl]-5-methylpyridazine-4-carboxamide (K.1.103), *N*-[2-(2-bromo-4-methyl-phenyl)-2,2-difluoro-ethyl]-6-chloro-3-(3-cyclopropyl-2-fluoro-phenoxy)-5-methyl-pyridazine-4-carboxamide (K.1.104), 2-[cyano-(2,6-difluoro-4-pyridyl)amino]-5-methyl-*N*-spiro[3.4]octan-3-yl-thiazole-4-carboxamide, 2-[acetyl-(2,6-difluoro-4-pyridyl)amino]-*N*-(2,2-dimethylcyclobutyl)-5-methyl-thiazole-4-carboxamide, 2-[(2,6-difluoro-4-pyridyl)-(2-methoxyacetyl)amino]-*N*-(2,2-dimethylcyclobutyl)-5-methyl-thiazole-4-carboxamide, 2-[cyano-(2,6-difluoro-4-pyridyl)amino]-N-(2,2-dimethylcyclobutyl)-5-methyl-thiazole-4-carboxamide, *N*-[1-[[3-[2-(5-fluoro-2-methoxy-phenyl)-2-hydroxy-ethyl]-5-[(*Z*)-*N*-isopropoxy-*C*-methyl-carbonimidoyl]-2,6-dioxo-pyrimidin-1-yl]methyl]-2-methyl-propyl]-2-methyl-propanamide, *N*-[1-[[3-[2-(5-fluoro-2-methoxy-phenyl)-2-hydroxyethyl]-5-[(*Z*)-*N*-isopropoxy-*C*-methyl-carbonimidoyl]-2,6-dioxo-pyrimidin-1-yl]methyl]-2-methyl-propyl]-2,2-dimethyl-propanamide, *N*-[2-[3-[2-(5-fluoro-2-methoxy-phenyl)-2-hydroxy-ethyl]-5-[(Z)-*N*-isopropoxy-C-methyl-carbonimidoyl]-2,6-dioxo-pyrimidin-1-yl]-1-methyl-ethyl]-2-methyl-propanamide, *N*-[2-[3-[2-hydroxy-2-(2-methoxyphenyl)ethyl]-5-[(*Z*)-*N*-isopropoxy-*C*-methyl-carbonimidoyl]-2,6-dioxo-pyrimidin-1-yl]-1-methyl-ethyl]-2-methyl-propanamide, *N*-[2-[3-[2-(2-cyanoethoxy)-2-(5-fluoro-2-methoxy-phenyl)ethyl]-5-[(*Z*)-*N*-isopropoxy-*C*-methyl-carbonimidoyl]-2,6-dioxo-pyrimidin-1-yl]-1-methyl-ethyl]-2-methyl-propanamide, rac-3-[3-(3-chloro-2-fluoro-phenoxy)-6-methyl-pyridazin-4-yl]-5-[(2-chloro-4-methyl-phenyl)methyl]-5,6-dihydro-4*H*-1,2,4-oxadiazine, (5S)-3-[3-(3-chloro-2-fluoro-phenoxy)-6-methyl-pyridazin-4-yl]-5-[(2-chloro-4-methyl-phenyl)methyl]-5,6-dihydro-4*H*-1,2,4-oxadiazine, (5*R*)-3-[3-(3-chloro-2-fluoro-phenoxy)-6-methyl-pyridazin-4-yl]-5-[(2-chloro-4-methyl-phenyl)methyl]-5,6-dihydro-4*H*-1,2,4-oxadiazine, 2-(4-fluoro-phenoxy)-1-[4-[5-(trifluoromethyl)-1,2,4-oxadiazol-3-yl]phenyl]ethanone, 2-[(6-fluoro-3-pyridyl)oxy]-1-[4-[5-(trifluoromethyl)-1,2,4-oxadiazol-3-yl]phenyl]ethanone, 2-(4-fluoroanilino)-1-[4-[5-(trifluoromethyl)-1,2,4-oxadiazol-3-yl]phenyl]ethenone, ethyl 1-[[4-[[2-(trifluoromethyl)-1,3-dioxolan-2-yl]methoxy]phenyl]-methyl]-1*H*-pyrazole-4-carboxylate, ethyl 1-[[4-[[(1Z)-2-ethoxy-3,3,3-trifluoro-1-propen-1-yl]oxy]phenyl]-methyl]-1*H*-pyrazole-4-carboxylate;
L) Biopesticides
L1) Microbial pesticides with fungicidal, bactericidal, viricidal and/or plant defense activator activity: *Ampelomyces quisqualis, Aspergillus flavus*, *Aureobasidium pullulans*, *Bacillus altitudinis*, *B. amyloliquefaciens*, *B. amyloliquefaciens* ssp. *plantarum* (also referred to as *B*. *velezensis*), *B. megaterium, B. mojavensis*, *B. mycoides*, *B. pumilus*, *B. simplex*, *B*. *solisalsi, B*. *subtilis*, *B*. *subtilis* var. *amyloliquefaciens*, *B. velezensis*, *Candida oleophila*, *C*. *saitoana*, *Clavibacter michiganensis* (bacteriophages), *Coniothyrium minitans*, *Cryphonectria parasitica*, *Cryptococcus albidus, Dilophosphora alopecuri*, *Fusarium oxysporum*, *Clonostachys rosea* f. *catenulate* (also named *Gliocladium catenulatum*), *Gliocladium roseum*, *Lysobacter antibioticus*, *L. enzymogenes*, *Metschnikowia fructicola*, *Microdochium dimerum*, *Microsphaeropsis ochra*cea*, Muscodor albus*, *Paenibacillus alvei*, *Paenibacillus epiphyticus*, *P. polymyxa*, *Pantoea vagans*, *Penicillium bilaiae*, *Phlebiopsis gigantea, Pseudomonas* sp., *Pseudomonas chloraphis, Pseudozyma flocculosa, Pichia anomala*, *Pythium oligandrum*, *Sphaerodes mycoparasitica*, *Streptomyces griseoviridis*, *S*. *lydicus*, *S*. *violaceusniger*, *Talaromyces flavus*, *Trichoderma asperelloides, T. asperellum*, *T. atroviride*, *T. fertile*, *T. gamsii*, *T. harmatum*, *T. harzianum*, *T. polysporum*, *T. stromatícum*, *T. virens*, *T. viride, Typhula phacorrhiza, Ulocladium oudemansii, Verticillium dahliae,* zucchini yellow mosaic virus (avirulent strain);
L2) Biochemical pesticides with fungicidal, bactericidal, viricidal and/or plant defense activator activity: harpin protein, plant oils: tea tree oil, orange oil, eugenol, limonene, geraniol, thymol; Reynoutria sachalinensis extract, aureobasidin, bafilomycin, chlorflavonin, cinnamaldehyde, natamycin;
L3) Microbial pesticides with insecticidal, acaricidal, molluscidal and/or nematicidal activity: *Agrobacterium radiobacter*, *Bacillus cereus*, *B. firmus, B. thuringiensis*, *B. thuringiensis* ssp. *aizawai*, *B. t.* ssp. *israelensis*, *B*. *t*. ssp. *galleriae, B. t*. ssp. *kurstaki*, *B*. *t*. ssp. *tenebrionis*, *Beauveria bassiana*, *B. brongniartii*, *Burkholderia* spp., *Chromobacterium subtsugae*, *Cydia pomonella* granulovirus (CpGV), *Cryptophlebia leucotreta* granulovirus (CrleGV), *Flavobacterium* spp., *Helicoverpa armigera* nucleopolyhedrovirus (HearNPV), *Helicoverpa* zea nucleopolyhedrovirus (HzNPV), *Helicoverpa* zea single capsid nucleopolyhedrovirus (HzSNPV), *Heterorhabditis bacteriophora*, *Isaria fumosorosea*, *Lecanicillium longisporum*, *L. muscarium*, *Metarhizium anisopliae*, *M. anisopliae* var. *anisopliae*, *M. anisopliae* var. *acridum*, *Nomuraea rileyi*, *Paecilomyces fumosoroseus*, *P. lilacinus*, *Paenibacillus popilliae*, *Pasteuria* spp., *P. nishizawae*, *P. penetrans*, *P. ramosa*, *P. thornea*, *P. usgae*, *Pseudomonas fluorescens*, *Spodoptera littoralis* nucleopolyhedrovirus (SpliNPV), *Steinemema carpocapsae*, *S*. *feltiae*, *S*. *kraussei*, *Streptomyces galbus*, *S*. *microflavus*;
L4) Biochemical pesticides with insecticidal, acaricidal, molluscidal, pheromone and/or nematicidal activity: L-carvone, citral, (*E*,*Z*)-7,9-dodecadien-1-yl acetate, ethyl formate, (*E*,*Z*)-2,4-ethyl decadienoate (pear ester), (*Z*,*Z*,*E*)-7,11,13-hexadecatrienal, heptyl butyrate, isopropyl myristate, lavanulyl senecioate, cis-jasmone, 2-methyl-1-butanol, methyl eugenol, methyl jasmonate, (*E*,*Z*)-2,13-octadecadien-1-ol, (*E*,*Z*)-2,13-octadecadien-1-ol acetate, (*E*,*Z*)-3,13-octadecadien-1-ol, (*R*)-1-octen-3-ol, pentatermanone, (*E*,*Z*,*Z*)-3,8,11-tetradecatrienyl acetate, (*Z*,*E*)-9,12-tetradecadien-1-yl acetate, (*Z*)-7-tetradecen-2-one, (*Z*)-9-tetradecen-1-yl acetate, (*Z*)-11-tetradecenal, (*Z*)-11-tetradecen-1-ol, extract of *Chenopodium ambrosiodes*, Neem oil, Quillay extract;
L5) Microbial pesticides with plant stress reducing, plant growth regulator, plant growth promoting and/or yield enhancing activity: *Azospirillum amazonense*, *A*. *brasilense*, *A*. *lipoferum*, *A. irakense*, *A*. *halopraeferens*, *Bradyrhizobium* spp., *B*. *elkanii*, *B. japonicum*, *B. liaoningense*, *B. lupini*, *Delftia acidovorans*, *Glomus infraradices*, *Mesorhizobium* spp., *Rhizobium leguminosarum* bv. *phaseoli*, *R. I*. bv. *trifolii*, *R. I*. bv. *viciae*, *R. tropici*, *Sinorhizobium meliloti*,
O) Insecticides from classes O.1 to O.29:
O.1 Acetylcholine esterase inhibitors: carbamates: aldicarb, alanycarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, triazamate, trimethacarb, XMC, xylylcarb; organophosphates: acephate, azamethiphos, azinphos-ethyl, azinphosmethyl, cadusafos, chlorethoxyfos, chlorfenvinphos, chlormephos, chlorpyrifos, chlorpyrifos-methyl, coumaphos, cyanophos, demeton-S-methyl, diazinon, dichlorvos, dicrotophos, dimethoate, dimethylvinphos, disulfoton, EPN, ethion, ethoprophos, famphur, fenamiphos, fenitrothion, fenthion, fosthiazate, heptenophos, imicyafos, isofenphos, isopropyl O-(methoxyaminothio-phosphoryl) salicylate, isoxathion, malathion, mecarbam, methamidophos, methidathion, mevinphos, monocrotophos, naled, omethoate, oxydemeton-methyl, parathion, parathion-methyl, phenthoate, phorate, phosalone, phosmet, phosphamidon, phoxim, pirimiphos- methyl, profenofos, propetamphos, prothiofos, pyraclofos, pyridaphenthion, quinalphos, sulfotep, tebupirimfos, temephos, terbufos, tetrachlorvinphos, thiometon, triazophos, trichlorfon, vamidothion;
O.2 GABA-gated chloride channel blockers: chlordane, endosulfan; ethiprole, fipronil, flufiprole, nicofluprole, pyrafluprole, pyriprole;
O.3 Sodium channel modulators: pyrethroids: acrinathrin, allethrin, d-cis-trans allethrin, d-*trans* allethrin, bifenthrin, kappa-bifenthrin, bioallethrin, bioallethrin S-cylclopentenyl, bioresmethrin, cycloprothrin, cyfluthrin, beta-cyfluthrin, cyhalothrin, lambda-cyhalothrin, gamma-cyhalothrin, cypermethrin, *alpha*-cypermethrin, beta-cypermethrin, *theta*-cypermethrin, zeta-cypermethrin, cyphenothrin, deltamethrin, empenthrin, esfenvalerate, etofenprox, fenpropathrin, fenvalerate, flucythrinate, flumethrin, tau-fluvalinate, halfenprox, heptafluthrin, imiprothrin, meperfluthrin, metofluthrin, momfluorothrin, epsilon-momfluorothrin, permethrin, phenothrin, prallethrin, profluthrin, pyrethrins (pyrethrum), resmethrin, silafluofen, tefluthrin, kappa-tefluthrin, tetramethylfluthrin, tetramethrin, tralomethrin, transfluthrin; DDT, methoxychlor;
O.4 Nicotinic acetylcholine receptor competitive modulators: neonicotinoids: acetamiprid, clothianidin, cycloxaprid, dinotefuran, imidacloprid, nitenpyram, thiacloprid, thiamethoxam; 4,5-dihydro-*N*-nitro-1-(2-oxiranylmethyl)-1*H*-imidazol-2-amine, (2E)-1-[(6-chloropyridin-3-yl)methyl]-*N*'-nitro-2-pentylidene-hydrazinecarboximidamide; 1-[(6-chloropyridin-3-yl)methyl]-7-methyl-8-nitro-5-propoxy-1,2,3,5,6,7-hexa-hydroimidazo[1,2-a]pyridine; nicotine; sufoximines: sulfoxaflor; butenolindes: flupyradifurone; mesionics: dicloromezotiaz, fenmezoditiaz, triflumezopyrim, pyridylidenes: flupyrimin, 1-[(2-chlorothiazol-5-yl)methyl]-3-(3,5-dimethylisoxazol-4-yl)pyrido[1,2-a]pyrimidine-2,4-dione;
O.5 nAChR allosteric modulators: spinetoram, spinosad;
O.6 Glutamate gated chloride channel allosteric modulators: abamectin, emamectin benzoate, ivermectin, lepimectin, milbemectin;
O.7 Juvenile hormone receptor modulators: hormone analogs: hydroprene, kinoprene, methoprene; fenoxycarb, pyriproxyfen;
O.8 miscellaneous non-specific inhibitors: methyl bromide and other alkyl halides; chloropicrin, cryolite, sulfuryl fluoride, borax, tartar emetic;
O.9 Chordotonal organ TRPV channel modulators: afidopyropen, pymetrozine, pyrifluquinazon;
O.10 Mite growth inhibitors: clofentezine, diflovidazin, hexythiazox; etoxazole;
O.11 Microbial disruptors of midgut membranes: *Bacillus thuringiensis* subsp. *israelensis*, *B*. *t.* subsp. *aizawai*, *B*. *t*. subsp. *kurstaki*, *B*. *t*. subsp. *tenebrionis*, *B*. *sphaericus*; *B.t.* crop proteins: Cry1Ab, Cry1Ac, Cry1Fa, Cry2Ab, mCry3A, Cry3Ab, Cry3Bb, Cry34/35Ab1;
0.12 Inhibitors of mitochondrial ATP synthase: diafenthiuron; azocyclotin, cyhexatin, fenbutatin oxide, propargite, tetradifon;
0.13 Uncouplers of oxidative phosphorylation via disruption of the proton gradient: chlorfenapyr, DNOC, sulfluramid;
0.14 nAChR channel blockers: bensultap, cartap hydrochloride, thiocyclam, thiosultap-sodium;
0.15 Inhibitors of the chitin biosynthesis CHS1: bistrifluron, chlorfluazuron, diflubenzuron, flucycloxuron, flufenoxuron, hexaflumuron, lufenuron, novaluron, noviflumuron, teflubenzuron, triflumuron;
0.16 Inhibitors of the chitin biosynthesis type 1: buprofezin;
0.17 Moulting disruptors: cyromazine;
0.18 Ecdyson receptor agonists: methoxyfenozide, tebufenozide, halofenozide, fufenozide, chromafenozide;
O.19 Octopamin receptor agonists: amitraz;
O.20 Mitochondrial complex III electron transport inhibitors - Qo site: hydramethylnon, acequinocyl, fluacrypyrim, flupyroxystrobin, bifenazate;
0.21 Mitochondrial complex I electron transport inhibitors: fenazaquin, fenpyroximate, pyrimidifen, pyridaben, tebufenpyrad, tolfenpyrad; rotenone;
O.22 Voltage-dependent sodium channel blockers: indoxacarb, metaflumizone, oxazosulfyl, 2-[2-(4-cyanophenyl)-1-[3-(trifluoromethyl)phenyl]ethylidene]-*N*-[4-(difluoromethoxy)phenyl]-hydrazinecarboxamide, *N*-(3-chloro-2-methylphenyl)-2-[(4-chlorophenyl)-[4-[methyl(methylsulfonyl)amino]phenyl]methylene]-hydrazinecarboxamide, *N*-[4-chloro-2-[[(1,1-dimethylethyl)amino]carbonyl]-6-methylphenyl]-1-(3-chloro-2-pyridinyl)-3-(fluoromethoxy)-1*H*-pyrazole-5-carboxamide, 2-[2-(4-cyanophenyl)-1-[3-(trifluoromethyl)-phenyl]ethylidene]-*N*-[4-(difluoromethoxy)phenyl]-hydrazinecarboxamide;
O.23 Inhibitors of the of acetyl CoA carboxylase: spidoxamat, spirodiclofen, spiromesifen, spirotetramat, spiropidion, spirobudifen, 11-(4-chloro-2,6-dimethylphenyl)-12-hydroxy-1,4-dioxa-9-azadispiro[4.2.4.2]tetradec-11-en-10-one;
O.24 Mitochondrial complex IV electron transport inhibitors: aluminium phosphide, calcium phosphide, phosphine, zinc phosphide, cyanide;
O.25 Mitochondrial complex II electron transport inhibitors: cyclobutrifluram, cyenopyrafen, cyflumetofen, cyetpyrafen, pyflubumide;
O.28 Ryanodine receptor-modulators: chlorantraniliprole, cyantraniliprole, cyclaniliprole, cyhalodiamide, flubendiamide, pixoaniliprole, fluchlodiniliprole, tetrachlorantraniliprole, tetraniliprole, tiorantraniliprole, (*R*)-3-chloro-*N*¹-{2-methyl-4-[1,2,2,2-tetrafluoro-1-(trifluoromethyl)ethyl]phenyl}-*N*²-(1-methyl-2-methylsulfonylethyl)phthalamide, (*S*)-3-chloro-*N*¹-{2-methyl-4-[1,2,2,2-tetrafluoro-1-(trifluoromethyl)ethyl]-phenyl}-*N*²-(1-methyl-2-methylsulfonylethyl)phthalamide, methyl-2-[3,5-dibromo-2-({[3-bromo-1-(3-chloropyridin-2-yl)-1*H*-pyrazol-5-yl]carbonyl}amino)benzoyl]-1,2-dimethylhydrazinecarboxylate; *N*-[4,6-dichloro-2-[(diethyl-lambda-4-sulfanylidene)carbamoyl]-phenyl]-2-(3-chloro-2-pyridyl)-5-(trifluoromethyl)pyrazole-3-carboxamide; *N*-[4-chloro-2-[(diethyl-lambda-4-sulfanylidene)carbamoyl]-6-methyl-phenyl]-2-(3-chloro-2-pyridyl)-5-(trifluoromethyl)pyrazole-3-carboxamide; *N*-[2-(5-amino-1,3,4-thiadiazol-2-yl)-4-chloro-6-methylphenyl]-3-bromo-1-(3-chloro-2-pyridinyl)-1*H*-pyrazole-5-carboxamide; 3-chloro-1-(3-chloro-2-pyridinyl)-*N*-[2,4-dichloro-6-[[(1-cyano-1-methylethyl)amino]carbonyl]phenyl]-1*H*-pyrazole-5-carboxamide; *N*-[4-chloro-2-[[(1,1-dimethylethyl)amino]carbonyl]-6-methylphenyl]-1-(3-chloro-2-pyridinyl)-3-(fluoromethoxy)-1*H*-pyrazole-5-carboxamide; *N*-[2-(5-amino-1,3,4-thiadiazol-2-yl)-4-chloro-6-methylphenyl]-3-bromo-1-(3-chloro-2-pyridinyl)-1*H*-pyrazole-5-carboxamide;
O.29 Chordotonal organ modulators: flonicamid;
O.30 GABA-gated chloride channel allosteric modulators: broflanilide, cyproflanilide, fluralaner, fluxametamide, isocycloseram, lotilaner, piperflanilide, sarolaner, tigolaner, umifoxolaner;
O.33 Calcium-activated potassium channel modulators: acynonapyr;
O.34 Mitochondrial complex III electron transport inhibitors - Qi site: flometoquin;
O.35 RNA interference mediated target suppressors: ledprona;
O.36: Chordotonal organ modulators: dimpropyridaz;
O.UN Unknown or uncertain mode of action: afoxolaner, azadirachtin, amidoflumet, benzoximate, benzpyrimoxan, bromopropylate, bisulfufen, chinomethionat, dicofol, fluazaindolizine, flufenerim, fluensulfone, fluhexafon, flupentiofenox, indazapyroxamet, isoflualanam, metaldehyde, metoxadiazone, piperonyl butoxide, pyridalyl, sulfiflumin, tioxazafen, trifluenfuronate, tyclopyrazoflor; 11-(4-chloro-2,6-dimethylphenyl)-12-hydroxy-1,4-dioxa-9-azadispiro[4.2.4.2]-tetradec-11-en-10-one, 3-(4'-fluoro-2,4-dimethylbiphenyl-3-yl)-4-hydroxy-8-oxa-1-azaspiro[4.5]dec-3-en-2-one, 4-cyano-*N*-[2-cyano-5-[[[2,6-dibromo-4-[1,2,2,3,3,3-hexafluoro-1-(trifluoromethyl)propyl]phenyl]amino]carbonyl]phenyl]-2-methyl-benzamide, 4-cyano-3-[(4-cyano-2-methyl-benzoyl)amino]-*N*-[2,6-dichloro-4-[1,2,2,3,3,3-hexafluoro-1-(trifluoromethyl)propyl]phenyl]-2-fluoro-benzamide, *N*-[5-[[[2-chloro-6-cyano-4-[1,2,2,3,3,3-hexafluoro-1-(trifluoromethyl)propyl]phenyl]-amino]carbonyl]-2-cyano-phenyl]-4-cyano-2-methyl-benzamide, *N*-[5-[[[2-bromo-6-chloro-4-[2,2,2-trifluoro-1-hydroxy-1-(trifluoromethyl)ethyl]phenyl]amino]carbonyl]-2-cyano-phenyl]-4-cyano-2-methyl-benzamide, *N*-[5-[[[2-bromo-6-chloro-4-[1,2,2,3,3,3-hexafluoro-1-(trifluoromethyl)propyl]phenyl]amino]carbonyl]-2-cyano-phenyl]-4-cyano-2-methyl-benzamide, 4-cyano-*N*-[2-cyano-5-[[[2,6-dichloro-4-[1,2,2,3,3,3-hexafluoro-1-(trifluoromethyl)propyl]phenyl]amino]carbonyl]phenyl]-2-methyl-benzamide, 1-[2-fluoro-4-methyl-5-[(2,2,2-trifluoroethyl)sulfinyl]phenyl]-3-(trifluoromethyl)-1*H*-1,2,4-triazole-5-amine, *N*-[5-[[[2-bromo-6-chloro-4-[1,2,2,2-tetrafluoro-1-(trifluoromethyl)ethyl]phenyl]amino]carbonyl]-2-cyano-phenyl]-4-cyano-2-methyl-benzamide, 4-cyano-*N*-[2-cyano-5-[[[2,6-dichloro-4-[1,2,2,2-tetrafluoro-1-(trifluoromethyl)ethyl]-phenyl]amino]carbonyl]phenyl]-2-methyl-benzamide, 5-[3-[2,6-dichloro-4-(3,3-dichloroallyloxy)phenoxy]propoxy]-1*H*-pyrazole; *N*-[5-[[2-bromo-6-chloro-4-[1,2,2,3,3,3-hexafluoro-1-(trifluoromethyl)-propyl]phenyl]carbamoyl]-2-cyano-phenyl]-4-cyano-2-methyl-benzamide; 4-cyano-*N*-[2-cyano-5-[[2,6-dichloro-4-[1,2,2,3,3,3-hexafluoro-1-(trifluoromethyl)-propyl]phenyl]carbamoyl]phenyl]-2-methyl-benzamide; 4-cyano-*N*-[2-cyano-5-[[2,6-dichloro-4-[1,2,2,2-tetrafluoro-1-(trifluoromethyl)ethyl]phenyl]carbamoyl]¬phenyl]-2-methyl-benzamide; *N*-[5-[[2-bromo-6-chloro-4-[1,2,2,2-tetrafluoro-1-(trifluoromethyl)-ethyl]phenyl]carba¬moyl]-2-cyano-phenyl]-4-cyano-2-methyl-benzamide; 2-(1,3-dioxan-2-yl)-6-[2-(3-pyridinyl)-5-thiazolyl]-pyridine; 2-[6-[2-(5-fluoro-3-pyridinyl)-5-thiazo¬lyl]-2-pyridinyl]-pyrimidine; 2-[6-[2-(3-pyridinyl)-5-thiazolyl]-2-pyridinyl]-pyrimidine; *N*-methylsul¬fonyl-6-[2-(3-pyridyl)thiazol-5-yl]pyridine-2-carboxamide; N-methylsulfonyl-6-[2-(3-pyridyl)thiazol-5-yl]pyridine-2-carboxamide; 1-[(6-chloro-3-pyridinyl)-methyl]-1,2,3,5,6,7-hexahydro-5-methoxy-7-methyl-8-nitro-imidazo[1,2-a]pyridine; 1-[(6-chloropyridin-3-yl)methyl]-7-methyl-8-nitro-1,2,3,5,6,7-hexahydroimidazo[1,2-a]pyridin-5-ol; *N*-(3-chloro-2-methylphenyl)-2-[(4-chlorophenyl)-[4-[methyl(methylsulfonyl)amino]phenyl]methylene]-hydrazinecarboxamide; 1-[(6-chloro-3-pyridinyl)methyl]-1,2,3,5,6,7-hexahydro-5-methoxy-7-methyl-8-nitro-imidazo[1,2-a]pyridine; 2-(3-pyridinyl)-*N*-(2-pyrimidinylmethyl)-2*H*-indazole-5-carboxamide; *N*-[4-chloro-3-[[(phenylmethyl)amino]-carbonyl]phenyl]-1-methyl-3-(1,1,2,2,2-pentafluoroethyl)-4-(trifluoromethyl)-1*H*-pyrazole-5-carboxamide; *N*-[4-chloro-3-[[(phenylmethyl)amino]carbonyl]phenyl]-1-methyl-3-(1,1,2,2,2-pentafluoroethyl)-4-(trifluoromethyl)-1*H*-pyrazole-5-carboxamide; 2-(3-ethylsulfonyl-2-pyridyl)-3-methyl-6-(trifluoromethyl)-imidazo[4,5-b]pyridine, 2-[3-ethylsulfonyl-5-(trifluoromethyl)-2-pyridyl]-3-methyl-6-(trifluoromethyl)imidazo[4,5-b]pyridine; *N*-[4-chloro-3-(cyclopropylcarbamoyl)phenyl]-2-methyl-5-(1,1,2,2,2-pentafluoroethyl)-4-(trifluoromethyl)pyrazole-3-carboxamide, *N*-[4-chloro-3-[(1-cyanocyclopropyl)carbamoyl]phenyl]-2-methyl-5-(1,1,2,2,2-pentafluoroethyl)-4-(trifluoromethyl)pyrazole-3-carboxamide; [(2*S*,3*R*,4*R*,5*S*,6*S*)-3,5-dimethoxy-6-methyl-4-propoxy-tetrahydropyran-2-yl]-N-[4-[1-[4-(trifluoromethoxy)phenyl]-1,2,4-triazol-3-yl]phenyl]carbamate; [(2S,3R,4R,5S,6S)-3,4,5-trimethoxy-6-methyltetrahydropyran-2-yl]-*N*-[4-[1-[4-(trifluoromethoxy)phenyl]-1,2,4-triazol-3-yl]phenyl]carbamate; [(2*S*,3*R*,4*R*,5*S*,6*S*)-3,5-dimethoxy-6-methyl-4-propoxy-tetrahydropyran-2-yl]-N-[4-[1-[4-(1,1,2,2,2-pentafluoroethoxy)phenyl]-1,2,4-triazol-3-yl]phenyl]carbamate; [(2S,3R,4R,5S,6S)-3,4,5-trimethoxy-6-methyltetrahydropyran-2-yl]-*N*-[4-[1-[4-(1,1,2,2,2-pentafluoroethoxy)phenyl]-1,2,4-triazol-3-yl]phenyl]carbamate; (2Z)-3-(2-isopropylphenyl)-2-[(*E*)-[4-[1-[4-(trifluoromethoxy)phenyl]-1,2,4-triazol-3-yl]phenyl]methylenehydrazono]thiazolidin-4-one, (2*Z*)-3-(2-isopropylphenyl)-2-[(*E*)-[4-[1-[4-(1,1,2,2,2-pentafluoroethoxy)-phenyl]-1,2,4-triazol-3-yl]phenyl]methylenehydrazono]thiazolidin-4-one, (2*Z*)-3-(2-isopro¬pyl¬phenyl)-2-[(*E*)-[4-[1-[4-(1,1,2,2,2-pentafluoroethoxy)phenyl]-1,2,4-triazol-3-yl]phenyl]methylenehydrazono]-thiazolidin-4-one; 2-(6-chloro-3-ethylsulfonyl-imidazo[1,2-a]pyridin-2-yl)-3-methyl-6-(trifluoromethyl)imidazo[4,5-b]pyridine, 2-(6-bromo-3-ethylsulfonyl-imidazo[1,2-a]pyridin-2-yl)-3-methyl-6-(trifluoromethyl)imidazo[4,5-b]pyridine, 2-(3-ethylsulfonyl-6-iodo-imidazo[1,2-a]pyridin-2-yl)-3-methyl-6-(trifluoromethyl)-imidazo[4,5-b]pyridine, 2-(7-chloro-3-ethylsulfonyl-imidazo[1,2-a]pyridin-2-yl)-3-methyl-6-(trifluoromethyl)-imidazo[4,5-b]pyridine, 2-(7-chloro-3-ethylsulfonyl-imidazo[1,2-a]pyridin-2-yl)-3-methyl-6-(trifluoromethyl)-imidazo[4,5-b]pyridine, 2-(3-ethylsulfonyl-7-iodo-imidazo[1,2-a]pyridin-2-yl)-3-methyl-6-(trifluoromethyl)-imidazo[4,5-b]pyridine, 3-ethylsulfonyl-6-iodo-2-[3-methyl-6-(trifluoromethyl)imidazo[4,5-b]pyridin-2-yl]-imidazo[1,2-a]pyridine-8-carbonitrile, 2-[3-ethylsulfonyl-8-fluoro-6-(trifluoromethyl)imidazo[1,2-a]pyridin-2-yl]-3-methyl-6-(trifluoromethyl)imidazo[4,5-b]pyridine, 2-[3-ethylsulfonyl-7-(trifluoromethyl)imidazo-[1,2-a]pyridin-2-yl]-3-methyl-6-(trifluoromethylsulfinyl)imidazo[4,5-b]pyridine, 2-[3-ethylsulfonyl-7-(trifluoromethyl)imidazo[1,2-a]pyridin-2-yl]-3-methyl-6-(trifluoromethyl)imidazo[4,5-c]pyridine, 2-(6-bromo-3-ethylsulfonyl-imidazo[1,2-a]pyridin-2-yl)-6-(trifluoromethyl)pyrazolo[4,3-c]pyridine; *N*-[[2-fluoro-4-[(2S,3S)-2-hydroxy-3-(3,4,5-trichlorophenyl)-3-(trifluoromethyl)pyrrolidin-1-yl]phenyl]methyl]cyclopropanecarboxamide, *N*-[3-chloro-1-(3-pyridyl)pyrazol-4-yl]-2-methylsulfonyl-propanamide, *N*-[4-chloro-3-[(1-cyanocyclopropyl)carbamoyl]phenyl]-2-methyl-4-methylsulfonyl-5-(1,1,2,2,2-pentafluoroethyl)pyrazole-3-carboxamide, 1,4-dimethyl-2-[2-(pyridin-3-yl)-2*H*-indazol-5-yl]-1,2,4-triazolidine-3,5-dione, *N*-[4-chloro-2-(3-pyridyl)thiazol-5-yl]-*N*-ethyl-3-methylsulfonyl-propanamide, *N*-cyclopropyl-5-[(5S)-5-(3,5-dichloro-4-fluoro-phenyl)-5-(trifluoromethyl)-4*H*-isoxazol-3-yl]isoquinoline-8-carboxamide, 5-[(5S)-5-(3,5-dichloro-4-fluoro-phenyl)-5-(trifluoromethyl)-4*H*-isoxazol-3-yl]-*N*-(pyrimidin-2-ylmethyl)isoquinoline-8-carboxamide, *N*-[1-(2,6-difluorophenyl)pyrazol-3-yl]-2-(trifluoromethyl)benzamide, 5-((1R,3R)-3-(3,5-bis(trifluoromethyl)phenyl)-2,2-dichlorocyclopropane-1-carboxamido)-2-chloro-*N*-(3-(2,2-difluoroacetamido)-2,4-difluorophenyl)benzamide, 1-[6-(2,2-difluoro-7-methyl-[1,3]dioxolo[4,5-f]benzimidazol-6-yl)-5-ethylsulfonyl-3-pyridyl]cyclopropanecarbonitrile, 6-(5-cyclopropyl-3-ethylsulfonyl-2-pyridyl)-2,2-difluoro-7-methyl-[1,3]dioxolo[4,5-f]benzimidazole, 3,5-bis(trifluoromethyl)-*N*-[(1S)-1-[1-[6-(trifluoromethyl)-4-pyrimidinyl]-1*H*-1,2,4-triazol-5-yl]ethyl]-benzamide, 2-(3-ethylsulfonyl-2-pyridyl)-5-(2,2,3,3,3-pentafluoropropoxy)pyrazine, 2-[3-ethylsulfonyl-6-(trifluoromethyl)pyrazolo[1,5-a]pyridin-2-yl]-3-methyl-6-(trifluoromethyl)imidazo[4,5-b]pyridine, 9-(methoxymethyl)-5-(3-pyridyl)-2-oxa-5,6,9,14-tetrazatricyclo[8.4.0.0^{3,7}]tetradeca-1(10),3,6,11,13-pentaen-8-one, 2-[5-[(*E*)-2-chloro-3,3,3-trifluoro-prop-1-enyl]-1-methyl-imidazol-2-yl]-5-cyclopropyl-3-ethylsulfonylpyridine, 2-(5-cyclopropyl-3-ethylsulfonyl-2-pyridyl)-5-(trifluoromethylsulfinyl)-1,3-benzoxazole.

2. The mixture according to claim 1, comprising component 1) and component 2) in a synergistically effective amount.

3. The mixture according to claim 1 or 2, comprising component 1) and component 2) in a weight ratio of 100:1 to 1:100.

4. The mixture according to claim 3, comprising component 1) and component 2) in a weight ratio of 16:1 to 1:16.

5. The mixture according to claim 4, comprising component 1) and component 2) in a weight ratio of 4:1 to 1:4.

6. The mixture according to any one of the claims 1 to 5, where component 1) is at least one compound of formula la.

7. The mixture according to any one of the claims 1 to 6, wherein in the formula Ia, Ib or Ic of component 1) R¹ is H.

8. The mixture according to any one of the claims 1 to 7, wherein in the formula Ia, Ib or Ic of component 1) R² is N(CH₃)₂.

9. The mixture according to any one of the claims 1 to 8, where component 2) is a pesticide II selected from:
A) Respiration inhibitors
- inhibitors of complex III at Qₒ site: azoxystrobin, dimoxystrobin, kresoxim-methyl, metominostrobin, picoxystrobin, pyraclostrobin, trifloxystrobin, metyltetraprole;
- inhibitors of complex III at Qᵢ site: cyazofamid, fenpicoxamid, florylpicoxamid, metarylpicoxamid;
- inhibitors of complex II: benzovindiflupyr, bixafen, boscalid, fluindapyr, fluopyram, fluxapyroxad, inpyrfluxam, isofetamid, isoflucypram, pydiflumetofen;
- other respiration inhibitors: fluazinam;
- quinone outside inhibitor stigmatellin binding type: ametoctradin;
B) Sterol biosynthesis inhibitors
- C14 demethylase inhibitors: cyproconazole, difenoconazole, epoxiconazole, hexaconazole, metconazole, propiconazole, prothioconazole, tebuconazole, tetraconazole, triadimenol, mefentrifluconazole, methyl 2-[2-chloro-4-(4-chlorophenoxy)phenyl]-2-hydroxy-3-(1,2,4-triazol-1-yl)propanoate, 2-[2-chloro-4-(4-chlorophenoxy)phenyl]-2-hydroxy-3-(1,2,4-triazol-1-yl)propanoic acid;
- delta14-reductase inhibitors: fenpropimorph, fenpropidin, spiroxamine;
- inhibitors of 3-keto reductase: fenhexamid;
C) Nucleic acid synthesis inhibitors
- DHODH inhibitors: ipflufenoquin, quinofumelin, feneptamidoquin;
D) Inhibitors of cell division and cytoskeleton
- other cell division inhibitors: fluopicolide, zoxamide, metrafenone, pyriofenone, fluopimomide;
E) Inhibitors of amino acid and protein synthesis
- methionine synthesis inhibitors: cyprodinil, pyrimethanil;
F) Signal transduction inhibitors
- MAP / histidine kinase inhibitors: iprodione, fludioxonil;
G) Lipid and membrane synthesis inhibitors
- Phospholipid biosynthesis inhibitors: isoprothiolane;
- compounds affecting cell membrane permeability and fatty acides: propamocarb;
- inhibitors of oxysterol binding protein: oxathiapiprolin, fluoxapiprolin;
H) Inhibitors with Multi Site Action
- inorganic active substances: Bordeaux mixture, copper, copper acetate, copper hydroxide, copper oxychloride, basic copper sulfate, sulfur;
- thio- and dithiocarbamates: mancozeb, metiram;
- organochlorine compounds: chlorothalonil, folpet;
- guanidines and others: dithianon;
I) Cell wall synthesis inhibitors
- melanin synthesis inhibitors: tricyclazole; polyketide synthase inhibitors: tolprocarb;
- cellulose synthase inhibitors: dimethomorph, mandipropamid;
J) Plant defence inducers
- probenazole, isotianil, phosphonates: fosetyl, fosetyl-aluminum, phosphorous acid and its salts, potassium or sodium bicarbonate, calcium phosphonate, potassium phosphonate, dichlobentiazox;
K) Unknown mode of action
- cymoxanil, flumetylsulforim, tebufloquin, flufenoxadiazam, rac-3-[3-(3-chloro-2-fluoro-phenoxy)-6-methyl-pyridazin-4-yl]-5-[(2-chloro-4-methyl-phenyl)methyl]-5,6-dihydro-4H-1,2,4-oxadiazine, (5S)-3-[3-(3-chloro-2-fluoro-phenoxy)-6-methyl-pyridazin-4-yl]-5-[(2-chloro-4-methyl-phenyl)methyl]-5,6-dihydro-4H-1,2,4-oxadiazine, (5*R*)-3-[3-(3-chloro-2-fluoro-phenoxy)-6-methyl-pyridazin-4-yl]-5-[(2-chloro-4-methylphenyl)methyl]-5,6-dihydro-4H-1,2,4-oxadiazine;
L2) Biochemical pesticides with fungicidal, bactericidal, viricidal and/or plant defense activator activity: orange oil, limonene, geraniol, thymol, aureobasidin, bafilomycin, natamycin, chlorflavonin, cinnamaldehyde.

10. The mixture according to claim 9, where component 2) is selected from azoxystrobin, pyraclostrobin, metyltetraprole, fenpicoxamid, florylpicoxamid, metarylpicoxamid, benzovindiflupyr, boscalid, fluindapyr, fluxapyroxad, inpyrfluxam, isofetamid, isoflucypram, pydiflumetofen, fluazinam, difenoconazole, mefentrifluconazole, prothioconazole, tebuconazole, methyl 2-[2-chloro-4-(4-chlorophenoxy)phenyl]-2-hydroxy-3-(1,2,4-triazol-1-yl)propanoate, 2-[2-chloro-4-(4-chlorophenoxy)phenyl]-2-hydroxy-3-(1,2,4-triazol-1-yl)propanoic acid, fenpropimorph, fenpropidin, ipflufenoquin, quinofumelin, feneptamidoquin, pyrimethanil, fludioxonil, copper oxychloride, sulfur, mancozeb, metiram, chlorothalonil, folpet, flumetylsulforim, and flufenoxadiazam.

11. The mixture according to claim 10, where component 2) is selected from azoxystrobin, pyraclostrobin, metyltetraprole, boscalid, fluxapyroxad, inpyrfluxam, isoflucypram, pydiflumetofen, fluazinam, difenoconazole, mefentrifluconazole, prothioconazole, ipflufenoquin, pyrimethanil, and fludioxonil.

12. The mixture according to any of claims 1 to 11, comprising in addition a pesticide III as component 3) provided that the pesticide III is different from the pesticide II used as component 2).

13. An agrochemical composition, comprising a solvent or solid carrier and the mixture according to any of claims 1 to 12.

14. Use of the mixture as defined in any of the claims 1 to 12 or of the composition as defined in claim 13 for controlling phytopathogenic harmful fungi.

15. A method for controlling phytopathogenic harmful fungi, comprising treating the fungi, their habitat or the seed, the soil or the plants to be protected against fungal attack with an effective amount of the mixture as defined in any one of claims 1 to 12 or with an effective amount of the composition as defined in claim 13.
